(19) **Europäisches Patentamt / European Patent Office / Office européen des brevets**

(11) **EP 1 890 391 B1**

(12) **EUROPEAN PATENT SPECIFICATION**

(45) Date of publication and mention
of the grant of the patent:
**01.07.2015  Bulletin 2015/27**

(51) Int Cl.:
*H04B 1/713* $^{(2011.01)}$     *H04B 1/69* $^{(2011.01)}$

(21) Application number: **07075297.7**

(22) Date of filing: **18.09.2002**

(54) **Digital communication method and system**

Verfahren und System zur digitalen Kommunikation

Procédé et système de communication numérique

(84) Designated Contracting States:
**AT BE BG CH CY CZ DE DK EE ES FI FR GB GR IE IT LI LU MC NL PT SE SK TR**

(30) Priority: **18.09.2001  KR 20010057421**

(43) Date of publication of application:
**20.02.2008  Bulletin 2008/08**

(62) Document number(s) of the earlier application(s) in accordance with Art. 76 EPC:
**02765679.2 / 1 435 140**

(73) Proprietors:
• **Electronics and Telecommunications Research Institute**
  **Daejeon 305-350 (KR)**
• **Korea Advanced Institute of Science and Technology**
  **Daejeon 305-701 (KR)**

(72) Inventors:
• **Kwon, Jae-Kyun**
  **Dalseo-gu 704-909 Daegu-city (KR)**
• **Shin, Kang-Soo**
  **121-252 Seoul (KR)**
• **Chung, Jae-Hoon**
  **305-503 Daejeon-city (KR)**
• **Yun, Ji-Young**
  **305-701 Daejeon-city (KR)**
• **Moon, Sung-Ho**
  **305-701 Daejeon-city (KR)**
• **Park, Soo-Mee**
  **606-808 Busan-city (KR)**
• **Sung, Dan-Keun**
  **305-707 Daejeon-city (KR)**

• **Park, Su-won**
  **305-701 Daejeon-city (KR)**
• **Kyeong, Mun-Geon**
  **305-720 Daejeon-city (KR)**
• **Cha, Jae-Sang**
  **134-772 Seoul (KR)**
• **Lee, Seo-Young**
  **305-755 Daejeon-city (KR)**
• **Song, Seog-Ill**
  **305-503 Daejeon-city (KR)**
• **Sohn, In-Soo**
  **305-810 Daejeon-city (KR)**
• **Cho, Ju-Phil**
  **305-330 Jeonju-city, Jeol-labuk-do (KR)**
• **Kim, Jae-Joon**
  **157-222 Daegu-city (KR)**
• **Lee, Hee-Soo**
  **305-325 Daejeon-city (KR)**

(74) Representative: **Talbot-Ponsonby, Daniel Frederick et al**
**Marks & Clerk LLP**
**Fletcher House**
**Heatley Road**
**The Oxford Science Park**
**Oxford OX4 4GE (GB)**

(56) References cited:
**WO-A-01/11897     WO-A-01/93479**
**US-A- 5 267 271     US-A- 5 291 475**

• **SIBUL L: "Book reviews - Spread spectrum systems", IEEE COMMUNICATIONS MAGAZINE, IEEE SERVICE CENTER, PISCATAWAY, US, vol. 24, no. 9, 1 September 1986 (1986-09-01), page 42, XP011353302, ISSN: 0163-6804, DOI: 10.1109/MCOM.1986.1093167**

- **WITTMAN J: "Categorization of Multiple-Access/ Random-Access Modulation Techniques", IEEE TRANSACTIONS ON COMMUNICATION TECHNOLOGY, IEEE, USA, vol. 15, no. 5, 1 October 1967 (1967-10-01), pages 724-725, XP011385419, ISSN: 0018-9332, DOI: 10.1109/TCOM.1967.1089648**

**Description**

**BACKGROUND OF THE INVENTION**

**(a) Field of the Invention**

The present invention relates to a digital communication method and a system thereof, and specifically to an apparatus and method for a statistic multiplexing of channels based on a multidimensional orthogonal resource hopping method in case where each channel has a variable transmission rate less than a basic transmission rate R in wire/wireless communication systems using a plurality of low-activity communication channels mutually synchronized through a single medium.

More specifically, the present invention relates to a multiplexing apparatus and method in a system composed of a first station and a plurality of second stations mutually synchronized, the first station identifying a channel to each second station using a multidimensional orthogonal resource hopping pattern, the multidimensional orthogonal resource hopping pattern corresponding to the second station including an intentional hopping pattern allocated by the first station during a call set up or a pseudo-random hopping pattern unique to the second station. The coordinates of the multidimensional orthogonal resources in hopping patterns of a different channel can be matched (this phenomenon will be referred to as a "multidimensional hopping pattern collision"). In this case, whether or not the channels are matched is determined from the transmit data symbols for all transmit channels of the first station related to the multidimensional hopping pattern collision. If a data symbol having at least one unmatched channel is transmitted, the corresponding data symbol interval is turned off and the transmission power of all channels off in data symbol transmission is increased as much as a predetermined amount for a predetermined time as defined by the communication regulations so as to compensate for a loss of the average bit energy of missing data of all the related channels.

In this description, the first and second stations correspond to a base station and mobile stations, respectively, in the existing systems. The first station is in communication with multiple second stations. The present invention relates to a statistic multiplexing method applicable in a synchronized channel group maintaining orthogonality in the direction from the first station to the second stations.

**(b) Description of the Related Art**

The present invention can be embodied independently in each channel group for a system maintaining orthogonality only in each channel group, e.g., a quasi-orthogonal code (QOC) used in the CDMA2000 system that is a candidate technology of the next generation mobile communication system under standardization, i.e., IMT-2000, or a multi-scrambling code (MSC) to be used in the W-CDMA system. With the channels of a first station classified into channel groups having a same transmitter antenna beam as in a sectorizing or smart antenna system, the present invention can also be embodied independently in each channel

For expediency in explaining which part of the prior art is modified in the embodiment of the multiplexing system of the present invention, the following description will be given on the basis of the IS-95 system that is a conventional mobile communication system now in commercial use.

In the digital/analog FDM (Frequency Division Multiplexing) communication system according to prior art, a first station allocates available FA (Frequency Allocation) to a second station irrespective of the channel activity during a call set up, and the second station returns the FA to the first station for another second station during a call termination.

In the TDM (Time Division Multiplexing) communication system according to prior art, a first station allocates one of available time slots in one FA to a second station irrespective of the channel activity during a call set up, and the second station returns the time slot to the first station for another second station during a call termination.

In the FHM (Frequency Hopping Multiplexing) communication system according to prior art, a first station gets in communication with a second station using a negotiated frequency hopping pattern irrespective of the channel activity during a call set up, and determines whether to allocate a new channel according to the number of allocated channels. But the FHM system has no control function of the present invention for not sending symbols of the related channel in order to reduce possible errors at the channel decoder of the receiver in the case of a hopping pattern collision.

In the OCDM (Orthogonal Code Division Multiplexing) communication system according to prior art, a first station allocates an available orthogonal code symbol in an orthogonal code to a second station irrespective of the channel activity during a call set up, and the second station returns the orthogonal code symbol to the first station for another second station during a call termination.

In the description of the prior art, the same reference numerals will be assigned to the parts having the same function as in the description of the present invention.

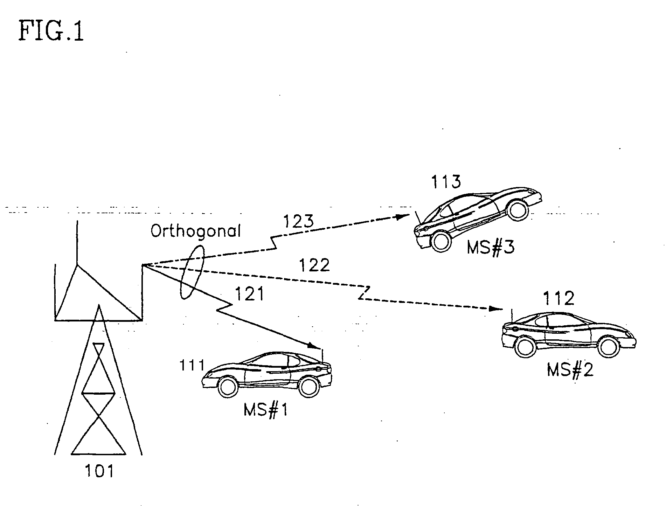

FIG. 1 is a schematic of a system according to an example of the prior art and an embodiment of the present invention, in which channels 121, 122 and 123 formed from a first station 101 to second stations 111, 112 and 113 are in synchronization with one another and have mutual orthogonality.

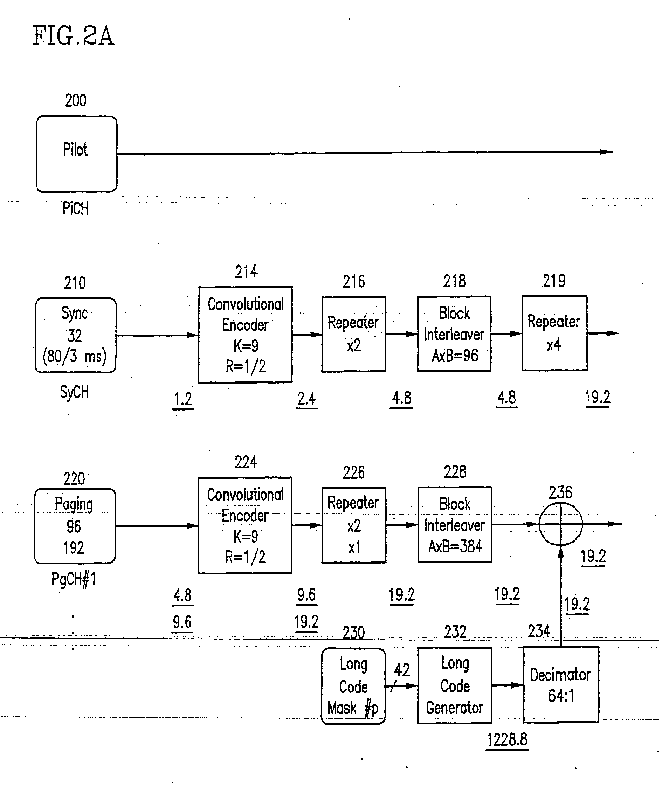

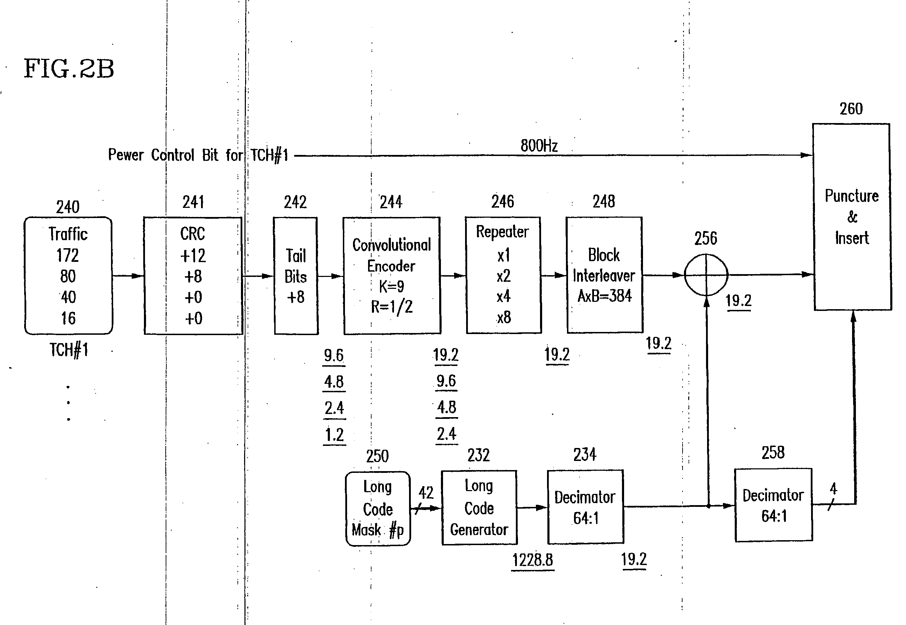

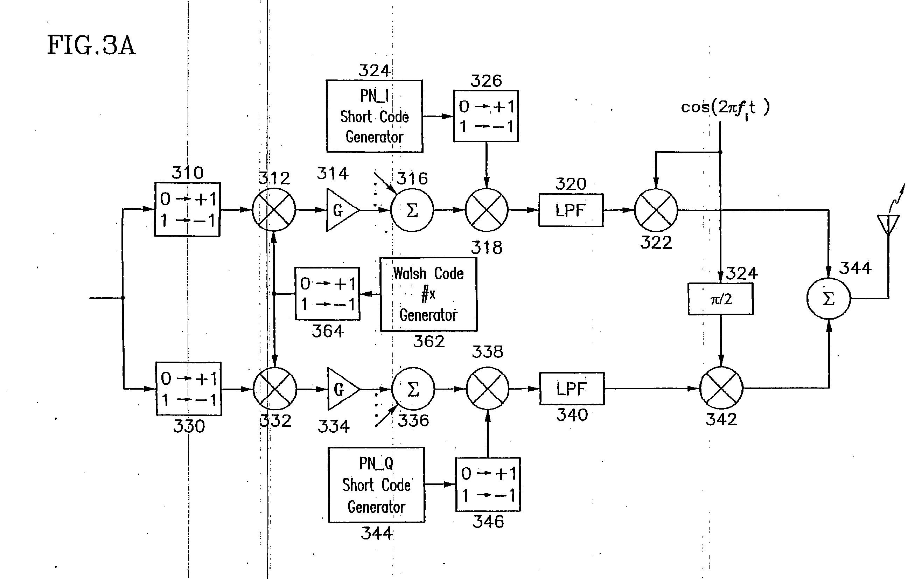

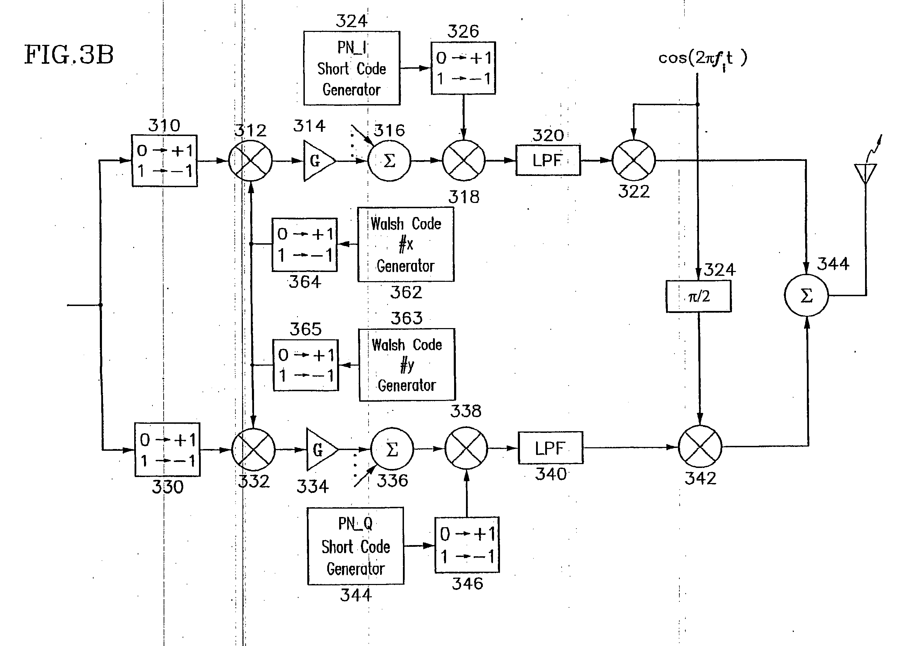

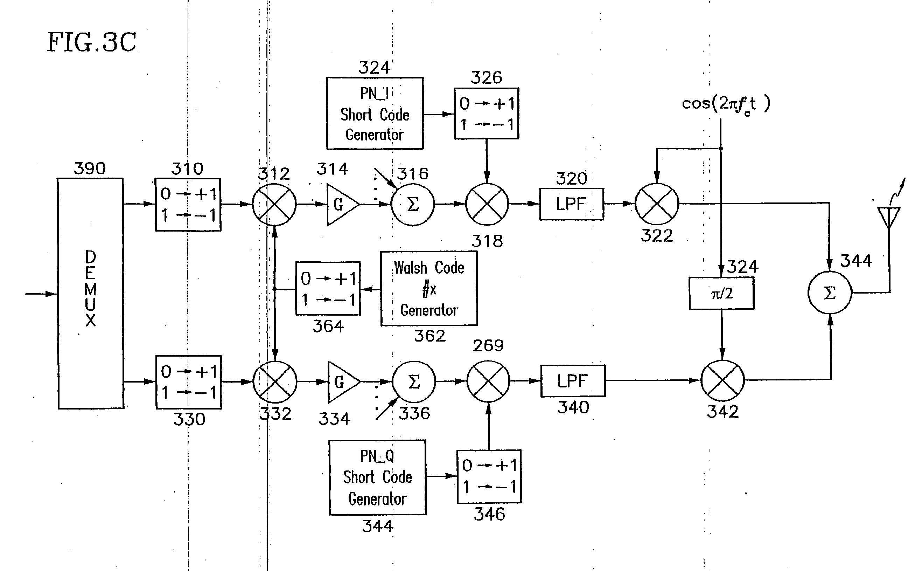

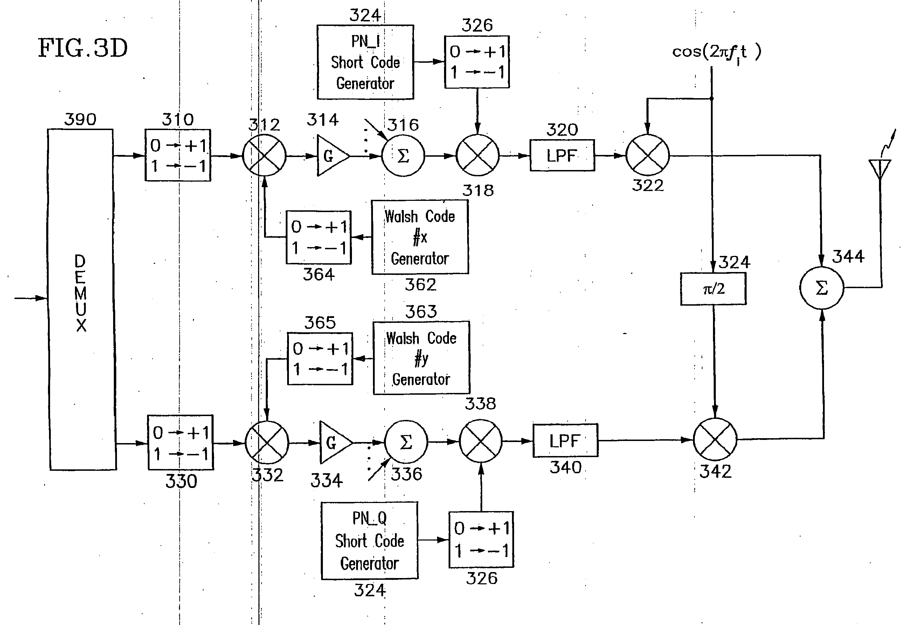

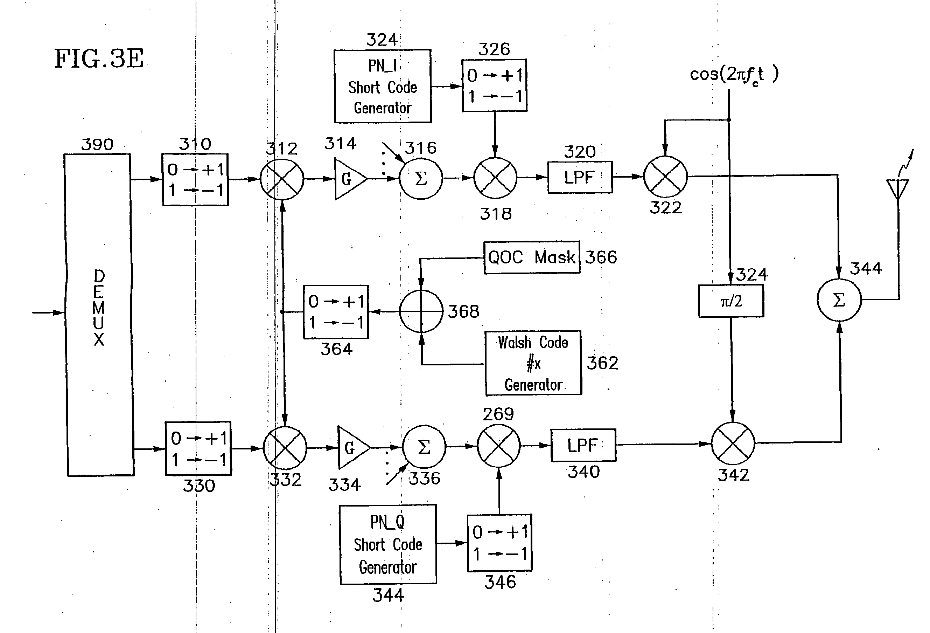

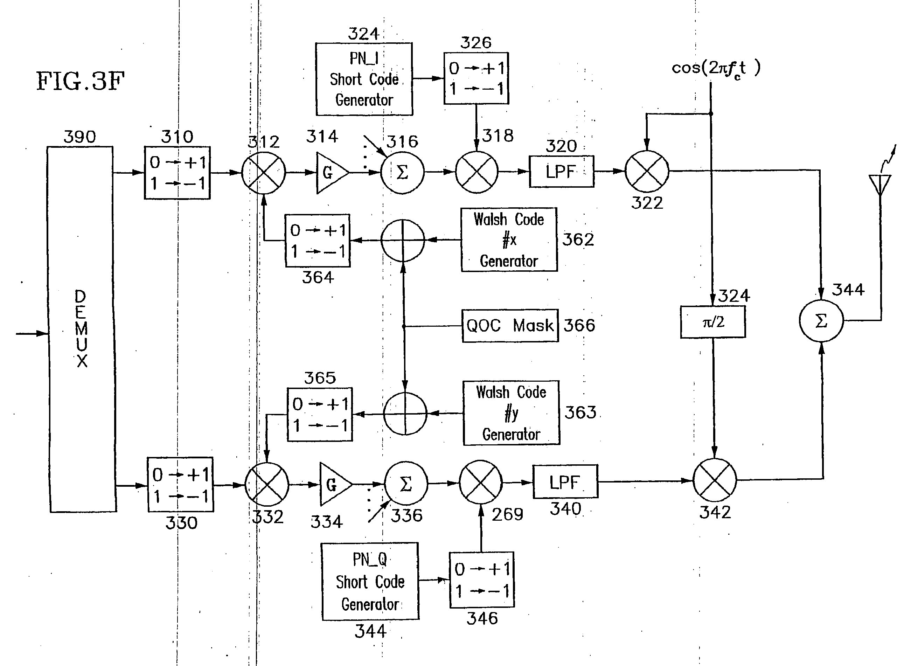

FIG. 2a is a schematic of a transmitter of the first station for a part corresponding to the common component between the prior art and the present invention, and FIG. 2b is a schematic of a transmitter of the first station for a traffic channel in the example of the prior art. A pilot channel 200 must be present by the respective subcarriers SCs, because it is used as a channel estimation signal for initial synchronization acquisition and search and synchronous demodulation at the second stations of FIG. 1. The pilot channel 200 is a channel shared among all second stations in an area that is under the control of the first station. As illustrated in FIG. 2a, the pilot channel 200 is used to provide a phase reference for synchronous demodulation by transmitting a symbol of a known pattern without channel coding or channel interleaving. Like the pilot channel 200, a synchronous channel 210 is a broadcasting channel one-sidedly transferred to all the second stations in an area that is under the control of the first station. The synchronous channel 210 is used for the first station to transfer information (e.g., visual information, the identifier of the first station, etc.) necessary in common to all the second stations. The data through the synchronous channel are sent to a spreader and modulator, which will be described later in FIG. 3, via a convolutional encoder 214, a repeater 216 for symbol rate control, a blcok interleaver 218 to overcome error burst, and a repeater 219 to control a transmit data symbol rate. A paging channel 220 is a common channel used in the presence of an incoming message to the second station or for the purpose of responding to the request of the second station. Plural paging channels can be used.

The data transmitted through the paging channel are sent to an exclusive OR operator 236 via a convolutional encoder 224, a symbol repeater 226 and a block interleaver 228. The output of a long code generator 232 is sent to a decimator 234, which decimates the output of the long code generator 232 using a long code mask for paging channel 230. The exclusive OR operator 236 exclusive-OR operates the data from the block interleaver 248 with the decimated output of the long code generator 232 and then sent to the spreader and modulator of FIG. 3. A traffic channel 240 of FIG. 2b is a channel allocated to each second station during a call set up and exclusively used by the second station until a call termination. The traffic channel is used to transfer data from the first station to each second station. The traffic channel is sent to a CRC (Cyclic Redundancy Check) encoder 241 to check errors in the unit of a predetermined time called a frame (e.g., 20 ms in the IS-95 system), a tail bit inserter 252 to insert tail bits that are all "0" for independent channel coding in the unit of frames, a convolutional encoder 244 and then a symbol repeater 246 to correct the transmit data symbol rate according to the transmit data rate.

Subsequent to symbol repetition, the traffic channel is sent to a block interleaver 248 to convert error burst to uniform distributed error, and then to a scrambler 256. The output of the long code generator 232 is decimated into a PN (Pseudo-Noise) sequence by the decimator 234 using the long code mask 250 generated from an ESN (Electronic Serial Number) allocated by the respective second stations. The scrambler 256 scrambles the traffic channel from the block interleaver 248 using the PN sequence.

The scrambled traffic channel is sent to a PCB (Power Control Bit) position extractor 258 to extract a PCB position from the PN sequence to insert a PCB for controlling the transmission power from the second station. A PCB puncture and insert section 260 punctures a data symbol corresponding to the PCB position among the scrambled data symbols from the scrambler 256, and inserts a PCB. The PCB-inserted traffic channel is sent to the spreader and modulator of FIG. 3.

The position of the transmit data symbol for transmission time hopping multiplexing according to the present invention can also be detected using the decimated PN sequence as described above.

FIGS. 3a, 3b and 3c illustrate an example of the spreader and modulator using the conventional code division multiplexing technology.

The spreader and modulator of FIG. 3a uses the existing IS-95 system based on a BPSK (Binary Phase Shift Keying) data modulation system.

The spreader and modulator of FIG. 3b spreads I/Q channel transmit data with a different orthogonal code symbol in the structure of FIG. 3a. The spreader and modulator of FIG. 3c employs a QPSK (Quadrature Phase Shift Keying) data modulation system so as to transmit double the data of FIG. 3a with the same bandwidth. The QPSK data modulation system is adapted to the candidate technology of the IMT-2000 system, CDMA2000.

The spreader and modulator of FIG. 3d uses the QPSK data modulation system in order to transmit double the data of FIG. 3b with the same bandwidth. FIG. 3e shows a spreader and modulator using a QOC (Quasi-Orthogonal Code) modulation system usually adapted in the candidate technology of the IMT-2000 system, CDMA2000.

FIG. 3f shows that I/Q channel transmit data are spread with a different orthogonal code symbol in the structure of FIG. 3e.

Referring to FIG. 3a, signal converters 310, 330, 326, 346 and 364 convert logic signals of "0" and "1" to actual transmit physical signals of "+1" and "-1", respectively. The individual channels of FIG. 2 are sent to spreaders 312 and 332 via the signal converters and spread with the output of a corresponding Walsh code generator 362. The spread channels are then sent to amplifiers 314 and 334 to control their relative transmission power.

After passing through the spreaders 312 and 332 using an orthogonal Walsh function 362 fixedly allocated to each channel and the amplifiers 314 and 334, the channels of the first station are all sent to orthogonal code division multiplexers 316 and 336.

The multiplexed signals are then sent to QPSK spreader and modulators 318 and 338 using short PN sequences generated from short PN sequence generators 324 and 344 for discrimination of the first station. The spread and modulated signals are sent to low-pass filters 320 and 340 and modulators 322 and 342 for transition to a transmit band. The signals modulated with carriers are sent to a wireless section (not shown) such as a high power amplifier and then transferred via an antenna.

Referring to FIG. 3b, signal converters 310, 330, 326, 346 and 364 convert logic signals of "0" and "1" to actual transmit physical signals of "+1" and "-1", respectively. The individual channels of FIG. 2 are sent to spreaders 312 and 332 via the signal converters and spread with the output of a corresponding Walsh code generator 362 by the I/Q channels. The spread channels are then sent to amplifiers 314 and 334 to control their relative transmission power. After passing through the spreaders 312 and 332 using an orthogonal Walsh function 362 fixedly allocated to each channel and the amplifiers 314 and 334, all the channels of the first station are sent to orthogonal code division multiplexers 316 and 336. The multiplexed signals are then sent to QPSK spreader and modulators 318 and 338 using short PN sequences generated from short PN sequence generators 324 and 344 for discrimination of the first station. The spread and modulated signals are sent to low-pass filters 320 and 340 and modulators 322 and 342 using carriers for transition to a transmit band. The signals modulated with carriers are sent to a wireless section (not shown) such as a high power amplifier and then transferred via an antenna.

FIG. 3c is the same as FIG. 3a, excepting that the signals generated in FIG. 2 are sent to a demultiplexer 390 for QPSK, rather than BPSK, using an in-phase (I) channel and a quadrature phase (Q) channel in sending different information data. The demultiplexer 390 and the signal converters 310 and 330 are used to realize QAM (Quadrature Amplitude Modulation) instead of QPSK.

FIG. 3d is the same as FIG. 3b, excepting that the signals generated in FIG. 2 are sent to a demultiplexer 390 for QPSK, rather than BPSK, using an in-phase (I) channel and a quadrature phase (Q) channel in sending different information data.

FIG. 3e shows that the transmit data are spread with a spreading code generated using a quasi-orthogonal code mask for discrimination of a channel from the first station to the second station in FIG. 3c. Orthogonality is not maintained in the code symbol group using a different quasi-orthogonal code but in the code symbol group using a same orthogonal code mask.

Accordingly, the system proposed in the present invention is applied only to the orthogonal code symbol group using a same quasi-orthogonal code mask and maintaining orthogonality.

FIG. 3f is the same as FIG. 3e, excepting that a separate Walsh code generator is used for I- and Q-channels so as to spread I/Q channel transmit data with a different orthogonal code symbol.

FIGS. 4b and 4c show a signal diagram explaining a multiplexing method in which orthogonal resources are allocated to the signals generated in FIGS. 2 and 3 by the respective channels to transmit the signals.

With a first station in communication with second stations, the data rate by the respective second stations may be variable over time. Let the channel-based maximum transmission rate allocated to the second stations by the first station be a basic transmission rate R, the frame-based average transmission rate may be R, R/2, R/4, ..., or 0 according to the frame-based amount of data transferred from the first station to the second stations.

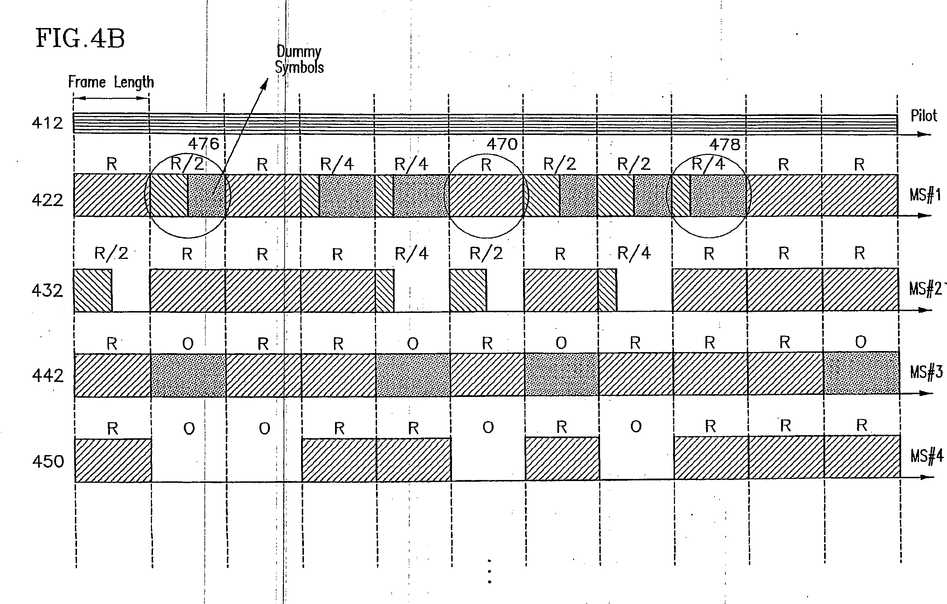

FIG. 4b is a signal diagram showing that the frame-based instantaneous transmission rate is adjusted to the average transmission rate, which method is applied on the forward link in the IS-95 orthogonal code division multiplexing communication systems.

In FIG. 4b, when the frame-base transmit data have a transmission rate below the basic transmission rate, dummy information is used to compensate for the deficient part and thereby match the frame-based instantaneous transmission rate to the average transmission rate.

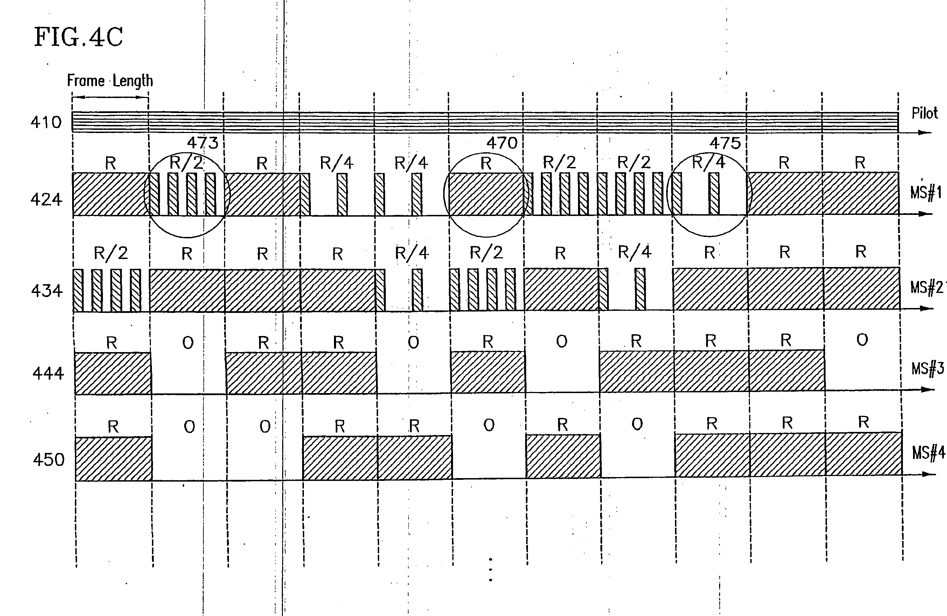

FIG. 4c shows that the instantaneous transmission rate is classified into a basic transmission rate R and 0 (no transmission) and that an average transmission rate for a given frame is adjusted according to the percentage of an interval having a transmission rate of R or 0.

In FIG. 4c, instead of the ON/OFF switching of transmit symbol units that are spreading units used in the present invention, the ON/OFF switching of time slot units that are power control units is used in adjusting the frame-based average transmission rate, while maintaining the amplitude of the reference signal for a closed loop power control of the backward link in the IS-95 system.

Contrary to the present invention, there is no orthogonality between channels on the IS-95 backward link.

In FIGS. 4b and 4c, the common pilot channel is used in parallel with a channel to the second stations. But the pilot channel, which is used at the receiver as a reference for synchronization, channel estimation and power control, can be transmitted by time division multiplexing as in the conventional GSM (Global System for Mobile) or W-CDMA (Wideband CDMA) system. The pilot channel in this case is called "pilot symbol" or another various names such as preamble, midamble or post-amble according to the multiplexed position.

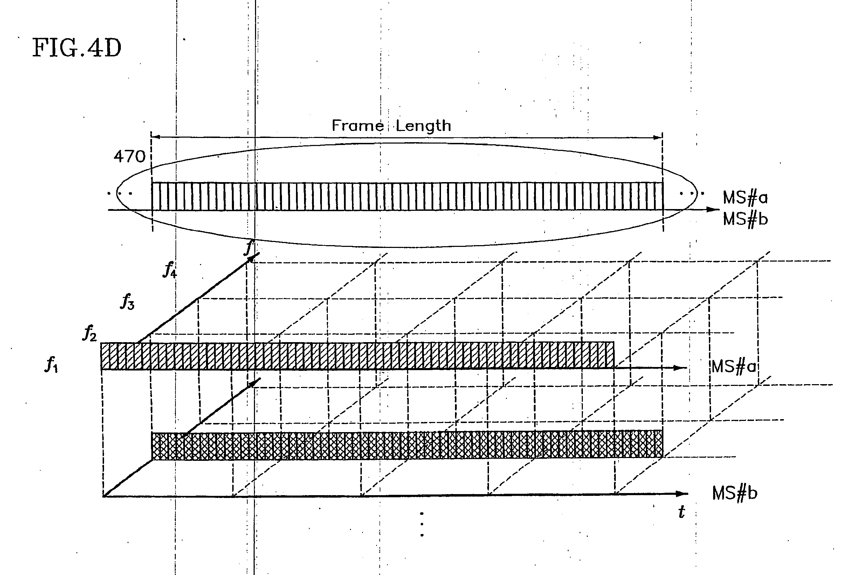

FIG. 4d illustrates the conventional frequency division multiplexing system, in which communication channels from a first station to plural second stations use a different frequency allocation (FA). The frequency division multiplexing system of the present invention includes the OFDM (Orthogonal Frequency Division Multiplexing) system actively studied for satellite broadcasting.

For OFDM, the FA of the individual subcarrier channels is not completely independent but overlapped but may be included in the orthogonal resource of the present invention, because orthogonality between the subcarrier channels is secured.

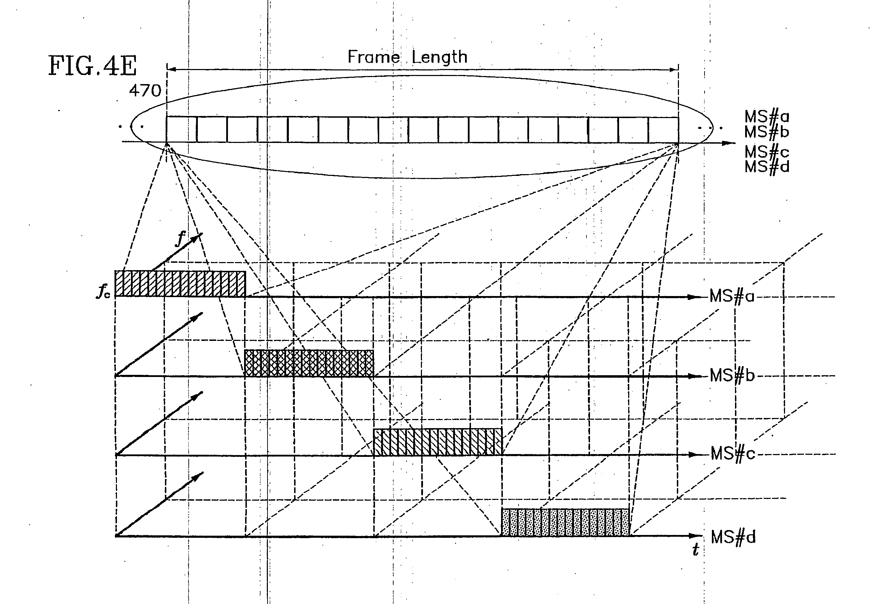

FIG. 4e illustrates the conventional time division multiplexing system such GSM, in which communication channels from a first station to plural second stations use a same frequency allocation (FA) but the time slots in the frame are exclusively allocated by the respective second stations.

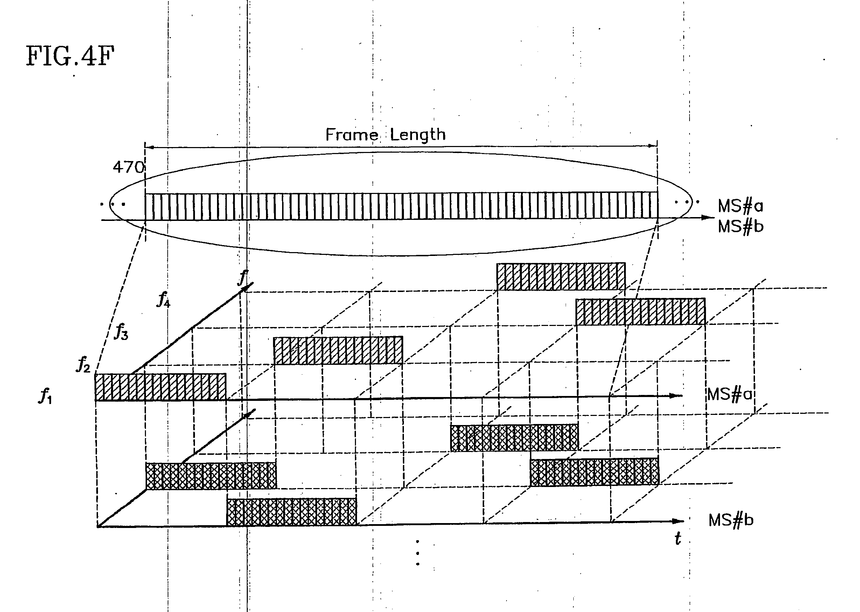

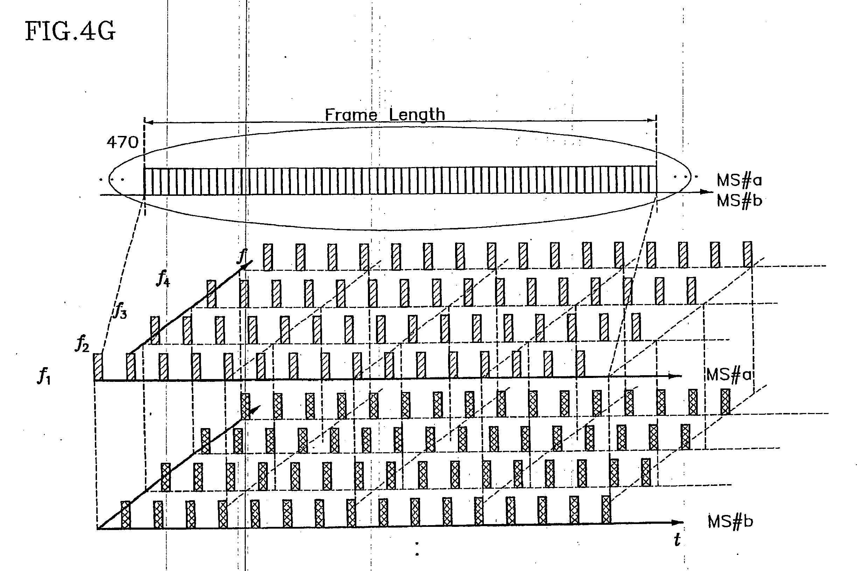

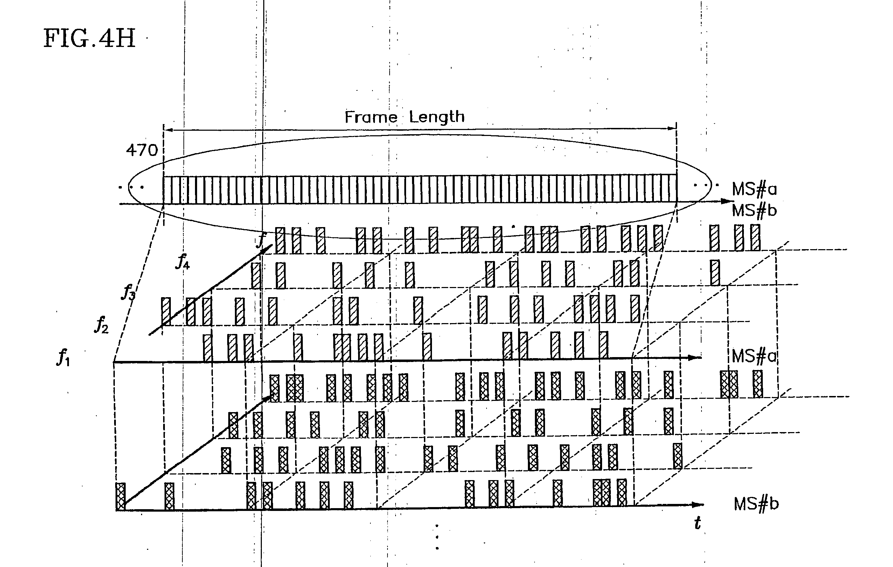

FIGS. 4f, 4g and 4h apply a frequency hopping system to the conventional frequency division multiplexing system of FIG. 4d for the purpose of strengthening frequency diversity and security. FIG. 4f shows frequency hopping in the unit of time slots. FIG. 4g shows regular frequency hopping in the unit of transmit data symbols. FIG. 4h shows irregular frequency hopping in the unit of transmit data symbols. The system of FIG. 4g brings focus into frequency diversity, and that of FIG. 4h has importance on frequency diversity and security for preventing a monitoring by an unauthorized receiver.

Frequency hopping multiplexing includes fast frequency hopping multiplexing in the unit of symbols or partial symbols and slow frequency hopping multiplexing in the unit of several symbols. The systems of FIGS. 4f, 4g and 4h applied to the time division multiplexing system of FIG. 4e provide frequency diversity.

In fact, the use of frequency hopping in the unit of time slots or frames is optionally given in the next-generation mobile communication system, i.e., GSM for the purpose of strengthening frequency diversity rather than security.

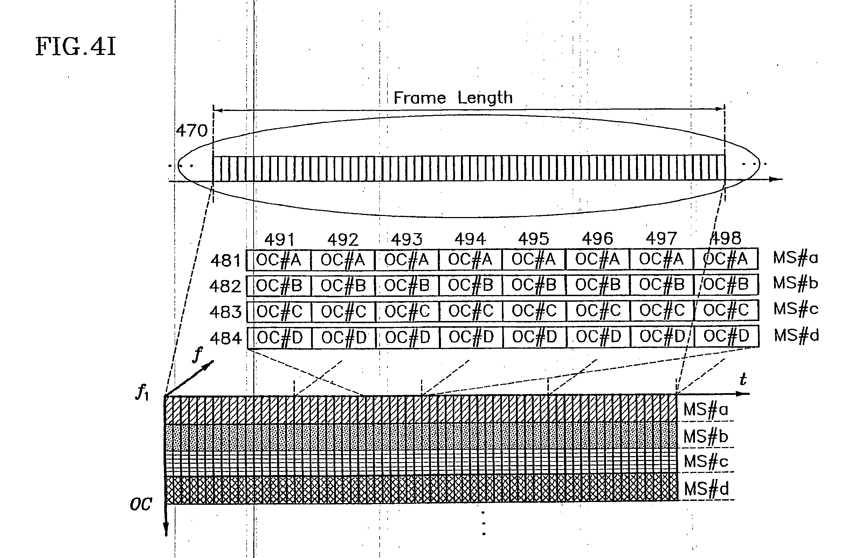

FIG. 4i illustrates the conventional orthogonal code division multiplexing system such as CDMS2000 or W-CDMA systems. In FIG. 4i, the communication channels from a first station to the respective second stations are established using the same frequency allocation (FA) and all time slots in the frame. The first station allocates a fixed orthogonal code symbol to each channel during a call set up, and each second station returns the orthogonal code symbol to the first station for another second station involving another call set up. Accordingly, all the data symbols in the frame are spread with the same orthogonal code symbol. The transmitters of the first station corresponding to FIG. 4i are presented in FIGS. 3a to 3f.

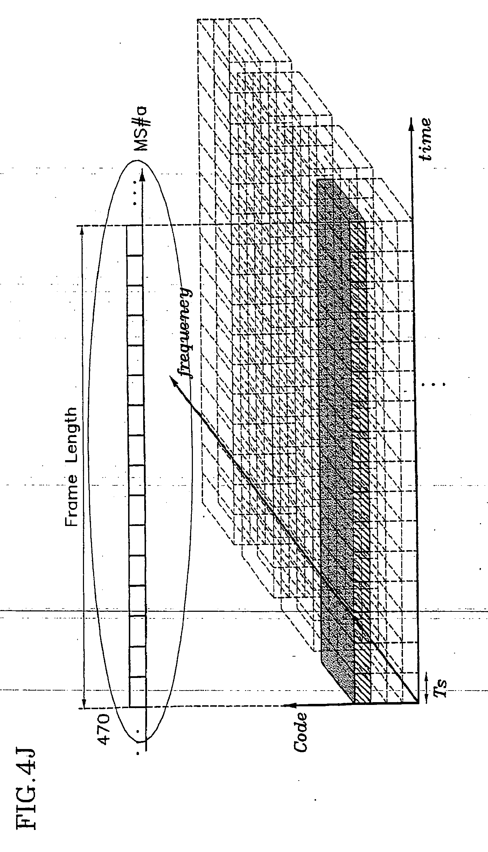

FIG. 4j is a signal diagram of a transmit signal from the first station in the conventional ORDM (Orthogonal Resource Division Multiplexing) system, in which channel-based fixed allocation of orthogonal resources is illustrated. ORDM is applied to most of the conventional digital communication systems.

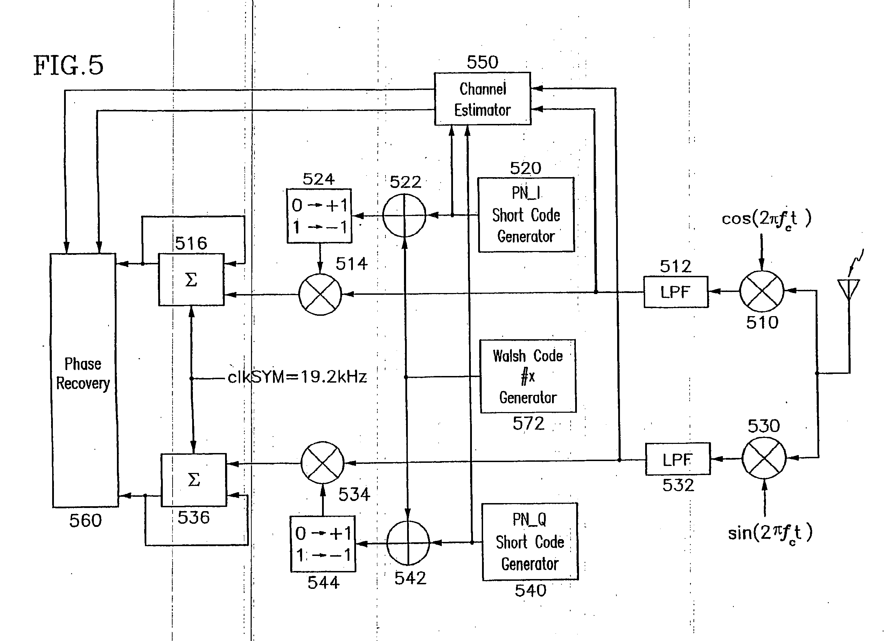

The receiver of the second station corresponding to the transmitter of the first station according to the example of the prior art as shown in FIG. 4i is similar to the transmitters of FIGS. 3a to 3f except for the despreading part. Thus, FIG. 5 shows a schematic view of a receiver corresponding to the transmitter of FIG. 3a. The received signal through an antenna is demodulated with carriers at demodulators 510 and 530 and low-pass filtered at low-pass filters 512 and 533 into a baseband signal. The sequences, which are generated from PN-I/Q short code generators 520 and 540 and the same with PN sequences used at the transmitter, are synchronized and multiplied by the received baseband signal at multipliers 514 and 534. The multiplied sequences are cumulated for a transmit data symbol interval and sent to despreaders 516 and 536. A channel estimator 550 extracts a pilot channel component from the baseband signal with an orthogonal code symbol allocated to the pilot channel to estimate a transmit channel, and a phase recovery section 560 compensates for the phase distortion of the baseband signal using the estimated phase distortion value. If the pilot channel is subject to time division multiplexing rather than code division multiplexing, a demultiplexer is used to extract the pilot signal part and the intermittent phase change between the extracted pilot signals is then estimated by interpolation.

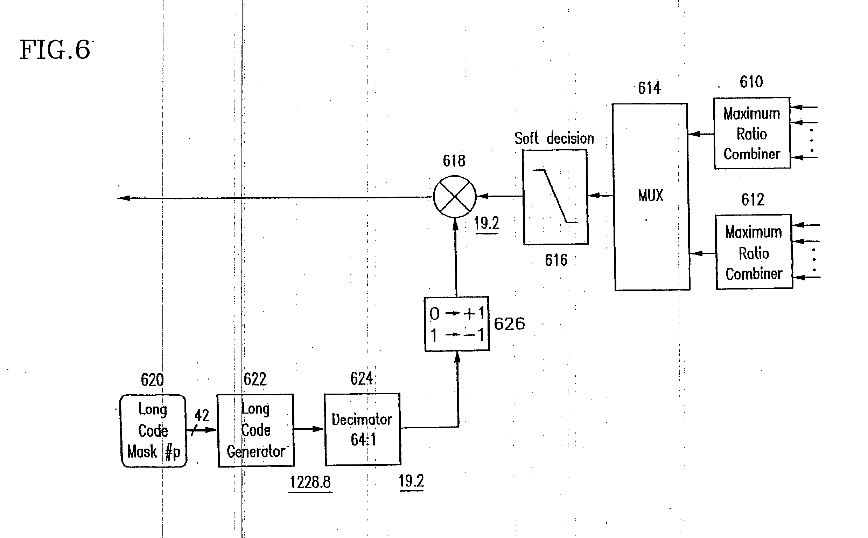

FIG. 6 shows the structure of a receiver for a channel without a PCB insertion from the first station like the above-stated paging channel, where the PCB is a command for controlling the transmission power from the second stations to the first station. After the phase compensation in FIG. 5, the signals are fed into maximum ratio combiners 610 and 620. With a QPSK data modulation at the transmitter as illustrated in FIG. 3b, the combined signal is sent to a multiplexer 614 for multiplexing; alternatively, with a BPSK data modulation, the two signals are added. The resulting signal is then sent to a soft decision section 616 for soft decision. The output of a long code generator 622 formed by a long code mask 620 is sent to a decimator 624. The signal from the soft decision section 616 is multiplied by the decimated output of the long code generator 622 by a multiplier 618 for descrambling. The receiver of the second station for a channel subject to orthogonal code hopping multiplexing according to the embodiment of the present invention is similar in structure to the receiver of FIG. 6. For the synchronous channels, the components related to the long code descrambling process are omitted.

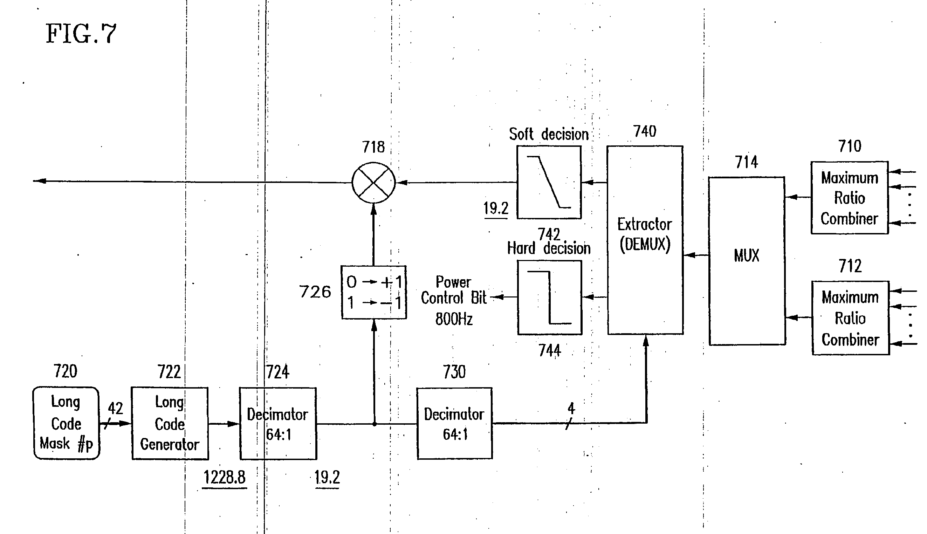

FIG. 7 shows the structure of a receiver for a channel with a PCB insertion from the first station like the above-stated traffic channel, where the PCB is a command for controlling the transmission power from the second stations to the first station. After the phase compensation in FIG. 5, the signals are fed into maximum ratio combiners 710 and 720. With a QPSK data modulation at the transmitter as illustrated in FIG. 3c, the in-phase (I) component and the quadrature (Q) phase component are sent to a multiplexer 714 for multiplexing; alternatively, with a BPSK data modulation as illustrated in FIG. 3a, the in-phase (I) component and the quadrature phase (Q) component are added. The resulting signal is sent to an extractor 740 for extraction of a signal component corresponding to the PCB from the first station and then to a hard decision section 744 for hard decision. The signal from the hard decision section 744 is transferred to the transmission power controller of the second station. The data symbol generated by removing the PCB from the received signal of the multiplexer 714 is sent to a soft decision section 742 for soft decision. The output of a long code generator 722 formed by a long code mask 720 generated from the identifier of the second station is sent to a decimator 724. The signal from the soft decision section 742 is multiplied by the decimated output of the long code generator 722 by a multiplier 718 for descrambling.

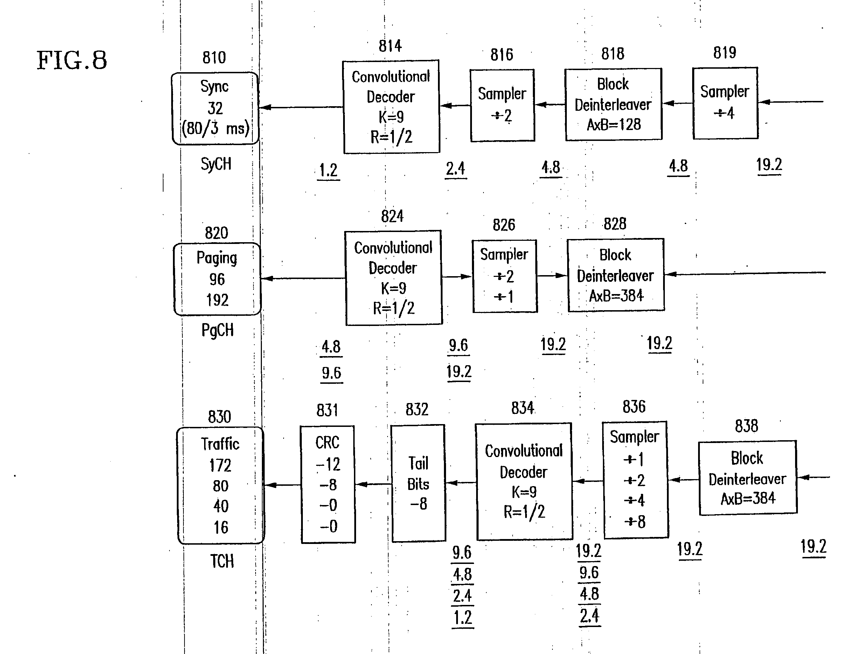

FIG. 8 illustrates that the received signal processed in FIG. 7 is subject to channel deinterleaving at block deinterleavers 818, 828 and 838 and channel decoding at convolutional decoders 814, 824 and 834 to reconstitute data transferred from the first station. For a synchronous channel 810, the signal from the soft decision section is sent to a sampler 819 for symbol compression that is a reversed process of the symbol repeater 219 by accumulation of the received signals, thereby reducing a symbol rate. The signal from the sampler 819 is sent to the block deinterleaver 818 for channel deinterleaving. Before a channel decoding at the convolutional decoder 814, the channel-deinterleaved signal is sent to a sampler 816 for another symbol compression that is a reversed process of the symbol repeater 216. The signal from the sampler 816 is sent to the convolutional decoder 814 for channel decoding, thereby reconstituting the synchronous channel received from the first station. For a paging channel 820, the signal from the soft decision section is sent to the block deinterleaver 828 for channel deinterleaving. The channel-deinterleaved signal is sent to a sampler 826 for symbol compression according to the transmit data rate that is a reversed process of the symbol repeater 226. The signal from the sampler 826 is sent to the convolutional decoder 824 for channel decoding, thereby reconstituting the paging channel received from the first station. For a traffic channel 830, the signal from the soft decision section is sent to the block deinterleaver 838 for channel deinterleaving irrespective of the transmit data rate. The channel-deinterleaved signal is sent to a sampler 836 for symbol compression according to the transmit data rate that is a reversed process of the symbol repeater 246. The signal from the sampler 836 is sent to the convolutional decoder 834 for channel decoding and removed of a tail bit for frame-based independent transmit signal generation by a tail bit remover 832. As in the transmitter for the transmit data part, a CRC bit is generated and compared with a CRC bit reconstituted by channel decoding to determine whether or not there is an error. When the two CRC bits are matched, it is determined that there is no error, thereby reconstituting traffic channel data. If information about the transmit data rate in the unit of 20-ms frames is not stored at the transmitter, the channel deinterleaved signals are channel-decoded independently for all possible transmit data rates and then the CRC bits are compared to determined the transmit data rate from the first station. For a system in which the transmit data rate is separately transferred, only the channel decoding process for a corresponding data rate is necessary.

There are four conventional methods for maintaining orthogonality between channels from the first station to the second stations as shown in FIG. 1. The first method is using the frequency division multiplexing so that the first station fixedly allocates FA to the second stations during a call set up as illustrated in FIG. 4d. The second method is using the time division multiplexing so that the first station fixedly allocates time slots to the second stations during a call set up as illustrated in FIG. 4e. The third method is allocating a hopping pattern controlled to avoid a collision of the first station during a call set up as illustrated in FIGS. 4f, 4g and 4h to the second stations, or using the total bandwidth composed of multiple subcarriers for a single second station at a given time in a given area, as in the military use. The fourth method is allocating unoccupied orthogonal code symbols by the first station during a call set up and spreading channels as illustrated in FIG. 4i.

Apart from the frequency hopping multiplexing method, the other three methods have a common feature that the first station allocates fixedly orthogonal resources (e.g., frequency, time, or orthogonal code) to the second stations. The frequency hopping multiplexing method is primarily used for the security purpose in many applications supporting a sufficient quantity of resources, as in the military use. Hence, the frequency hopping multiplexing is not aimed at an efficient use of resources.

It is therefore difficult in the above methods to efficiently use the resources when the limited orthogonal resource is allocated to the channels having a low activity or a variable transmit data rate less than a basic transmission rate.

A rapid channel allocation and return is required in order to fixedly allocate the resources as in the prior methods and increase the use efficiency of the resources. But, a considerable part of the confined resources are not used for actual data transmission but allocated to the control information for data transmission because the control signal information for frequent channel allocation and return is transferred.

Even with a rapid procedure of channel allocation and return, the data to be transmitted must be buffered during a period from its arrival at the first station to transmission via the steps of channel allocate (or return) message transmission and confirmation. The required buffer capacity in this case increases with an increase in the processing time of the procedures.

In the method of fixedly allocating resources during a handoff to an adjacent cell, the handoff is hardly acquired even when the channels in the adjacent cell have a low activity, because there is no available resource to be allocated.

Furthermore, important information such as control information that necessarily requires a confirmation step after a transmission must be buffered for retransmission. But the required buffer capacity can be reduced only by transmitting the resources with a shortest delay in the transmission such as datagram transmission that does not require a confirmation step.

WO 01/11897 discloses a method for performing statistical multiplexing based on one-dimensional resource hopping.

According to the invention there is provided a method as defined in Claim 1 and a system as defined in Claims 10 and 21. Optional features of the invention are set out in the claims depending from Claims 1, 10 and 21.

Disclosed herein is a digital communication method, which is to perform a statistic multiplexing by allocating communication channels from a first station to a plurality of second stations in synchronization based on a multidimensional orthogonal resource hopping method, the digital communication method including: determining whether or not signs of transmit data symbols are matched, when a collision between hopping patterns of multidimensional orthogonal resources occurs; transmitting all the data symbols, when the signs of the transmit data symbols are matched; and puncturing all the data symbols, when the signs of the transmit data symbols are unmatched.

Also disclosed herein is a hopping multiplexing method for a multidimensional orthogonal resource, which method is a digital communication method that includes allocating communication channels from a first station to a plurality of second stations in synchronization based on the hopping method of the multidimensional orthogonal resources and then subjecting the allocated communication channels to statistic multiplexing, the hopping multiplexing method including: (a) with a collision between hopping patterns of the multidimensional orthogonal resource, controlling a transmit signal of each orthogonal wireless resource unit according to a transmit data symbol of the channel involved in the collision and a transmit signal amplitude of the channel; (b) determining signs of data symbols transmitted in the units of the orthogonal wireless resource of the channel having a collision of the hopping patterns; and (c) classifying the channels into a set $S^0$ of channels allocated but not transmitted in the units of the orthogonal wireless resource, a set $S^+$ of channels having a positive data symbol transmitted in the units of the orthogonal wireless resource, and a set $S^-$ of channels having a negative data symbol transmitted in the units of the orthogonal wireless resource, and determining data symbols to be transmitted in the units of the orthogonal wireless resource.

Further disclosed herein is a digital communication method, which is to perform a statistic multiplexing by allocating communication channels from a first station to a plurality of second stations in synchronization based on a multidimensional orthogonal resource hopping method, the digital communication method including: (a) determining the distance from the first station to each second station; and (b) using a transmit diversity of the first station to compensate for a signal loss to the second station being relatively far from the first station.

The present invention fixedly allocates spreading orthogonal code symbols in an orthogonal code used as a limited resource to a channel (hereinafter, referred to as "a sparse channel") having a low transmit data activity, generating a relatively low traffic, or a variable transmission rate of less than a basic transmission rate R based on the statistic characteristic of a required service, and thereby emerges from the system in which channels are an orthogonal resource, and achieving statistic multiplexing by distinguishing channels with a multidimensional orthogonal resource hopping pattern. To prevent an erroneous data reception at the second stations due to a collision of multidimensional orthogonal resource coordinates possibly caused by mutually independent hopping patterns by the respective second stations, the present invention compares transmit data symbols of all channels involved in the collision and does not transmit them except for the case where the transmit data symbols are all matched. To compensate for an average received energy required because of the not-transmitted data symbols, the first station increases the transmission energy to the related second stations for a predetermined interval.

Additionally, the method of the present invention is compatible with the existing systems because the sustained orthogonality of all resources makes it possible to operate a set of resources used for a multidimensional orthogonal resource hopping multiplexing independently to a set of resources used for the conventional methods.

## BRIEF DESCRIPTION OF THE DRAWINGS

The accompanying drawings, which are incorporated in and constitute a part of the specification, illustrate an embodiment of the invention, and, together with the description, serve to explain the principles of the invention:

FIG. 1 is a conceptual diagram of a system including a first station and a plurality of second stations in accordance with an example of the prior art and an embodiment of the present invention;

FIG. 2a is a schematic of a transmitter of the first station corresponding to a common component between the prior art and the present invention;

FIG. 2b is a schematic of a transmitter for traffic channels in the first station according to an example of the prior art;

FIG. 3a is a schematic of a transmitter of the first station for code division multiplexing according to an example of the prior art (based on BPSK data modulation and using the same orthogonal code symbol for I/Q channels);
FIG. 3b is a schematic of a transmitter of the first station for code division multiplexing according to an example of the prior art (based on BPSK data modulation and using a different orthogonal code symbol for I/Q channels);
FIG. 3c is a schematic of a transmitter of the first station for code division multiplexing according to an example of the prior art (based on QPSK data modulation and using the same orthogonal code symbol for I/Q channels);
FIG. 3d is a schematic of a transmitter of the first station for code division multiplexing according to an example of the prior art (based on QPSK data modulation and using a different orthogonal code symbol for I/Q channels);
FIG. 3e is a schematic of a transmitter of the first station for code division multiplexing according to an example of the prior art using quasi-orthogonal codes (based on QPSK data modulation and using the same orthogonal code symbol for I/Q channels);
FIG. 3f is a schematic of a transmitter of the first station for code division multiplexing according to an example of the prior art using quasi-orthogonal codes (based on QPSK data modulation and using a different orthogonal code symbol for I/Q channels);

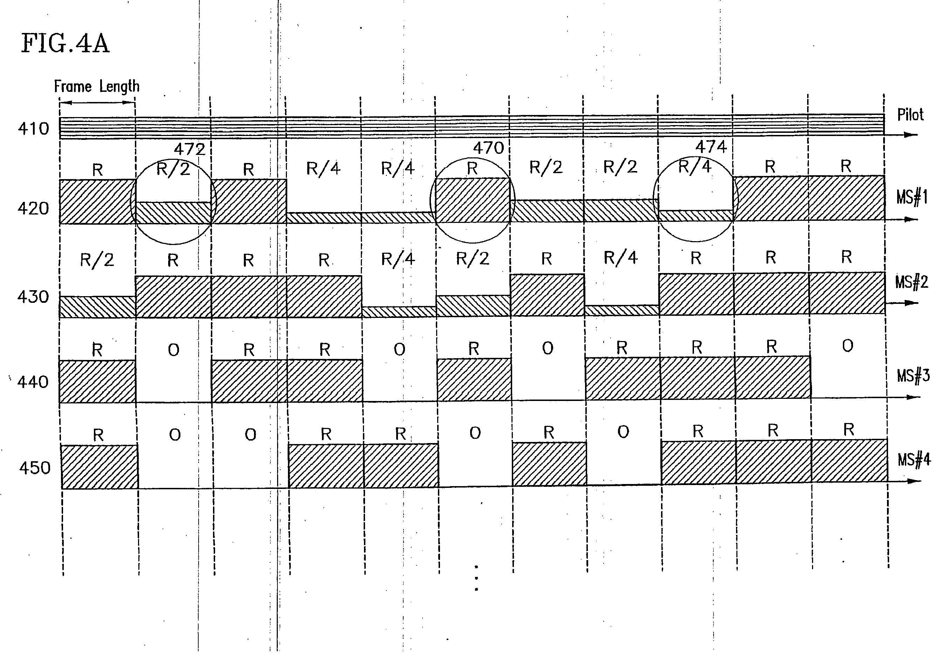

FIG. 4a is a signal diagram showing a transmit signal from the first station by the respective frames according to an example of the prior art;
FIG. 4b is a signal diagram showing a transmit signal from the first station by the respective frames according to another example of the prior art;
FIG. 4c is a signal diagram showing a transmit signal from the first station by the respective frames according to further another example of the prior art;
FIG. 4d is a signal diagram showing a transmit signal from the first station according to the conventional FDM (Frequency Division Multiplexing) system;
FIG. 4e is a signal diagram showing a transmit signal from the first station according to the conventional TDM (Time Division Multiplexing) system;
FIG. 4f is a signal diagram showing a transmit signal from the first station according to the conventional TDM system (using a slot-based frequency hopping);
FIG. 4g is a signal diagram showing a transmit signal from the first station according to the conventional FHM (Frequency Hopping Multiplexing) system for frequency diversity (using a symbol-based regular frequency hopping);
FIG. 4h is a signal diagram showing a transmit signal from the first station according to the conventional FHM system for frequency diversity and prevention of unauthorized monitoring (using a symbol-based irregular frequency hopping);
FIG. 4i is a signal diagram showing a transmit signal from the first station according to the conventional OCDM (Orthogonal Code Division Multiplexing) system (using a channel-based fixed orthogonal code allocation method);
FIG. 4j is a signal diagram showing a transmit signal from the first station according to the conventional ORDM (Orthogonal Resource Division Multiplexing) system (using a channel-based fixed orthogonal resource allocation method);
FIG. 5 is a schematic of a receiver in the second station for code division multiplexing according to the example of the prior art shown in FIG. 4i;
FIG. 6 is a schematic of a receiver in the second station showing the common components between the example of the prior art and the embodiment of the present invention;
FIG. 7 is a schematic of a receiver in the second station according to an example of the prior art;
FIG. 8 is a schematic of a receiver in the second station showing the common components between the example of the prior art and the embodiment of the present invention;

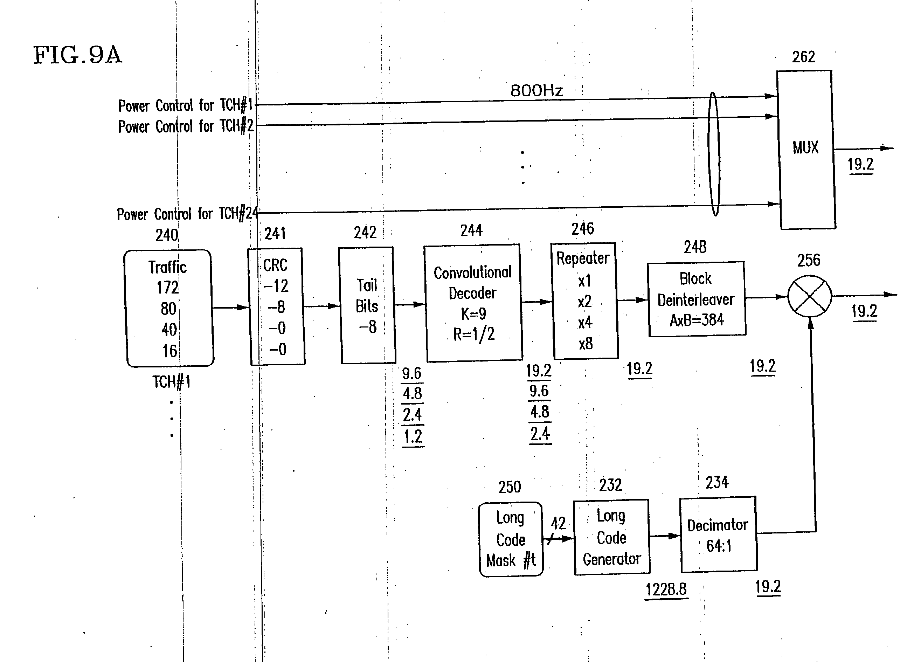

FIG. 9a presents a schematic of a transmitter in the first station for traffic channels for orthogonal resource hopping multiplexing and a schematic of a CPCCH (Common Physical Control Channel) according to an embodiment of the present invention (orthogonal resource = orthogonal code);

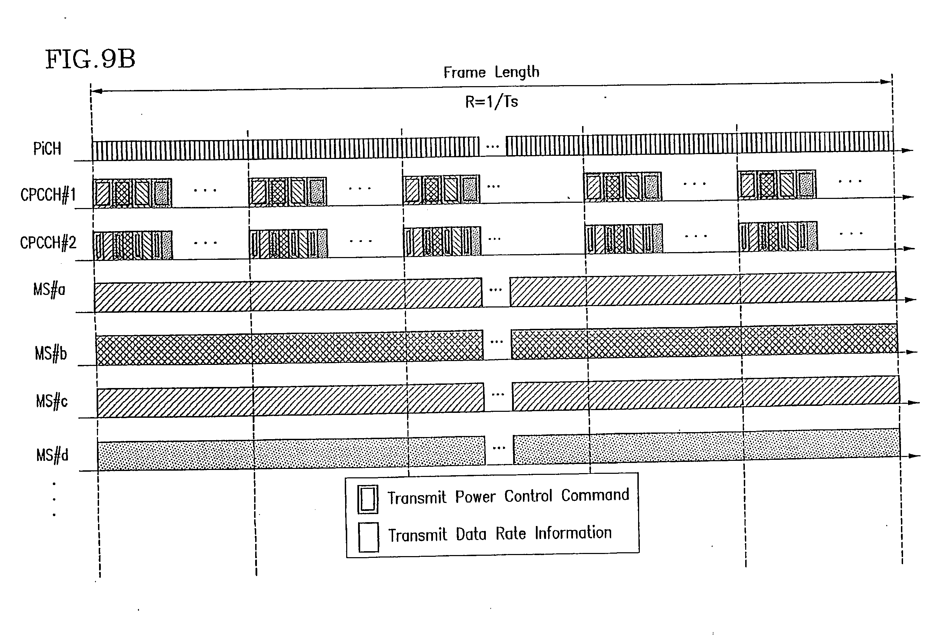

FIG. 9b is a signal diagram of the CPPCCH according to an embodiment of the present invention;

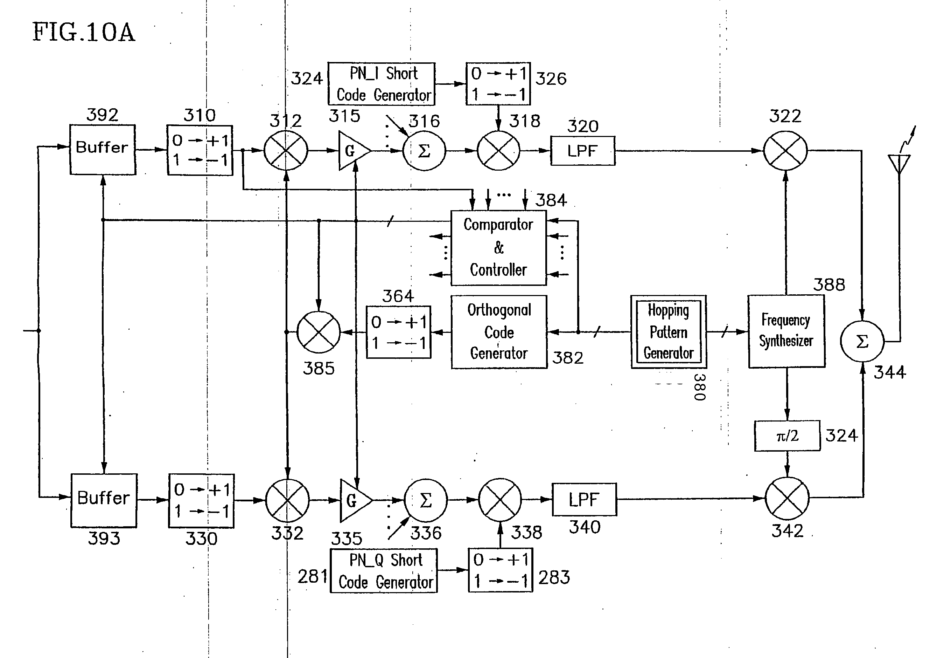

FIG. 10a is a schematic of a transmitter in the first station for orthogonal resource hopping multiplexing according to an embodiment of the present invention (corresponding to FIG. 3a);

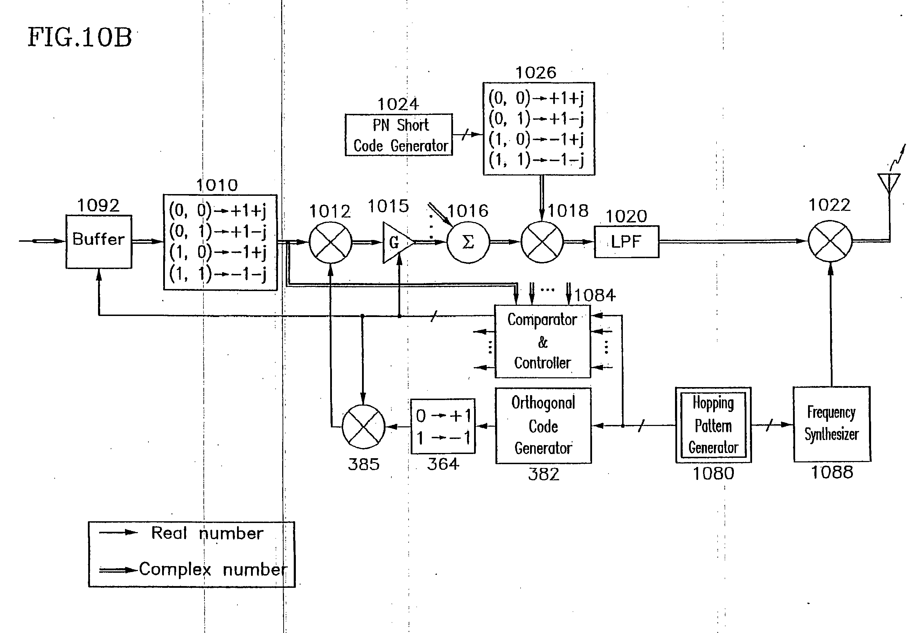

FIG. 10b is a schematic of a transmitter in the first station for orthogonal resource hopping multiplexing according to an embodiment of the present invention (denotes the signal of FIG. 10a as a complex number signal);

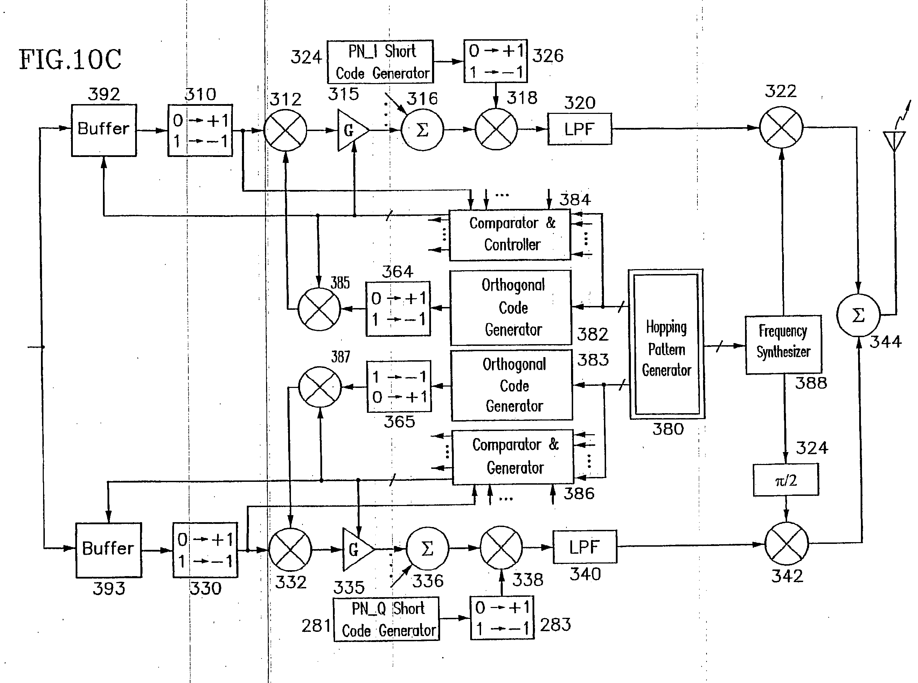

FIG. 10c is a schematic of a transmitter in the first station for orthogonal resource hopping multiplexing according to an embodiment of the present invention (corresponding to FIG. 3b);

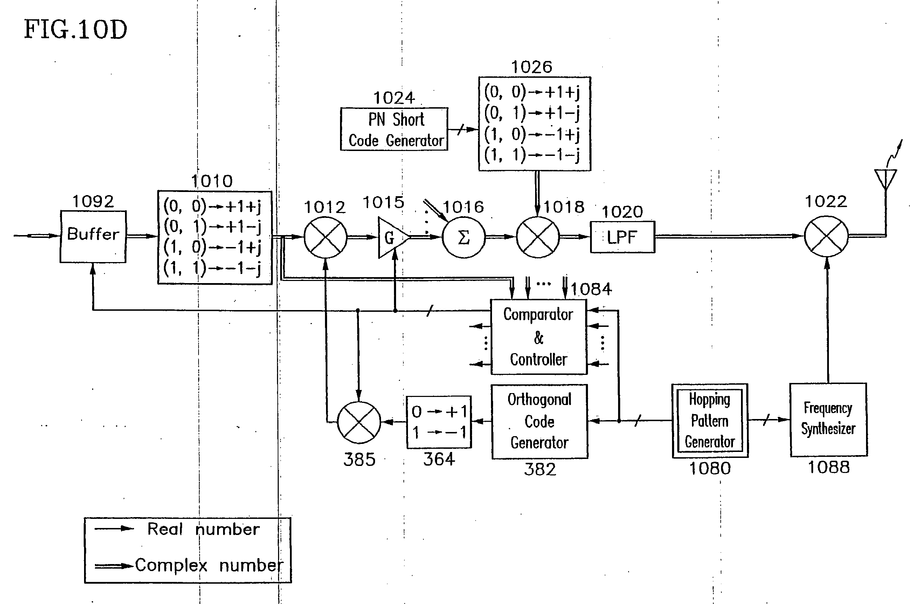

FIG. 10d is a schematic of a transmitter in the first station for orthogonal resource hopping multiplexing according to an embodiment of the present invention (denotes the signal of FIG. 10b as a complex number signal);

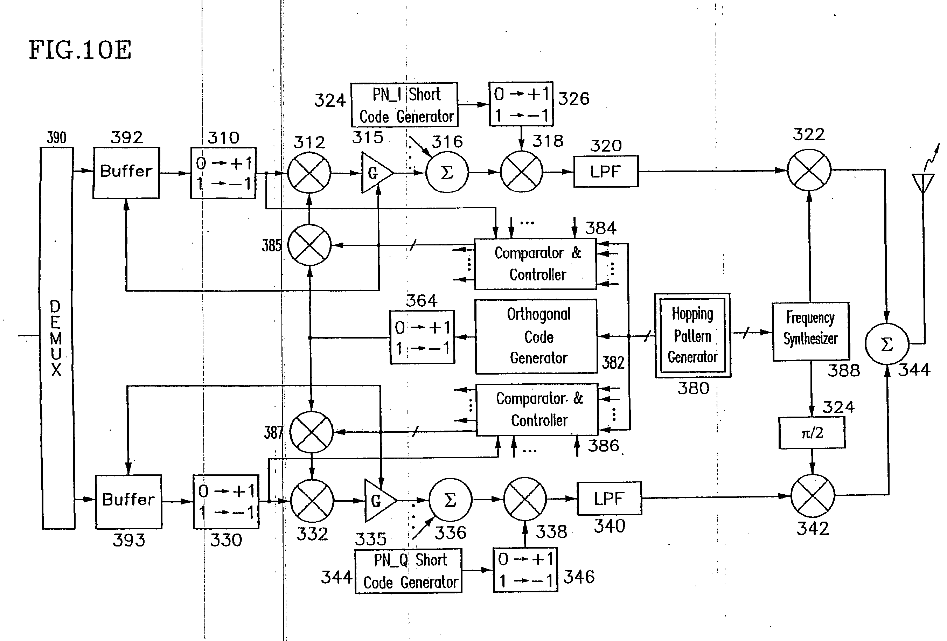

FIG. 10e is a schematic of a transmitter in the first station for orthogonal resource hopping multiplexing according to an embodiment of the present invention (corresponding to FIG. 3c);

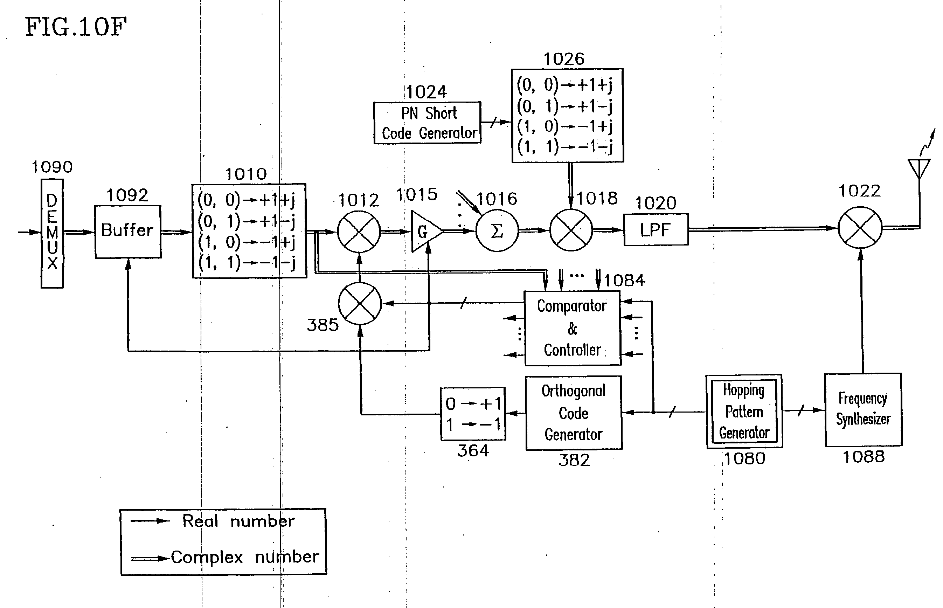

FIG. 10f is a schematic of a transmitter in the first station for orthogonal resource hopping multiplexing according to an embodiment of the present invention (denotes the signal of FIG. 10c as a complex number signal);

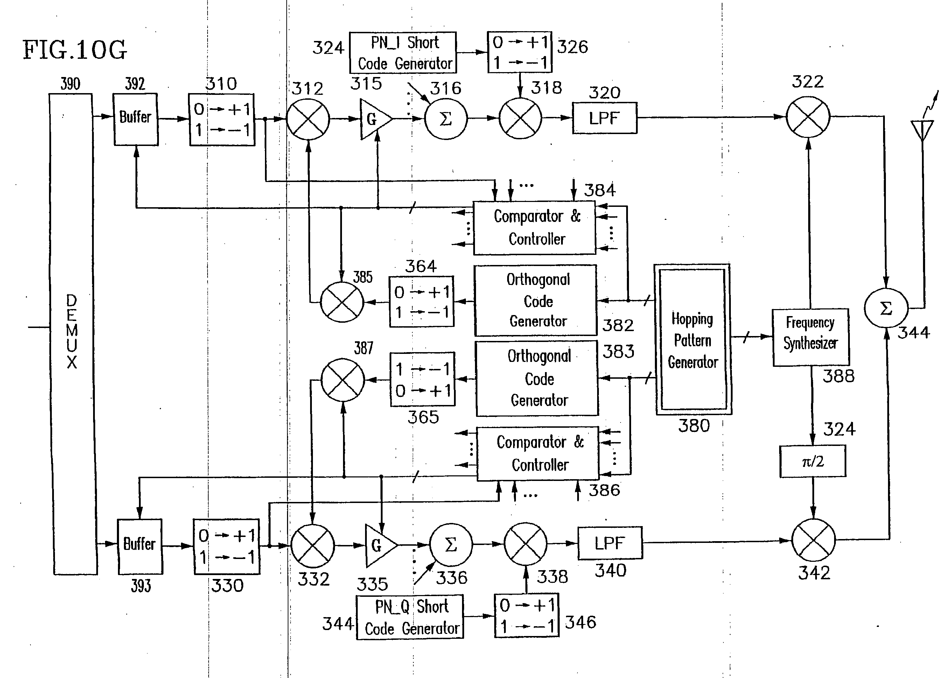

FIG. 10g is a schematic of a transmitter in the first station for ORHM according to an embodiment of the present invention to the example of the prior art shown in FIG. 3d;

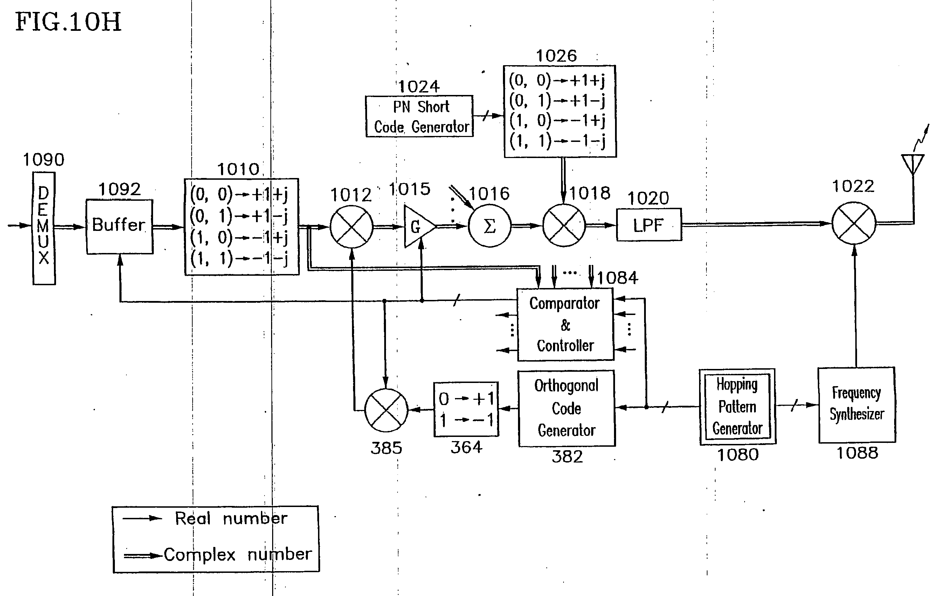

FIG. 10h is a schematic of a transmitter in the first station for orthogonal resource hopping multiplexing according to an embodiment of the present invention (corresponding to FIG. 3d);

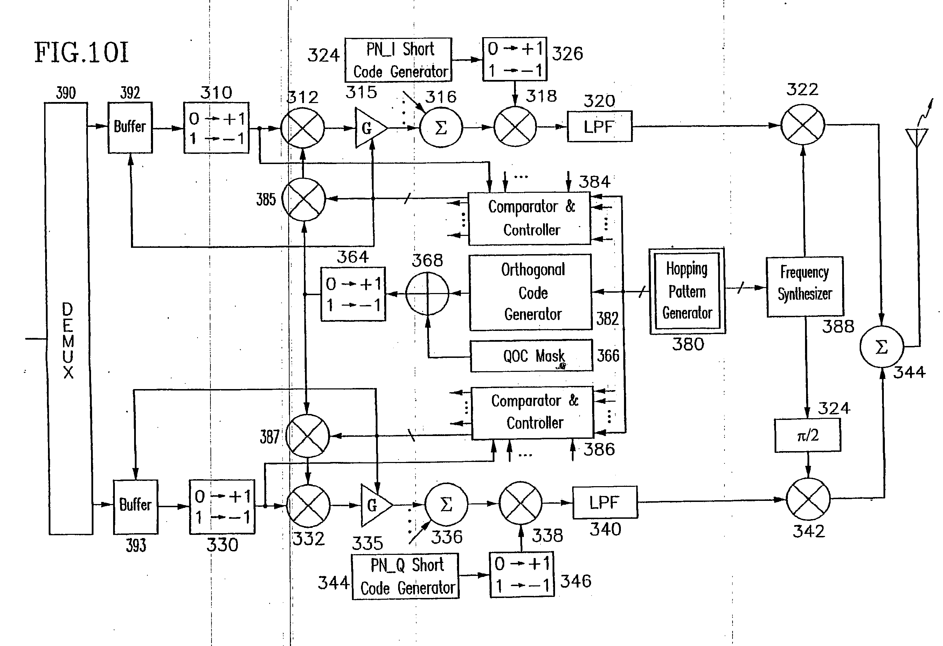

FIG. 10i is a schematic of a transmitter in the first station for orthogonal resource hopping multiplexing according to an embodiment of the present invention (denotes the signal of FIG. 10d as a complex number signal);

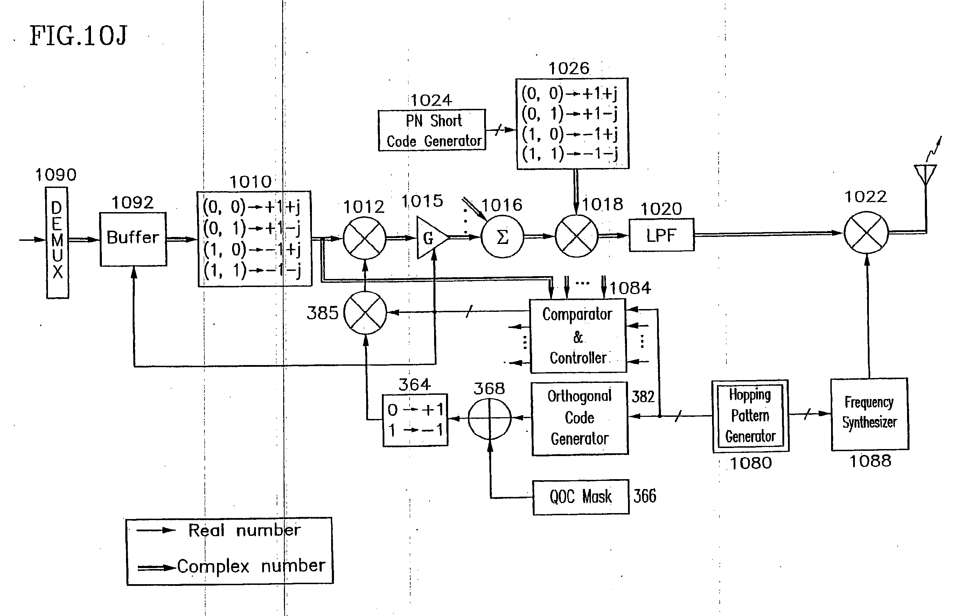

FIG. 10j is a schematic of a transmitter in the first station for orthogonal resource hopping multiplexing according to an embodiment of the present invention (corresponding to FIG. 3e);

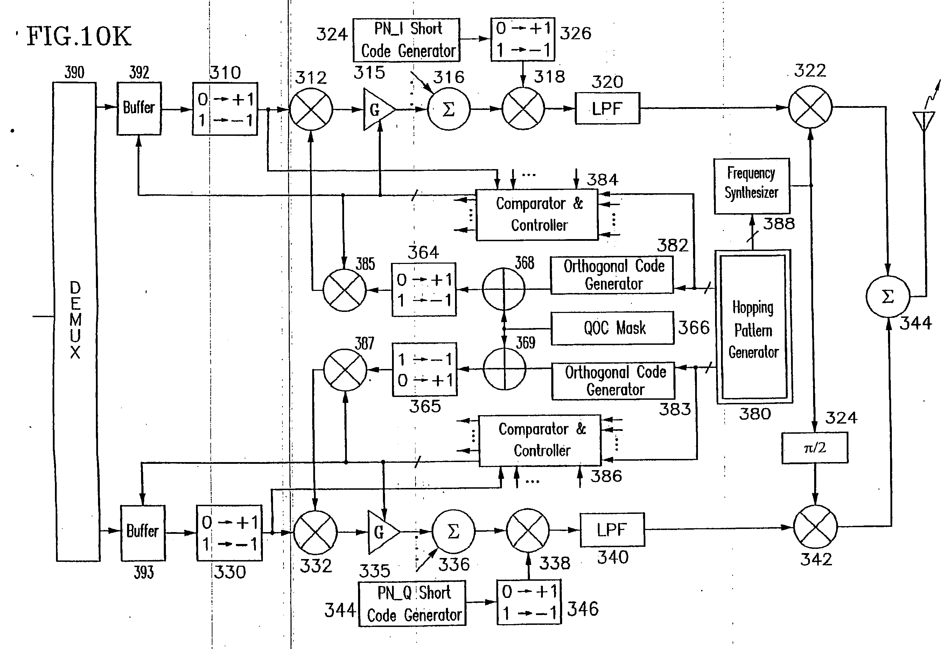

FIG. 10k is a schematic of a transmitter in the first station for orthogonal resource hopping multiplexing according to an embodiment of the present invention (denotes the signal of FIG. 10e as a complex number signal);

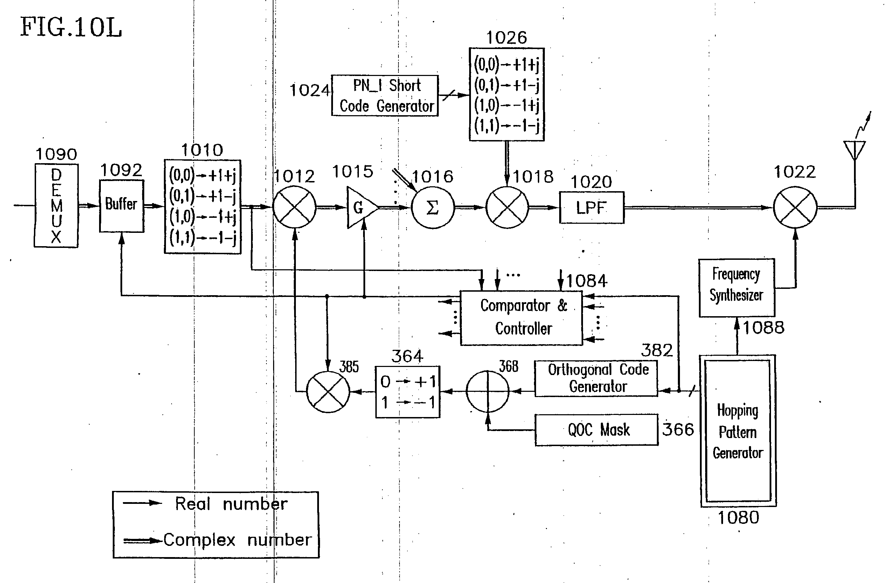

FIG. 10l is a schematic of a transmitter in the first station for orthogonal resource hopping multiplexing according to an embodiment of the present invention (corresponding to FIG. 3f);

FIG. 10m is a schematic of a transmitter in the first station for orthogonal resource hopping multiplexing according to an embodiment of the present invention (denotes the signal of FIG. 10f as a complex number signal);

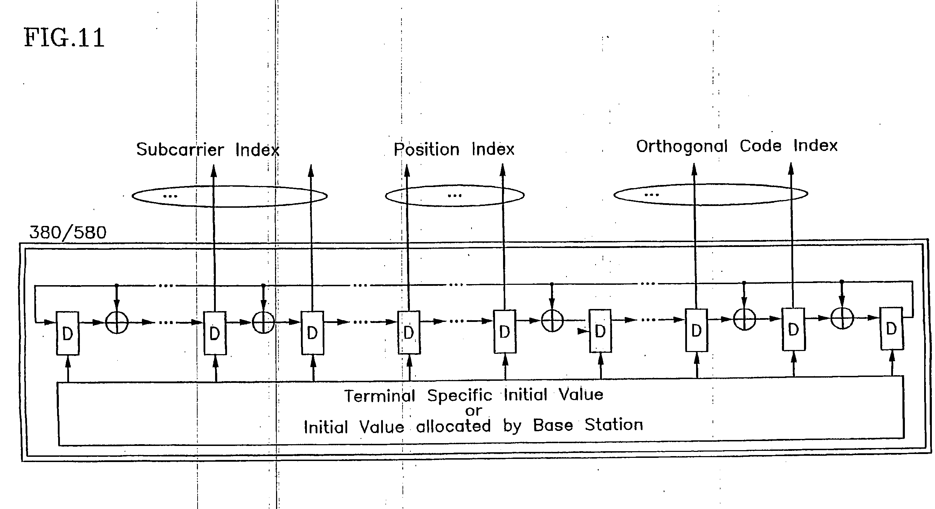

FIG. 11 is a schematic of a hopping pattern generator of a multidimensional orthogonal resource according to an embodiment of the present invention;

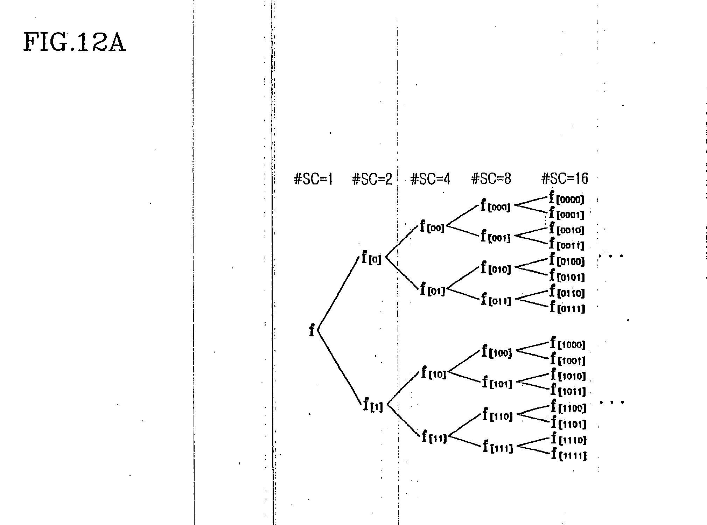

FIG. 12a is an illustration showing an example of a subcarrier group for frequency hopping according to an embodiment of the present invention (orthogonal resource = frequency);

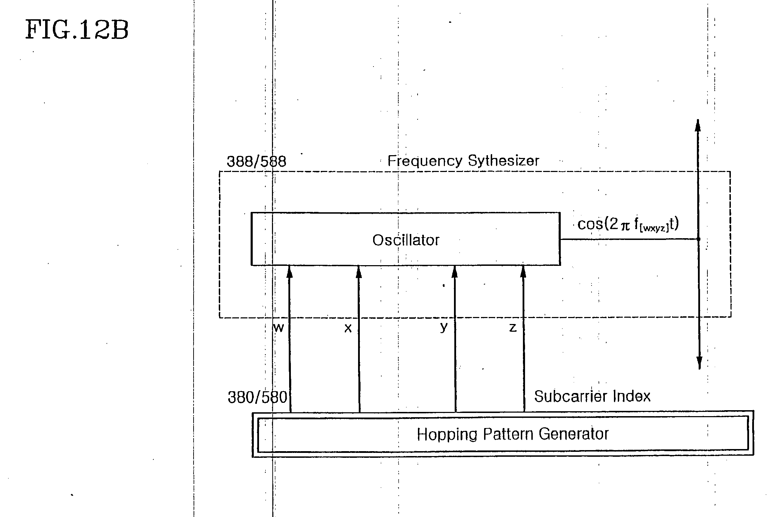

FIG. 12b is a schematic of a subcarrier synthesizer based on the output of a frequency hopping pattern generator according to an embodiment of the present invention;

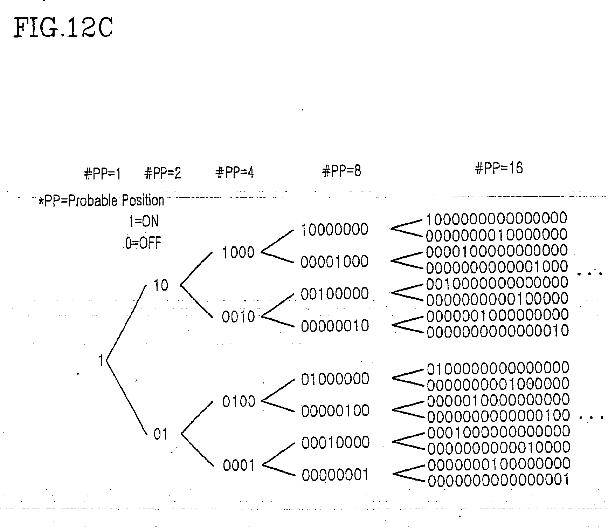

FIG. 12c is an illustration showing an example of a transmit data symbol position interval for symbol-based transmit time hopping according to an embodiment of the present invention (orthogonal resource = time; "1" = ON; and "0" = OFF);

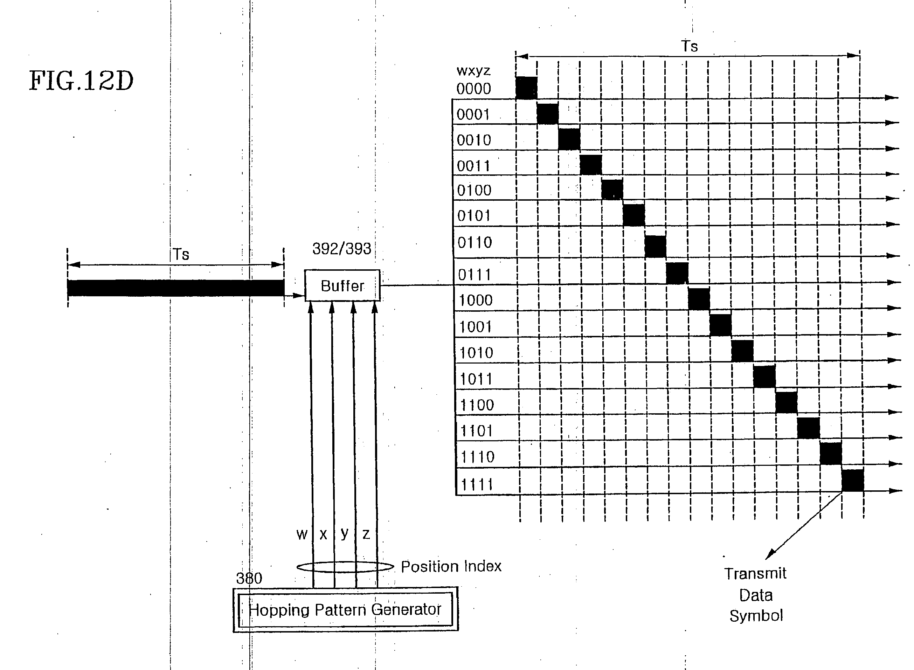

FIG. 12d is a schematic of a symbol position selector (or buffer) based on the output of a time hopping pattern generator at the transmitter of the first station according to an embodiment of the present invention;

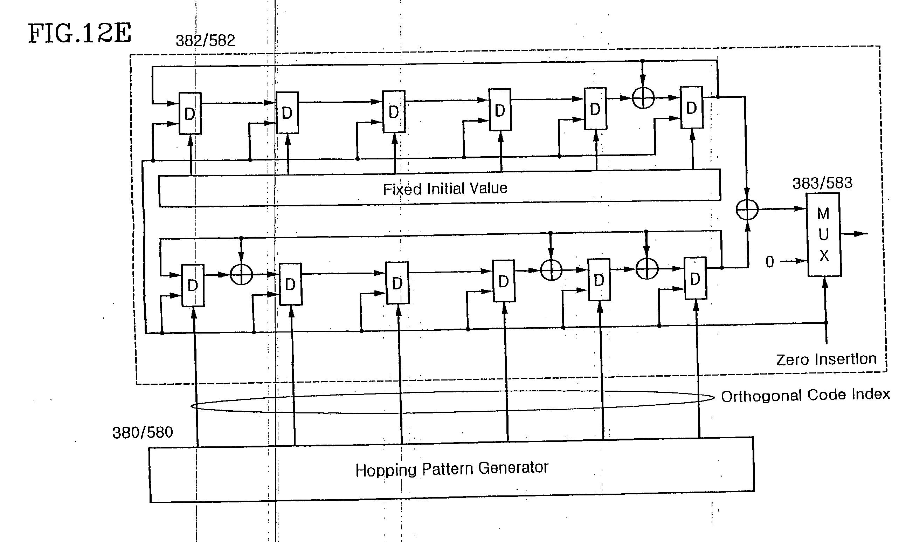

FIG. 12e is a schematic of an orthogonal gold code generator based on an orthogonal code hopping pattern according to an embodiment of the present invention (orthogonal resource = orthogonal gold code);

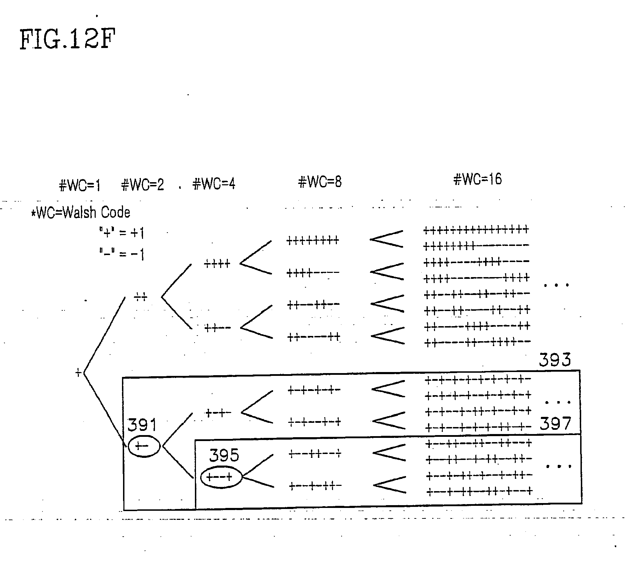

FIG. 12f is an illustration showing a tree-type orthogonal Walsh code based on different spreading factors (orthogonal resource = orthogonal Walsh code);

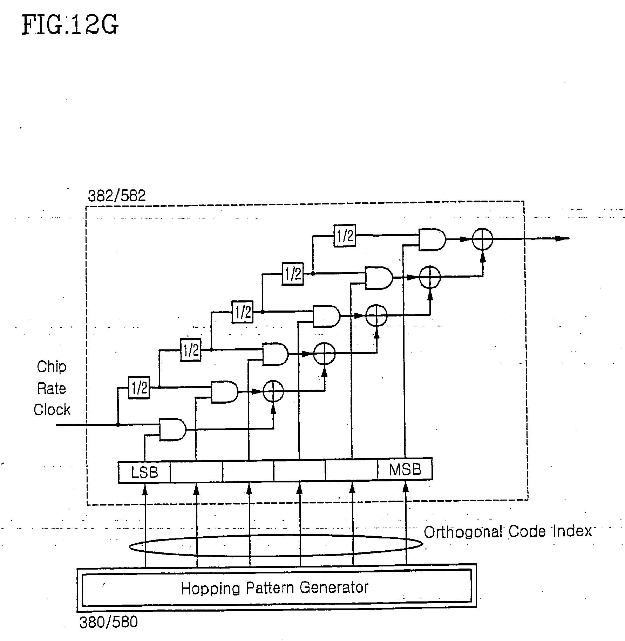

FIG. 12g is a schematic of an orthogonal Walsh code generator based on the orthogonal code hopping pattern according to an embodiment of the present invention (orthogonal resource = orthogonal Walsh code);

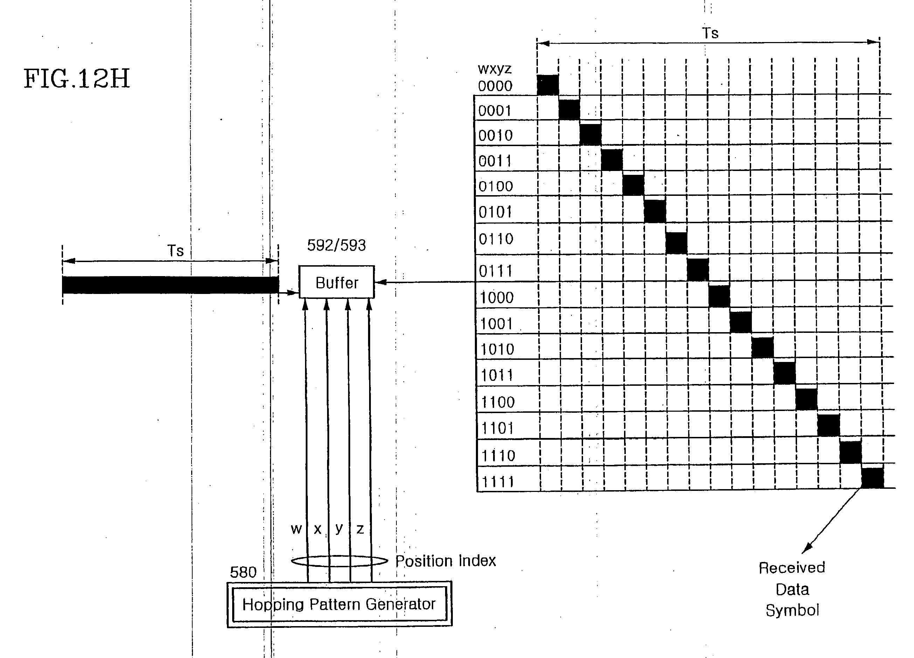

FIG. 12h is a schematic of a symbol position selector (or buffer) based on the output of a time hopping pattern generator at a receiver of the second station according to an embodiment of the present invention;

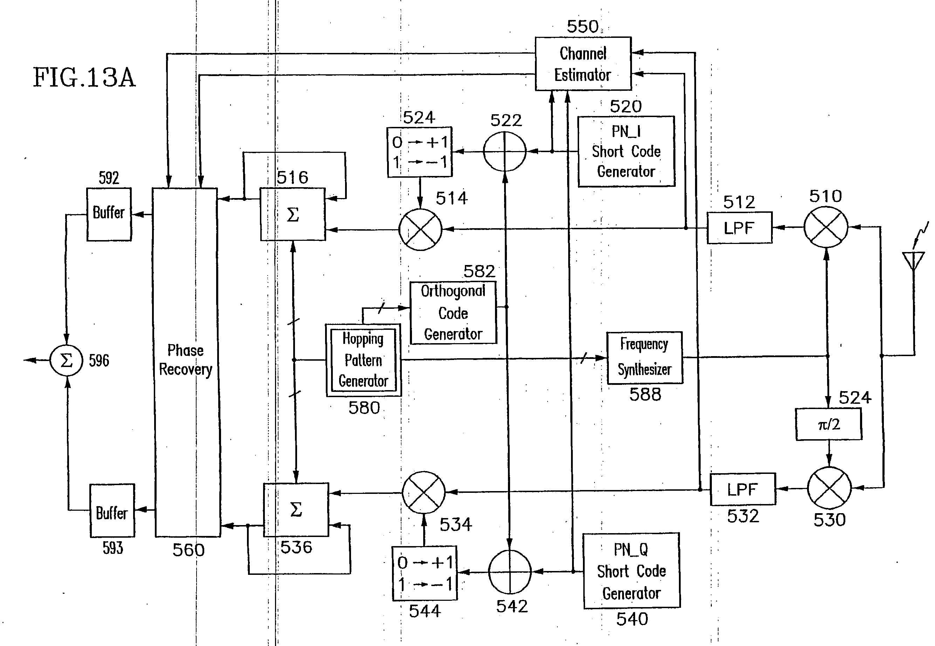

FIG. 13a is a schematic of a receiver in the second station for orthogonal resource hopping multiplexing according to the embodiment of the present invention shown in FIG. 10a;

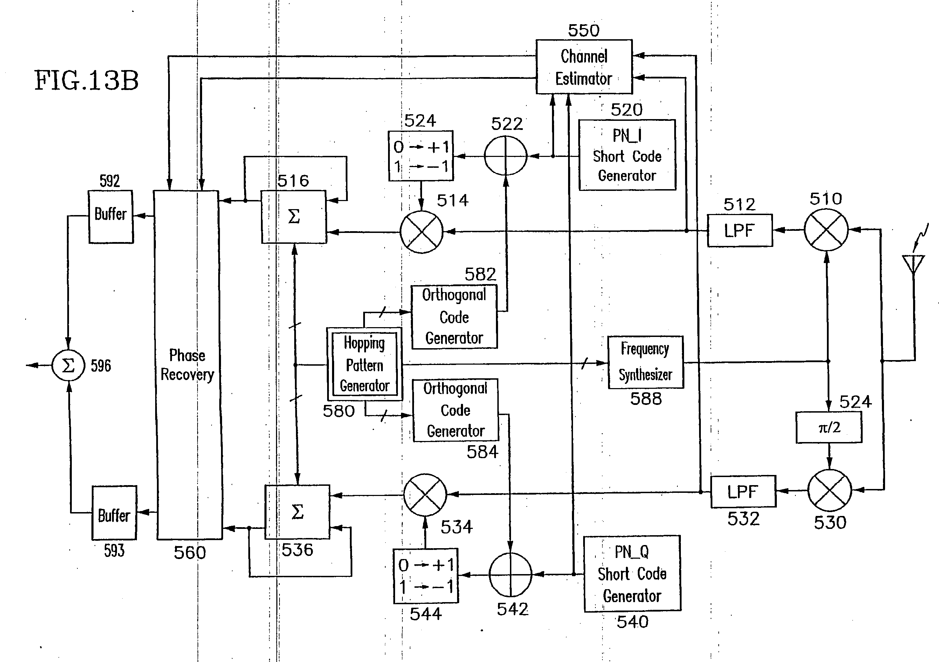

FIG. 13b is a schematic of a receiver in the second station for orthogonal resource hopping multiplexing according to the embodiment of the present invention shown in FIG. 10c;

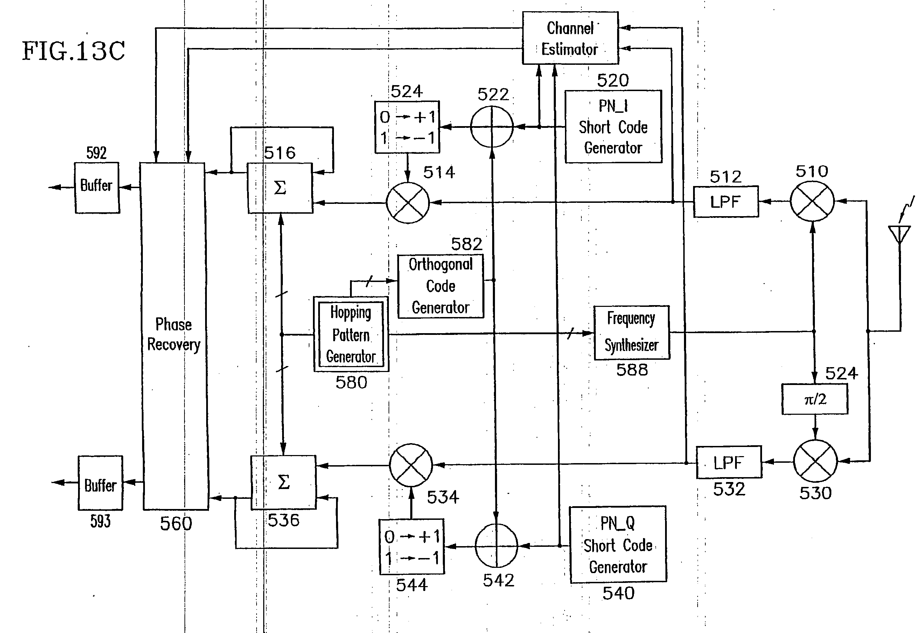

FIG. 13c is a schematic of a receiver in the second station for orthogonal resource hopping multiplexing according to the embodiment of the present invention shown in FIG. 10e;

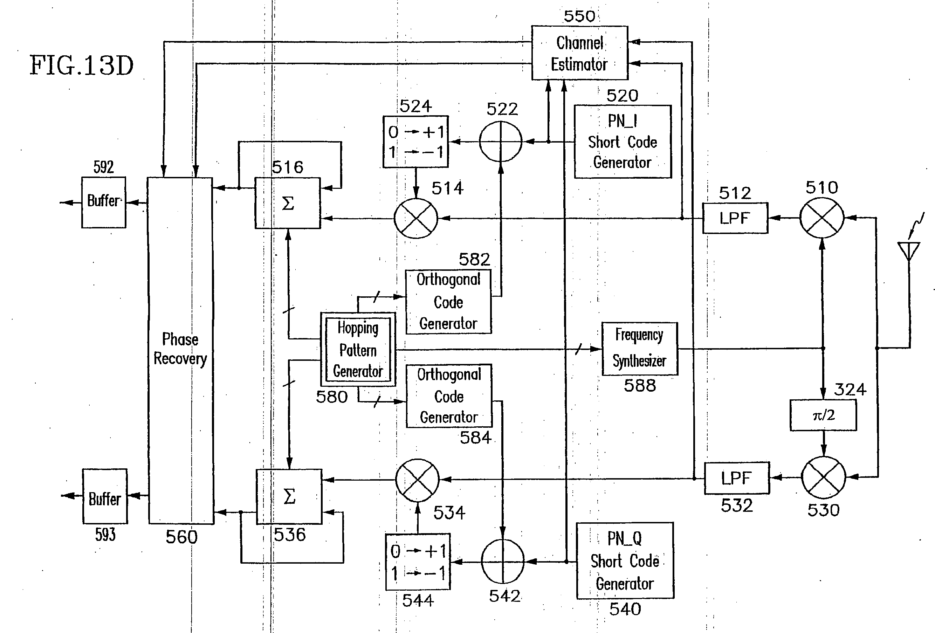

FIG. 13d is a schematic of a receiver in the second station for orthogonal resource hopping multiplexing according to the embodiment of the present invention shown in FIG. 10g;

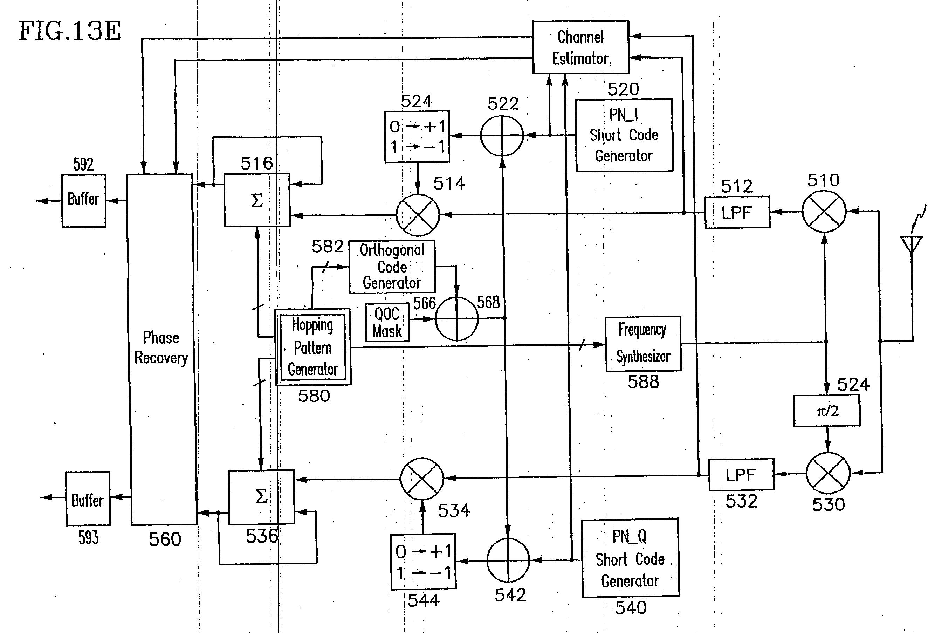

FIG. 13e is a schematic of a receiver in the second station for orthogonal resource hopping multiplexing according to the embodiment of the present invention shown in FIG. 10i;

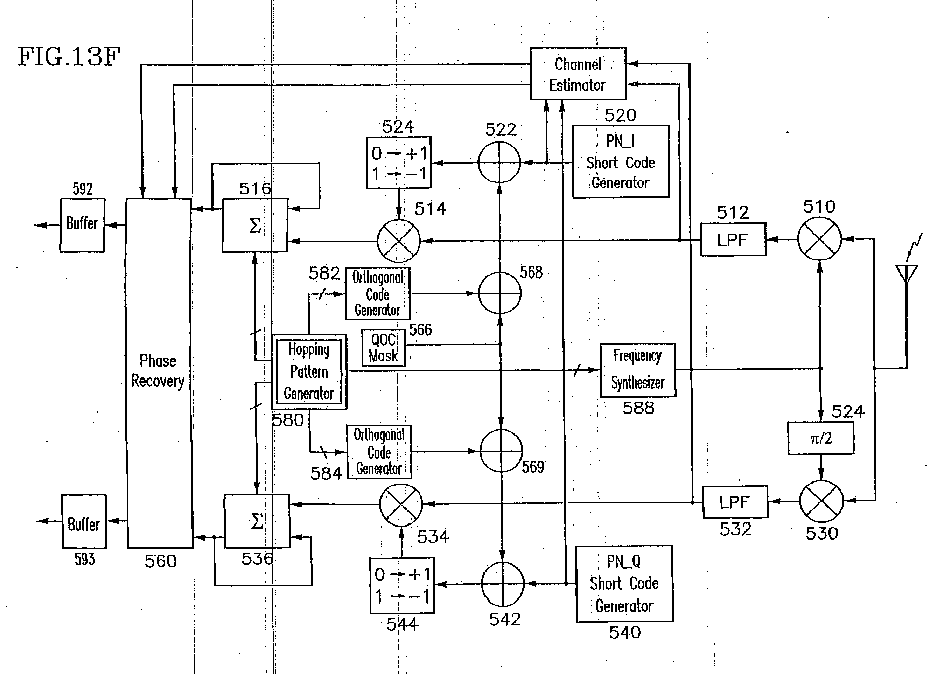

FIG. 13f is a schematic of a receiver in the second station for orthogonal resource hopping multiplexing according to the embodiment of the present invention shown in FIG. 10k;

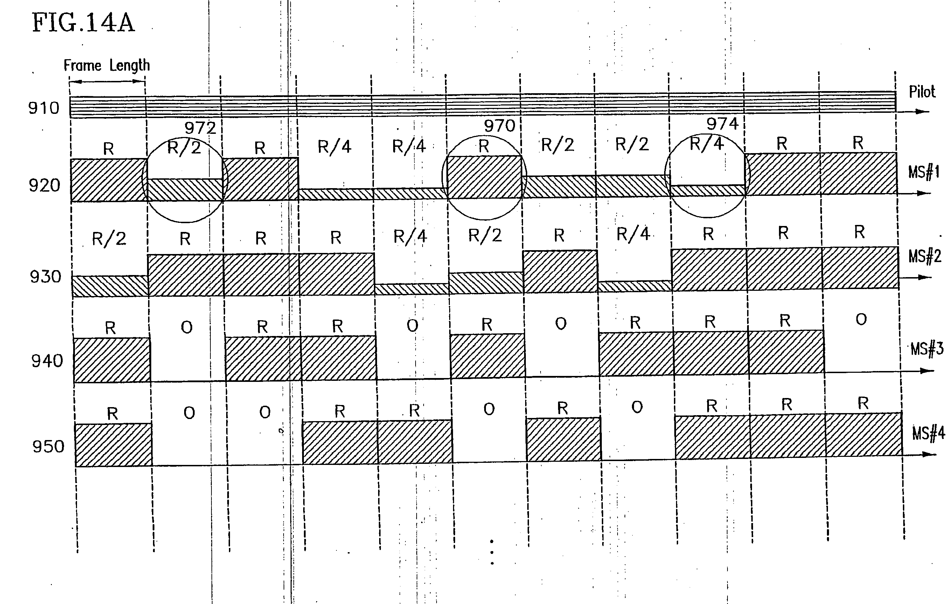

FIG. 14a is a signal diagram showing a transmit signal from the first station by the respective frames according to an example of the prior art;

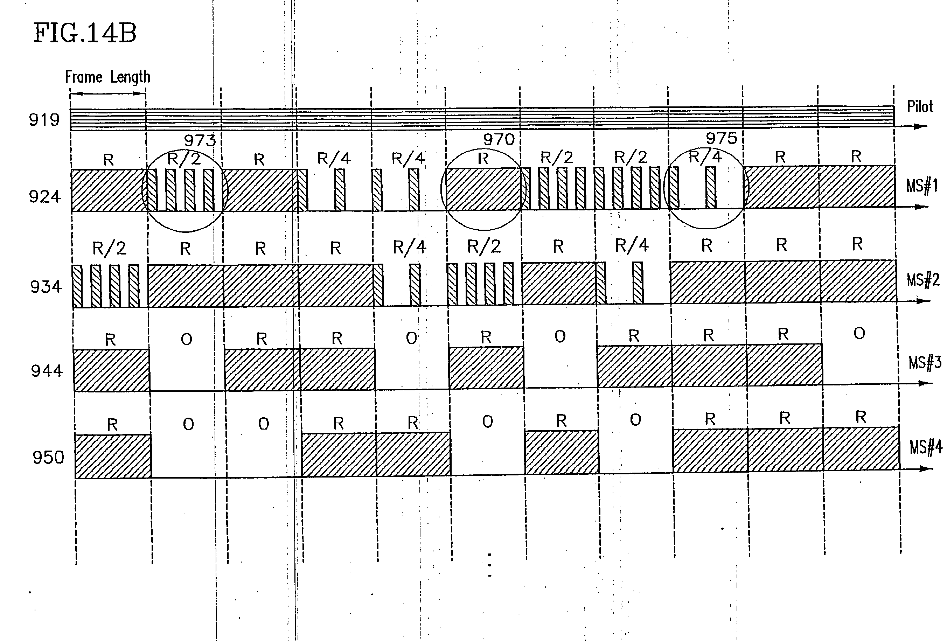

FIG. 14b is a signal diagram showing a transmit signal from the first station by the respective frames according to an embodiment of the present invention;

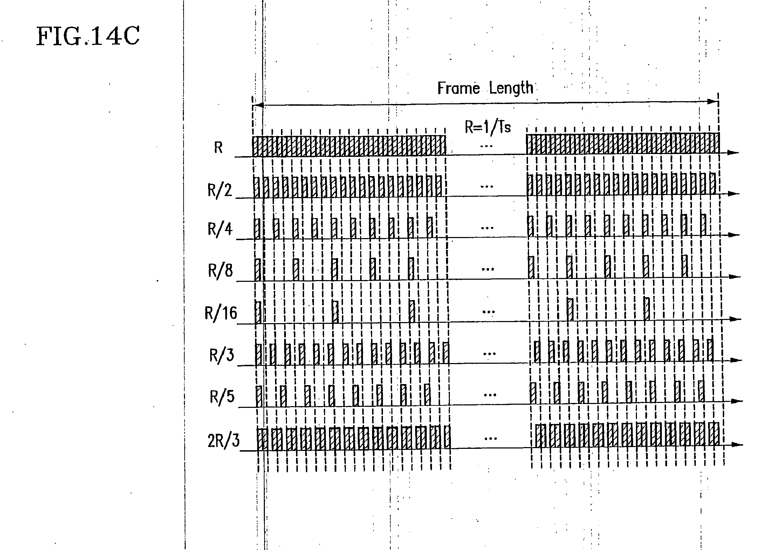

FIG. 14c is a signal diagram showing a transmit signal from the first station in a frame having a transmission rate less than a basic transmission rate R according to an embodiment of the present invention (regular transmission time hopping);

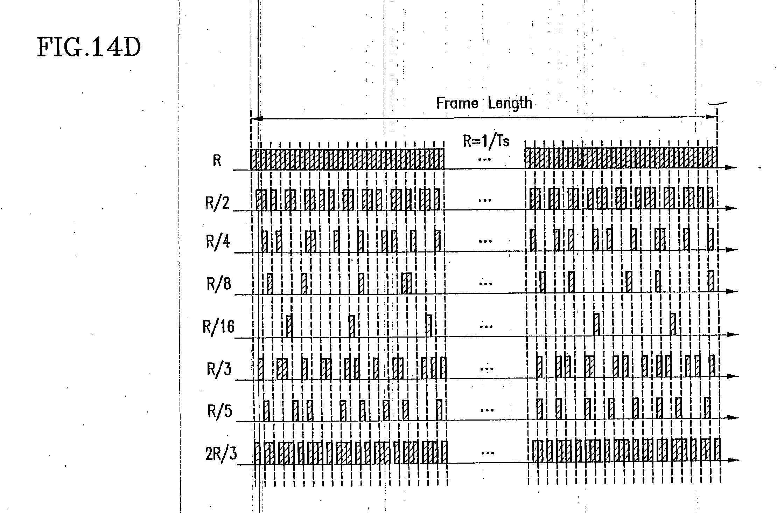

FIG. 14d is a signal diagram showing a transmit signal from the first station in a sparse frame according to an embodiment of the present invention (irregular transmission time hopping);

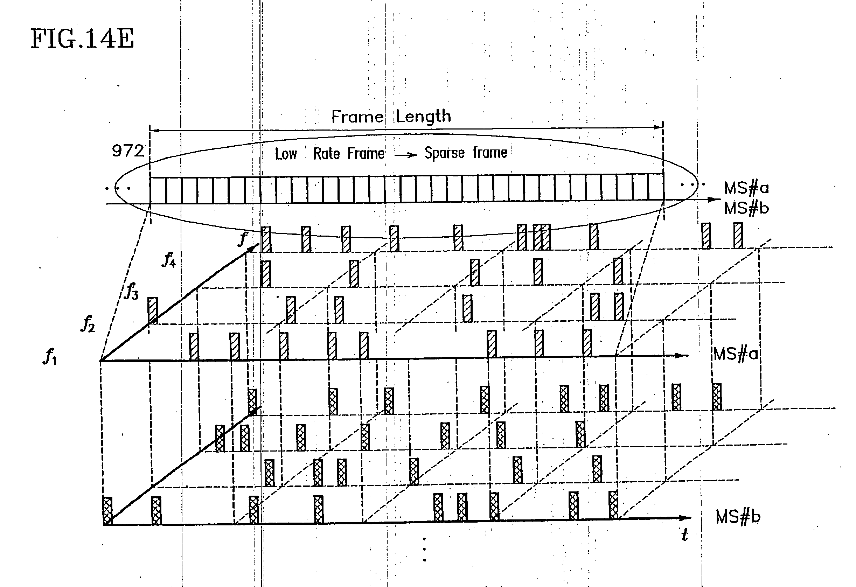

FIG. 14e is a signal diagram showing a transmit signal from the first station in a sparse frame for the FHM (Frequency Hopping Multiplexing) system according to an embodiment of the present invention (irregular transmission time hopping);

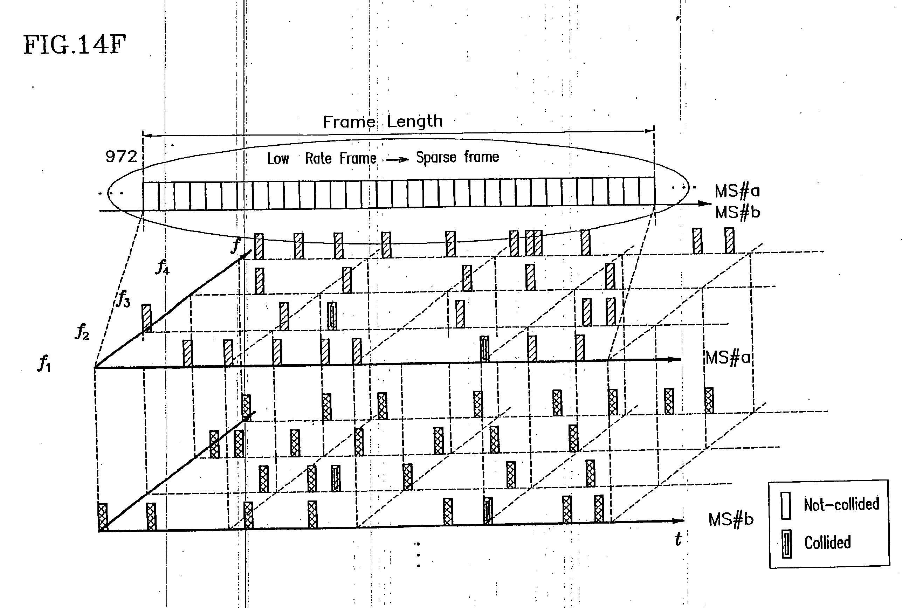

FIG. 14f is an illustration showing the case where a hopping pattern expressed in terms of the two-dimensional coordinates of transmission time and subcarrier is selected by multiple channels at the same time in FIG. 14e (the square defined by the double solid line is the collided data symbol);

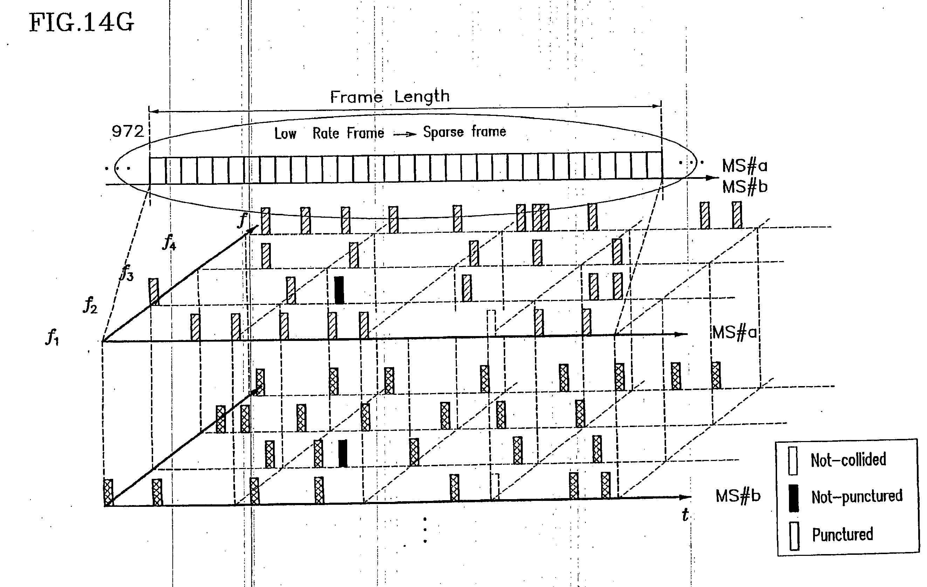

FIG. 14g is an illustration showing that the data symbols of the collided coordinates in FIG. 14f are compared with one another to determine whether to be transmitted (the black square means transmission; and the dotted line square means no transmission);

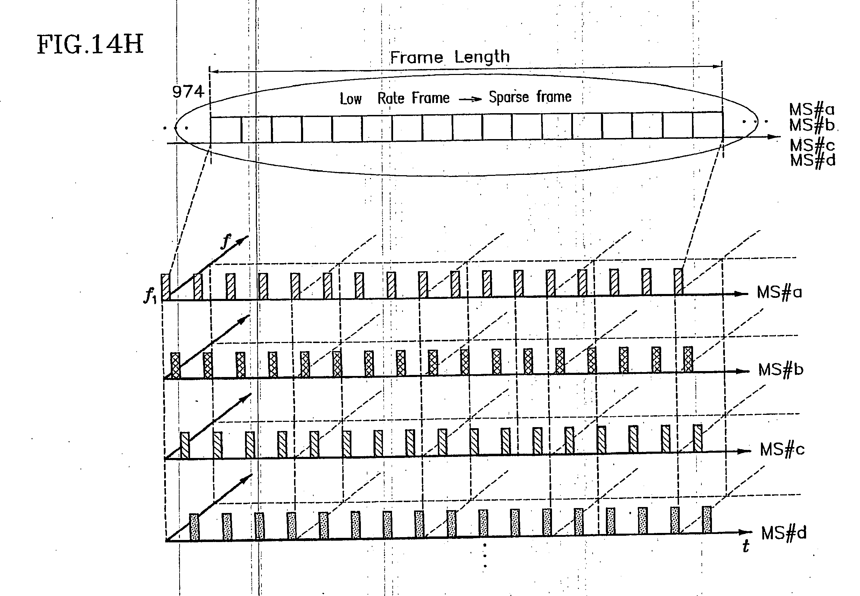

FIG. 14h is a signal diagram showing a transmit signal from the first station in a sparse frame for time hopping multiplexing according to an embodiment of the present invention (regular transmission time hopping);

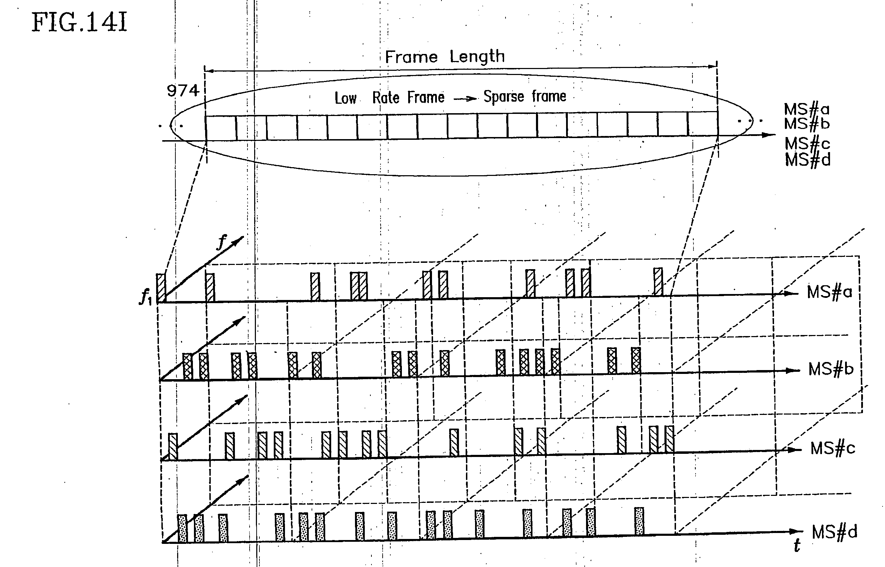

FIG. 14i is a signal diagram showing a transmit signal from the first station in a sparse frame for time hopping multiplexing according to an embodiment of the present invention (irregular transmission time hopping);

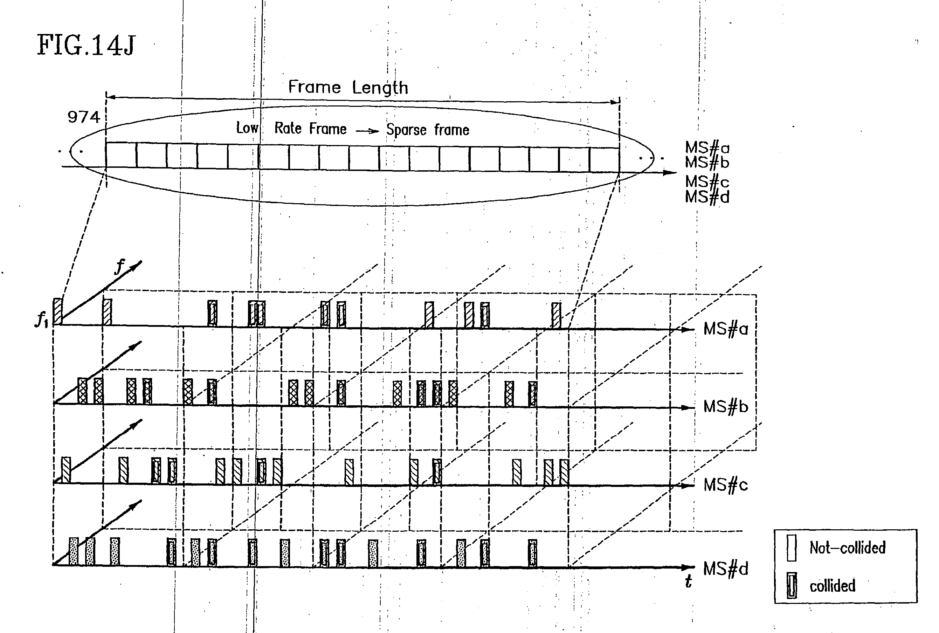

FIG. 14j is an illustration showing the case where a hopping pattern expressed in terms of the one-dimensional coordinates of transmission time is selected by multiple channels at the same time in FIG. 14i (the square defined by the double solid line is the collided data symbol);

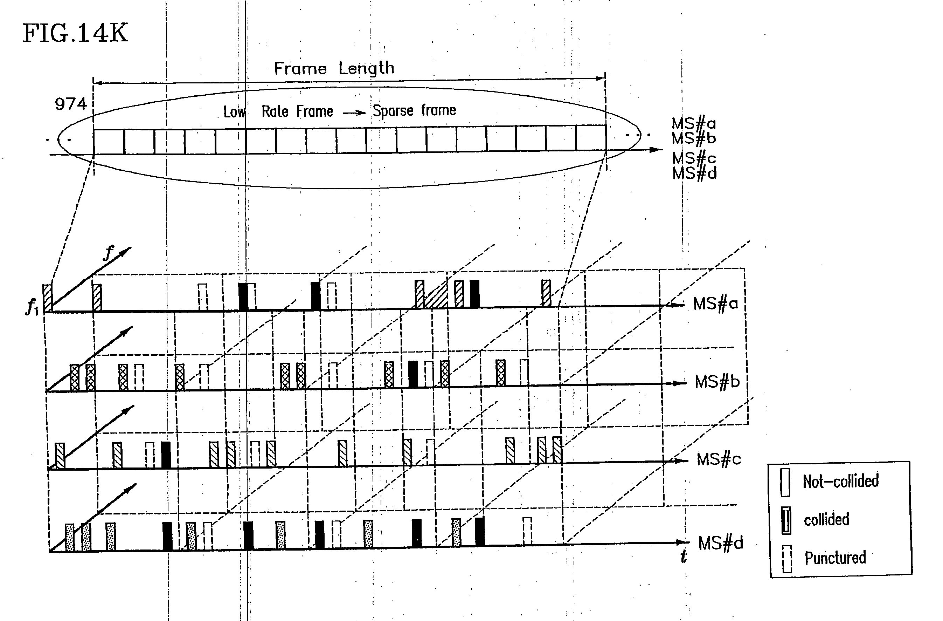

FIG. 14k is an illustration showing that the data symbols of the collided coordinates in FIG. 14j are compared with one another to determine whether to be transmitted (the black square means transmission; and the dotted line square means no transmission);

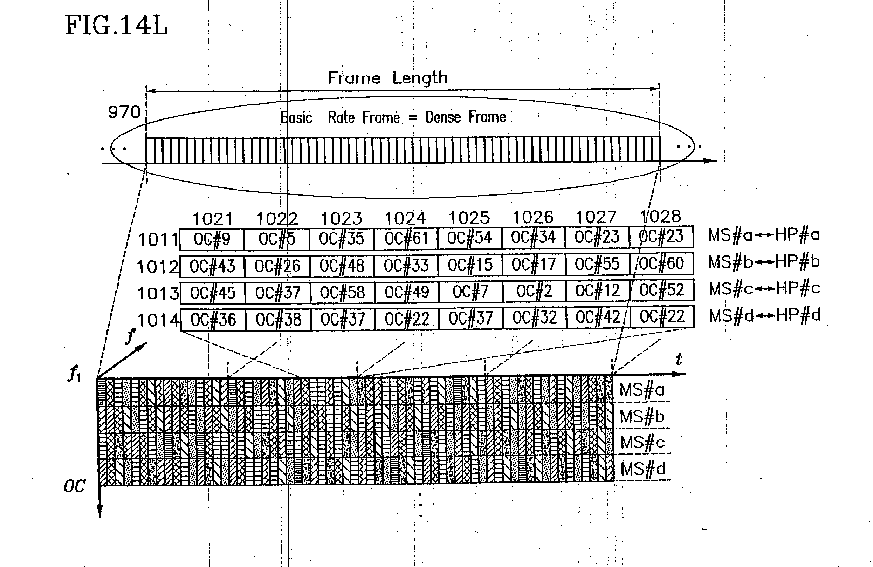

FIG. 14l is a signal diagram showing a transmit signal from the first station in a frame (i.e., a dense frame) having a base transmission rate R for orthogonal code hopping multiplexing according to an embodiment of the present invention;

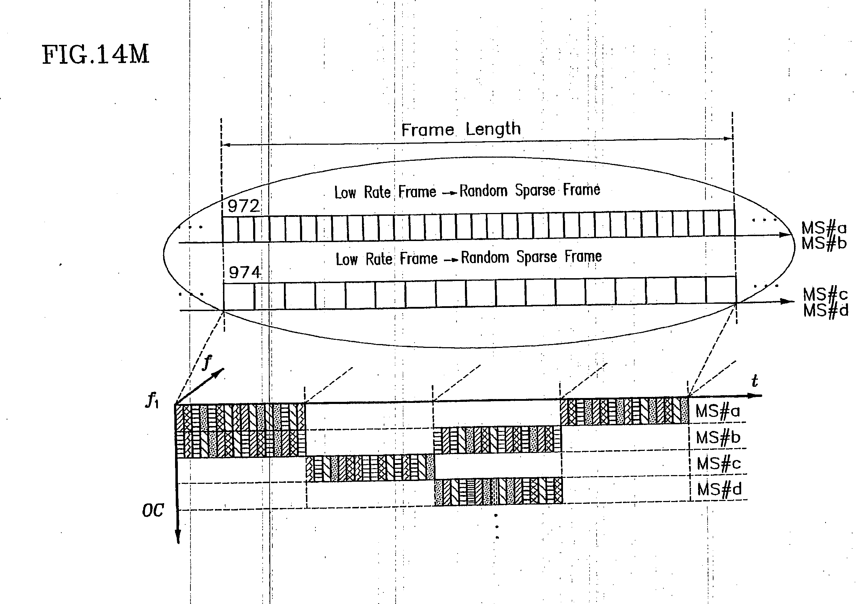

FIG. 14m is a signal diagram showing a transmit signal from the first station in a sparse frame for time slot-based transmission time hopping multiplexing and orthogonal code hoping multiplexing according to an embodiment of the present invention;

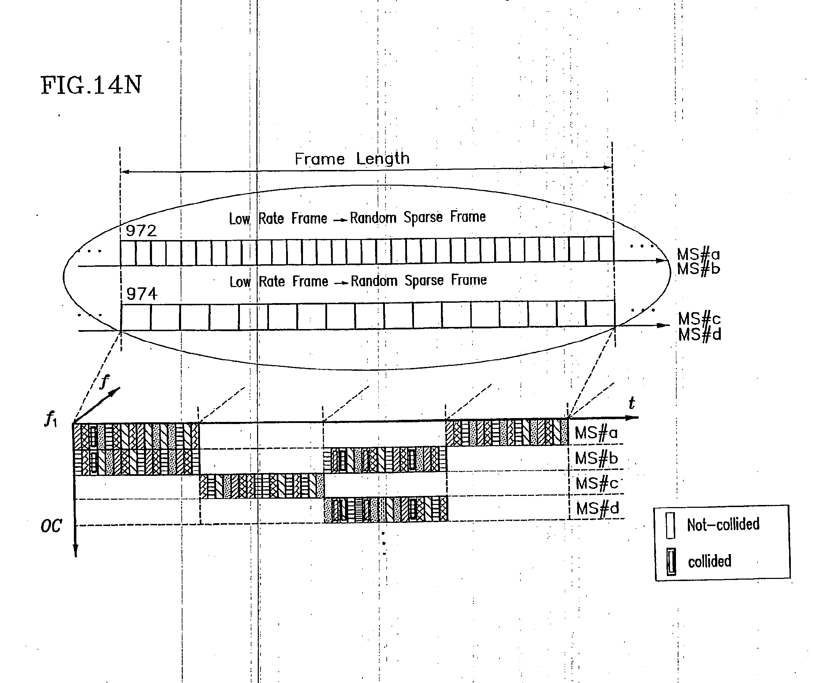

FIG. 14n is an illustration showing the case where a hopping pattern expressed in terms of the two-dimensional coordinates of transmission time and orthogonal code is selected by multiple channels at the same time in FIG. 14m (the square defined by the double solid line is the collided data symbol);

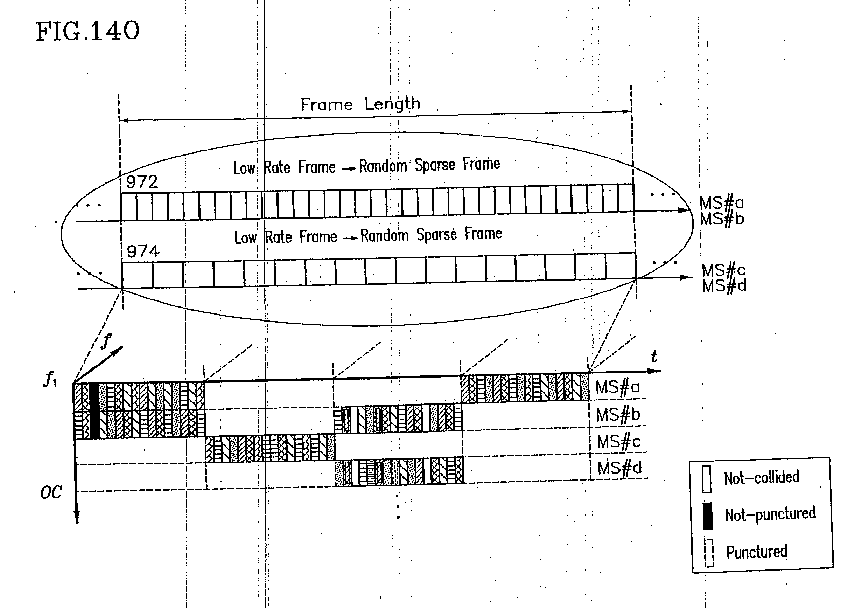

FIG. 14o is an illustration showing that the data symbols of the collided coordinates in FIG. 14n are compared with one another to determine whether to be transmitted (the black square means transmission; and the dotted line square means no transmission);

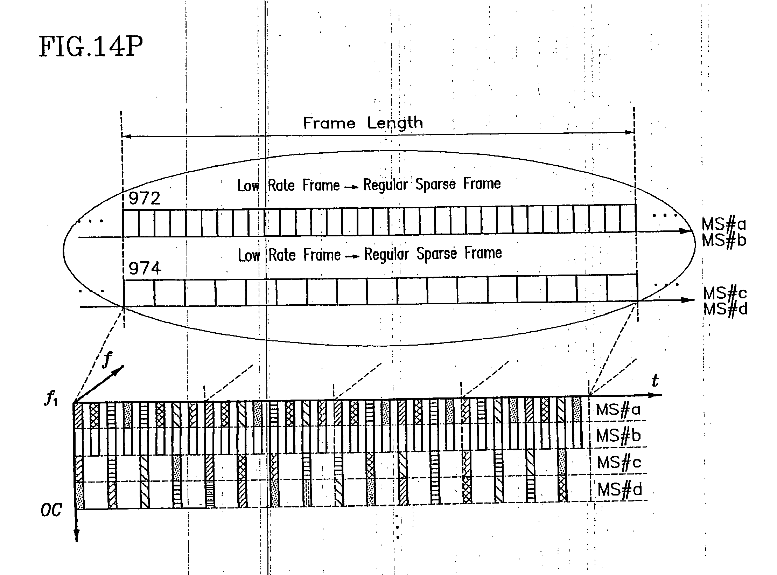

FIG. 14p is a signal diagram showing a transmit signal from the first station in a sparse frame for symbol-based regular transmission time hopping multiplexing and orthogonal code hopping multiplexing according to an embodiment of the present invention (when the frame starting symbol is present at the same position);

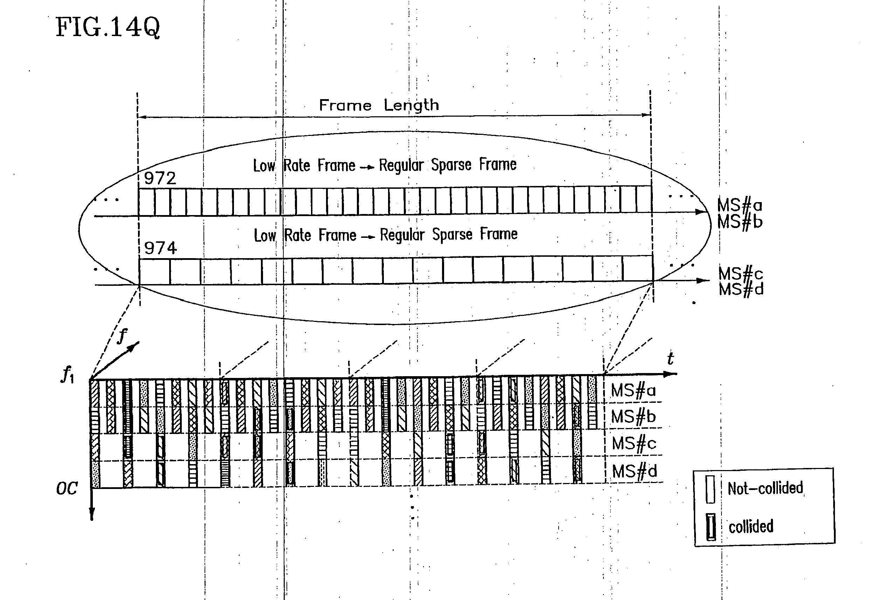

FIG. 14q is an illustration showing the case where a hopping pattern expressed in terms of the two-dimensional coordinates of transmission time and orthogonal code symbol is selected by multiple channels at the same time in FIG. 14p (the square defined by the double solid line is the collided data symbol);

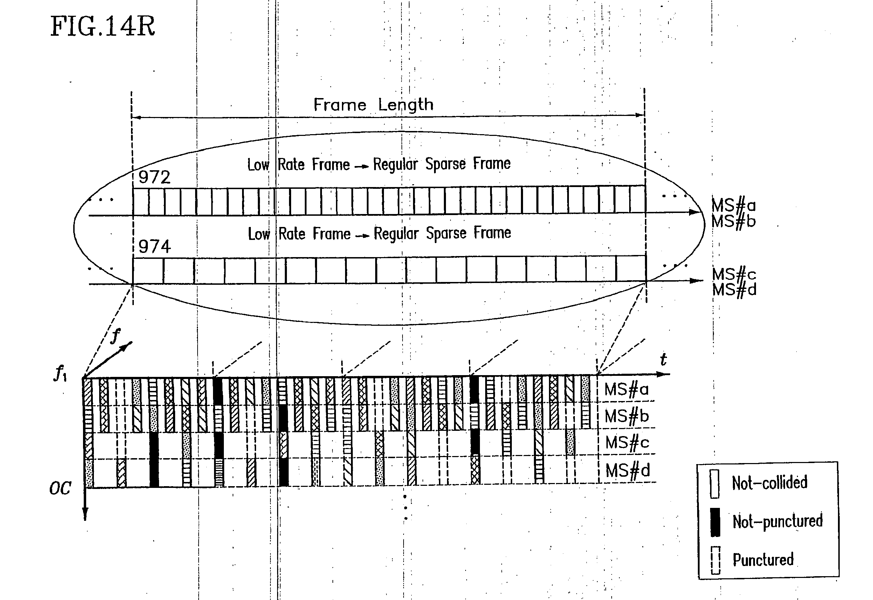

FIG. 14r is an illustration showing that the data symbols of the collided coordinates in FIG. 14q are compared with one another to determine whether to be transmitted (the black square means transmission; and the dotted line square means no transmission);

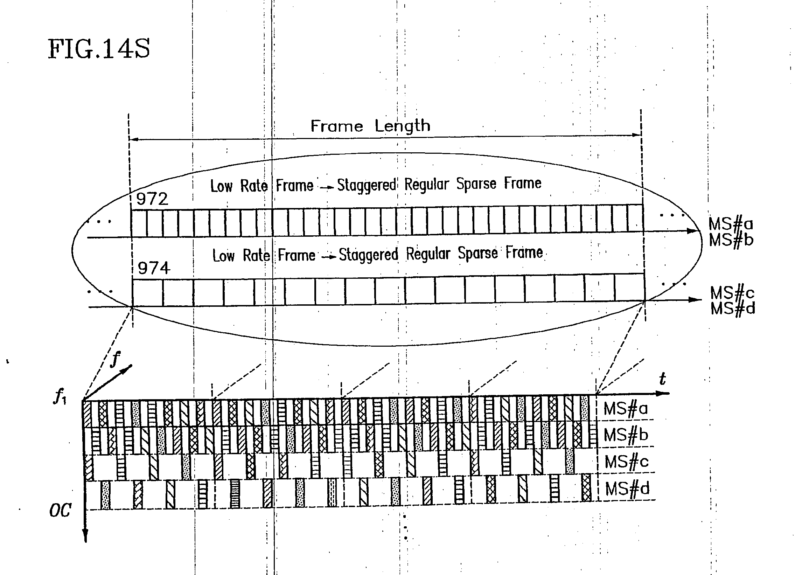

FIG. 14s is a signal diagram showing a transmit signal from the first station in a sparse frame for symbol-based regular transmission time hopping multiplexing and orthogonal code hopping multiplexing according to an embodiment of the present invention (when the frame starting symbol is present at a staggered position;

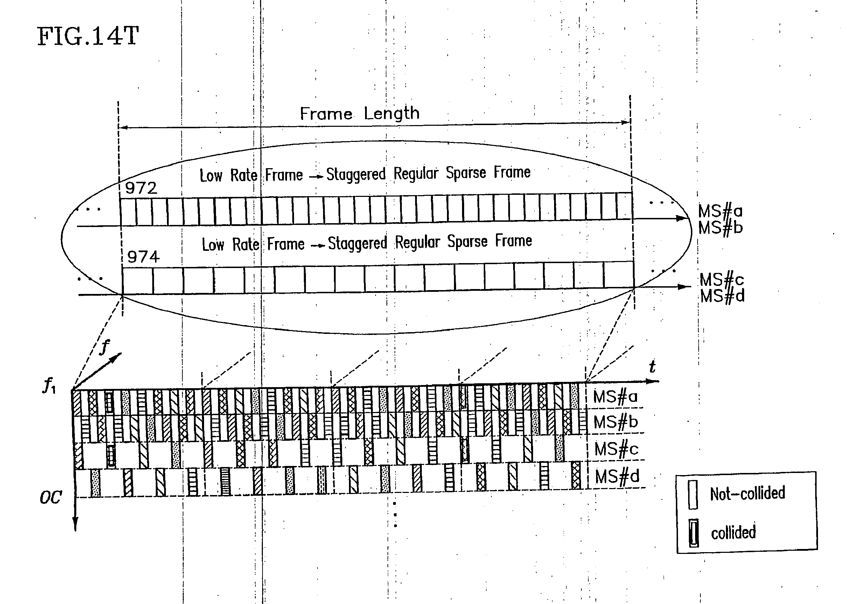

FIG. 14t is an illustration showing the case where a hopping pattern expressed in terms of the two-dimensional coordinates of transmission time and orthogonal code is selected by multiple channels at the same time in FIG. 14s (the square defined by the double solid line is the collided data symbol);

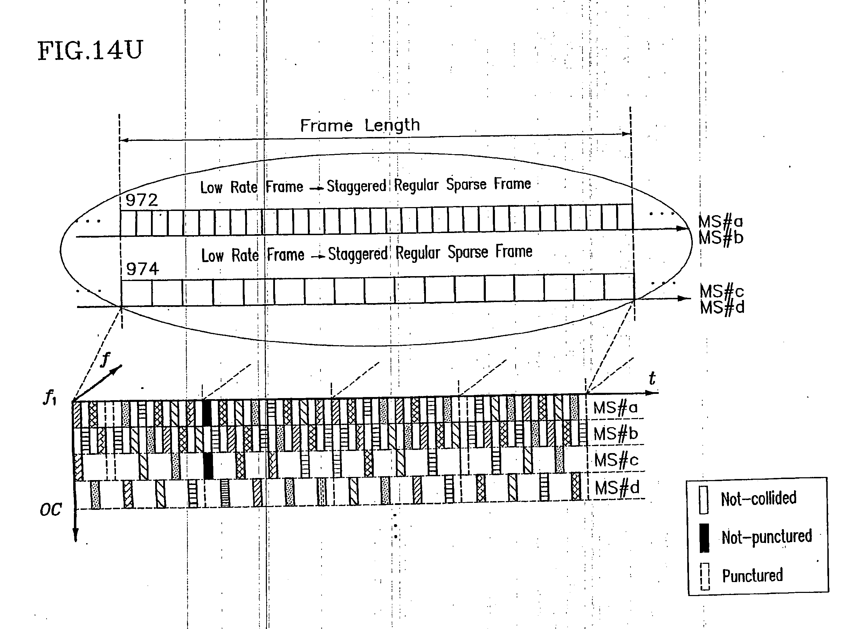

FIG. 14u is an illustration showing that the data symbols of the collided coordinates in FIG. 14t are compared with one another to determine whether to be transmitted (the black square means transmission; and the dotted line square means no transmission);

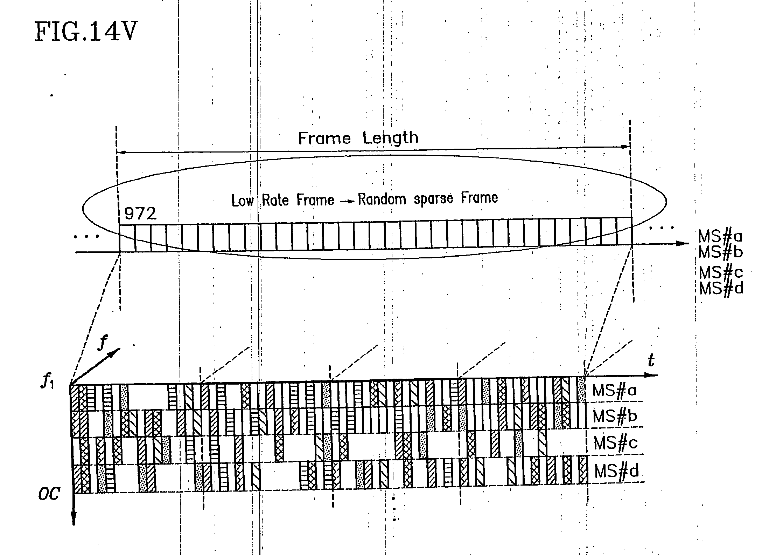

FIG. 14v is a signal diagram showing a transmit signal from the first station in a sparse frame for channel-based irregular transmission time hopping multiplexing and orthogonal code hopping multiplexing in the unit of symbols according to an embodiment of the present invention;

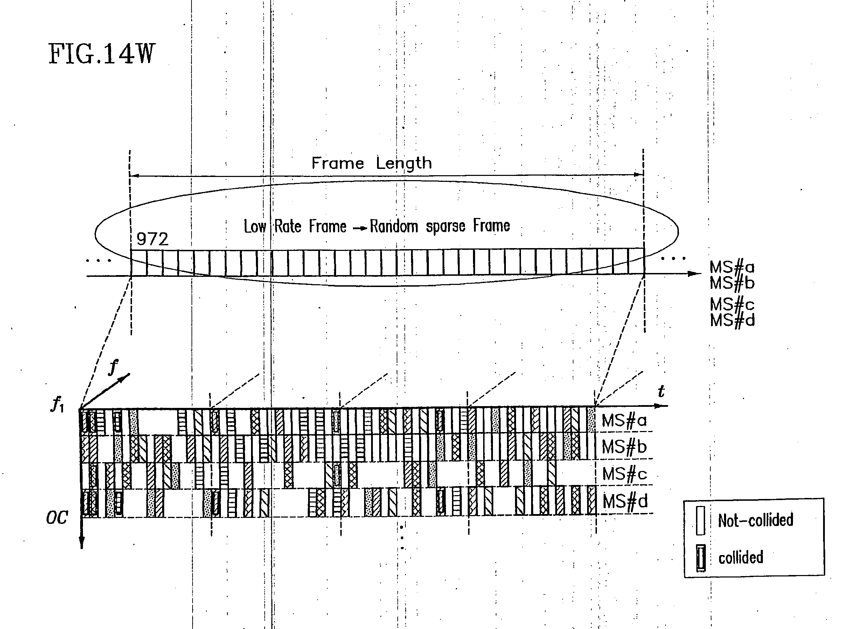

FIG. 14w is an illustration showing the case where a hopping pattern expressed in terms of the two-dimensional coordinates of transmission time and orthogonal code is selected by multiple channels at the same time in FIG. 14v (the square defined by the double solid line is the collided data symbol);

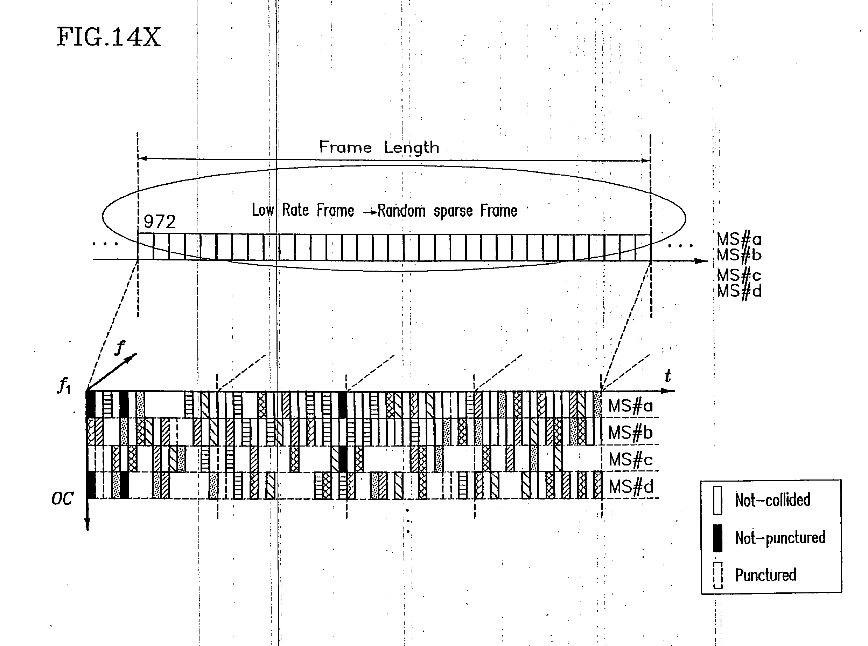

FIG. 14x is an illustration showing that the data symbols of the collided coordinates in FIG. 14w are compared with one another to determine whether to be transmitted (the black square means transmission; and the dotted line square means no transmission);

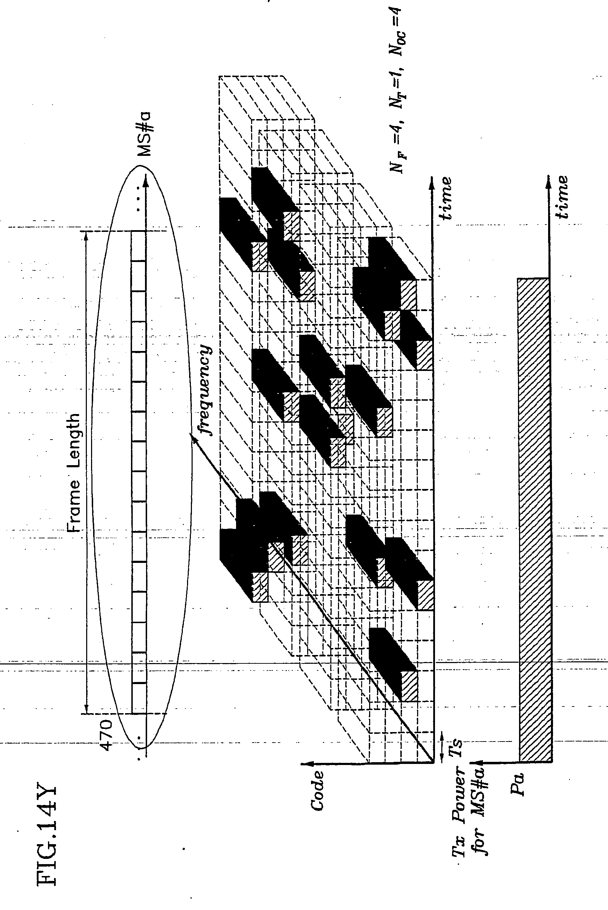

FIG. 14y is a signal diagram showing a transmit signal from the first station in a sparse frame for channel-based irregular subcarrier frequency hopping multiplexing, transmission time hopping multiplexing and orthogonal code hopping multiplexing in the unit of symbols according to an embodiment of the present invention;

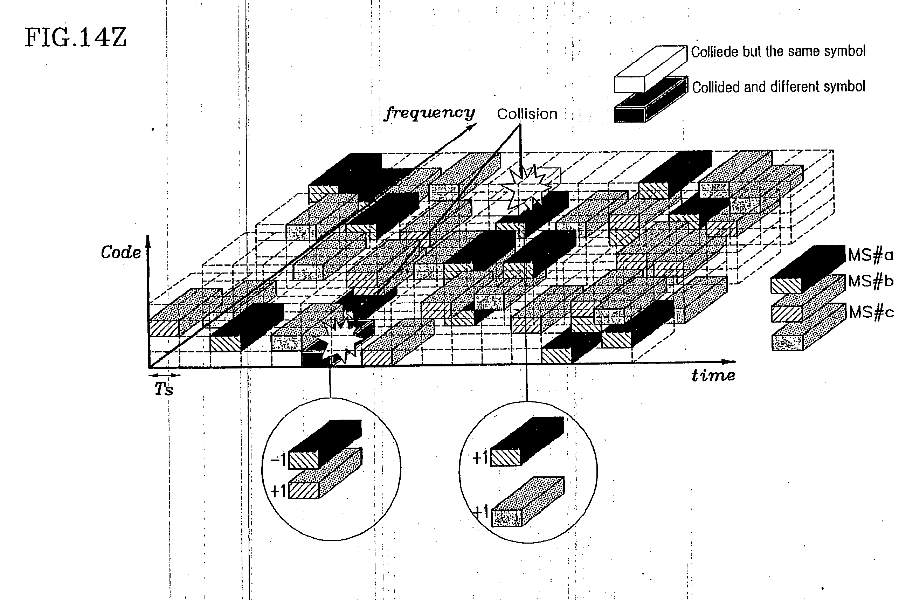

FIG. 14z is an illustration showing the case where a hopping pattern expressed in terms of the three-dimensional coordinates of subcarrier frequency, transmission time and orthogonal code is selected by multiple channels at the same time in FIG. 14y (the cuboid defined by the double solid line is the collided data symbol);

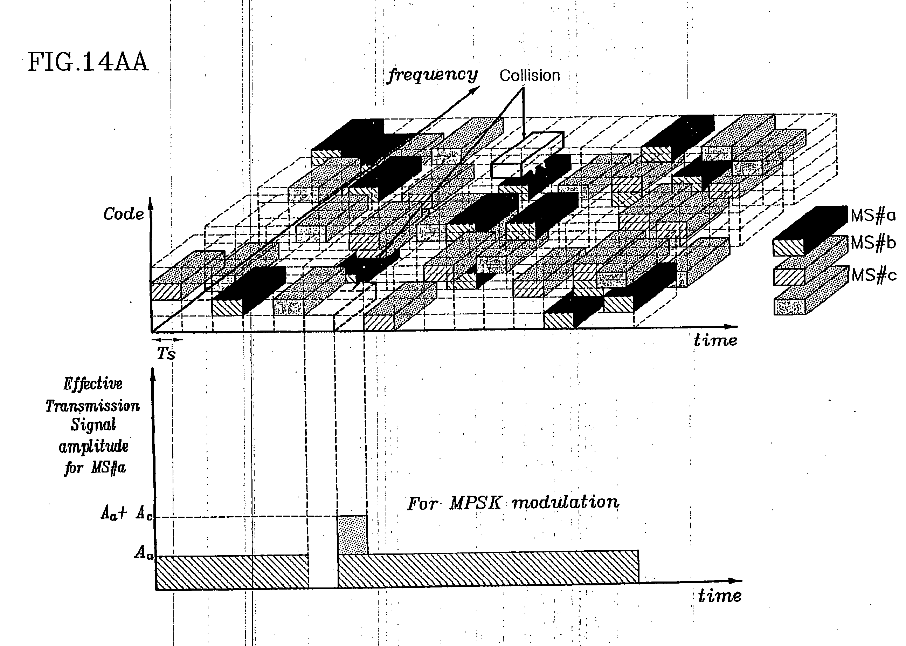

FIG. 14aa is an illustration showing that the data symbols of the collided coordinates in FIG. 14z are compared with one another to determine whether to be transmitted (the white cuboid means transmission; and the dotted cuboid means no transmission);

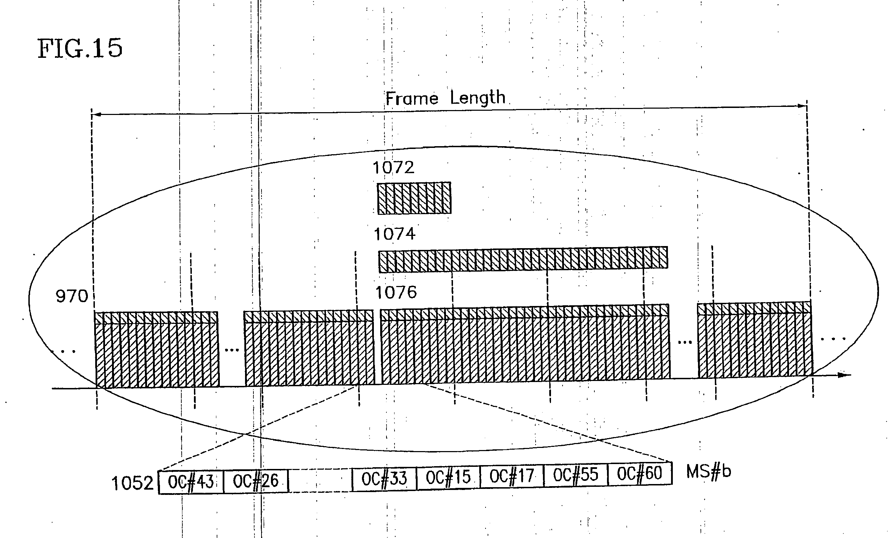

FIG. 15 shows that the transmission power of the first station is increased for a predetermined interval of the frame including data symbols not transmitted so as to compensate for an average receiving energy requested by a channel decoder and thereby guarantee a desired communication quality when the transmission is stopped in a multidimensional hopping pattern conflict interval as shown in FIGS. 14g, 14k, 14o, 14r, 14u, 14x and 14aa;

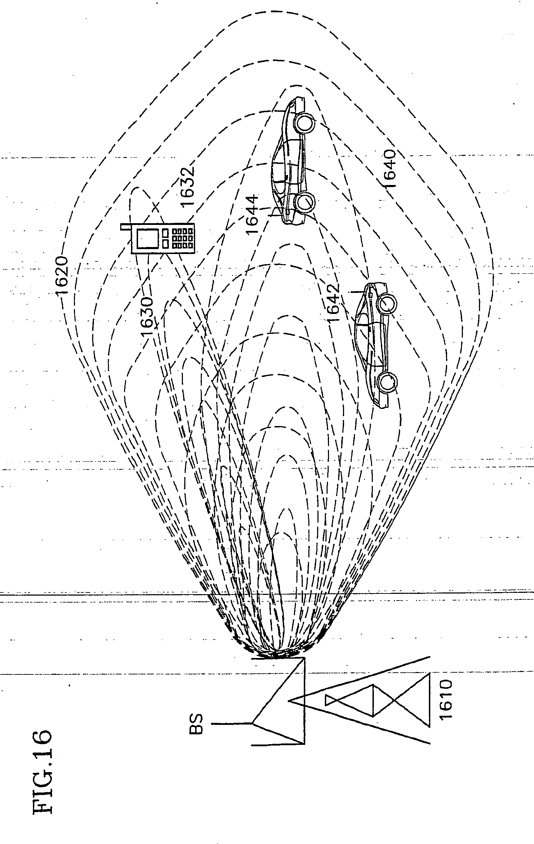

FIG. 16 is an illustration explaining that transmission is stopped due to a collision of multidimensional hopping patterns and that unmatched transmit data symbols is independently controlled by the respective transmit antenna beams of the first station that secure spatial orthogonality;

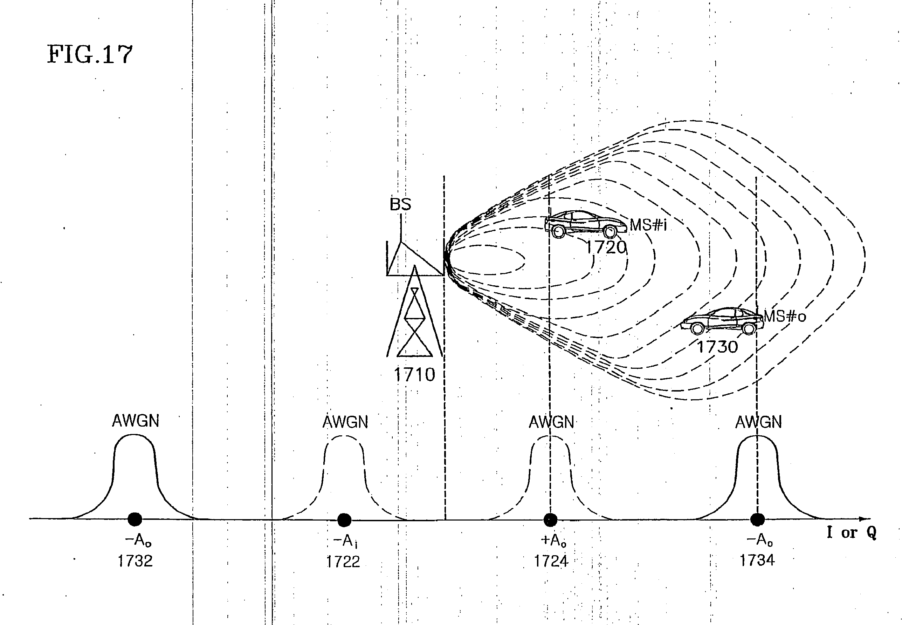

FIG. 17 is an illustration showing the difference in transmission power from the first station between a second station near to the first station for the same data service and a second station far from the first station;

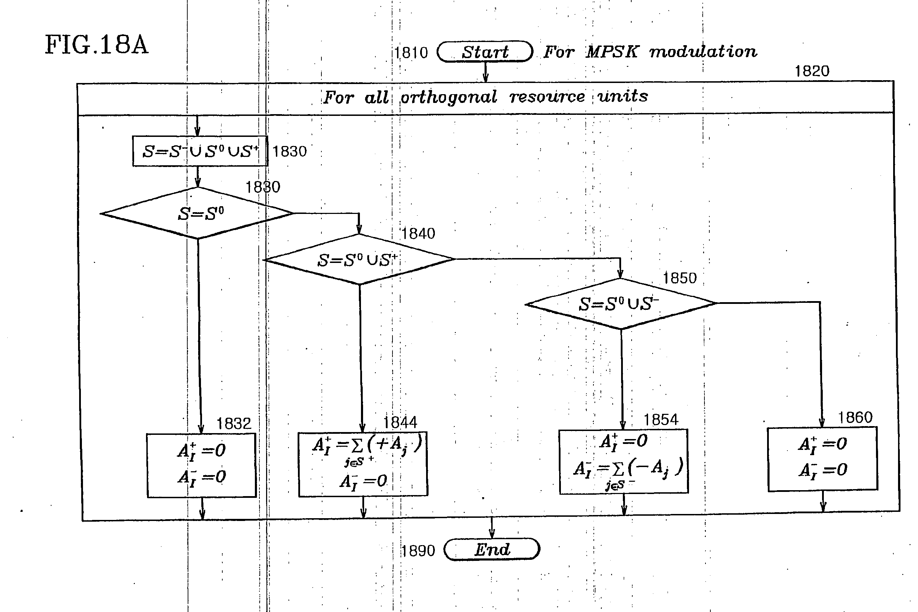

FIG. 18a is a flow chart showing a first method for determining a transmit signal by the respective orthogonal wireless resource units at a transmitter from the first station to the second station according to an embodiment of the present invention (a bisectional method of transmission and puncturing);

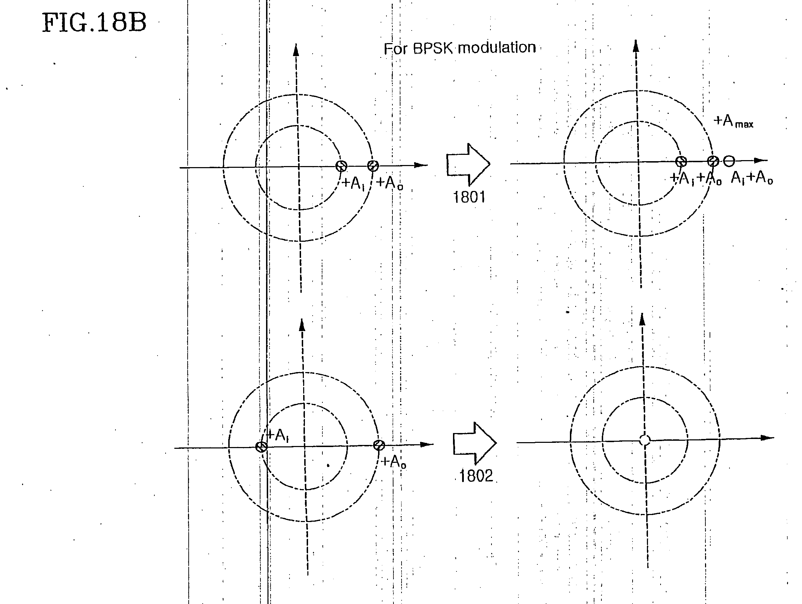

FIG. 18b illustrates the determination of the final transmit signal using the method of FIG. 18a in the case of a multidimensional orthogonal resource hopping pattern collision between two channels;

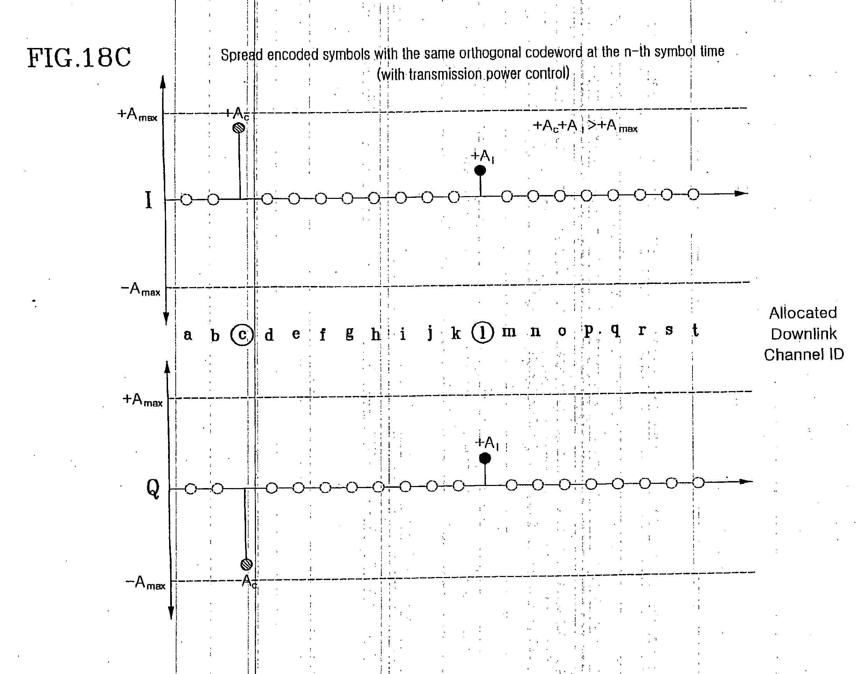

FIG. 18c illustrates a multidimensional orthogonal resource hopping pattern collision between two channels c and I for explaining the determination of the final transmit signal using the method of FIG. 18a;

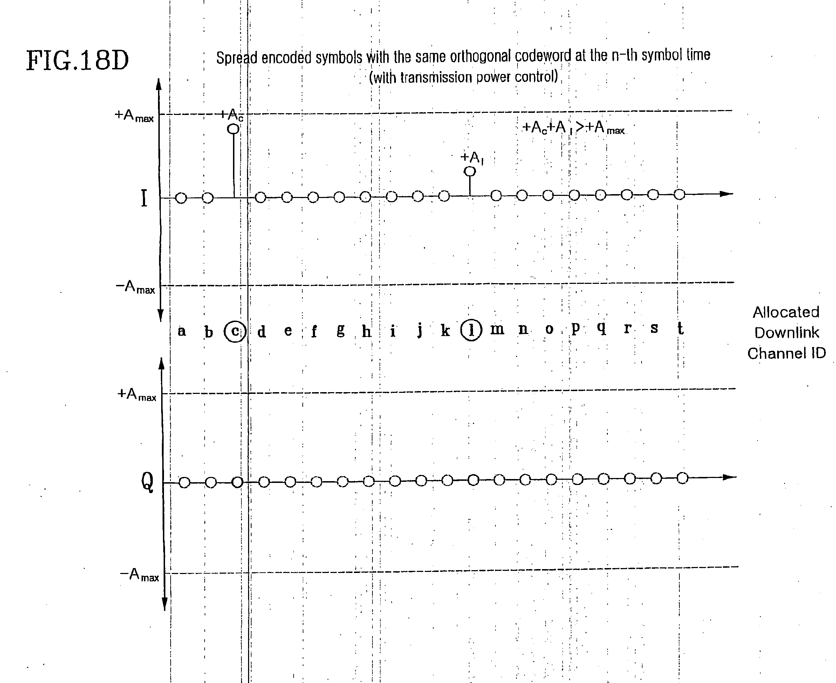

FIG. 18d illustrates the final transmit signal determined according to the algorithm of FIG. 18a in case of FIG. 18c;

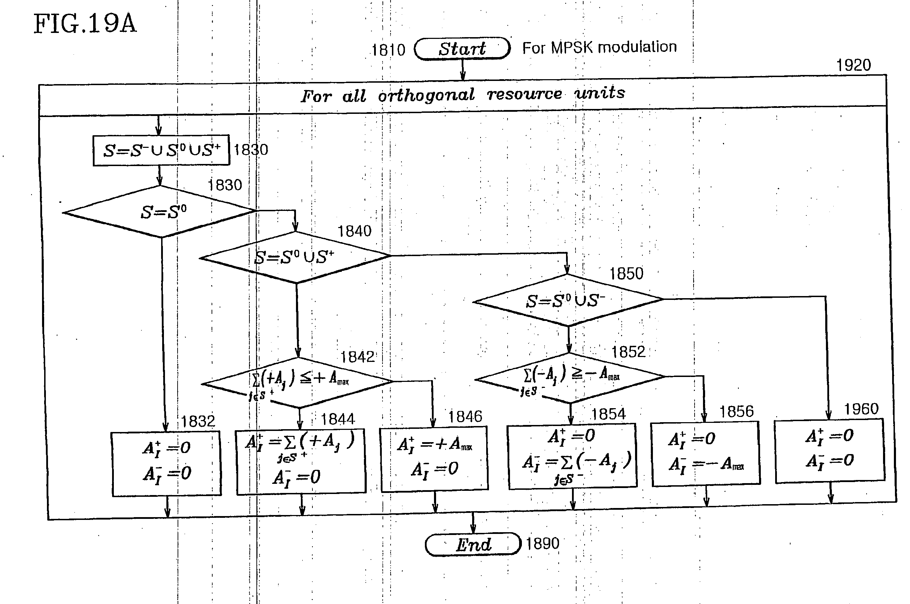

FIG. 19a is a flow chart showing a second method for determining a transmit signal by the respective orthogonal wireless resource units at a transmitter from the first station to the second station according to an embodiment of the present invention (a method having a threshold value of transmission power);

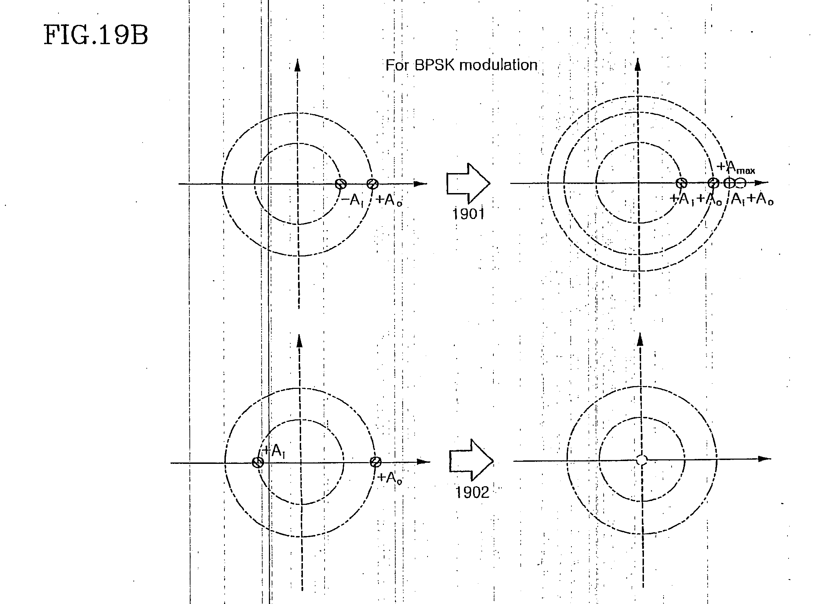

FIG. 19b illustrates the determination of the final transmit signal using the method of FIG. 19a in the case of a multidimensional orthogonal resource hopping pattern collision between two channels;

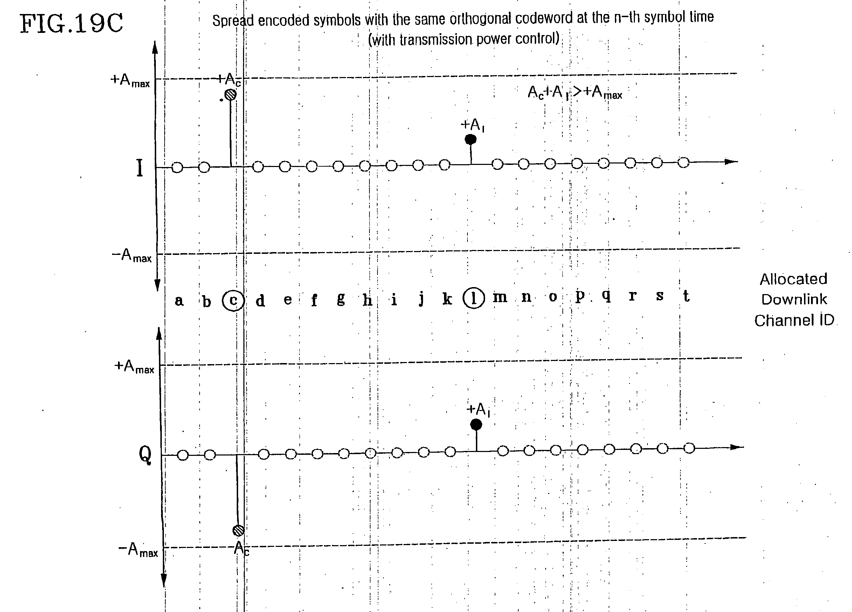

FIG. 19c illustrates a multidimensional orthogonal resource hopping pattern collision between two channels c and I for explaining the determination of the final transmit signal using the method of FIG. 19a;

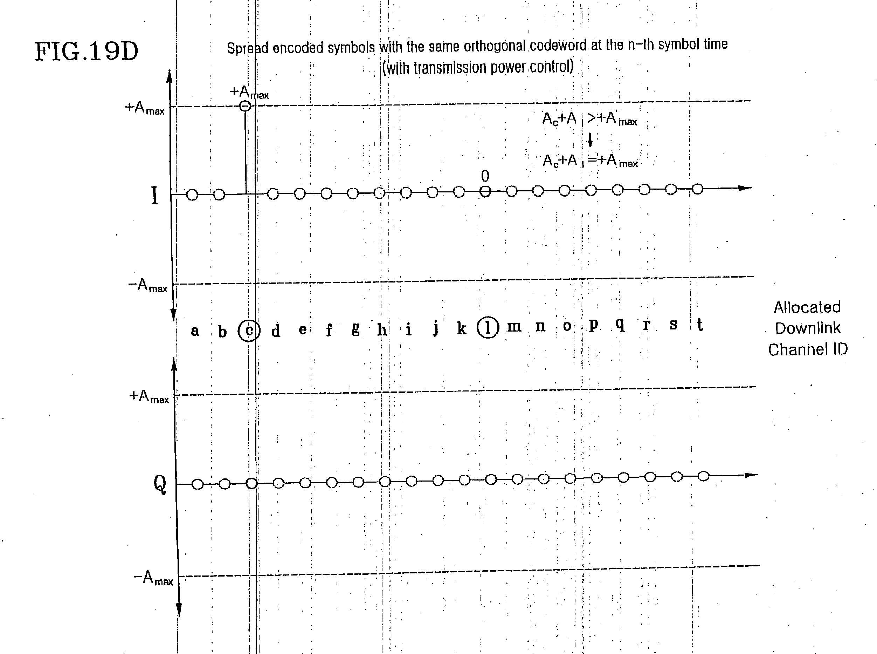

FIG. 19d illustrates the final transmit signal determined according to the algorithm of FIG. 19a in case of FIG. 19c;

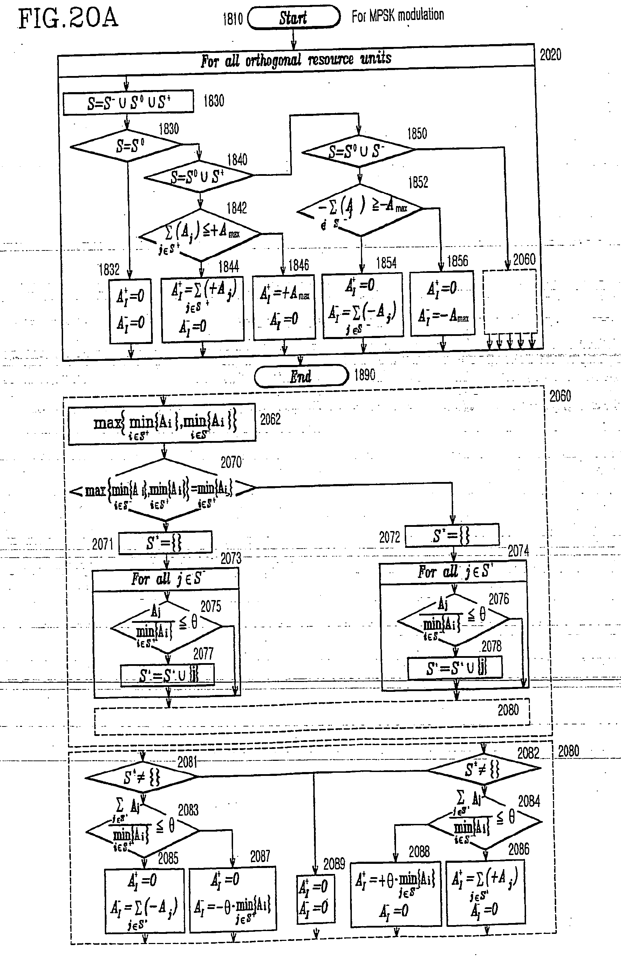

FIG. 20a is a flow chart showing a third method for determining a transmit signal by the respective orthogonal wireless resource units at a transmitter from the first station to the second station according to an embodiment of the present invention;

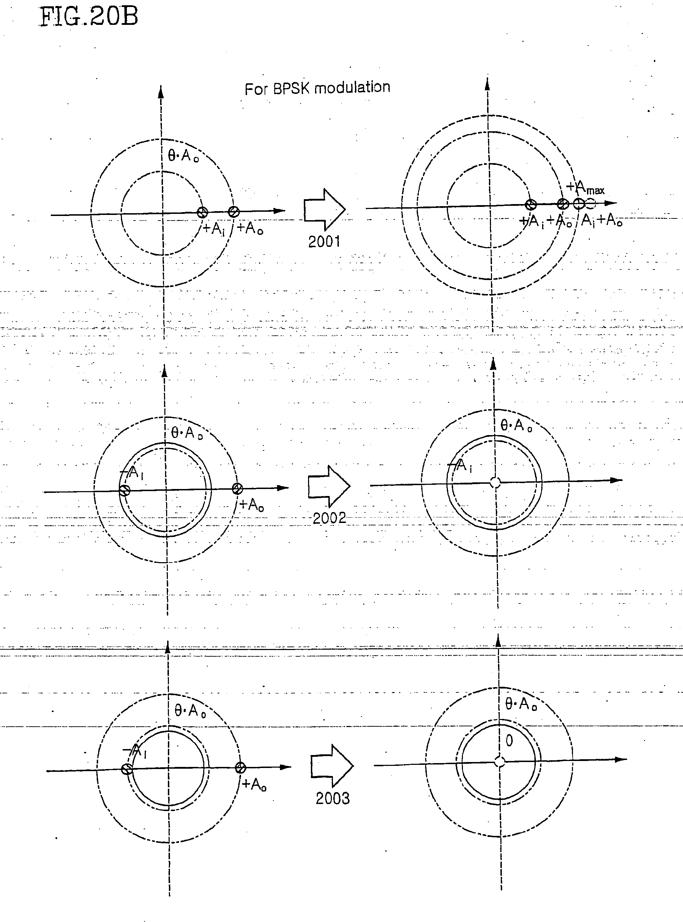

FIG. 20b illustrates the determination of the final transmit signal using the method of FIG. 20a in the case of a multidimensional orthogonal resource hopping pattern collision between two channels;

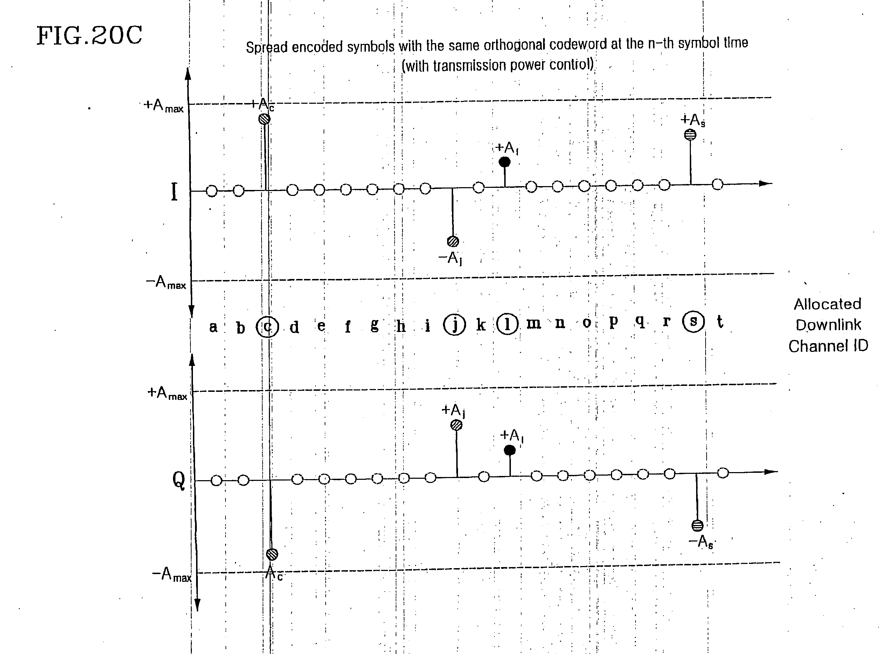

FIG. 20c illustrates a multidimensional orthogonal resource hopping pattern collision among four channels c, j, I and s for explaining the determination of the final transmit signal using the method of FIG. 20a;

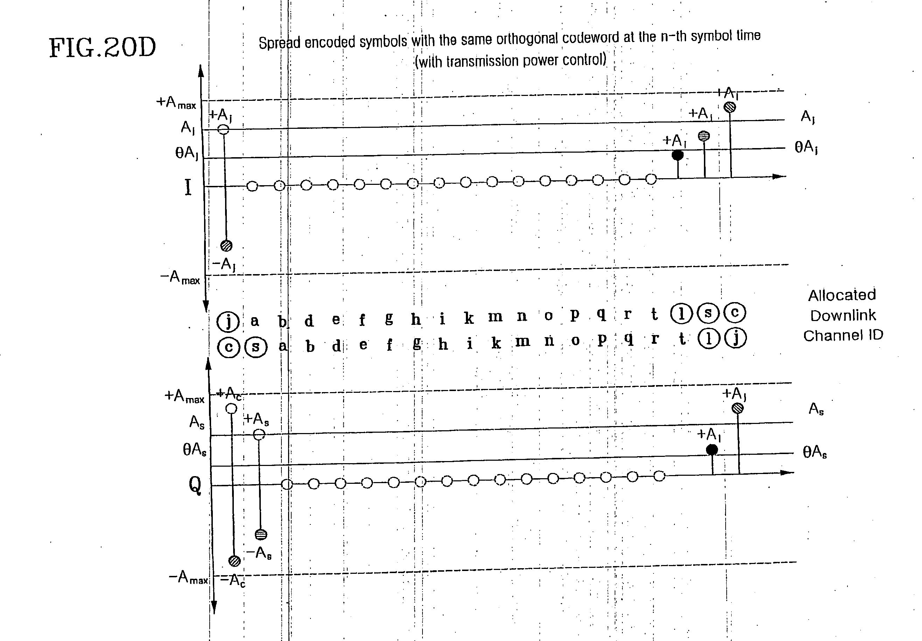

FIG. 20d shows a channel arrangement for comparing the amplitudes of channels selecting the orthogonal wireless resource unit in case of FIG. 20c;

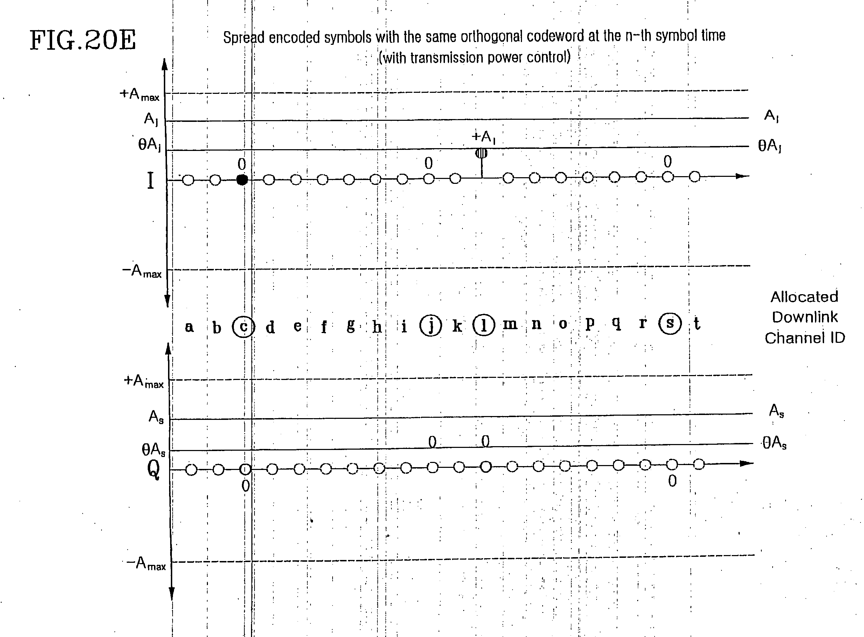

FIG. 20e illustrates the final transmit signal determined according to the algorithm of FIG. 20a in case of FIG. 20c;

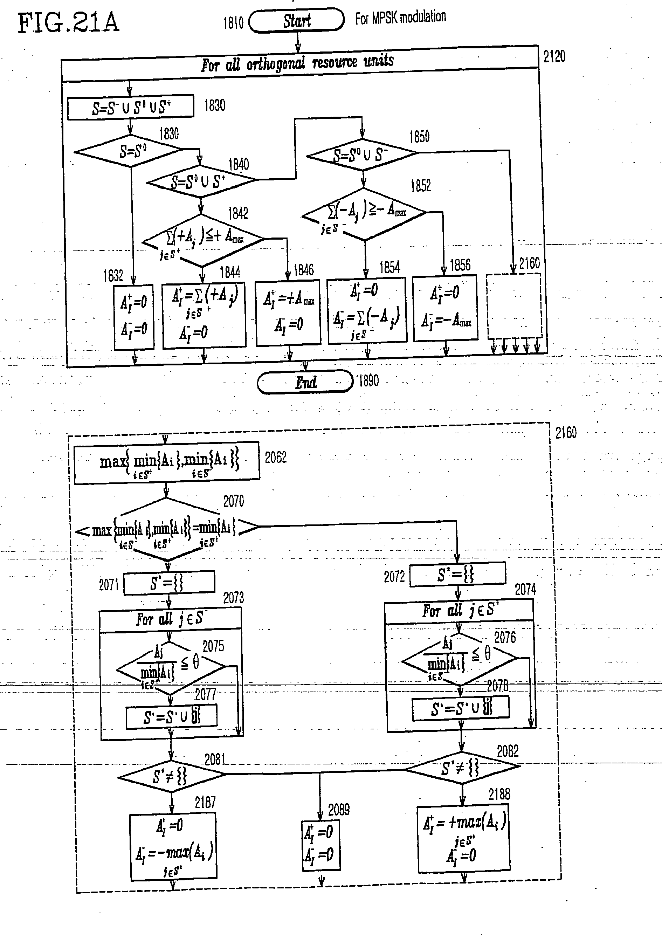

FIG. 21a is a flow chart showing a fourth method for determining a transmit signal by the respective orthogonal wireless resource units at a transmitter from the first station to the second station according to an embodiment of the present invention;

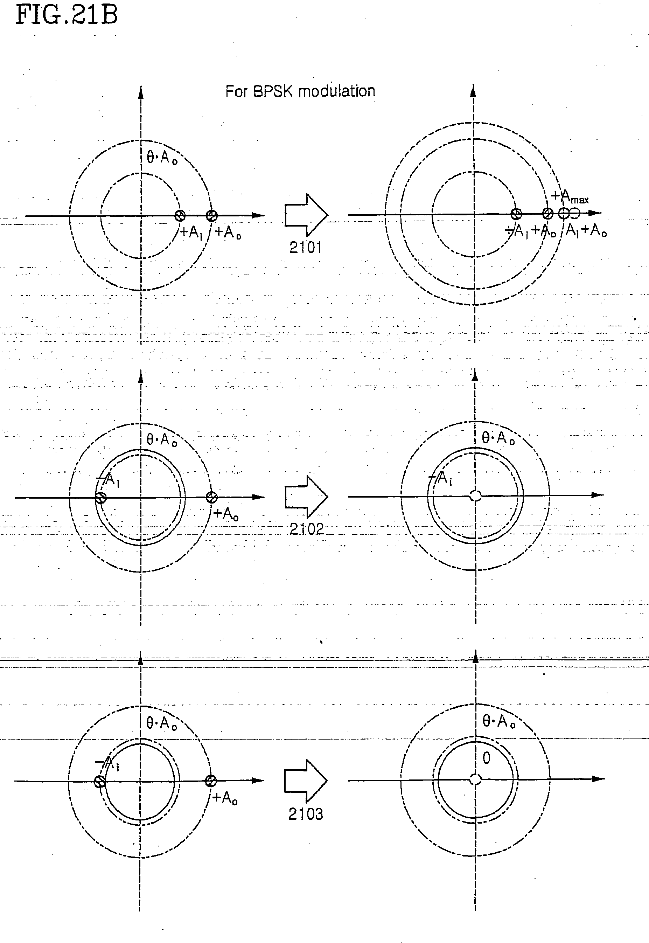

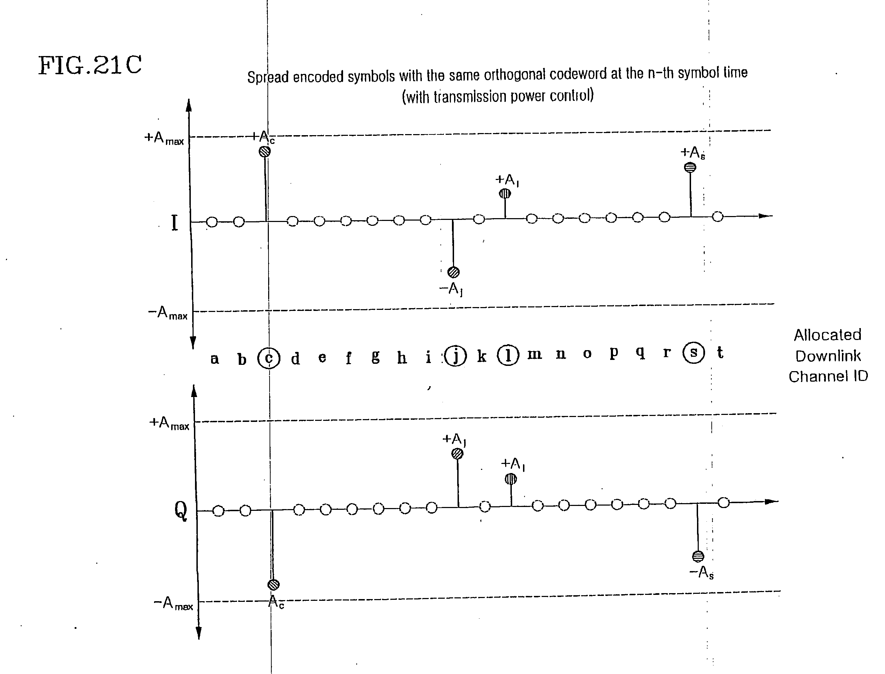

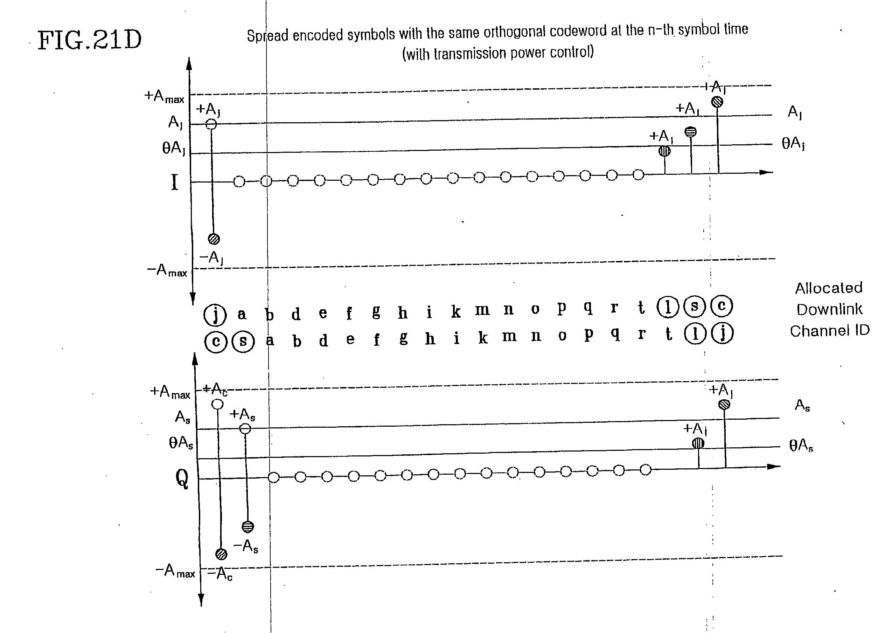

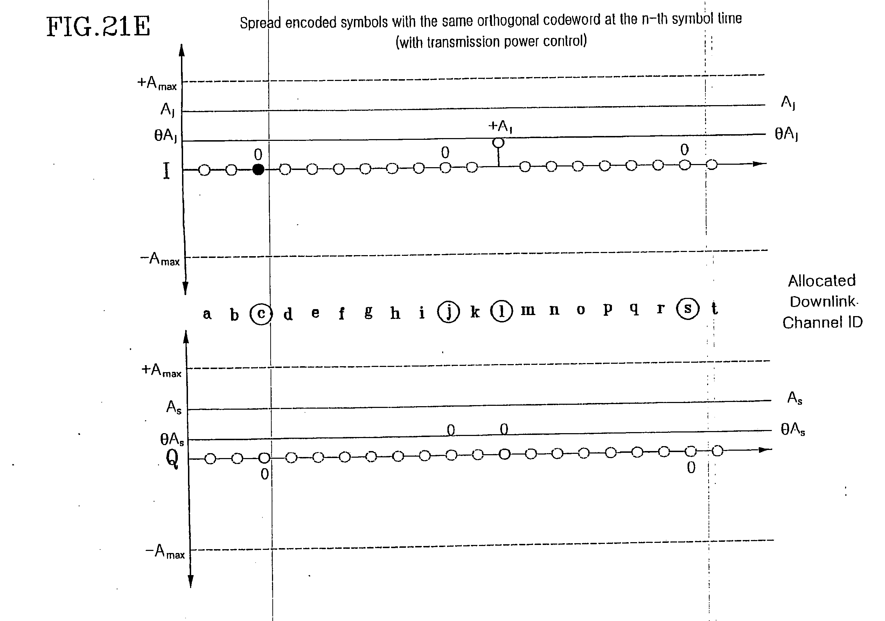

FIG. 21b illustrates the determination of the final transmit signal using the method of FIG. 21 a in the case of a multidimensional orthogonal resource hopping pattern collision between two channels;

FIG. 21c illustrates a multidimensional orthogonal resource hopping pattern collision among four channels c, j, I and s for explaining the determination of the final transmit signal using the method of FIG. 21 a;

FIG. 21d shows a channel arrangement for comparing the amplitudes of channels selecting the orthogonal wireless resource unit in case of FIG. 21 c;

FIG. 21e illustrates the final transmit signal determined according to the algorithm of FIG. 21 a in case of FIG. 21 c;

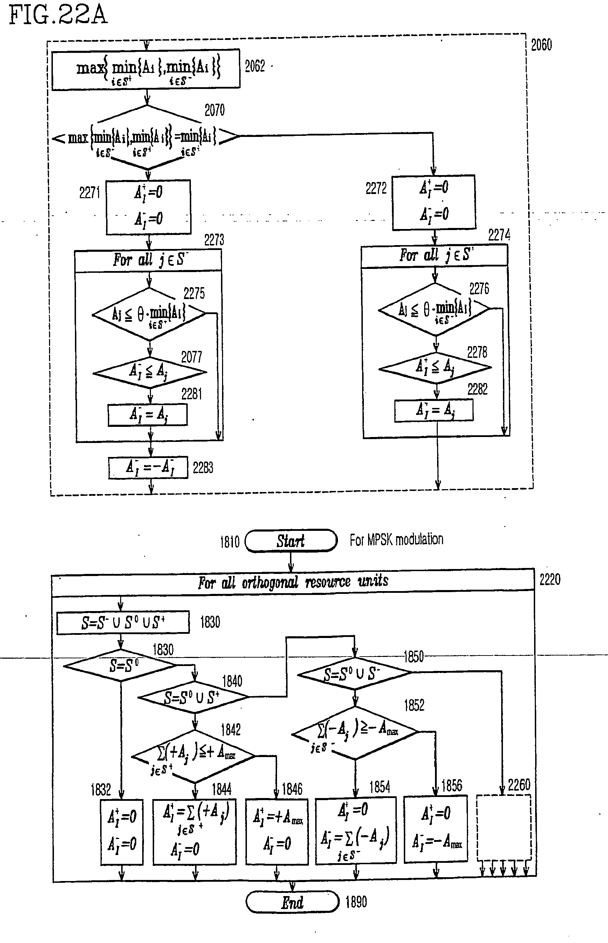

FIG. 22a is a flow chart showing a fifth method for determining a transmit signal by the respective orthogonal wireless resource units at a transmitter from the first station to the second station according to an embodiment of the present invention;

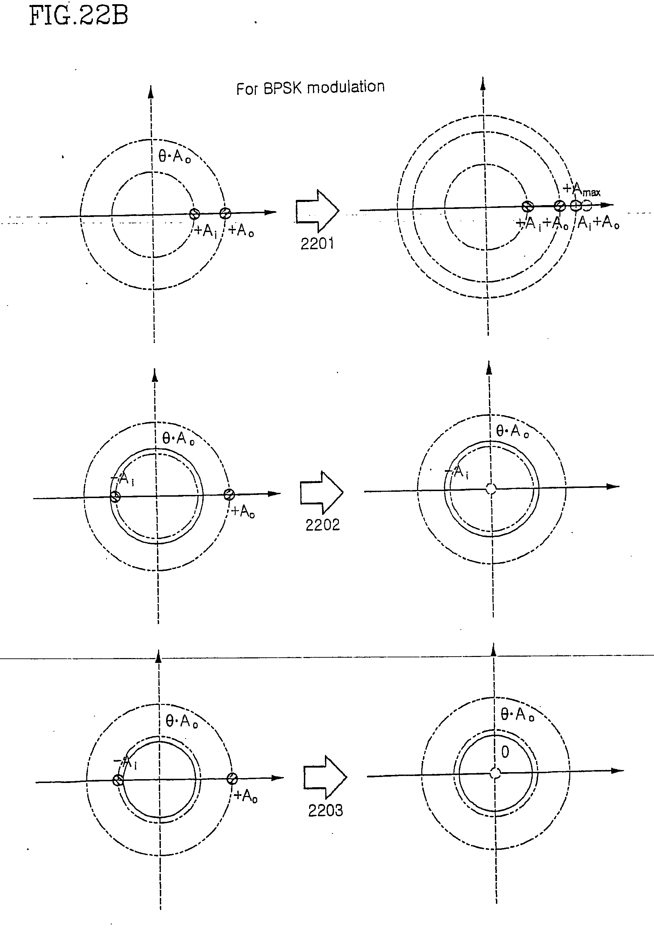

FIG. 22b illustrates the determination of the final transmit signal using the method of FIG. 22a in the case of a multidimensional orthogonal resource hopping pattern collision between two channels;

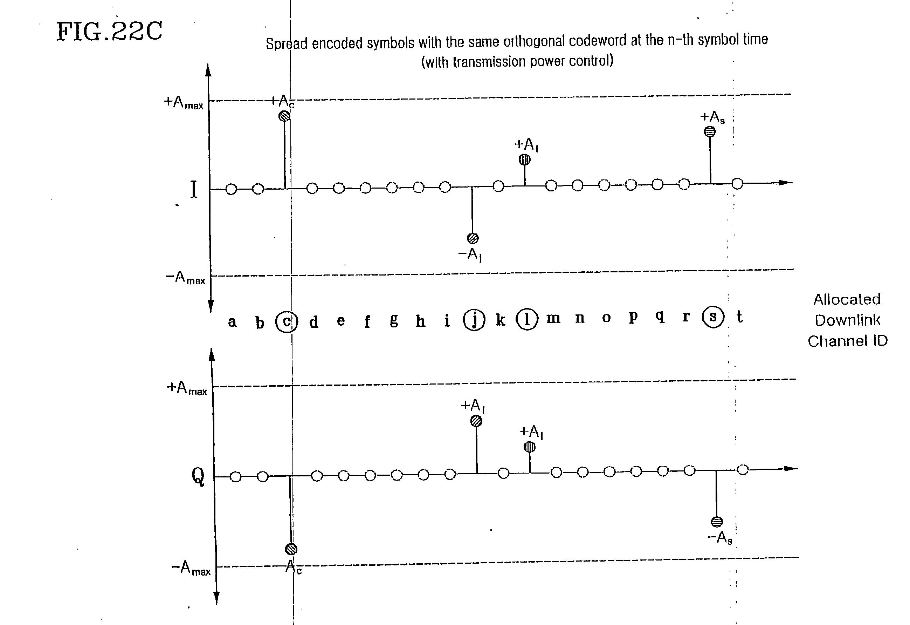

FIG. 22c illustrates a multidimensional orthogonal resource hopping pattern collision among four channels c, j, I and s for explaining the determination of the final transmit signal using the method of FIG. 22a;

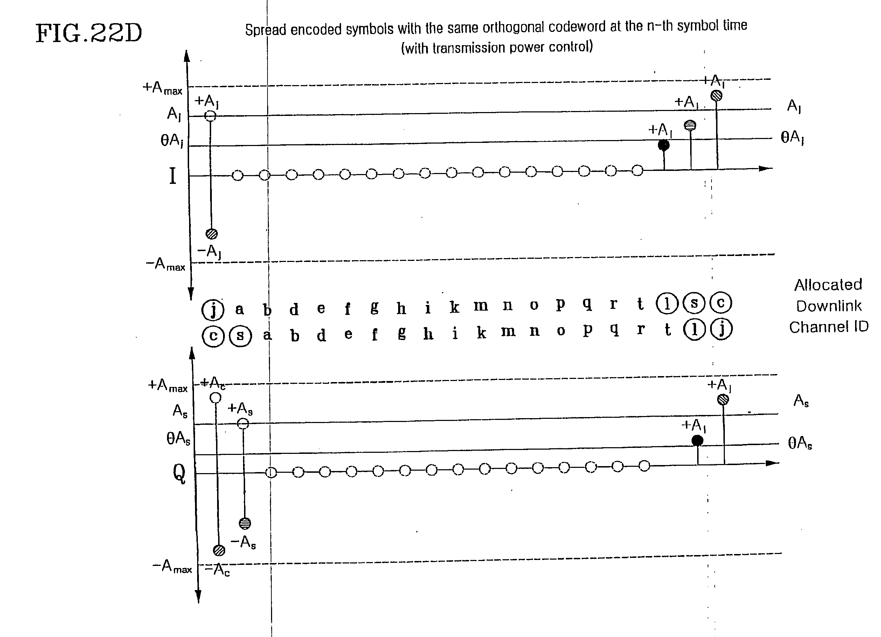

FIG. 22d shows a channel arrangement for comparing the amplitudes of channels selecting the orthogonal wireless resource unit in case of FIG. 22c;

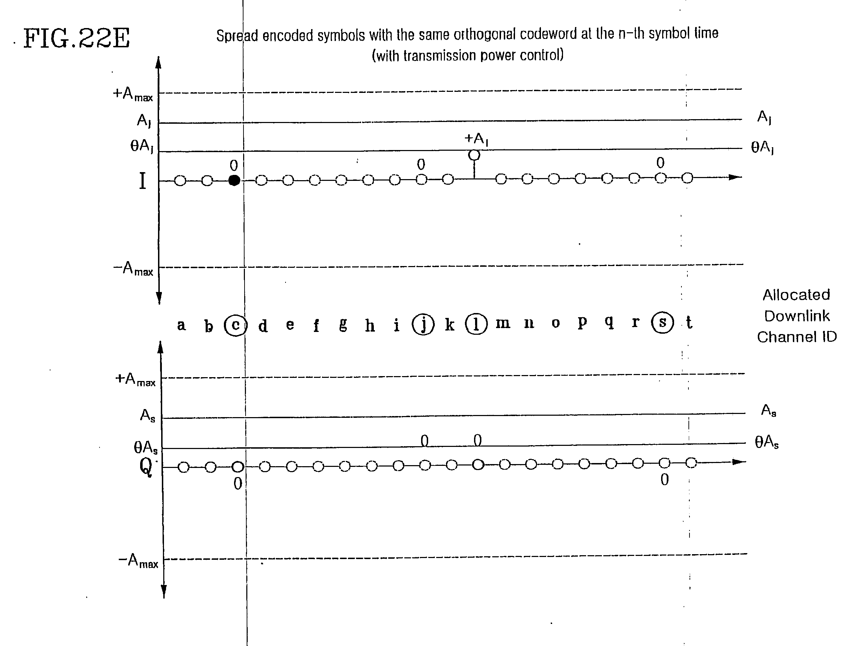

FIG. 22e illustrates the final transmit signal determined according to the algorithm of FIG. 22a in case of FIG. 22c;

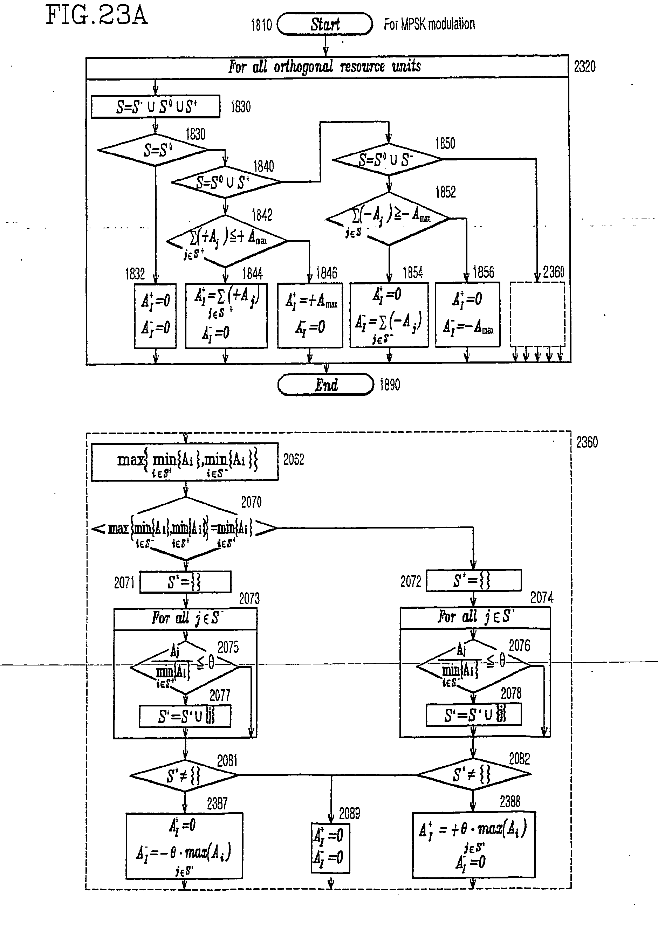

FIG. 23a is a flow chart showing a sixth method for determining a transmit signal by the respective orthogonal wireless resource units at a transmitter from the first station to the second station according to an embodiment of the present invention;

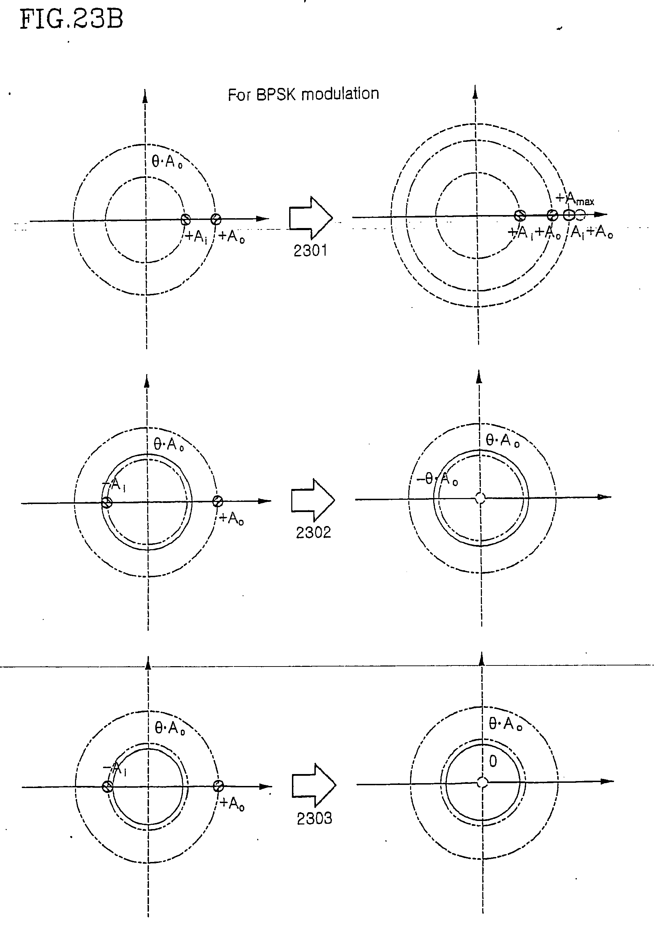

FIG. 23b illustrates the determination of the final transmit signal using the method of FIG. 23a in the case of a multidimensional orthogonal resource hopping pattern collision between two channels;

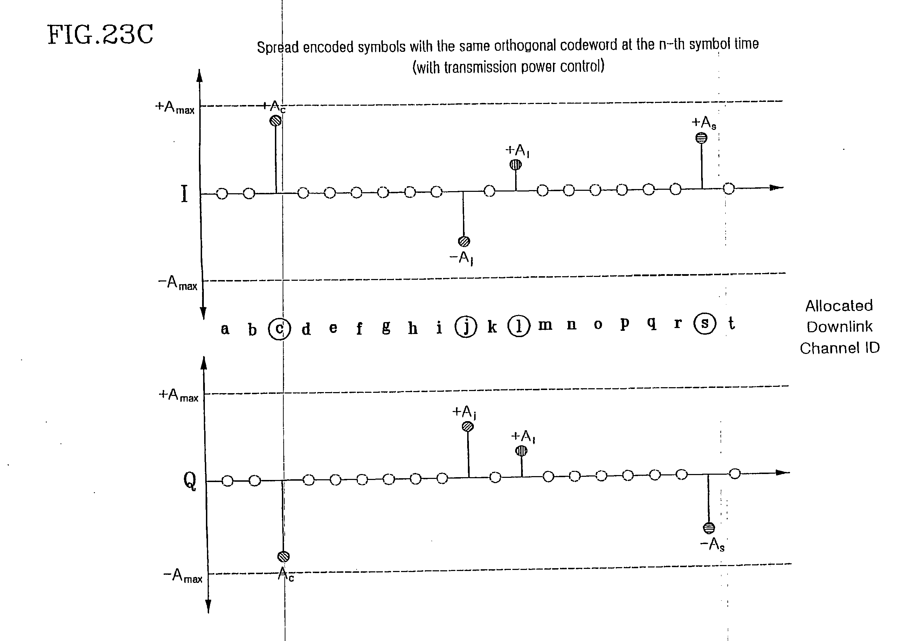

FIG. 23c illustrates a multidimensional orthogonal resource hopping pattern collision among four channels c, j, l and s for explaining the determination of the final transmit signal using the method of FIG. 23a;

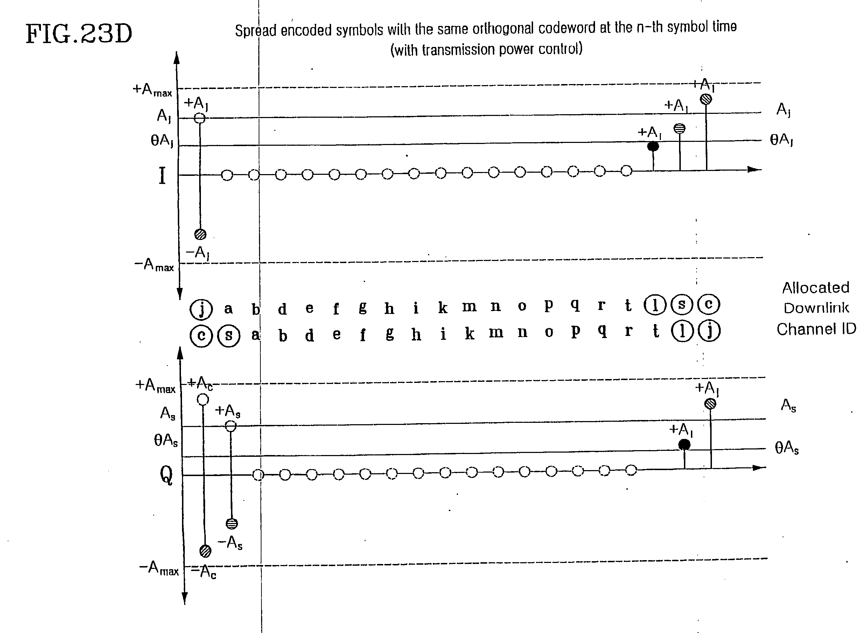

FIG. 23d shows a channel arrangement for comparing the amplitudes of channels selecting the orthogonal wireless resource unit in case of FIG. 23c;

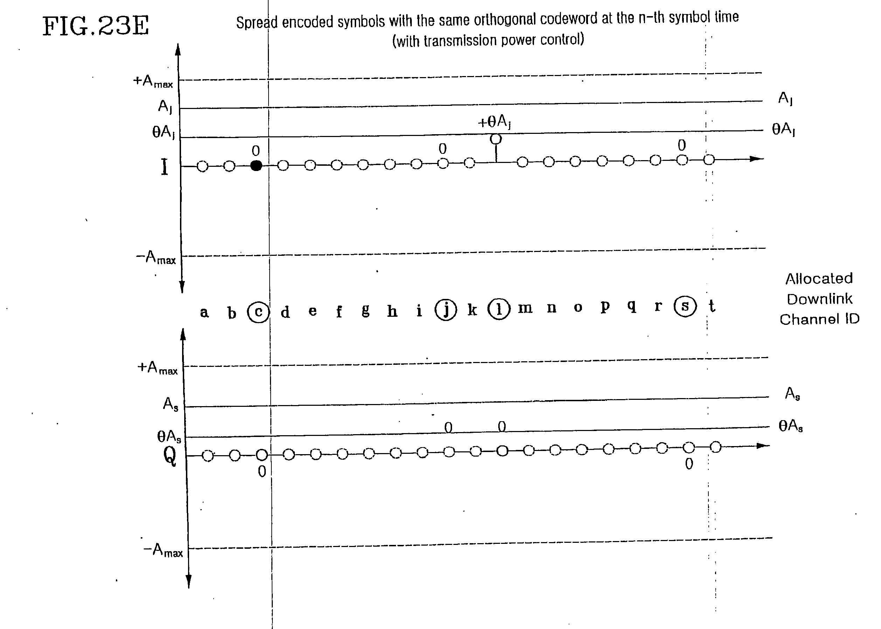

FIG. 23e illustrates the final transmit signal determined according to the algorithm of FIG. 23a in case of FIG. 23c;

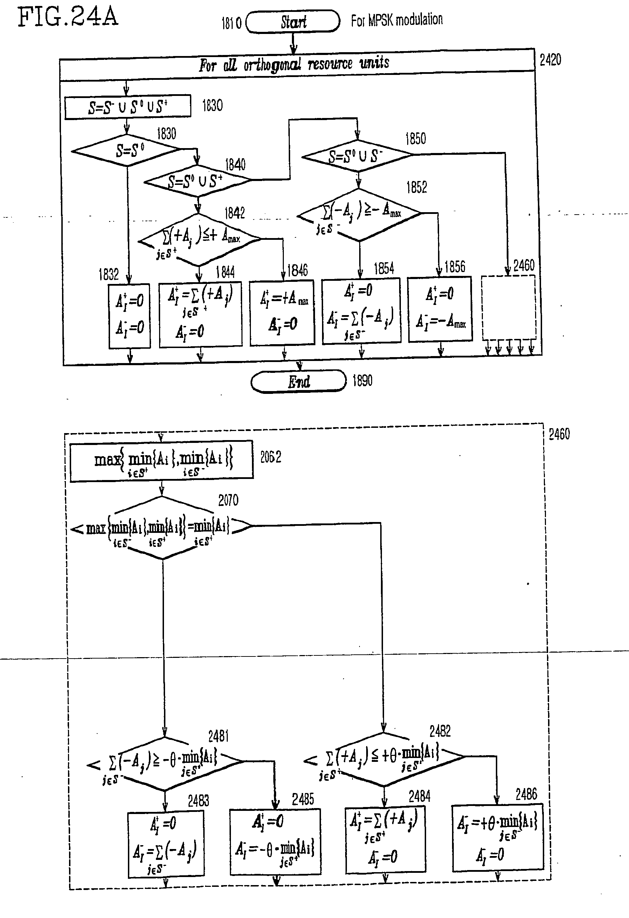

FIG. 24a is a flow chart showing a seventh method for determining a transmit signal by the respective orthogonal wireless resource units at a transmitter from the first station to the second station according to an embodiment of the present invention;

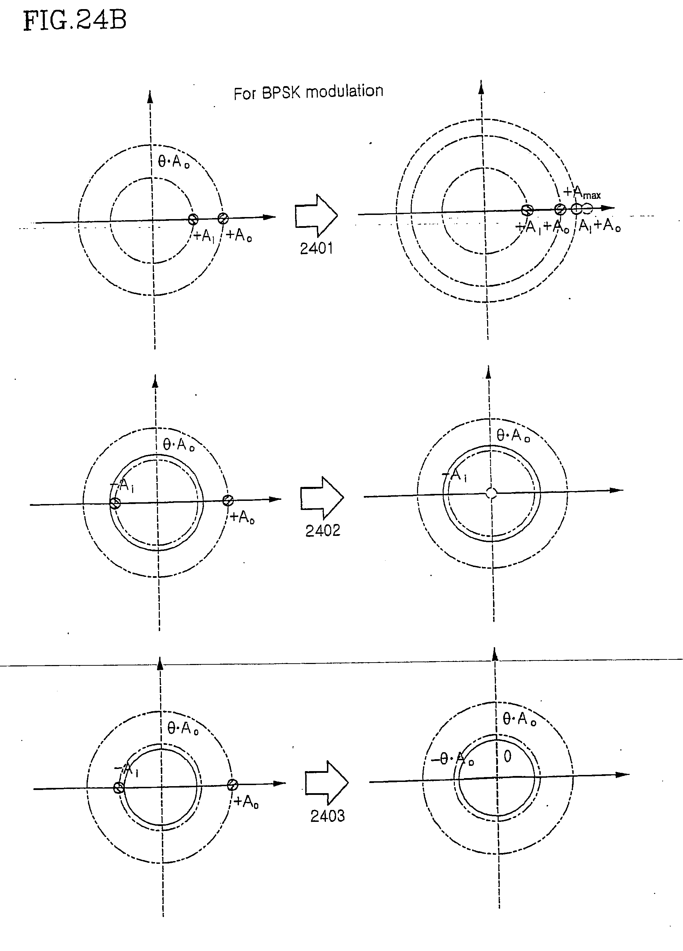

FIG. 24b illustrates the determination of the final transmit signal using the method of FIG. 24a in the case of a multidimensional orthogonal resource hopping pattern collision between two channels;

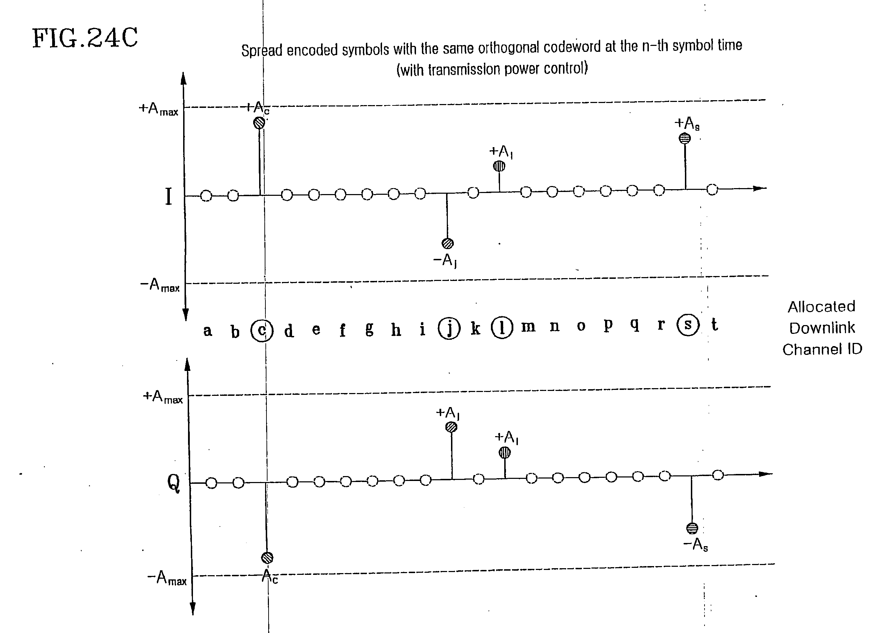

FIG. 24c illustrates a multidimensional orthogonal resource hopping pattern collision among four channels c, j, l and s for explaining the determination of the final transmit signal using the method of FIG. 24a;

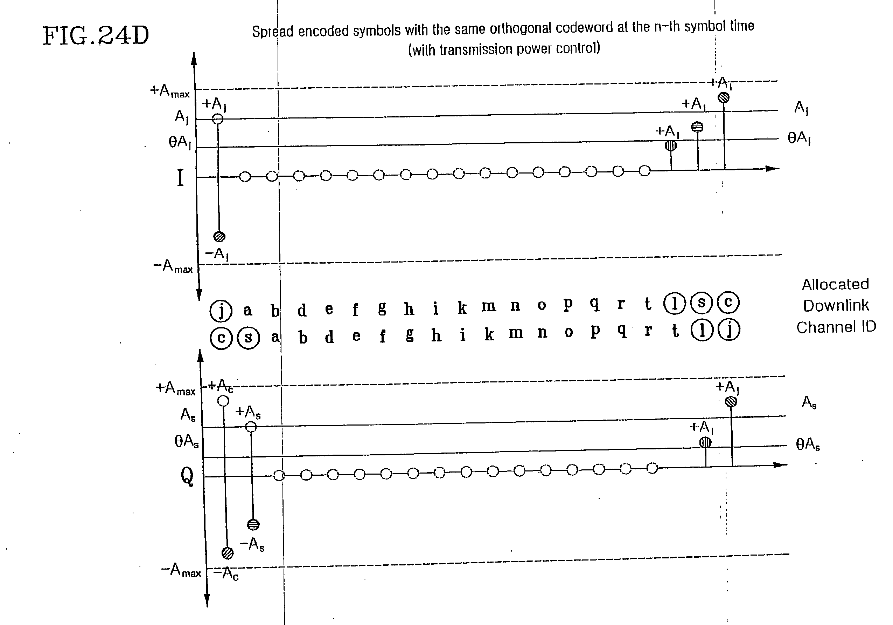

FIG. 24d shows a channel arrangement for comparing the amplitudes of channels selecting the orthogonal wireless resource unit in case of FIG. 24c;

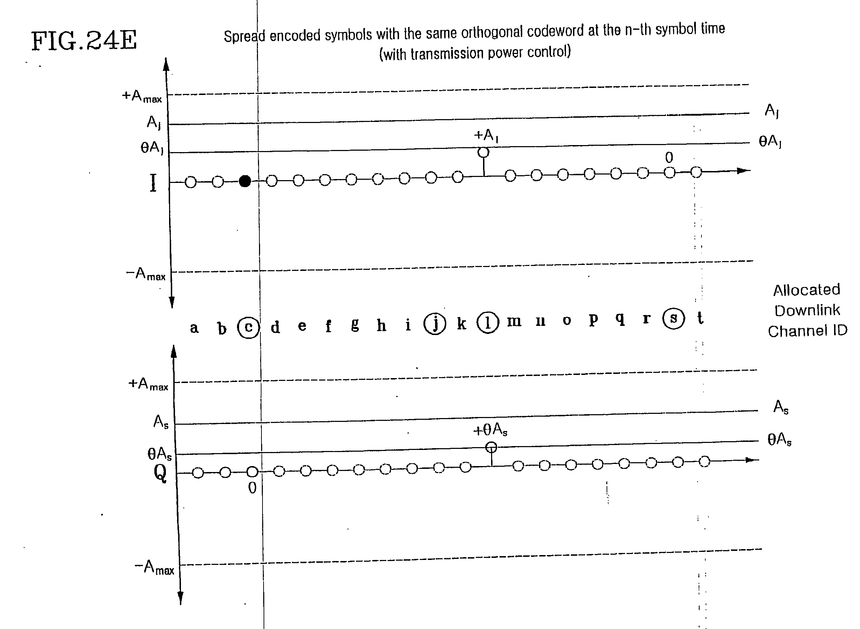

FIG. 24e illustrates the final transmit signal determined according to the algorithm of FIG. 24a in case of FIG. 24c;

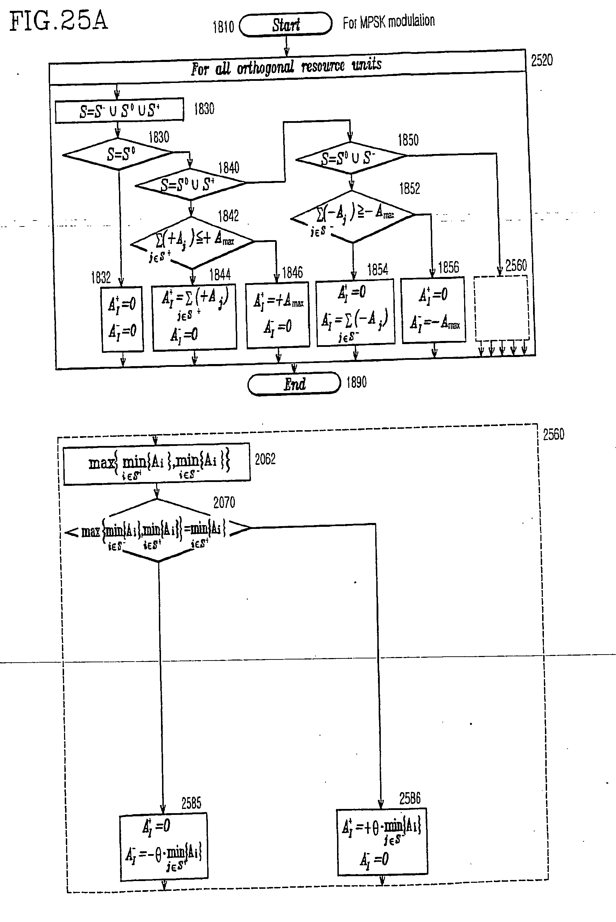

FIG. 25a is a flow chart showing an eighth method for determining a transmit signal by the respective orthogonal wireless resource units at a transmitter from the first station to the second station according to an embodiment of the present invention;

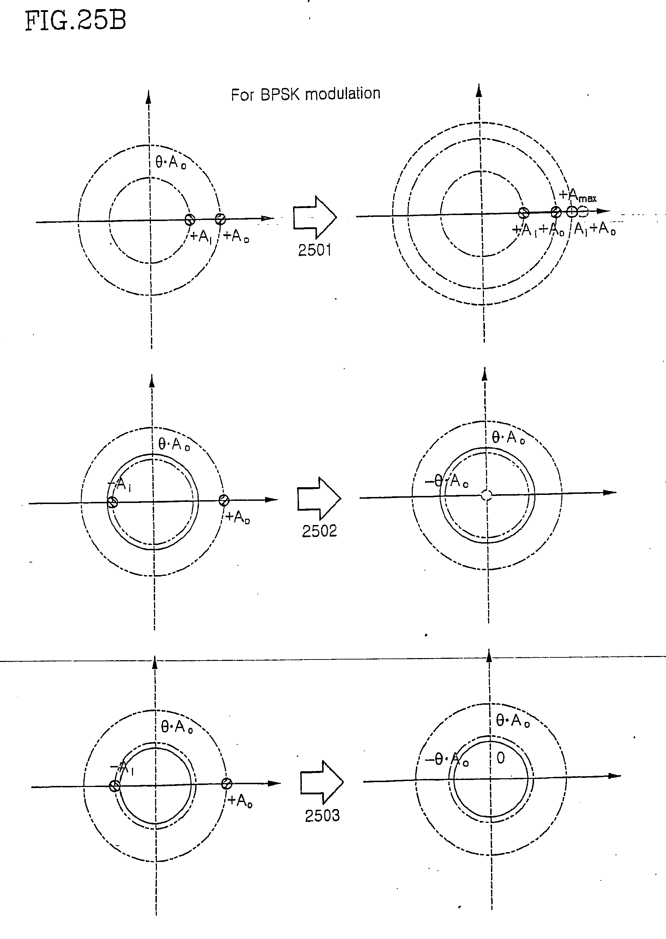

FIG. 25b illustrates the determination of the final transmit signal using the method of FIG. 25a in the case of a multidimensional orthogonal resource hopping pattern collision between two channels;

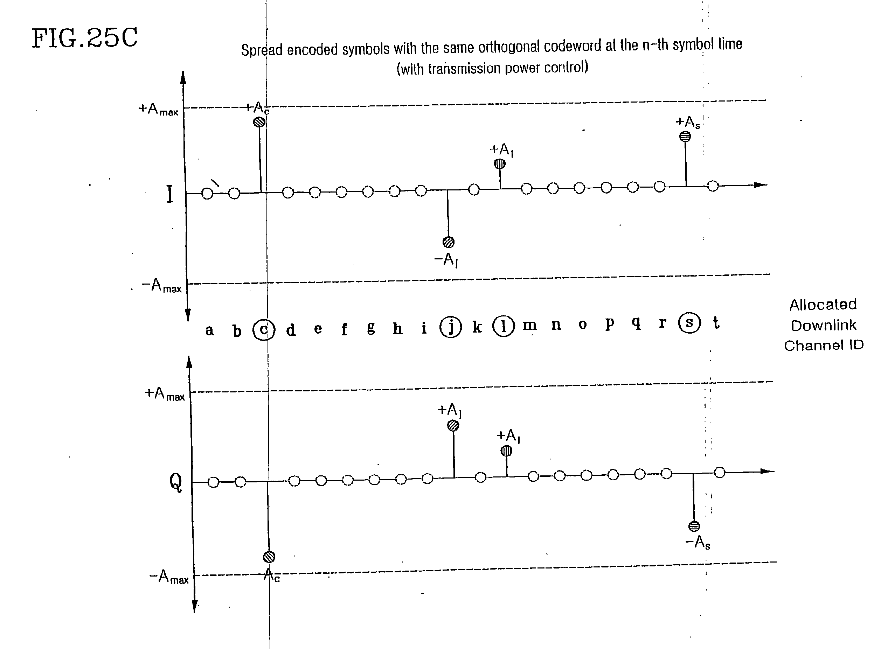

FIG. 25c illustrates a multidimensional orthogonal resource hopping pattern collision among four channels c, j, l and s for explaining the determination of the final transmit signal using the method of FIG. 25a;

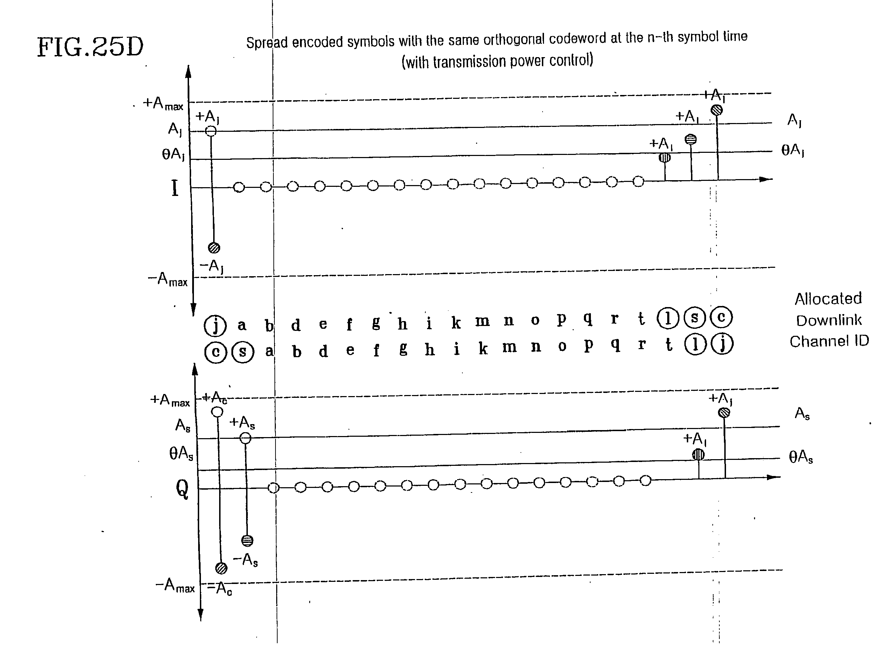

FIG. 25d shows a channel arrangement for comparing the amplitudes of channels selecting the orthogonal wireless resource unit in case of FIG. 25c;

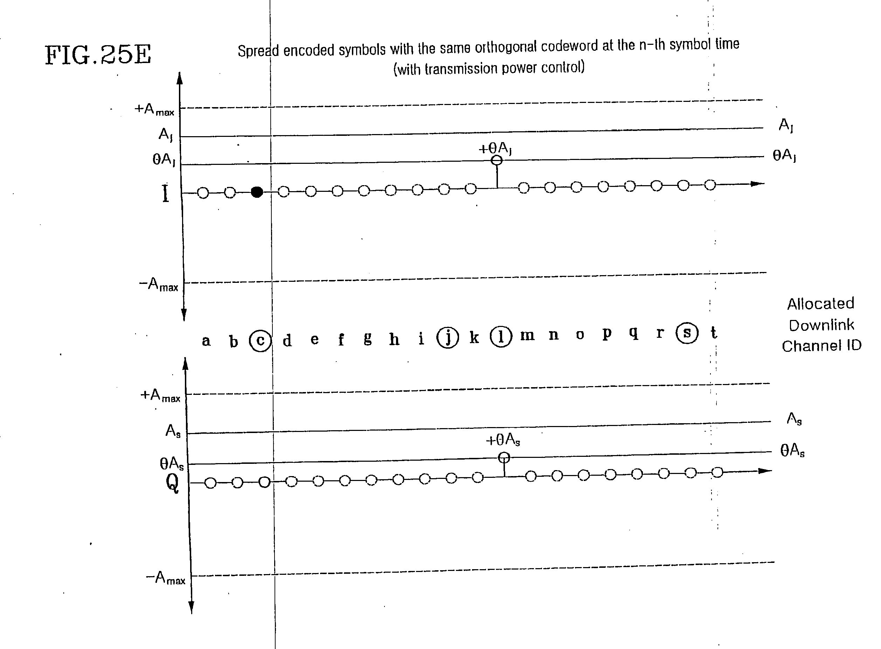

FIG. 25e illustrates the final transmit signal determined according to the algorithm of FIG. 25a in case of FIG. 25c;

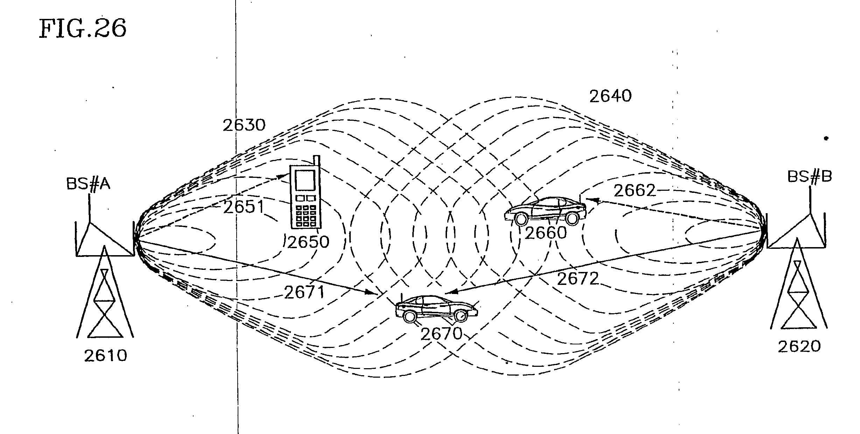

FIG. 26 illustrates that a transmitter from the first station to the second station uses a soft hand-off to compensate for the disadvantageous aspect of the first to eighth transmit signal determination methods by the respective orthogonal wireless resource units on a second station positioned at an area (e.g., a cell boundary) having a relatively weak received signal from the first station in accordance with an embodiment of the present invention;

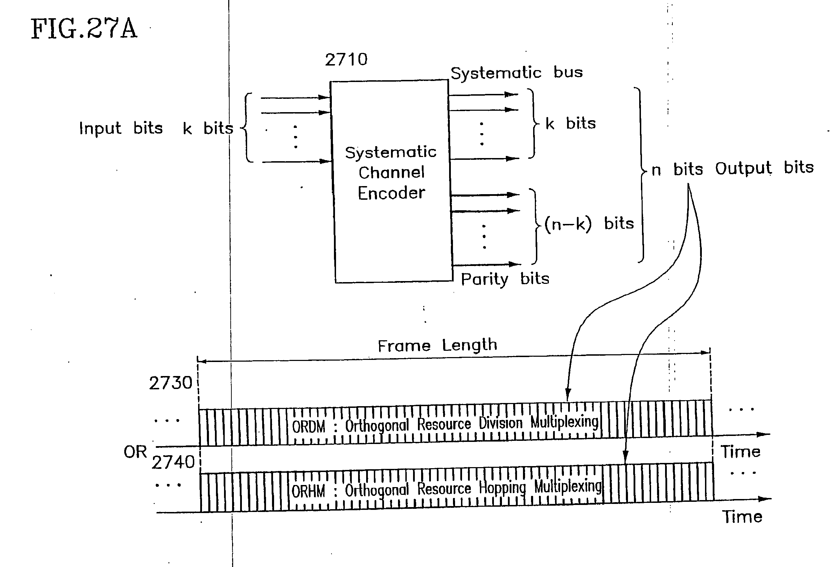

FIG. 27a illustrates an example of the prior art and an embodiment of the present invention for orthogonal resource division multiplexing of all output bits from a systematic channel encoder without distinguishing systematic bits, which are the same as input bits, from parity bits generated from a channel encoder;

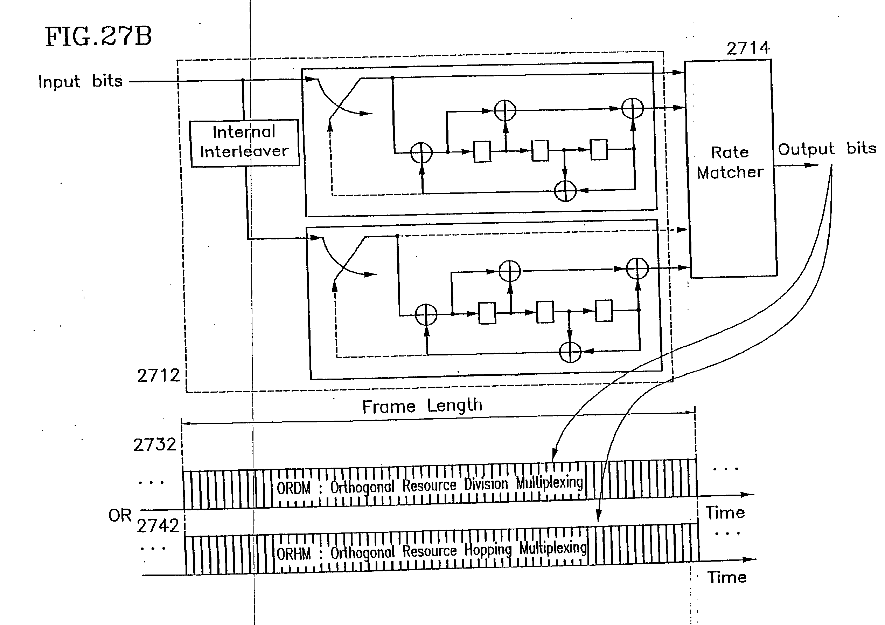

FIG. 27b illustrates, as the embodiment of FIG. 27a, an example of the prior art and an embodiment of the present invention for orthogonal resource hopping multiplexing of all output bits from a turbo encoder;

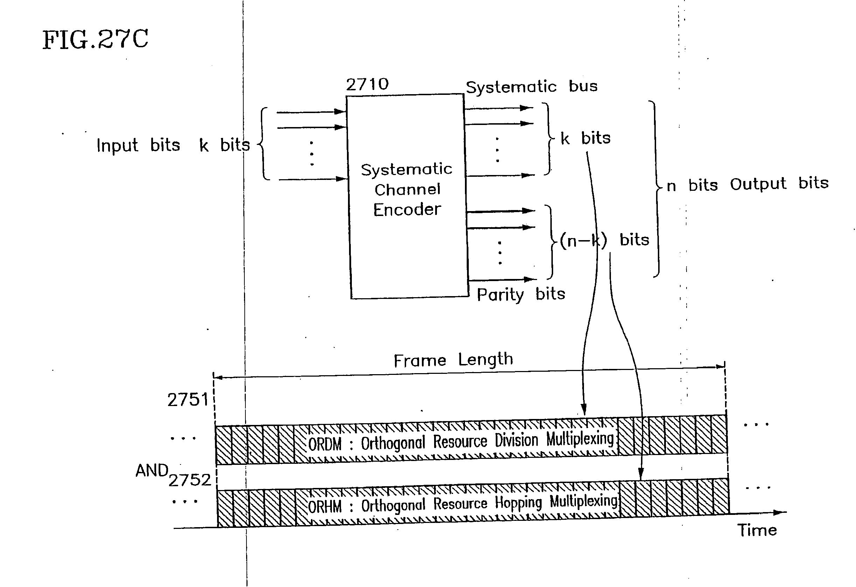

FIG. 27c illustrates that the systematic bits, which are the same as input bits, among the output bits of the systematic channel encoder are subject to an orthogonal resource division multiplexing, the parity bits generated from the systematic channel encoder being subject to an orthogonal resource hopping multiplexing;

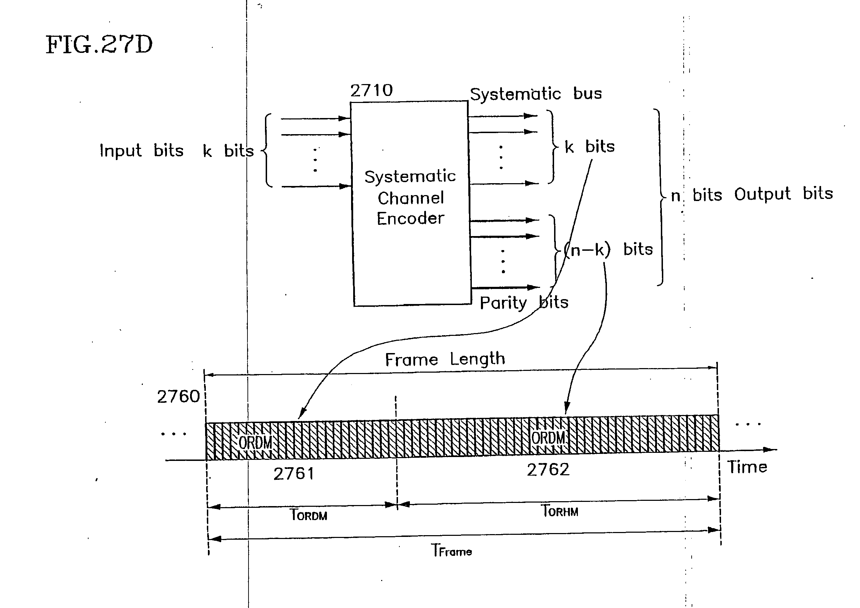

FIG. 27d illustrates the embodiment of FIG. 27c that temporally distinguishes an orthogonal resource division multiplexing region from an orthogonal resource hopping multiplexing region;

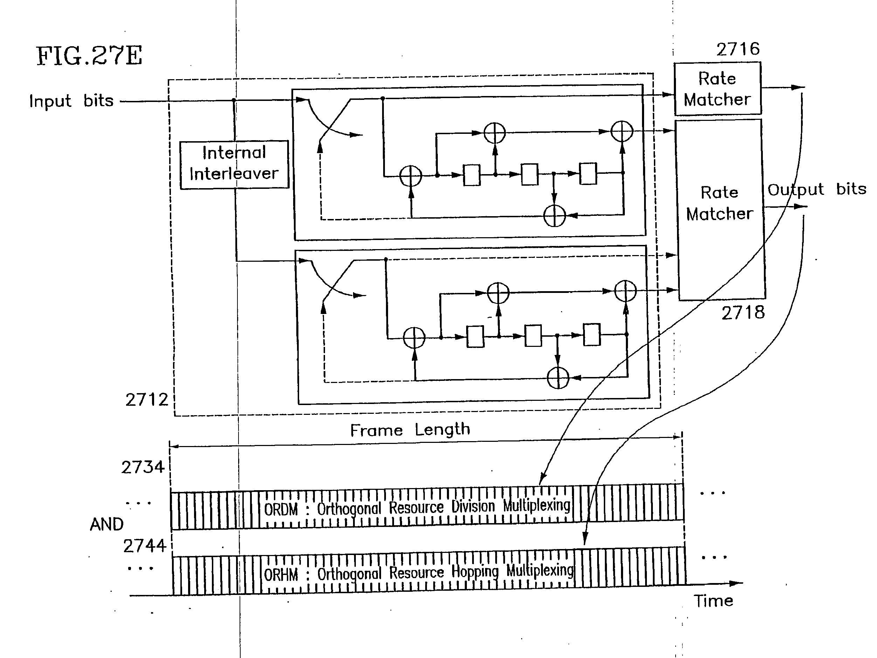

FIG. 27e illustrates that the systematic bits, which are the same as input bits, among the output bits of the turbo encoder are subject to an orthogonal resource division multiplexing, the parity bits generated from the systematic channel encoder being subject to an orthogonal resource hopping multiplexing;

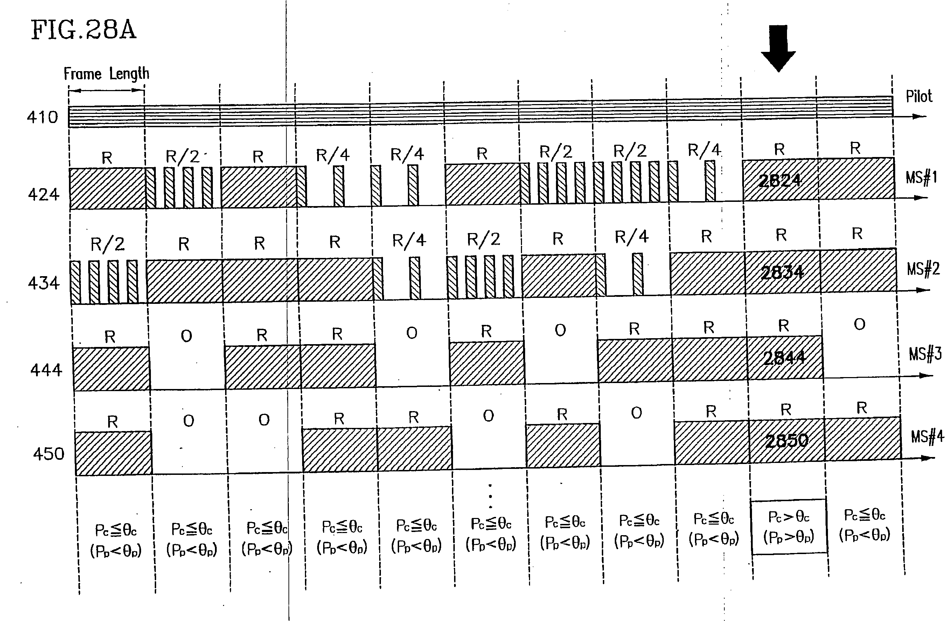

FIG. 28a illustrates in FIG. 4c that a collision probability or a puncture probability of frame-based multidimensional orthogonal resource hopping patterns are compared with a reference value in accordance with an embodiment of the present invention;

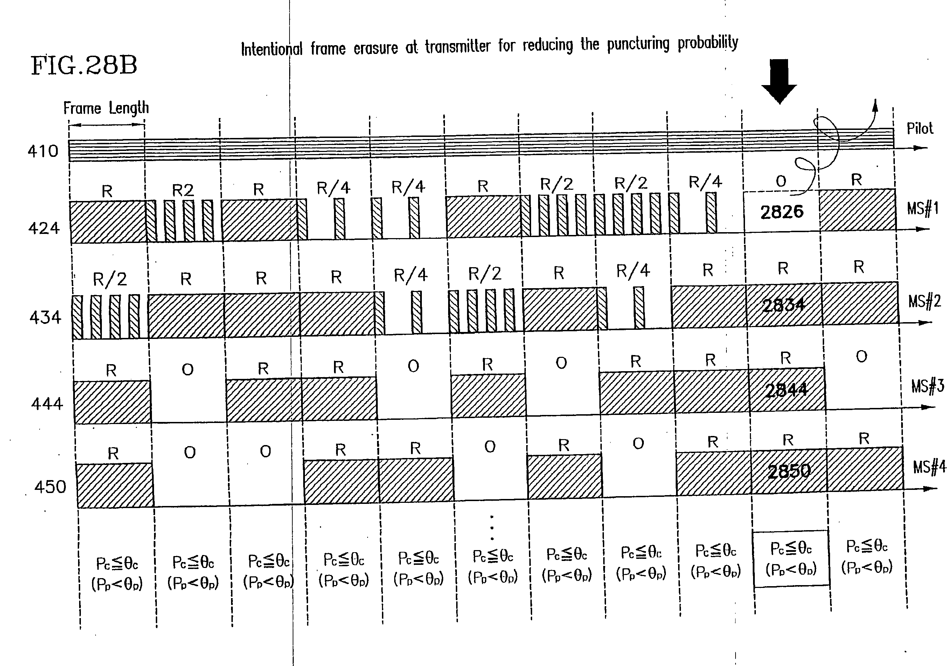

FIG. 28b illustrates that the first station intentionally does not transmit the whole or a part of the transmit frame to a least influenced second station so that the collision probability or the puncture probability of the multidimensional orthogonal resource hopping pattern should be less than the reference value;

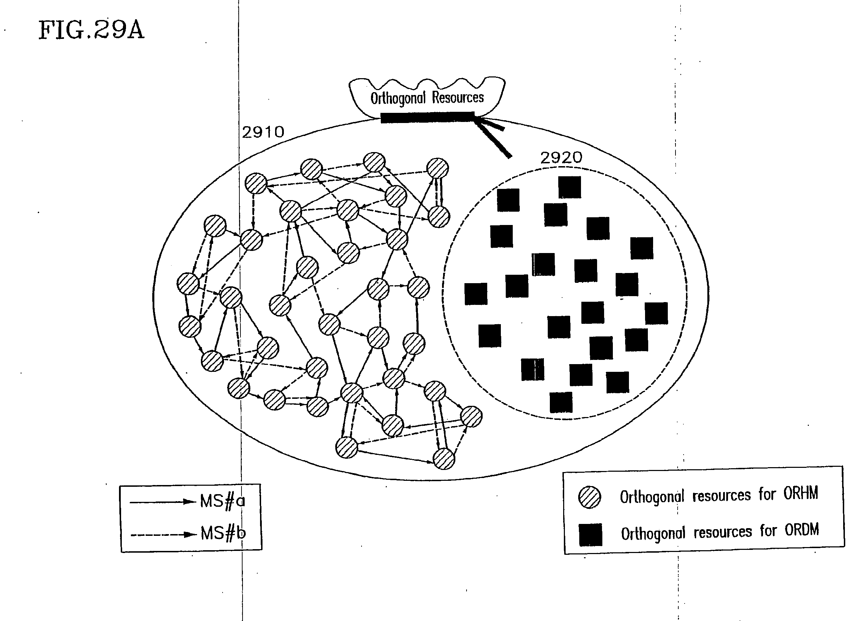

FIG. 29a illustrates that orthogonal wireless resource units for multidimensional orthogonal resource hopping multiplexing in a broad sense according to an embodiment of the present invention are divided into a set of orthogonal wireless resource units for orthogonal resource hopping multiplexing in a narrow sense and a set of orthogonal wireless resource units for orthogonal resource division multiplexing;

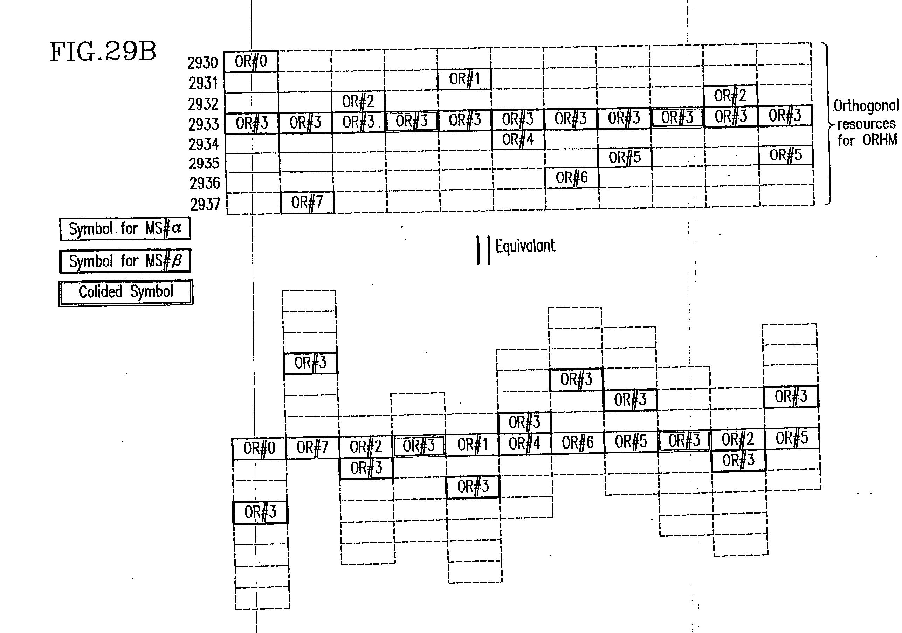

FIG. 29b illustrates that the channel with a fixedly allocated orthogonal wireless resource unit for multidimensional orthogonal resource hopping multiplexing in a narrow sense according to an embodiment of the present invention is relative to a channel with an orthogonal wireless resource unit allocated according to a hopping pattern;

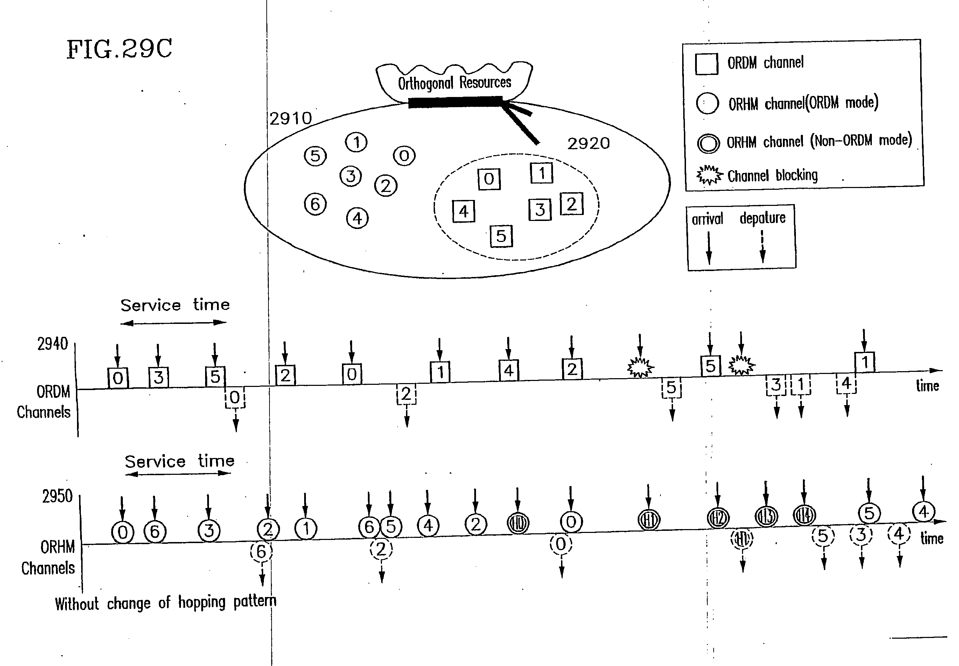

FIG. 29c is a conceptual diagram sequentially showing the steps of channel request, wireless resource allocation and channel termination in the orthogonal resource division multiplexing according to an embodiment of the prior art and the multidimensional orthogonal resource hopping multiplexing according to an embodiment of the present invention;

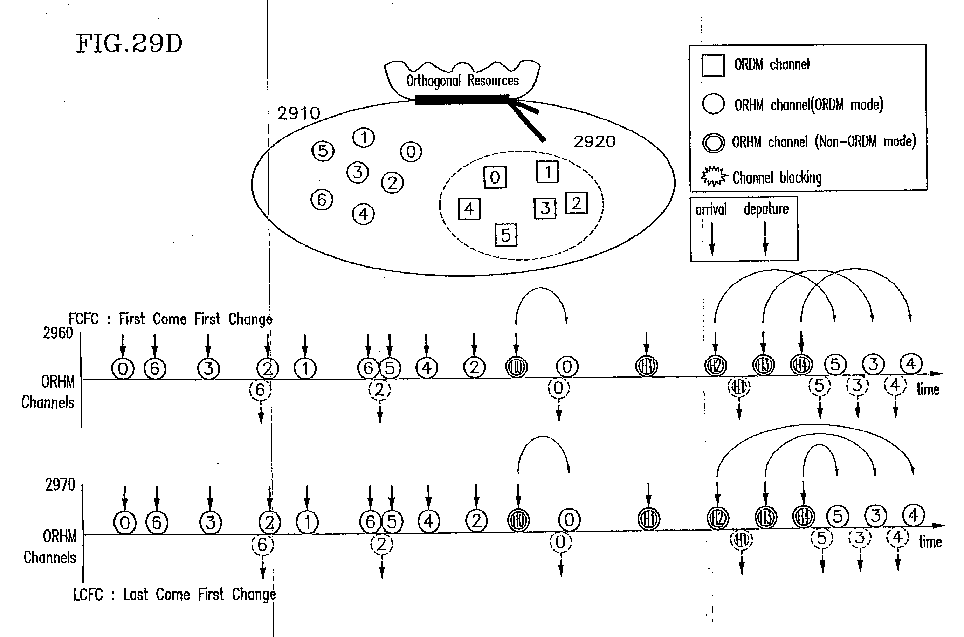

FIG. 29d is a conceptual diagram sequentially showing the steps of channel request, wireless resource allocation and channel termination in the multidimensional orthogonal resource hopping multiplexing in a narrow sense according to another embodiment of the present invention;

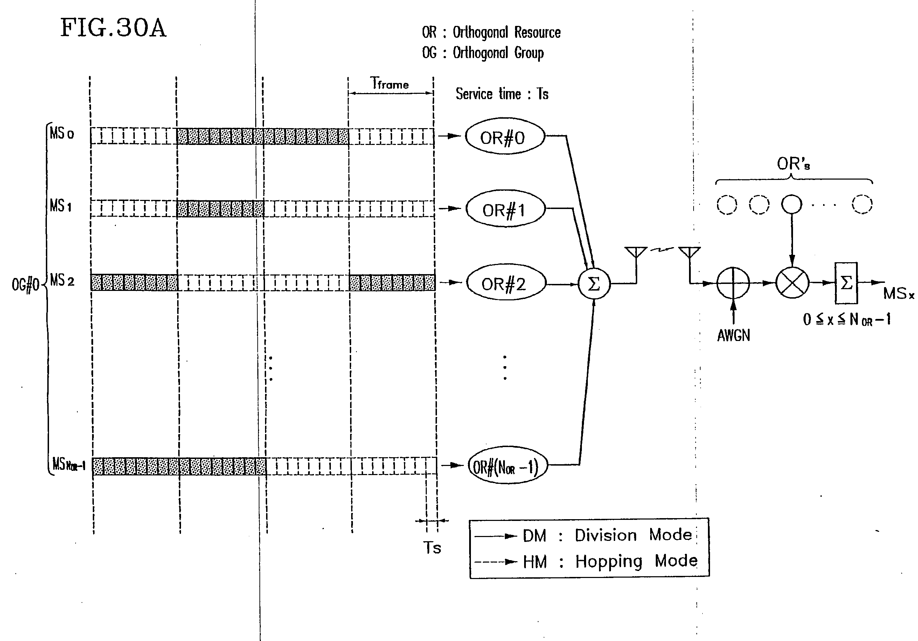

FIG. 30a is a conceptual diagram of a division mode in the multidimensional orthogonal resource hopping multiplexing in a narrow sense according to an embodiment of the present invention;

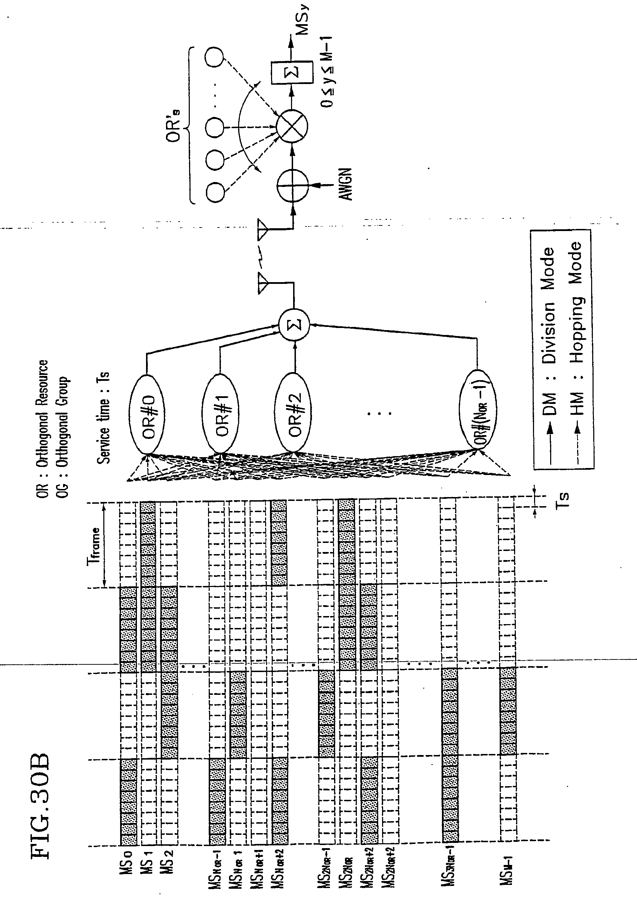

FIG. 30b is a conceptual diagram of a hopping mode in a hopping mode in the multidimensional orthogonal resource hopping multiplexing in a narrow sense according to an embodiment of the present invention;

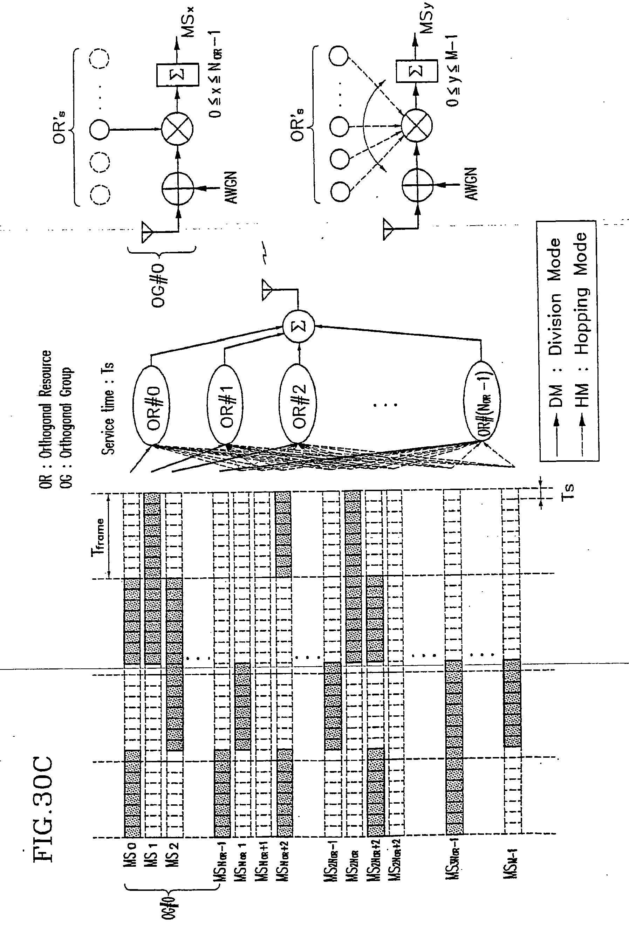

FIG. 30c is a conceptual diagram of a hybrid mode in the multidimensional orthogonal resource hopping multiplexing in a narrow sense according to an embodiment of the present invention;

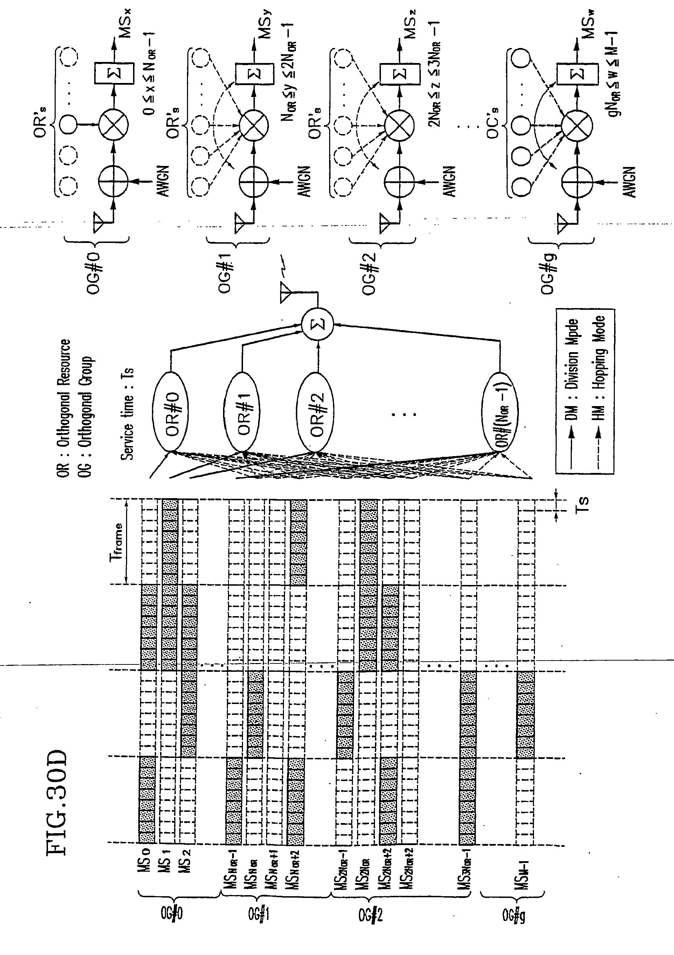

FIG. 30d is a conceptual diagram of a group mode for a single channel in the multidimensional orthogonal resource hopping multiplexing in a narrow sense according to an embodiment of the present invention; and

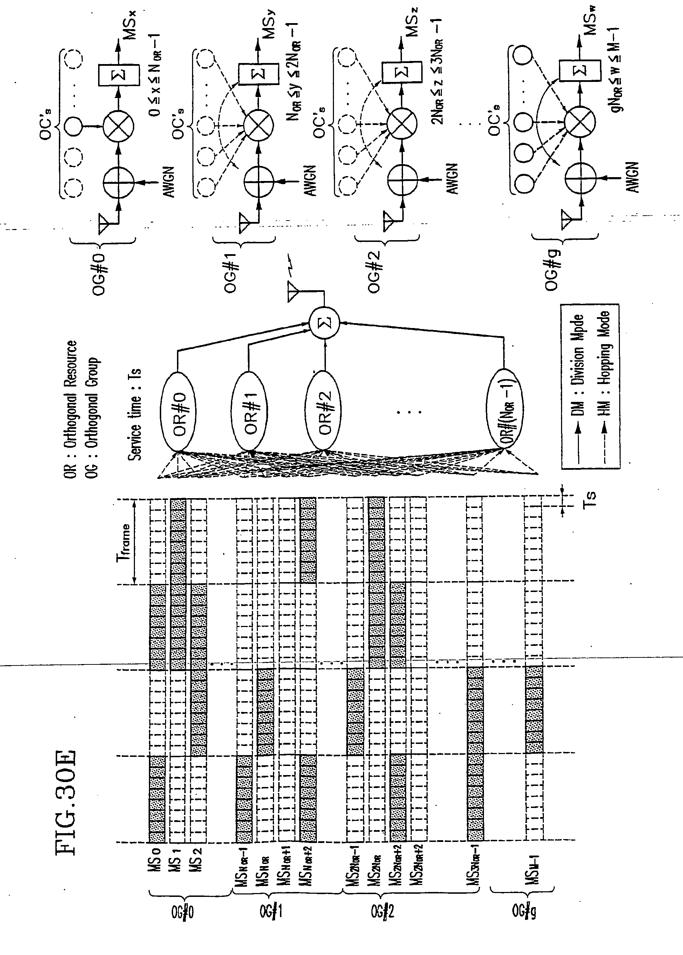

FIG. 30e is a conceptual diagram of a group mode for multiple channels in the multidimensional orthogonal resource hopping multiplexing in a narrow sense according to an embodiment of the present invention.

## DETAILED DESCRIPTION OF THE PREFERRED EMBODIMENTS

In the following detailed description, some parts named embodiments are merely examples instead of true embodiments of the invention in the sense of the present claims. The examples have been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

Although the embodiment of the present invention has been described specifically in regard to a wireless mobile communication system, statistic multiplexing proposed in the present invention is applicable to wire communication systems as well as wireless communication systems.

In the description of the embodiment of the present invention, the same reference numerals are assigned to the same parts as in the example of the prior art. The corresponding parts have been described previously, so that the embodiment of the present invention will be described primarily in regard to the parts to be modified or added.

FIG. 9a shows the structure of sparse channels for multidimensional orthogonal resource hopping multiplexing, in which the structure is the same as described in the prior art, excepting that a transmit power control command for a second station is punctured and inserted.

There are two types of communications, bidirectional communication and unidirectional communication. The transmit power control command for the second station is not necessarily transmitted in the unidirectional communication system. But the transmission power control is necessary to the bidirectional communication system, in which an efficient power control can maximize the system capacity.

For a fast processing, the power control command is not channel-encoded in many cases. Due to a random orthogonal code hopping pattern, a collision of different channels inevitably occurs.

Thus the power control command must be transmitted through not-collided channels. For this purpose, the present invention introduces the concept of a common power control channel used in a candidate technology of the IMT-2000 system, CDMA2000 and the not-collided channels are referred to as "common physical control channel (CPCCH)" in this description.

The CPCCH is spread with a separate orthogonal code symbol as the pilot channel and used to transmit the control command of the physical hierarchy by time division multiplexing for a plurality of second stations. The position of the power control command for each second station is allocated during a call set up. FIG. 9a illustrates an embodiment of the CPCCH that controls, for example, 24 second stations in the IS-95 system. When the channel from the first station to each second station has a variable transmission rate below a basic transmission rate R, the information decided to be necessarily transferred without a collision is subject to time division multiplexing and transmitted through a common control channel as the transmit power control command of the second station. Without information about the actual transmission rate, the receiver determines the actual transmit data rate sequentially by channel decoding and CRC checking for all the combinations available. The combinations available are usually negotiated between the first station and each second station during the initial call set up. FIG. 9b is a signal diagram of a common physical control channel (CPCCH) according to an embodiment of the present invention, in which the CPCCH includes a CPCCH#1 for the first station transferring a transmit power control command of the second station and a CPCCH#2 for transferring the transmit data rate information of the first station.

FIG. 10a shows an embodiment method adapting the present invention to the example of the prior art shown in FIG. 3a. For statistic multiplexing based on the multidimensional orthogonal resource hopping multiplexing proposed in the present invention, there is used a collision detector and controller 384 for detecting a collision of multidimensional hopping patterns formed from a multidimensional hopping pattern generator 380 and caused by generation of channel-independent hopping patterns and properly controlling the collision. An example of the multidimensional hopping pattern generator is illustrated in FIG. 11. The multidimensional hopping pattern generator of FIG. 11 has a structure of generating a multidimensional hopping pattern with a general PN sequence generator. The multidimensional hopping pattern can also be realized by another method. The multidimensional hopping pattern may include one-dimensional hopping patterns (e.g., frequency, transmission time, orthogonal code, etc.) two-dimensional hopping patterns (e.g., frequency/transmission time, frequency/orthogonal code, transmission time/orthogonal code, etc.) or three-dimensional hopping patterns (e.g., frequency/transmission time/orthogonal code, etc.). In the system development step, it is designed that only a part of the orthogonal resources are involved in hopping and the others are fixedly allocated. Alternatively, all the orthogonal resources are involved in the hopping multiplexing and then only a part of the orthogonal resources are involved in the hopping multiplexing based on a control command. According to the multidimensional hopping pattern generator 380, there are needed a frequency synthesizer for frequency hopping 388, buffers for transmission time hopping 392 and 393, or an orthogonal code generator 382 for generating spreading orthogonal code symbols for orthogonal code hopping.

For the carriers or subcarriers generated from the frequency synthesizer 388, the number of bits representing the coordinate value on the frequency axis for the output of the multidimensional hopping pattern generator 380 is different depending on the number of (sub)carriers used in the frequency hopping, as shown in FIG. 12a. Among the outputs of the hopping pattern generator 380, the signal corresponding to the coordinate value on the frequency axis is fed into the frequency synthesizer 388 to generate a defined (sub)carrier according to the input value. Unlike time hopping or orthogonal code hopping in which the frequency of the carrier is not variable, the frequency hopping in the multidimensional orthogonal resource hopping multiplexing system has a change in the frequency of the carrier, making it difficult to achieve channel estimation and phase compensation at the receiver. Accordingly, the frequency hopping multiplexing using subcarriers related to MCs (Multi-Carriers) as carriers capable of hopping is readily realized when multi-carriers are basically provided and channel estimation for the respective carriers is independently achieved at the receiver in parallel as in the MC method of the CDMA2000 system.

The buffers for transmission time hopping 392 and 393 receive the signal corresponding to the coordinate value on the time axis among the outputs of the multidimensional hopping pattern generator 380, and the transmission position of the data in the buffers is determined as shown in FIG. 12c according to the input value. In FIG. 12c, "1" means the presence of transmit data and "0" means the absence of transmit data. FIG. 12d shows an example that the transmit data has 16 probable positions (PPs) in FIG. 12c. In the multidimensional orthogonal resource hopping multiplexing, transmission time hopping is achieved in the unit of transmit symbols rather than frames or time slots using the basic transmission rate R as an instantaneous transmission rate in order to maximize statistic multiplexing and readily search communication channels to the second stations. The symbol-based hopping in one frame makes it easy to search the change of the channel at the receiver of the second station, because the transmit symbols are distributed in the frame uniformly in the aspect of probability.

The orthogonal code generated from the orthogonal code generator 382 may be any orthogonal code maintaining orthogonality, such as an orthogonal gold code generated from the orthogonal gold code generator shown in FIG. 12e or an OVSF (Orthogonal Variable Spreading Factor) code of a hierarchical structure that becomes a Walsh code for a specific spreading factor as shown in FIG. 12f. The orthogonal code division multiplexing is the same as the prior art, only if the coordinates on the orthogonal code axis among the outputs of the multidimensional hopping pattern generator 380 are fixed. With one orthogonal code divided into two orthogonal code symbol groups, the one orthogonal code symbol group is used for orthogonal code division multiplexing by a fixed allocation and the other orthogonal code symbol group is used for orthogonal code hopping multiplexing by a hopping pattern. Alternatively, the one orthogonal code symbol group is used for orthogonal code hopping multiplexing using an intentional selected hopping pattern so as not to cause a hopping pattern collision, and the other orthogonal code symbol group is used for orthogonal code hopping multiplexing based on the statistic multiplexing using channel-independent hopping patterns possibly causing a hopping pattern collision. The former case involves allocation to relative important transmit data or high-activity channels, while the latter case involves allocation to channels causing a relatively sparse traffic, thereby acquiring a statistic multiplexing gain. When using a hierarchical orthogonal code supporting a variable spreading gain as in FIG. 12f as a spreading code, it is desirable in the aspect of orthogonal code division to divide the orthogonal code into orthogonal code symbol groups 393 and 397 composed of all the daughter code symbols having the same parent code symbols 391 and 395 as "01" or "0110".

As described above, there is no hopping pattern collision when the multidimensional hopping pattern generator 380 generates multidimensional hopping patterns intentionally so that the same orthogonal resource is not selected by different channels at the same time for the respective channels. But this method has the following problems: (1) the hopping pattern is not determined by the second station but allocated by the first station during a call set up; (2) the number of multidimensional hopping patterns allocable by the first station is limited by the number of orthogonal resources; and (3) with a handoff to an adjacent cell, a new multidimensional hopping pattern must be allocated from the adjacent cell. The allocation of multidimensional hopping patterns between channels to the second stations without a collision is intended to acquire a diversity gain rather than to achieve statistic multiplexing. For high-activity and dense channels to the second stations, it is efficient not to cause a hopping pattern collision. But, for low-activity and sparse channels to the second stations according to the characteristic of services, there may occur a waste and inefficiency of resources, so that channel-independent multidimensional hopping patterns are generated in order to acquire a statistic multiplexing gain and a frequency and time diversity according to the data activity of each cannel. Inevitably, this results in a multidimensional hopping pattern collision that different channels determine the coordinates of the same multidimensional orthogonal resource at the same time. To solve this problem, the present invention uses the collision detector and controllers 384 and 386 to receive the hopping patterns for all channels and data symbols to be transmitted and thereby determine whether the hopping patterns are collided. The multidimensional hopping patterns by the respective second stations are generated in the first station and the data to be transmitted to each second station are also sent to the first station, so that it is possible to determine before the actual collision whether the hopping patterns are collided and whether the transmit data are matched. With a multidimensional hopping pattern collision, the transmit data symbols for all channels concerned are compared. If the transmit data symbols are all matched, then the data symbols present in the collision interval are transmitted. This is because no error occurs in the channel decoding process of the second station concerned. But with only one unmatched transmit data symbol, the data symbols in the collision interval of the related channel are not transmitted. That is, the input of multipliers 385 and 387 is "+1" or "0" according to the output of the collision detector and comparators 384 and 386. Transmission is stopped in the interval where the input of the multipliers is "0". This interruption of the transmission of the spread data symbols results in a lack of the average received energy from the second station required to meet a desired quality. To compensate for the insufficient average received energy, the transmission power of the first station is increased by adjusting the gains of amplifiers 315 and 335 of the corresponding channel as much as a magnitude given as a system parameter for an interval given as a system parameter as denoted by reference numerals 1072 and 1074 of FIG. 15. Aside from this, the second station can perform a transmission power control of the first station by the conventional method.

FIG. 10b is a schematic of a transmitter in the first station for orthogonal resource hopping multiplexing according to an embodiment of the present invention, in which the signal of FIG. 10a is denoted as a complex number signal.

FIG. 10c illustrates an embodied method applying the present invention to the example of the prior art shown in FIG. 3b. The transmitter of FIG. 10c is the same in structure as that of FIG. 10a, excepting that a multidimensional hopping pattern generator 380 generates multidimensional hopping patterns independent to in-phase (I) and quadrature phase (Q) channels. For the statistic multiplexing based on the multidimensional orthogonal resource hopping multiplexing proposed in the present invention, there are needed the multidimensional hopping pattern generator 380 and collision detector and controllers 384 and 386 for detecting collision and transmission independent to I/Q channels.

FIG. 10d is a schematic of a transmitter in the first station for orthogonal resource hopping multiplexing in accordance with an embodiment of the present invention, in which the signal of FIG. 10c is denoted as a complex number signal.

FIG. 10e illustrates an embodied method applying the present invention to the example of the prior art shown in FIG. 3c. The transmitter of FIG. 10e is the same in structure as that of FIG. 10a, excepting that transmit data are different between I-channel and Q-channel because QPSK data modulation is performed, unlike the transmitter of FIG. 10a performing BPSK data modulation.

FIG. 10f is a schematic of a transmitter in the first station for orthogonal resource hopping multiplexing according to an embodiment of the present invention, in which the signal of FIG. 10e is denoted as a complex number signal.

FIG. 10g illustrates an embodied method applying the present invention to the example of the prior art shown in FIG. 3d. The transmitter of FIG. 10g is the same in structure as that of FIG. 10e, excepting that a multidimensional hopping pattern generator 380 generates multidimensional hopping patterns independent to in-phase (I) and quadrature phase (Q) channels. For the statistic multiplexing based on the multidimensional orthogonal resource hopping multiplexing proposed in the present invention, there are needed the multidimensional hopping pattern generator 380 and collision detector and controllers 384 and 385 for detecting collision and transmission independent to I/Q channels.

FIG. 10h is a schematic of a transmitter in the first station for orthogonal resource hopping multiplexing in accordance with an embodiment of the present invention, in which the signal of FIG. 10g is denoted as a complex number signal.

FIG. 10i illustrates an embodied method applying the present invention to the example of the prior art shown in FIG. 3e. The transmitter of FIG. 10i is the same in structure as that of FIG. 10e, excepting that QOC (Quasi-Orthogonal Code) is used.

FIG. 10j is a schematic of a transmitter in the first station for orthogonal resource hopping multiplexing in accordance with an embodiment of the present invention, in which the signal of FIG. 10i is denoted as a complex number signal.

FIG. 10k illustrates an embodied method applying the present invention to the example of the prior art shown in FIG. 3f. The transmitter of FIG. 10k is the same in structure as that of FIG. 10g, excepting that QOC is used. FIG. 10l is a schematic of a transmitter in the first station for orthogonal resource hopping multiplexing in accordance with an embodiment of the present invention, in which the signal of FIG. 10k is denoted as a complex number signal.

FIG. 13a is a schematic of a receiver in the second station for orthogonal resource hopping multiplexing in accordance with the embodiment of the present invention illustrated in FIG. 10a. The signal received from the first station via an antenna is sent to demodulators 510 and 530 for demodulation by a frequency synthesizer 588 under the control of a multidimensional hopping pattern generator 580. The demodulated signal is then sent to low-pass filters 512 and 532.

The low-pass filtered signal is sent to descramblers 522 and 542 for descrambling with the same scrambling codes generated from scrambling code generators 520 and 540 as in the transmitter. The descrambled signal is fed into multipliers 514 and 534 for multiplication by an orthogonal code symbol generated from an orthogonal code symbol generator 582 according to the coordinate value of the orthogonal code axis output from a multidimensional hopping pattern generator 580 synchronized with the transmitter of the first station. The resulting signal is integrated for a corresponding symbol interval at integrators 516 and 536 for despreading. The despread signal is fed into a compensator 560 for compensating for a phase difference using a channel estimator 550, thereby achieving synchronous demodulation. The compensated data symbol is fed into buffers 592 and 593 in accord with the coordinate value of the transmission time axis of the multidimensional hopping pattern generator. Because the transmitter of the first station shown in FIG. 10a performs BPSK data modulation, the receiver of the first station corresponding to FIG. 13a adds I-channel and Q-channel received data having the same information at an adder 596. With independent interleavers by I-channels and Q-channels at the transmitter of the first station in order to provide time diversity, the second station adds I-channel and Q-channel received data via a deinterleaver.

FIG. 13b is a schematic of a receiver in the second station for orthogonal resource hopping multiplexing in accordance with the embodiment of the present invention illustrated in FIG. 10b. The receiver of FIG. 13b is the same in structure as that of FIG. 13a, excepting that independent orthogonal code generators 582 and 584 are present by I-channels and Q-channels.

FIG. 13c is a schematic of a receiver in the second station for orthogonal resource hopping multiplexing in accordance with the embodiment of the present invention illustrated in FIG. 10c. The receiver of FIG. 13c is the same in structure as that of FIG. 13a, excepting that the receiver of the second station corresponding to FIG. 13c does not add I-channel and Q-channel received data having a different information, because the receiver of the first station shown in FIG. 10c performs QPSK data modulation.

FIG. 13d is a schematic of a receiver in the second station for orthogonal resource hopping multiplexing in accordance with the embodiment of the present invention illustrated in FIG. 10d. The receiver of FIG. 13d is the same in structure as that of FIG. 13c, excepting that independent orthogonal code generators 582 and 584 are present by I-channels and Q-channels.

FIG. 13e is a schematic of a receiver in the second station for orthogonal resource hopping multiplexing in accordance with the embodiment of the present invention illustrated in FIG. 10e. The receiver of FIG. 13e is the same in structure as that of FIG. 13c, excepting that QOC 566 is used for despreading.

FIG. 13f is a schematic of a receiver in the second station for orthogonal resource hopping multiplexing in accordance with the embodiment of the present invention illustrated in FIG. 10f. The receiver of FIG. 13f is the same in structure as that of FIG. 13e, excepting that independent orthogonal code generators 582 and 584 are present by I-channels and Q-channels.

FIG. 14 is a conceptual diagram of a transmit signal from the first station in accordance with an embodiment of the present invention. The signal diagram of FIG. 14a is the same as the signal diagram showing a transmit signal from the first station by the respective frames according to the example of the prior art as illustrated in FIG. 4a. According to the characteristic of the services, the channel from the first station to each second station has a frame-based transmission rate changed to less than the basic transmission rate R allocated during a call set up as denoted by reference numerals 920 and 930, or to the basic transmission rate R as denoted by reference numerals 940 and 950, thereby repeating between transmission (ON) and non-transmission (OFF). The channels denoted by reference numerals 940 and 950 can be expressed in terms of channel activity. In the present invention, the channels denoted by reference numerals 920 and 930 are subject to transmission time hopping multiplexing according to the frame-based transmit data rate as the channels 924 and 934 of FIG. 14b. The transmission time hopping is realized by the method of FIG. 12d. FIGS. 14c and 14d illustrate the hopping type of the transmission time actually determined according to the example of the frame-based transmit data rate. FIG. 14c shows regular and periodic hopping, and FIG. 14d shows irregular and random hopping. FIG. 14c is favorable for time diversity and channel estimation but not for statistic multiplexing. FIG. 14d may cause a collision of channel-independent multidimensional hopping patterns but is favorable for statistic multiplexing.

FIG. 14e shows a system that concurrently performs FHM (Frequency Hopping Multiplexing) and THM (Time Hopping Multiplexing) in sparse channels in accordance with an embodiment of the present invention, in which the second stations are distinguished by the pattern in the respective squares. FIG. 14f illustrates a collision that a multidimensional hopping pattern represented by a two-dimensional coordinate of transmission time and subcarrier is selected by a plurality of channels at the same time in FIG. 14e. In the figure, the double solid line square represents the position of a data symbol with a multidimensional hopping pattern collision, and the single solid line square represents the position of a data symbol without a multidimensional hopping pattern collision. FIG. 14g illustrates that data symbols of coordinates with a collision in FIG. 14f are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14h is a signal diagram of a transmit signal from the first station for symbol-based time division multiplexing in a sparse frame in accordance with an embodiment of the present invention. Unlike the time division multiplexing of FIG. 4e in the unit of time slots densely distributed in a specific interval of a frame, the time division multiplexing of FIG. 14h is performed in the unit of symbols uniformly distributed in the frame, thereby facilitating estimation of communication channels to the respective second stations and providing time diversity. The present invention involving a periodic hopping pattern is primarily aimed at channel estimation and time diversity as mentioned above rather than statistic multiplexing. So there is no independency among channels to the second stations, and the first station allocates channels with reference to the allocation to the existing second stations during a call set up. Accordingly, the symbol-based time division multiplexing of FIG. 14h is preferred in the case where the instantaneous transmission rate of each channel is constant.

Contrary to FIG. 14h, FIG. 14i illustrates that the transmit data symbol interval of a channel to the second station is selected in a pseudo-random manner in order to achieve statistic multiplexing. The transmission time hopping patterns of the respective second stations are mutually independent. FIG. 14j illustrates a collision that a multidimensional hopping pattern represented by a one-dimensional coordinate of transmission time is selected by a plurality of channels at the same time in FIG. 14i. In the figure, the double solid line square represents the position of a data symbol with a multidimensional hopping pattern collision, and the single solid line square represents the position of a data symbol without a multidimensional hopping pattern collision. FIG. 14k illustrates that data symbols of coordinates with a collision in FIG. 14j are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14l illustrates orthogonal code hopping multiplexing as a special case of multidimensional orthogonal resource hopping multiplexing that orthogonal codes for band-spreading transmit data symbols of a channel to the second station are selected in a pseudo-random manner in order to achieve statistic multiplexing. The orthogonal code hopping patterns of the respective second stations are mutually independent. This is described in detail in WO 01/11897 A by the inventor of this invention that discloses a system and method for orthogonal code hopping multiplexing.

FIG. 14m is a signal diagram showing a transmit signal of the first station for transmission time hopping multiplexing in the unit of time slots in combination with the orthogonal code hopping multiplexing of FIG. 14l according to an embodiment of the present invention. To achieve statistic multiplexing, orthogonal code symbols for band-spreading transmission time slots of the channel to each second station and the respective transmit data symbols are selected in a pseudo-random manner. The two-dimensional hopping patterns of transmission time and orthogonal code for the respective second stations are mutually independent. FIG. 14n illustrates a collision that a multidimensional hopping pattern represented by a two-dimensional coordinate of transmission time and orthogonal code is selected by a plurality of channels at the same time in FIG. 14m. In the figure, the double solid line square represents the position of a data symbol with a multidimensional hopping pattern collision, and the single solid line square represents the position of a data symbol without a multidimensional hopping pattern collision. FIG. 14o illustrates that data symbols of coordinates with a collision in FIG. 14n are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14p is a signal diagram showing a transmit signal of the first station for the transmission division multiplexing of FIG. 14h in combination with the orthogonal code hopping multiplexing of FIG. 14l. FIG. 14h is a structure incapable of acquiring a statistic multiplexing gain, and FIG. 14l as described above. But the statistic multiplexing can be achieved by using the orthogonal code hopping multiplexing of FIG. 14l capable of acquiring a statistic multiplexing gain. The position of the first transmit symbol to every second station is all the same irrespective of the transmission rate of each channel in the frame. Orthogonal code symbols for band-spreading the respective transmit data symbols of channels to each second station are selected in a pseudo-random manner. The one-dimensional hopping patterns of orthogonal code for the respective second stations are mutually independent. FIG. 14q illustrates a collision that a multidimensional hopping pattern represented by a one-dimensional coordinate of orthogonal code is selected by a plurality of channels at the same time in FIG. 14o. In the figure, the double solid line square represents the position of a data symbol with a multidimensional hopping pattern collision, and the single solid line square represents the position of a data symbol without a multidimensional hopping pattern collision. FIG. 14r illustrates that data symbols of coordinates with a collision in FIG. 14q are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14s is a modification of the time division and orthogonal code hopping multiplexing of FIG. 14p. The first station arranges the first transmit symbols to the second stations staggered in the frame to maintain a balance of the transmission power. In the same way of FIG. 14p, orthogonal code symbols for band-spreading the respective transmit data symbols of channels to each second station are selected in a pseudo-random manner. The one-dimensional hopping patterns of orthogonal code for the respective second stations are mutually independent. FIG. 14t illustrates a collision that a multidimensional hopping pattern represented by a one-dimensional coordinate of orthogonal code is selected by a plurality of channels at the same time in FIG. 14s. In the figure, the double solid line square represents the position of a data symbol with a multidimensional hopping pattern collision, and the single solid line square represents the position of a data symbol without a multidimensional hopping pattern collision. FIG. 14u illustrates that data symbols of coordinates with a collision in FIG. 14t are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

FIG. 14v is signal diagram showing a transmit signal of the first station for the transmission time hopping multiplexing of FIG. 14i and the orthogonal code hopping multiplexing of FIG. 14l. This is a compound statistic multiplexing system that acquires a statistic multiplexing gain by both the transmission time hopping multiplexing of FIG. 14i and the orthogonal code hopping multiplexing of FIG. 14l. The transmission time of each channel in the frame and an orthogonal code symbol for band-spreading each transmit data symbol of the channel to each second station are selected in a pseudo-random manner by a multidimensional (i.e., two-dimensional) hopping pattern. The two-dimensional hopping patterns of transmission time and orthogonal code for the respective second stations are mutually independent. FIG. 14w illustrates a collision that a multidimensional hopping pattern represented by a two-dimensional coordinate of transmission time and orthogonal code is selected by a plurality of channels at the same time in FIG. 14v. In the figure, the double solid line square represents the position of a data symbol with a multidimensional hopping pattern collision, and the single solid line square represents the position of a data symbol without a multidimensional hopping pattern collision. FIG. 14x illustrates that data symbols of coordinates with a collision in FIG. 14w are compared with one another to finally determine whether to be transmitted. The black square represents data transmission with a multidimensional hopping pattern collision but the same data symbols for all channels involved in the collision. The dotted line square represents no data transmission with different data symbols for all channels involved in the collision.

The statistic multiplexing using the two-dimensional hopping pattern of transmission time and orthogonal code as shown in FIG. 14v can be expander to the statistic multiplexing using the three-dimensional hopping pattern of frequency, transmission time and orthogonal code as shown in FIG. 14y. FIG. 14y is a signal diagram showing a transmit signal from the first station for channel-based irregular carrier frequency hopping multiplexing in the unit of symbols for a sparse frame, transmission time hopping multiplexing and orthogonal code hopping multiplexing in accordance with an embodiment of the present invention. FIG. 14z illustrates a collision that a multidimensional hopping pattern represented by a three-dimensional coordinate of carrier frequency, transmission time and orthogonal code is selected by a plurality of channels at the same time in FIG. 14y. In the figure, the heavy solid line cuboid represents the collided data symbol, the blank cuboid represents that the data symbol to be transmitted is matched, and the black cuboid represents that the data symbol to be transmitted is not matched. FIG. 14aa illustrates that data symbols of coordinates with a collision in FIG. 14z are compared with one another to finally determine whether to be transmitted. The blank cuboid represents data transmission, and the dotted line cuboid represents no data transmission with different data symbols for all channels involved in the collision.

A further expansion of the system proposed in the present invention enables statistic multiplexing by a hoping multiplexing of N-dimensional orthogonal resources represented as orthogonal resource 1, orthogonal resource 2, ..., orthogonal resource N. The statistic multiplexing gain by the multidimensional resource hopping multiplexing can be analogized from the collision probability of the multidimensional hopping pattern and the non-transmission probability of the corresponding transmit data symbol. The likelihood of recovering the not-transmitted data symbol is dependent upon the channel encoding method. In this description, only the case of carrying information on the channel will be analyzed, because the case where information is not carried on the channel to the second station of interest is not worth analyzing. The following mathematic analysis is based on a control algorithm for the multidimensional hopping pattern collision shown in FIGS. 18 and 19. In FIG. 20, the mathematic analysis on the control algorithm for the multidimensional hopping pattern collision of FIG. 25 is too complicated and will not be described.

M = the number of channels allocated by the first station;

N = the number of active channels in a given time interval;

$\alpha$ = channel activity (= average transmission rate per frame / basic transmission rate)

$\pi_j$ = probability of transmitting data symbol i, where i $\in$ {0, 1, 2, ..., s-1}; and

s = the number of data symbols

Example: For 8PSK, s = 8; and for 16QAM, s = 16.

1) Frequency hopping multiplexing

$c_1$ = the total number of subcarriers on the frequency axis in multidimensional hopping pattern

(1) Hopping pattern collision probability

[Equation 1]

$$\sum_{N=2}^{M} \left\{ 1 - \left(1 - \frac{1}{c_1}\right)^{N-1} \right\} \binom{M-1}{N-1} \alpha^{N-1} (1-\alpha)^{M-N}$$

(2) Data symbol puncture (Transmission interrupt) probability

[Equation 2]

$$\sum_{N=2}^{M} \left[ \sum_{i=0}^{s-1} \left\{ 1 - \left(1 - \frac{1-\pi_i}{c_1}\right)^{N-1} \right\} \cdot \pi_i \right] \binom{M-1}{N-1} \alpha^{N-1} (1-\alpha)^{M-N}$$

(3) Data symbol puncture probability for all the same $\pi_i$

[Equation 3]

$$\sum_{N=2}^{M} \left\{ 1 - \left(1 - \frac{1-\frac{1}{s}}{c_1}\right)^{N-1} \right\} \binom{M-1}{N-1} \alpha^{N-1} (1-\alpha)^{M-N}$$

2) Transmission time hopping multiplexing

$c_2$ = the total number of transmittable symbol intervals on the time multidimensional hopping pattern

(1) Hopping pattern collision probability

[Equation 4]

$$\sum_{N=2}^{M} \left\{ 1 - \left(1 - \frac{1}{c_2}\right)^{N-1} \right\} \binom{M-1}{N-1} \alpha^{N-1} (1-\alpha)^{M-N}$$

(2) Data symbol puncture probability

[Equation 5]

$$\sum_{N=2}^{M}\left[\sum_{i=0}^{s-1}\left\{1-\left(1-\frac{1-\pi_i}{c_2}\right)^{N-1}\right\}\cdot\pi_i\right]\binom{M-1}{N-1}\alpha^{N-1}(1-\alpha)^{M-N}$$

(3) Data symbol puncture probability for all the same $\pi_i$

[Equation 6]

$$\sum_{N=2}^{M}\left\{1-\left(1-\frac{1-\frac{1}{s}}{c_2}\right)^{N-1}\right\}\binom{M-1}{N-1}\alpha^{N-1}(1-\alpha)^{M-N}$$

3) Orthogonal code hopping multiplexing
$c_3$ = the total number of orthogonal code symbols on the orthogonal code axis in multidimensional hopping pattern

(1) Hopping pattern collision probability

[Equation 7]

$$\sum_{N=2}^{M}\left\{1-\left(1-\frac{1}{c_3}\right)^{N-1}\right\}\binom{M-1}{N-1}\alpha^{N-1}(1-\alpha)^{M-N}$$

(2) Data symbol puncture probability

[Equation 8]

$$\sum_{N=2}^{M}\left[\sum_{i=0}^{s-1}\left\{1-\left(1-\frac{1-\pi_i}{c_3}\right)^{N-1}\right\}\cdot\pi_i\right]\binom{M-1}{N-1}\alpha^{N-1}(1-\alpha)^{M-N}$$

(3) Data symbol puncture probability for all the same $\pi_j$

[Equation 9]

$$\sum_{N=2}^{M}\left\{1-\left(1-\frac{1-\frac{1}{s}}{c_3}\right)^{N-1}\right\}\binom{M-1}{N-1}\alpha^{N-1}(1-\alpha)^{M-N}$$

4) Frequency, transmission time and orthogonal code hopping multiplexing
$c_1$ = the total number of subcarriers on the frequency axis in multidimensional hopping pattern
$c_2$ = the total number of transmittable symbol intervals on the time axis in multidimensional hopping pattern
$c_3$ = the total number of orthogonal code symbols on the orthogonal code axis in multidimensional hopping pattern

(1) Hopping pattern collision probability

[Equation 10]

$$\sum_{N=2}^{M}\left\{1-\left(1-\frac{1}{c_1+c_2+c_3}\right)^{N-1}\right\}\binom{M-1}{N-1}\alpha^{N-1}(1-\alpha)^{M-N}$$

(2) Data symbol puncture probability

[Equation 11]

$$\sum_{N=2}^{M}\left[\sum_{i=0}^{s-1}\left\{1-\left(1-\frac{1-\pi_i}{c_1+c_2+c_3}\right)^{N-1}\right\}\cdot\pi_i\right]\binom{M-1}{N-1}\alpha^{N-1}(1-\alpha)^{M-N}$$

(3) Data symbol puncture probability for all the same $\pi_i$

[Equation 12]

$$\sum_{N=2}^{M}\left\{1-\left(1-\frac{1-\frac{1}{s}}{c_1+c_2+c_3}\right)^{N-1}\right\}\binom{M-1}{N-1}\alpha^{N-1}(1-\alpha)^{M-N}$$

FIG. 15 illustrates that the transmission power of the first station is increased for a defined interval after a not-transmitted data symbol to compensate for an average received energy required by a channel decoder for the purpose of meeting a desired communication quality when transmission is stopped in a multidimensional hopping pattern collision interval as shown in FIGS. 14g, 14k, 14o, 14r, 14u and 14x. If it is possible to determine the number of data symbols damaged due to a multidimensional hopping pattern collision in the corresponding frame prior to the start time of the frame, the effect of the damage can be reduced with a maximized statistic multiplexing gain by previously adjusting the variation of the received energy caused by the damage as denoted by reference numeral 1076 of FIG. 15.

Because of the multidimensional hopping pattern collision and unmatched transmit data symbols, transmission is stopped for a channel group present in the same transmitter antenna beam from the first station. With a plurality of transmitter antenna beams 1120, 1130 and 1140 from the first station as the smart antenna of FIG. 16, transmission is not stopped in the collision interval for channels 1132, 1142 and 1144 in the not-overlapped transmitter antenna beams 1130 and 1140 in spite of the multidimensional hopping pattern collision.

In the embodiment of the present invention, a loss of transmit data may occur intentionally in the multidimensional hopping pattern collision interval when the multidimensional orthogonal resource hopping multiplexing is performed with a pseudo-random hopping pattern. To reconstitute data present in the data loss interval at the receiver in this case, channel encoding at the transmitter and channel decoding at the receiver are necessarily used.

As described above, an intentional loss of transmit data is inevitable in the multidimensional orthogonal resource hopping multiplexing using channel-independent hopping patterns as adopted to maximize the statistic multiplexing gain. The following description will be given as to different algorithms for controlling a transmit signal from the first station for reducing the effect of the data loss and thereby increasing the channel decoding gain at the receiver of the second stations.

FIG. 17 shows the difference of transmission power from the first station 1710 between a second station 1720 near the first station and another second station 1730 far away from the first station for the same data service. In the figure, the difference of transmission power from the first station 1710 is illustrated simply according to the distance from the first station to each second station. Actually, contrary to FIG. 17, the higher transmission power may be necessary to the second station 1720 nearer to the first station according to a transmission power control of the first station (open-loop transmission power control) or the second station (closed-loop transmission power control) based on the first station's estimation using the intensity of the signal received from the second station so as to overcome fading. But this problem is not so significant to change the bottom line of the present invention. Expediently, it is assumed herein that the distance between the first station and each second station is proportionate to the intensity of the transmission power from 1710 sends a signal having an amplitude of $A_i$ (transmission power of $A_i^2$) to the nearer second station 1720 and a signal having an amplitude of $A_0$ (transmission power of $A_0^2$) to the second station 1730.

In the following description of FIGS. 18 to 25, signals are all considered as a complex number composed of real part (I-channel) and imaginary part (Q-channel). The description will be given primarily in regard to the real part (I-channel) but is the same to the imaginary part (Q-channel). The real part may be negative, zero, or positive. In each case, the I-channel transmit signal actually transferred during a multidimensional orthogonal resource hopping pattern collision can be determined as $A_I = A_I^+. + A_I^-$, where $A_I^+$ is the sum of transmit signals for I-channels having a positive value during the collision; and $A_I^-$ is the sum of transmit signals for I-channels having a negative value during the collision. All the channels allowed to be connected by the first station by the orthogonal wireless resource units in the unit of data symbol intervals must be included in any one set of $S^0$, $S^+$ and $S^-$. Here, S is the set of all the channels allowed to be connected by the first station; $S^0$ is the set of channels included in the set S that are not selecting the corresponding orthogonal wireless resource; $S^+$ is the set of channels having a positive value among the channels selecting the orthogonal wireless resource; and $S^-$ is the set of channels having a negative value among the channels selecting the orthogonal wireless resource.

FIG. 18a is a flow chart showing a first method for determining a transmit signal by the respective orthogonal wireless resource units at a transmitter from the first station to the second station according to an embodiment of the present invention. The first method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 \cup S^+$ (in step 1840), which means that all the channels selecting the orthogonal wireless resource unit have a positive value, the first station transmits the orthogonal wireless resource unit having a value of $A_I = \sum_{j \in S^+} (+A_j) \, (A_I^+ = \sum_{j \in S^+} (+A_j)$, and $A_I^- = 0)$. For $S = S^0 \cup S^-$ (in step 1850), which means that all the channels selecting the orthogonal wireless resource unit have a negative value, the first station transmits the orthogonal wireless resource unit having a value of $A_I = \sum_{j \in S^-} (-A_j) \, (A_I^+ = 0$, and $A_I^- = \sum_{j \in S^-} (-A_j))$. For $S^+ \neq \{\}$ and $S^- \neq \{\}$ (in step 1860), the I-channel transmit signal is set as $A_I = 0$ ($A_I^+ = 0$, and $A_I^- = 0$) so that the first station does not transmit the orthogonal wireless resource unit.

FIG. 18b illustrates the determination of the final transmit signal using the method of FIG. 18a in the case of a multidimensional orthogonal resource hopping pattern collision between two channels. Let the two channels select the same orthogonal wireless resource unit in the same data symbol interval. When the data symbol values are $+A_I$ and $+A_0$ ($A_I < A_0$), then the final data symbol value transferred by the orthogonal wireless resource unit is $A_I = 0$ (in step 1802).

FIG. 18c illustrates a multidimensional orthogonal resource hopping pattern collision between two channels c and I for explaining the determination of the final transmit signal using the method of FIG. 18a. For I-channels, $S^0 = \{$a, b, d, e, f, g, h, i, j, k, m, n, o, p, q, r, s, t$\}$, $S^+ = \{$c, I$\}$, and $S^- = \{\} = \Phi$ (empty set). For Q-channels, $S^0 = \{$a, b, d, e, f, g, h, i, j, k, m, n, o, p, q, r, s, t$\}$, $S^+ = \{$I$\}$, and $S^- = \{$c$\}$.

FIG. 18d illustrates the final transmit signal determined according to the algorithm of FIG. 18a in case of FIG. 18c. For I-channels, $A_c + A_I > A_{max}$ but the orthogonal wireless resource unit has a value of $A_I = A_c + A_I$ ($A_I^+ = A_c + A_I$, and $A_I^- = 0$) by sending the original signals of channels c and I as they are. For Q-channels, the transmit signal of channel c has an opposite sign to that of channel I and the orthogonal wireless resource unit has a value of $A_Q = 0$ ($A_Q^+ = 0$, and $A_Q^- = 0$).

FIG. 19a is a flow chart showing a second method for determining a transmit signal by the respective orthogonal wireless resource units at a transmitter from the first station to the second station according to an embodiment of the present invention. The second method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 \cup S^+$ (in step 1840), it means that all the channels selecting the orthogonal wireless resource unit have a positive value. If $\sum_{j \in S^+} (+A_j) \leq +A_{max}$ (in step 1842), then the first station transmits the orthogonal wireless resource unit having a value of $A_I = \sum_{j \in S^+} (+A_j) \, (A_I^+ = \sum_{j \in S^+} (+A_j)$, and $A_I^- = 0)$; otherwise, the first station transmits the orthogonal wireless resource unit having a value of $A_I = +A_{max} \, (A_I^+ = +A_{max}$, and $A_I^- = 0)$. For $S = S^0 \cup S^-$ (in step 1850), it means that all the channels selecting the orthogonal wireless resource unit have a negative value. If $\sum_{j\in S^-}\left(-A_j\right)\geq -A_{\max}$ (in step 1852), then the first station transmits the orthogonal wireless resource unit having a value of $A_I = \sum_{j\in S^-}(-A_j)$ ( $A_I^+ = 0$, and $A_I^- = \sum_{j\in S^-}(-A_j)$ ); otherwise, the first station transmits the orthogonal wireless resource unit having a value of $A_I = -A_{\max}$ ( $A_I^+ = 0$, and $A_I^- = +A_{\max}$ ). For $S^+ \neq \{\}$ and $S^- \neq \{\}$ (in step 1960), -the I-channel transmit signal is set as $A_I = 0$ ($A_I^+ = 0$, $A_I^- = 0$) so that the first station does not transmit the orthogonal wireless resource unit.

FIG. 19b illustrates the determination of the final transmit signal using the method of FIG. 19a in the case of a multidimensional orthogonal resource hopping pattern collision between two channels. Let the two channels select the same orthogonal wireless resource unit in the same data symbol interval. If the data symbol values are $+A_I$ and $+A_0$ ($A_I < A_0$), then the final data symbol value transferred by the orthogonal wireless resource unit is $A_j = +A_{\max}$ because $A_j + A_0 > +A_{\max}$ (in step 1901). If the data symbol values are $-A_I$ and $+A_0$ ($A_I < A_0$), then the final data symbol value transferred by the orthogonal wireless resource unit is $A_j = 0$ (in step 1902). Here, $A_{\max}$ for curbing the increase of an unnecessary interference is determined as a system parameter.

FIG. 19c illustrates a multidimensional orthogonal resource hopping pattern collision between two channels c and I for explaining the determination of the final transmit signal using the method of FIG. 19a. For I-channels, $S^0 = \{a, b, d, e, f, g, h, i, j, k, m, n, o, p, q, r, s, t\}$, $S^+ = \{c, I\}$, and $S^- = \{\} = \Phi$ (empty set). For Q-channels, $S^0 = \{a, b, d, e, f, g, h, i, j, k, m, n, o, p, q, r, s, t\}$, $S^+ = \{I\}$, and $S^- = \{c\}$.

FIG. 19d illustrates the final transmit signal determined according to the algorithm of FIG. 19a in case of FIG. 19c. For I-channels, $A_c + A_I > A_{\max}$ but the orthogonal wireless resource unit has a value of $A_I = + A_{\max}$ ($A_I^+ = + A_{\max}$, and $A_I^- = 0$) by sending the original signals of channels c and I as they are. For Q-channels, the transmit signal of channel c has an opposite sign to that of channel I and the orthogonal wireless resource unit has a value of $A_Q = 0$ ($A_Q^+ = 0$, and $A_Q^- = 0$).

FIG. 20a is a flow chart showing a third method for determining a transmit signal by the respective orthogonal wireless resource units at a transmitter from the first station to the second station according to an embodiment of-the present invention. The third method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 \, Y S^+$ (in step 1840), it means that all the channels selecting the orthogonal wireless resource unit have a positive value. If $\sum_{j\in S^+}\left(+A_j\right)\leq +A_{\max}$ (in step 1842), then the first station transmits the orthogonal wireless resource unit having a value of $A_I = \sum_{j\in S^+}(+A_j)$ ( $A_I^+ = \sum_{j\in S^+}(+A_j)$, and $A_I^- = 0$ ); otherwise, the first station transmits the orthogonal wireless resource unit having a value of $A_I = +A_{\max}$ ($A_I^+ = +A_{\max}$, and $A_I^- = 0$). For $S = S^0 \, Y S^-$ (in step 1850), it means that all the channels selecting the orthogonal wireless resource unit have a negative value. If $\sum_{j\in S^-}\left(-A_j\right)\geq -A_{\max}$ (in step 1852), then the first station transmits the orthogonal wireless resource unit having a value of $A_I = \sum_{j\in S^-}(-A_j)$ ( $A_I^+ = 0$, and $A_I^- = \sum_{j\in S^-}(-A_j)$ ); otherwise, the first station transmits the orthogonal wireless resource unit having a value of $A_I = -A_{\max}$ ( $A_I^+ = 0$, and $A_I^- = +A_{\max}$ ). For $S^+ \neq \{\}$ and $S^- \neq \{\}$ (in step 2060), the reference value is determined as the larger one ( max{min{$A_i, i\in S^+$},min{$A_i, i\in S^-$}}) of the smallest amplitude having a positive value (mm{$A_i, i\in S^+$}) and the smallest amplitude having a negative value (min{$A_i, i\in S^-$}) (in step 2062). if the smaller one is the smallest amplitude having a positive value (max{min{$A_i, i\in S^+$},min{$A_i, i\in S^-$}} = min{$A_i, i\in S^+$}) then a set of channels having a negative value and an amplitude of less than $\theta\cdot$min{$A_i, i\in S^+$} is defined as S* ($0 \leq\theta\leq 1$). If S* is an empty set (in step 2081), then the I-channel transmit signal is set as $A_I = 0$ ($A_I^+ = 0$, $A_I^- = 0$) so that the first station does not transmit the orthogonal wireless resource unit (in step 2089). If the sum of the amplitudes of all the channels in S* is less than $\theta\cdot$min{$A_i, i\in S^+$} (in step

2083), then the first station transmits the orthogonal wireless resource unit having a value of $A_I = \sum_{j\in S^-}(-A_j)\,(A_I^+ = 0$

and $A_I^- = \sum_{j\in S^-}(-A_j))$ (in step 2083); otherwise, the first station transmits the orthogonal wireless resource unit having a value of $A_I = -\theta\cdot\min\{A_i, i\in S^+\}$ $(A_I^+ = 0$, and $A_I^- = -\theta\cdot\min\{A_i, i\in S^*\})$ (in step 2087). If the smaller one is the smallest amplitude having a negative value (max{min{$A_i, i\in S^+$},min{$A_i, i\in S^-$}} = min{min{$A_i, i\in S^-$}), then a set of channels having a positive value and an amplitude of less than $\theta\cdot\min\{A_i, i\in S^-\}$ is defined as S*. If S* is an empty set (in step 2082), then the I-channel transmit signal is set as $A_I = 0$ ($A_I^+ = 0$, $A_I^- = 0$) so that the first station does not transmit the orthogonal wireless resource unit (in step 2089). If the sum of the amplitudes of all the channels in S* is less than $\theta\cdot\min\{A_i, i\in S^-\}$ (in step 2084), then the first station transmits the orthogonal wireless resource unit having a value of

$A_I = \sum_{j\in S^*}(+A_j)\,(A_I^+ = \sum_{j\in S^*}(+A_j)$ and $A_I^- = 0)$ (in step 2086); otherwise, the first station transmits the orthogonal wireless resource unit having a value of $A_I = +\theta\cdot\min\{A_i, i\in S^-\}$ $(A_I^+ = +\theta\cdot\min\{A_i, i\in S^*\}$ and $A_I^- = 0)$ (in step 2088).

FIG. 20b illustrates the determination of the final transmit signal using the method of FIG. 20a in the case of a multidimensional orthogonal resource hopping pattern collision between two channels. Let the two channels select the same orthogonal wireless resource unit in the same data symbol interval. If the data symbol values are +$A_I$ and +$A_0$ ($A_I$ < $A_0$), then the final data symbol value transferred by the orthogonal wireless resource unit is $A_i = +A_{max}$ because $A_i + A_0 > +A_{max}$ (in step 2001). If the data symbol values are -$A_I$ and +$A_0$ ($A_i$ < $A_0$), then the final data symbol value transferred by the orthogonal wireless resource unit is $A_i = -A_i$ ($A_i$ + = 0, and $A_i^-$ = -$A_i$) for $A_i \leq \theta A_0$ (in step 2002), and $A_i = 0$ ($A_I^+$ = 0, and $A_i^-$ = 0) for $A_i > +\theta A_0$ (in step 2003). Here, $A_{max}$ for curbing the increase of an unnecessary interference and $\theta$ for determining whether to puncture are given as a system parameter. independently by I- and Q-channels. The determination of $A_{max}$ and $\theta$ is affected by |min{$A_i, i\in S^+$}-min{$A_i, i\in S^-$}| of the I- and Q-channels.

FIG. 20c illustrates a multidimensional orthogonal resource hopping pattern collision among four channels c, j, l and s for explaining the determination of the final transmit signal using the method of FIG. 20a. For I-channels, $S^0$ = {a, b, d, e, f, g, h, i, j, k, m, n, o, p, q, r, t}, $S^+$ = {c, l, s}, and S⁻= {i}. For Q-channels, $S^0$ = {a, b, d, e, f, g, h, i, j, k, m, n, o, p, q, r, t}; $S^+$ = {j, l}, and S⁻ = {c, s}.

FIG. 20d shows a channel arrangement for comparing the amplitudes of channels selecting the orthogonal wireless resource unit in case of FIG. 20c. For I-channels, the reference value determined by the steps 2062 and 2070 is the size of the j-th channel (-$A_j$). For Q-channels, the reference value determined by the steps 2062 and 2070 is the size of the s-th channel (-$A_s$).

FIG. 20e illustrates the final transmit signal determined according to the algorithm of FIG. 20a in case of FIG. 20c. For I-channels, the channel having a value of less than $\theta A_j$ is the I-th channel, and thus the orthogonal wireless resource unit has a value of $A_I = + A_I$ ($A_I^+ = + A_I$, and $A_I^- = 0$). In FIG. 20e, the channels c, j and s are OFF ($A_c = 0$, $A_j = 0$, and $A_s = 0$) and only the channel l is ON (transmission) ($A_l \neq 0$). But the amplitude of each channel is not important as long as the sum of the amplitudes satisfies $A_c + A_j + A_l + A_s = A_I$. For Q-channels, there is no channel having a value of less than $\theta A_s$, and thus the orthogonal wireless resource unit has a value of $A_Q = 0$ ($A_Q^+ = 0$, and $A_Q^- = 0$).

FIG. 21a is a flow chart-showing a fourth method for determining a transmit signal by the respective orthogonal wireless resource units at a transmitter from the first station to the second station according to an embodiment of the present invention. The fourth method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^-= 0$) so that the first station does not transmit the orthogonal wireless resource unit. For $S = S^0 \cup S^+$ (in step 1840), it means that all the channels selecting the orthogonal wireless resource unit have a positive value. If $\sum_{j\in S^+}(+A_j)\le +A_{max}$

(in step 1842), then the first station transmits the orthogonal wireless resource unit having a value of $A_I = \sum_{j\in S^+}(+A_j)$ $(A_I^+ = \sum_{j\in S^+}(+A_j)$, and $A_I^- = 0$); otherwise, the first station transmits the orthogonal wireless resource unit having a value of $A_I = +A_{max}$ $(A_I^+ = +A_{max}$, and $A_I^- = 0)$. and $A_I^- = 0)$. For $S = S^0 \cup S^-$ (in step 1850), it means that all the channels selecting the orthogonal wireless resource unit have a negative value. If

$$\sum_{j\in S^-}\left(-A_j\right) \ge -A_{\max}$$ (in step 1852), then the first station transmits the orthogonal wireless resource unit having a value of $A_I = \sum_{j\in S^-}(-A_j)$ ( $A_I^+ = 0$ , and $A_I^- = \sum_{j\in S^-}(-A_j)$ ); otherwise, the first station transmits the orthogonal wireless resource unit having a value of $A_I = -A_{\max}$ ( $A_I^+ = 0$ , and $A_I^- = +A_{\max}$ ). For $S^+ = \{\}$ and $S^- \ne \{\}$ (in step 2160), the reference value is determined as the larger one (max{min{$A_i, i \in S^+$},min{$A_i, i \in S^-$}}) of the smallest amplitude having a positive value (min{$A_i, i \in S^+$}) and the smallest amplitude having a negative value (min{$A_i, i \in S^+$}) (in step 2062). If the smaller one is the smallest amplitude having a positive value ( max{min{$A_i, i \in S^+$},min{$A_i, i \in S^-$}} = (min{$A_i, i \in S^+$}), then a set of channels having a negative value and an amplitude of less than $\theta \cdot$min{$A_i, i \in S^+$} is defined as S* (0 $\le \theta \le$1). If S* is an empty set (in step 2081), then the I-channel transmit signal is set as $A_I = 0$ ($A_I^+ = 0$, $A_I^- = 0$) so that the first station does not transmit the orthogonal wireless resource unit (in step 2089). If S* is.not an empty set, then the first station transmits the orthogonal wireless resource unit having the largest amplitude $A_I = -\max\{A_i, i \in S^*\}$ ( $A_I^+ = 0$ , and

$A_I^- = -\max\{A_i, i \in S^*\}$ ) in the set S* (in step 2187). If the smaller one is the smallest amplitude having a negative value (max{min{$A_i, i \in S^+$},min{$A_i, i \in S^-$}} = min{$A_i, i \in S^-$}), then a set of channels having a positive value and an amplitude of less than $\theta \cdot$min{$A_i, i \in S^-$} is defined as S*. If S* is an empty set (in step 2082), then the I-channel transmit signal is set as $A_I = 0$ ($A_I^+ = 0$, $A_I^- = 0$) so that the first station does not transmit the orthogonal wireless resource unit (in step 2089). If S* is not an empty set, then the first station transmits the orthogonal wireless resource unit having the largest amplitude in the set S*, that is, $A_I = +\max\{A_i, i \in S^*\}$ ( $A_I^+ = +\max\{A_i, i \in S^*\}$ , and $A_I^- = 0$ ) (in step 2188).

FIG. 21b illustrates the determination of the final transmit signal using the method of FIG. 21 a in the case of a multidimensional orthogonal resource hopping pattern collision between two channels. Let the two channels select the same orthogonal wireless resource unit in the same data symbol interval. If the data symbol values are +$A_i$ and +$A_0$ ($A_i < A_0$), then the final data symbol value transferred by the orthogonal wireless resource unit is $A_I = +A_{\max}$ because $A_i + A_0 > +A_{\max}$ (in step 2101). If the data symbol values are -$A_i$ and +$A_0$ ($A_I < A_0$), then the final data symbol value transferred by the orthogonal wireless resource unit is $A_I = -A_i$ ($A_I^+ = 0$, and $A_I^- = -A_i$) because $A_i \le +\theta A_0$ and $A_I = $max{$A_i$, $i \in S^*$} (in step 2102). For $A_i > +\theta A_0$, the set S* is an empty set and $A_I = 0$ ($A_I^+ = 0$, and $A_I^- = 0$) (in step 2103). Here, $A_{\max}$ for curbing the increase of an unnecessary interference and $\theta$ for determining whether to puncture are given as a system parameter..

FIG. 21c illustrates a multidimensional orthogonal resource hopping pattern collision among four channels c, j, l and s for explaining the determination of the final transmit signal using the method of FIG. 21a. For I-channels, $S^0 = $ {a, b, d, e, f, g, h, i, k, m, n, o, p, q, r, t}, $S^+ = $ {c, l, s}, and $S^- = $ {j}. For Q-channels, $S^0 = $ {a, b, d, e, f, g, h, i, k, m, n, o, p, q, r, t}, $S^+ = $ {j, l}, and $S^- = $ {c, s}.

FIG. 21d shows a channel arrangement for comparing the amplitudes of channels selecting the orthogonal wireless resource unit in case of FIG. 21c. For I-channels, the reference value determined by the steps 2062 and 2070 is the size of the j-th channel (-$A_j$). For Q-channels, the reference value determined by the steps 2062 and 2070 is the size of the s-th channel (-$A_s$).

FIG. 21e illustrates the final transmit signal determined according to the algorithm of FIG. 21a in case of FIG. 21c. For I-channels, the channel having the largest value less than $\theta A_j$ is the I-th channel, and thus the orthogonal wireless resource unit has a value of $A_I = + A_I$($A_I^+ = + A_I$, and $A_I^- = 0$). In FIG. 21e, the channels c, j -and s are OFF ($A_c = 0$, $A_j = 0$, and $A_s = 0$) and only the channel l is ON (transmission) ($A_I \ne 0$). But the amplitude of each channel is not important as long as the sum of the amplitudes satisfies $A_c + A_j + A_I + A_s = A_I$. For Q-channels, S* is an empty set, and thus the orthogonal wireless resource unit has a value of $A_Q = 0$ ($A_Q^+ = 0$, and $A_Q^- = 0$).

FIG. 22a is a flow chart showing a fifth method for determining a transmit signal by the respective orthogonal wireless resource units at a transmitter from the first station to the second station according to an embodiment of the present invention. The fifth method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 \cup S^+$ (in step 1840), it means that all the channels selecting the orthogonal wireless resource unit have a positive value. If

$$\sum_{j \in S^+}\left(+A_j\right) \le +A_{\max}$$ (in step 1842), then the first station transmits the orthogonal wireless resource unit having a value of $A_I = \sum_{j \in S^+}(+A_j)$ $\left(A_I^+ = \sum_{j \in S^+}(+A_j)\right.$, and $A_I^- = 0$ ); otherwise, the first station transmits the orthogonal wireless resource unit having a value of $A_I = +A_{\max}$ $\left(A_I^+ = +A_{\max}\right.$, and $A_I^- = 0$). For $S = S^0 \curlyvee S^-$ (in step 1850), it means that all the channels selecting the orthogonal wireless resource unit have a negative value. If $\sum_{j \in S^-}\left(-A_j\right) \ge -A_{\max}$ (in step 1852), then the first station transmits the orthogonal wireless resource unit having a value of $A_I = \sum_{j \in S^-}(-A_j)$ $\left(A_I^+ = 0\right.$,

and $A_I^- = \sum_{j \in S^-}(-A_j)$ ); otherwise, the first station transmits the orthogonal wireless resource unit having a value of

$A_I = -A_{\max}$ $\left(A_I^+ = 0\right.$, and $A_I^- = +A_{\max}$). For $S^+ \ne \{\}$ and $S^- \ne \{\}$ (in step 2260), the reference value is determined as the larger one ($\max\{\min\{A_i, i \in S^+\}, \min\{A_i, i \in S^-\}\}$) of the smallest amplitude having a positive value ($\min\{A_i, i \in S^+\}$) and the smallest amplitude having a negative value ($\min\{A_i, i \in S^-\}$) (in step 2062). If the smaller one is the smallest amplitude having a positive value ($\max\{\min\{A_i, i \in S^+\}, \min\{A_i, i \in S^-\}\} = \min\{A_i, i \in S^+\}$) (in step 2070), then $A_I^+$ and $A_I^-$ are initialized as $A_I^+ = 0$ and $A_I^- = 0$ (in step 2271), and the channel having a negative value and the largest amplitude smaller than $\theta\min\{A_i, i \in S^+\}$ is designated as $A_I^-$ (in steps 2273 and 2283). The first station in this case transmits the orthogonal wireless resource unit having a value of $A_I = A_I^+ + A_I^-$. If the smaller one is the smallest amplitude having a negative value ($\max\{\min\{A_i, i \in S^+\}, \min\{A_i, i \in S^-\}\} = \min\{A_i, i \in S^-\}$), then $A_I^+$ and $A_I^-$ are initialized as $A_I^+ = 0$ and $A_I^- = 0$ (in step 2272), and the channel having a negative value and the largest amplitude smaller than $\theta \cdot \min\{A_i, i \in S^-\}$ is designated as $A_I^+$ (in step 2274). The first station in this case transmits the orthogonal wireless resource unit having a value of $A_I = A_I^+ + A_I^-$.

FIG. 22b illustrates the determination of the final transmit signal using the method of FIG. 22a in the case of a multidimensional orthogonal resource hopping pattern collision between two channels. Let the two channels select the same orthogonal wireless resource unit in the same data symbol interval. If the data symbol values are $+A_I$ and $+A_0$ ($A_I < A_0$), then the final data symbol value transferred by the orthogonal wireless resource unit is $A_I = +A_{\max}$ because $A_i + A_0 > +A_{\max}$ (in step 2201). If the data symbol values are $-A_i$ and $+A_0$ ($A_I < A_0$), then the final data symbol value transferred by the orthogonal wireless resource unit is $A_I = -A_i$ ($A_I^+ = 0$, and $A_I^- = -A_I$) because $A_i \le +\theta A_0$ and $A_i$ is the maximum ($A_i = \max\{A_i, i \in S^*\}$) (in step 2202). For $A_i > +\theta A_0$, $A_I = 0$ ($A_I^+ = 0$, and $A_I^- = 0$) (in step 2203). Here, $A_{\max}$ for curbing the increase of an unnecessary interference and $\theta$ for determining whether to puncture are given as a system parameter..

FIG. 22c illustrates a multidimensional orthogonal resource hopping pattern collision among four channels c, j, l and s for explaining the determination of the final transmit signal using the method of FIG. 22a. For I-channels, $S^0 = \{a, b, d, e, f, g, h, i, k, m, n, o, p, q, r, t\}$, $S^+ = \{c, l, s\}$, and $S^- = \{j\}$. For Q-channels, $S^0 = \{a, b, d, e, f, g, h, i, k, m, n, o, p, q, r, t\}$, $S^+ = \{j, l\}$, and $S^- = \{c, s\}$.

FIG. 22d shows a channel arrangement for comparing the amplitudes of channels selecting the orthogonal wireless resource unit in case of FIG. 22c. For I-channels, the reference value determined by the steps 2062 and 2070 is the size of the j-th channel ($-A_j$). For Q-channels, the reference value determined by the steps 2062 and 2070 is the size of the s-th channel ($-A_s$).

FIG. 22e illustrates the final transmit signal determined according to the algorithm of FIG. 22a in case of FIG. 22c. For I-channels, the channel having the largest value less than $\theta A_j$ is the l-th channel, and thus the orthogonal wireless resource unit has a value of $A_I = +A_l$ ($A_I^+ = +A_l$, and $A_I^- = 0$). In FIG. 22e, the channels c, j and s are OFF ($A_c = 0$, $A_j = 0$, and $A_s = 0$) and only the channel l is ON (transmission) ($A_l \ne 0$). But the amplitude of each channel is not important as long as the sum of the amplitudes satisfies $A_c + A_j + A_l + A_s = A_I$. For Q-channels, there is no channel having a value of less than $\theta A_s$, and thus the orthogonal wireless resource unit has a value of $A_Q = 0$ ($A_Q^+ = 0$, and $A_Q^- = 0$).

FIG. 23a is a flow chart showing a sixth method for determining a transmit signal by the respective orthogonal wireless resource units at a transmitter from the first station to the second station according to an embodiment of the present invention. The sixth method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 \curlyvee S^+$ (in step

1840), it means that all the channels selecting the orthogonal wireless resource unit have a positive value. If $\sum_{j\in S^+}\left(+A_j\right)\leq +A_{max}$ (in step 1842), then the first station transmits the orthogonal wireless resource unit having a value of and $A_I^- = 0$ ); otherwise, the first station transmits the orthogonal wireless resource unit having a value of

$A_I = +A_{max}$ ($A_I^+ = +A_{max}$, and $A_I^- = 0$). For $S = S^0$ YS$^-$ (in step 1850), it means that all the channels selecting the orthogonal wireless resource unit have a negative value. If $\sum_{j\in S^-}\left(-A_j\right)\geq -A_{max}$ (in step 1852), then the first station transmits the orthogonal wireless resource unit having a value of $A_I = \sum_{j\in S^-}(-A_j)$ ( $A_I^+ = 0$, and $A_I^- = \sum_{j\in S^-}(-A_j)$ );

otherwise, the first station transmits the orthogonal wireless resource unit having a value of $A_I = -A_{max}$ ($A_I^+ = 0$, and

$A_I^- = +A_{max}$). For $S^+ \neq \{\}$ and $S^- \neq \{\}$ (in step 2360), the reference value is determined as the larger one (max{min{$A_i$, $i\in S^+$},min{$A_i, i\in S^-$}}) of the smallest amplitude having a positive value (min{$A_i, i\in S^+$}) and the smallest amplitude having a negative value (min{$A_i, i\in S^-$}) (in step 2062). If the smaller one is the smallest amplitude having a positive value (maxmin{$A_i, i\in S^+$},min{$A_i, i\in S^-$}} = min{$A_i, i\in S^+$}), then a set of channels having a negative value and an amplitude of less than $\theta\cdot$min{$A_i, i\in S^+$} is defined as S* (0 $\leq\theta\leq$1). If S* is an empty set (in step 2081), then the I-channel transmit signal is set as A$_I$ = 0 (A$_I^+$ = 0, A$_I^-$ = 0) so that the first station does not transmit the orthogonal wireless resource unit (in step 2089). If S* is not an empty set (in step 2081), then the first station transmits the orthogonal wireless resource unit having the largest amplitude $A_I = -\theta\min\{A_i, i\in S^+\}$ ( $A_I^+ = 0$, and $A_I^- = -\theta\min\{A_i, i\in S^*\}$) (in step 2387).

If the smaller one is the smallest amplitude having a negative value (max{min{$A_i, i\in S^+$},min{$A_i, i\in S^-$}} = min{$A_i, i\in S^-$}), then a set of channels having a negative value and an amplitude of less than $\theta\cdot$min{$A_i, i\in S^-$} is defined as S*. If S* is an empty set (in step 2082), then the I-channel transmit signal is set as A$_I$ = 0 (A$_I^+$ = 0, A$_I^-$ = 0) so that the first station does not transmit the orthogonal wireless resource unit (in step 2089). If S* is not an empty set, then the first station transmits the orthogonal wireless resource unit having a value $A_I$ = +$\theta$min{$A_i, i\in S^-$} ($A_I^+ = +\theta\min\{A_i, i\in S^*\}$, and $A_I^- = 0$) (in step 2388).

FIG. 23b illustrates the determination of the final transmit signal using the method of FIG. 23a in the case of a multidimensional orthogonal resource hopping pattern- collision between two channels. Let the two channels select the same orthogonal wireless resource unit in the same data symbol interval. If the data symbol values are +A$_i$ and +A$_0$ (A$_i$ < A$_0$), then the final data symbol value transferred by the orthogonal wireless resource unit is $A_I$ = +A$_{max}$ because $A_i$ + A$_0$ > +A$_{max}$ (in step 2301). If the data symbol values are -A$_i$ and +A$_0$ (A$_i$ < A$_0$), then the final data symbol value transferred by the orthogonal wireless resource unit is A$_I$ = +$\theta$A$_0$ (A$_I^+$ = 0, and A$_I^-$ = -$\theta$A$_0$) for A$_i$ $\leq$+$\theta$A$_0$ (in step 2302), and A$_I$ = 0 (A$_I^+$ = 0, and A$_I^-$ = 0) for A$_i$ > +$\theta$A$_0$ (in step 2303). Here, A$_{max}$ for curbing the increase of an unnecessary interference and $\theta$ for determining whether to puncture are given as a system parameter..

FIG. 23c illustrates a multidimensional orthogonal resource hopping pattern collision among four channels c, j, l and s for explaining the determination of the final transmit signal using the method of FIG. 23a. For I-channels, $S^0$ = {a, b, d, e, f, g, h, i, k, m, n, o, p, q, r, t}, $S^+$ = {c, l, s}, and $S^-$ = {j}. For Q-channels, $S^0$ = {a, b, d, e, f, g, h, i, k, m, n, o, p, q, r, t}, $S^+$ = {j, l}, and $S^-$ = {c, s}.

FIG. 23d shows a channel arrangement for comparing the amplitudes of channels selecting the orthogonal wireless resource unit in case of FIG. 23c. For I-channels, the reference value determined by the steps 2062 and 2070 is the size of the j-th channel (-A$_j$). For Q-channels, the reference value determined by the steps 2062 and 2070 is the size of the s-th channel (-A$_s$).

FIG. 23e illustrates the final transmit signal determined according to the algorithm of FIG. 23a in case of FIG. 23c. For I-channels, there is a channel (the I-th channel) having the largest value less than $\theta$A$_j$, and thus the orthogonal wireless resource unit has a value of A$_I$ = +$\theta$ A$_I$ (A$_I^+$ = + $\theta$A$_I$, and A$_I^-$ = 0). In FIG. 23e, the channels c, j and s are OFF (A$_c$ = 0, A$_j$ = 0, and A$_s$ = 0) and only the channel l is ON (transmission) (A$_l$ $\neq$ 0). But the amplitude of each channel is not important as long as the sum of the amplitudes satisfies A$_c$ + A$_j$ + A$_l$ + A$_s$ = +$\theta$A$_j$. For Q-channels, there is no channel having a value of less than $\theta$A$_s$, and thus the orthogonal wireless resource unit has a value of A$_Q$ = 0 (A$_Q^+$ = 0, and A$_Q^-$ = 0).

FIG. 24a is a flow chart showing a seventh method for determining a transmit signal by the respective orthogonal wireless resource units at a transmitter from the first station to the second according to an embodiment of the present invention. The seventh method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 Y S^+$ (in step 1840), it means that all the channels selecting the orthogonal wireless resource unit have a positive value. If $\sum_{j \in S^+}(+A_j) \leq +A_{max}$ (in step 1842), then the first station transmits the orthogonal wireless resource unit having a value of

$$A_I = \sum_{j \in S^+}(+A_j) \ ( A_I^+ = \sum_{j \in S^+}(+A_j) \ , \text{ and } A_I^- = 0 \ );$$ otherwise, the first station transmits the orthogonal wireless resource unit having a value of $A_I = +A_{max} (A_I^+ = +A_{max}$, and $A_I^- = 0)$. For $S = S^0 Y S^-$ (in step 1850), it means that all the channels selecting the orthogonal wireless resource unit have a negative value. If $\sum_{j \in S^-}(-A_j) \geq -A_{max}$ (in step 1852), then the first station transmits the orthogonal wireless resource unit having a value of

$$A_I = \sum_{j \in S^-}(-A_j) \ ( A_I^+ = 0 \ , \text{ and } A_I^- = \sum_{j \in S^-}(-A_j) \ );$$ otherwise, the first station transmits the orthogonal wireless resource unit having a value of $A_I = -A_{max} (A_I^+ = 0$, and $A_I^- = +A_{max})$. For $S^+ \neq \{\}$ and $S^- \neq \{\}$ (in step 2460), the reference value is determined as the larger one ($\max\{\min\{A_i, i \in S^+\}, \min\{A_i, i \in S^-\}\}$) of the smallest amplitude having a positive value ($\min\{A_i, i \in S^+\}$) and the smallest amplitude having a negative value ($\min\{A_i, i \in S^-\}$) (in step 2062). Let the smaller one be the smallest amplitude having a positive value ($\max\{\min\{A_i, i \in S^+\}, \min\{A_i, i \in S^-\}\} = \min\{A_i, i \in S^+\}$). If the

sum $\sum_{j \in S^-}(-A_j)$ of all channels having a negative value is greater than $-\theta \cdot \min\{A_i, i \in S^+\}$ (in step 2481), then the first station transmits the orthogonal wireless resource unit having a value $A_I = \sum_{j \in S^-}(-A_j) \ ( A_I^+ = 0 \ , \text{ and } A_I^- = \sum_{j \in S^-}(-A_j) \ )$

(in step 2483); otherwise, the first station transmits the orthogonal wireless resource unit having a value

$$A_I = -\theta \min\{A_i, i \in S^+\} \ ( A_I^+ = 0 \ , \text{ and } A_I^- = -\theta \min\{A_i, i \in S^+\} )$$ (in step 2485). Let the smaller one be the smallest amplitude having a negative value ($\max\{\min\{A_i, i \in S^+\}, \min\{A_i, i \in S^-\}\} = \min\{A_i, i \in S^-\}$). If the sum $\sum_{j \in S^+}(+A_j)$ of all

channels having a positive value is less than $\theta \cdot \min\{A_i, i \in S^-\}$ (in step 2482), then the first station transmits the orthogonal wireless resource unit having a value $A_I = \sum_{j \in S^+}(+A_j) \ ( A_I^+ = \sum_{j \in S^+}(+A_j) \ , \text{ and } A_I^- = 0 )$ (in step 2484); otherwise, the first station transmits the orthogonal wireless resource unit having a value

$$A_I = +\theta \min\{A_i, i \in S^-\} \ ( A_I^+ = +\theta \min\{A_i, i \in S^-\}, \text{ and } A_I^- = 0 )$$ (in step 2486).

FIG. 24b illustrates the determination of the final transmit signal using the method of FIG. 24a in the case of a multidimensional orthogonal resource hopping pattern collision between two channels. Let the two channels select the same orthogonal wireless resource unit in the same data symbol interval. If the data symbol values are $+A_i$ and $+A_0$ ($A_i < A_0$), then the final data symbol value transferred by the orthogonal wireless resource unit is $A_I = +A_{max}$ because $A_i + A_0 > +A_{max}$ (in step 2401). If the data symbol values are $-A_i$ and $+A_0$ ($A_i < A_0$), then the final data symbol value transferred by the orthogonal wireless resource unit is $A_I = -A_i$ ($A_I^+ = 0$, and $A_I^- = -A_I$) for $-A_I \geq -\theta A_0$ (in step 2402), and $A_I = -\theta A_0$ ($A_I^+ = 0$, and $A_I^- = -\theta A_0$) for $-A_i < -\theta A_0$ (in step 2403). Here, $A_{max}$ for curbing the increase of an unnecessary interference and $\theta$ for determining whether to puncture are given as a system parameter..

FIG. 24c illustrates a multidimensional orthogonal resource hopping pattern collision among four channels c, j, l and s for explaining the determination of the final transmit signal using the method of FIG. 24a. For I-channels, $S^0 = \{a, b, d, e, f, g, h, i, k, m, n, o, p, q, r, t\}$, $S^+ = \{c, l, s\}$, and $S^- = \{i\}$. For Q-channels, $S^0 = \{a, b, d, e, f, g, h, i, k, m, n, o, p, q, r, t\}$, $S^+ = \{j, l\}$, and $S^- = \{c, s\}$.

FIG. 24d shows a channel arrangement for comparing the amplitudes of channels selecting the orthogonal wireless resource unit in case of FIG. 24c. For I-channels, the reference value determined by the steps 2062 and 2070 is the size of the j-th channel ($-A_j$). For Q-channels, the reference value determined by the steps 2062 and 2070 is the size of the s-th channel ($-A_s$).

FIG. 24e illustrates the final transmit signal determined according to the algorithm of FIG. 24a in case of FIG. 24c. For I-channels, there is a channel (the I-th channel) having the largest value less than $\theta A_j$, and thus the orthogonal wireless resource unit has a value of $A_j = +A_j$ ($A_j^+ = +A_j$, and $A_I^- = 0$). In FIG. 24e, the channels c, j and s are OFF ($A_c = 0$, $A_j = 0$, and $A_s = 0$) and only the channel I is ON (transmission) ($A_I \neq 0$). But the amplitude of each channel is not important as long as the sum of the amplitudes satisfies $A_c + A_j + A_I + As = A_i$. For Q-channels, there is no channel having a value of less than $\theta A_s$, but the orthogonal wireless resource unit has a value of $A_Q = + \theta A_s$ ($A_Q^+ = + \theta A_s$, and $A_Q^- = 0$).

FIG. 25a is a flow chart showing an eighth method for determining a transmit signal by the respective orthogonal wireless resource units at a transmitter from the first station to the second station according to an embodiment of the present invention. The eighth method can be described as follows. For $S = S^0$ (in step 1830), which means that the orthogonal wireless resource unit is not selected by any channel, the I-channel transmit signal is set as $A_I = 0$ ($A_I^+ = 0$, and $A_I^- = 0$) so that the first station does not transmit the orthogonal wireless resource unit. For $S = S^0 Y S^+$ (in step 1840), it means that all the channels selecting the orthogonal wireless resource unit have a positive value. If $\sum_{j \in S^+} \left( + A_j \right) \leq + A_{max}$ (in step 1842), then the first station transmits the orthogonal wireless resource unit having a value of

$$A_I = \sum_{i \in S^+} (+A_j) \; ( \; A_I^+ = \sum_{i \in S^+} (+A_j) \; , \; \text{and} \; A_I^- = 0 \; );$$

otherwise, the first station transmits the orthogonal wireless resource unit having a value of $A_I = +A_{max}$ ($A_I^+ = +A_{max}$, and $A_I^- = 0$). For $S = S^0 Y S^-$ (in step 1850), it means that all the channels selecting the orthogonal wireless resource unit have a negative value. If $\sum_{j \in S^-} \left( - A_j \right) \geq - A_{max}$ (in step 1852), then the first station transmits the orthogonal wireless resource unit having a value of $A_I = \sum_{i \in S^-} (-A_j) \; ( \; A_I^+ = 0 \; ,$

and $A_I^- = \sum_{j \in S^-} (-A_j) \; );$ otherwise, the first station transmits the orthogonal wireless resource unit having a value of

$A_I = -A_{max}$ ($A_I^+ = 0$, and $A_I^- = +A_{max}$). For $S^+ \neq \{\}$ and $S^- \neq \{\}$ (in step 2560), the preference value, is determined as the larger one ($\max\{mm\{A_i, i \in S^+\}, mm\{A_i, i \in S^-\}\}$) of the smallest amplitude having a positive value ($\min\{A_i, i \in S^+\}$) and the smallest amplitude having a negative value ($\min\{A_i, i \in S^-\}$) (in step 2062). If the smaller one is the smallest amplitude having a positive value ($\max\{\min\{A_i, i \in S^+\}, \min\{A_i, i \in S^-\}\} = \min\{A_i, i \in S^+\}$), then the first station transmits the orthogonal wireless resource unit having a value $A_I = -\theta \min\{A_i, i \in S^+\}$ ( $A_I^+ = 0$ , and $A_I^- = -\theta \min\{A_i, i \in S^*\}$) (in step 2585). If the smaller one is the smallest amplitude having a negative value $\max\{\min\{A_i, i \in S^+\}, \min\{A_i, i \in S^-\}\} = \min\{A_i, i \in S^-\}$), then the first station transmits the orthogonal wireless resource unit having a value

$A_I = +\theta \min\{A_i, i \in S^-\} \; (A_I^+ = +\theta \min\{A_i, i \in S^*\}, \; \text{and} \; A_I^- = 0)$ (in step 2586).

FIG. 25b illustrates the determination of the final transmit signal using the method of FIG. 25a in the case of a multidimensional orthogonal resource hopping pattern collision between two channels. Let the two channels select the same orthogonal wireless resource unit in the same data symbol interval. If the data symbol values are $+A_i$ and $+A_0$ ($A_i < A_0$), then the final data symbol value transferred by the orthogonal wireless resource unit is $A_I = +A_{max}$ because $A_i + A_0 > +A_{max}$ (in step 2501). If the data symbol values are $-A_i$ and $+A_0$ ($A_i < A_0$), then the final data symbol value transferred by the orthogonal wireless resource unit is $A_I = -\theta A_0$ ($A_I^+ = 0$, and $A_I^- = -\theta A_0$). (in step 2502). If $A_i > +\theta A_0$, then $A_I = -\theta A_0$ ($A_I^+ = 0$, and $A_I^- = -\theta A_0$) (in step 2503). Here, $A_{max}$ for curbing the increase of an unnecessary interference and $\theta$ for determining whether to puncture are given as a system parameter.

FIG. 25c illustrates a multidimensional orthogonal resource hopping pattern collision among four channels c, j, i and s for explaining the determination of the final transmit signal using the method of FIG. 25a. For I-channels, $S^0 = \{a, b, d, e, f, g, h, i, k, m, n, o, p, q, r, t\}$, $S^+ = \{c, l, s\}$, and $S^- = \{j\}$. For Q-channels, $S^0 = \{a, b, d, e, f, g, h, i, k, m, n, o, p, q, r, t\}$, $S^+ = \{j, l\}$, and $S = \{c, s\}$.

FIG. 25d shows a channel arrangement for comparing the amplitudes of channels selecting the orthogonal wireless resource unit in case of FIG. 25c. For I-channels, the reference value determined by the steps 2062 and 2070 is the size of the j-th channel (-$A_j$). For Q-channels, the reference value determined by the steps 2062 and 2070 is the size of the S-th channel (-$A_s$).

FIG. 25e illustrates the final transmit signal determined according to the algorithm of FIG. 25a in case of FIG. 25c. For I-channels, the orthogonal wireless resource unit has a value of $A_l = +8A_j$ ($A_l^+ = +\theta A_j$, and $A_l^- = 0$).In FIG. 25e, the channels c, j and s are OFF ($A_c = 0$, $A_j = 0$, and $A_s = 0$) and only the channel I is ON (transmission) ($A_l \neq 0$). But the amplitude of each channel is not important as long as the sum of the amplitudes satisfies $A_c + A_j + A_l + A_s = +\theta A_j$. For Q-channels, there is no channel having a value of less than $\theta A_s$, but the orthogonal wireless resource unit has a value of $A_Q = + (\theta A_s = (A_Q^+ = + \theta A_s$, and $A_Q^- = 0)$.

FIG. 26 illustrates that a transmitter from the first station to the second station uses a soft hand-off to compensate for the disadvantageous aspect of the first to eighth transmit signal determination methods by the respective orthogonal wireless resource units on a second station positioned at an area (e.g., a cell boundary) having a relatively weak received signal from the first station in accordance with an embodiment of the present invention. During a soft hand-off of the second station 2670 in communication using the multidimensional orthogonal resource hopping multiplexing, the transmit signal control proposed in FIGS. 18 to 25 is independently performed on wireless links 2671 and 2672 from the first stations A and B 2610 and 2620. Therefore, even when the puncture probability $P_P^A$ of the wireless link 2671 from the first station A 2710 is greater than the reference value $\theta_P$, the final puncture probability $P_P = P_P^A \cdot P_P^B$ may be less than $\theta_P$ because of the puncture probability $P_P^B$ of the wireless link 2672 from the second station B 2620, thereby reducing the relative disadvantage of the second station located at the cell boundary.

FIG. 27a illustrates an example of the prior art 2730 and an embodiment of the present invention 2740 for orthogonal resource division multiplexing of all output bits from a systematic channel encoder 2710 without distinguishing systematic bits, which are the same as input bits, from parity bits generated from a channel encoder. FIG. 27b illustrates, as the embodiment of FIG. 27a, an example of the prior art. 2732 and an embodiment of the present invention 2742 for orthogonal resource hopping multiplexing of all output bits from a turbo encoder 2712. Typically, among the output bits of the systematic channel encoder, the systematic bits not providing time diversity are more sensitive to errors than the parity bits providing time diversity. Therefore, the use of the pure orthogonal resource hopping multiplexing, which method has a possibility of puncturing, on broth systematic and parity bits possibly deteriorates the quality of decoded signals from a systematic channel decoder of the receiver.

FIG. 27c illustrates that the systematic bits, which are the same as input bits, among the output bits of the systematic channel encoder are subject to an orthogonal resource division multiplexing 2751, the parity bits generated from the systematic channel encoder being subject to an orthogonal resource hopping multiplexing 2752. FIG. 27d illustrates the embodiment of FIG. 27c that temporally distinguishes an orthogonal resource division multiplexing region 2761 from an orthogonal resource hopping multiplexing region 2762. Let a set of all orthogonal wireless resource units be divided into two subsets A and B. The orthogonal wireless resource units of the subset A are used for the orthogonal resource division multiplexing, while those of the subset B are used for the orthogonal resource hopping multiplexing. FIG. 27e illustrates that the systematic bits, which are the same as input bits, among the output bits of the turbo encoder are subject to an orthogonal resource division multiplexing 2734, the parity bits generated from the systematic channel encoder being subject to an orthogonal resource hopping multiplexing 2744. The output bits of the channel encoder 2712 may be more or less than the bits necessary to the modulator because of a limited bandwidth. So, rate matchers 2716 and 2718 are used to match the number of output bits of the channel encoder 2712 to the number of bits necessary to the modulator.

FIG. 23a illustrates in FIG. 4c that a collision probability or a puncture probability of frame-based multidimensional orthogonal resource hopping patterns are compared with a reference value in accordance with an embodiment of the present invention. As the instantaneous activity of an authorized channel in the frame denoted by a black arrow is increased to above an average activity, the collision probability $p_c$ of the multidimensional pattern of second stations MS#1, MS#2, MS#3, MS#4, ... during orthogonal resource hopping multiplexing communication, or the puncture probability $p_p$ exceeds a reference value $\theta_c$ or $\theta_p$, respectively, thereby deteriorating the quality of channels involved in transmission in the frame. FIG. 28b illustrates that the first station intentionally does not transmit the whole or a part of the transmit frame to a least influenced second station so that the collision probability or the puncture probability of the multidimensional orthogonal resource hopping pattern should be less than the reference value. The channel in which the whole or a part of the transmit frame is not intentionally transmitted can be determined by a system designer according to the following standards:

(1) A channel with a lower quality requirement is not transmitted in preference to one with a higher quality requirement;
(2) A channel operated by ARQ (Automatic Repeat reQuest) is not transmitted in preference to one not operated by ARQ;

(3) Among channels operated by ARQ, a channel with a lower retransmission frequency is not transmitted in preference to one with a higher retransmission frequency;

(4) A channel with a higher transmission power is not transmitted in preference to one with a lower transmission power;

(5) A channel with a smaller number of transmitted consecutive frames is not transmitted in preference to one with a larger number of transmitted consecutive frames; and

(6) A channel in soft handoff is not transmitted later than one not in soft handoff. This is because all the base stations involved in the soft handoff are difficult to control at the same time and, as previously described, the second station located at the cell boundary is disadvantageous relative to ones near the first station.

The system designer may apply the above-stated standards inversely according to circumstances. In some cases, the first station may cancel channel allocation preferentially for less influenced channels out of the range not transferring several frames so as to lower the collision probability $p_c$ or the puncture probability $p_p$ of the multidimensional hopping pattern than a reference value $\theta_c$ or $\theta_p$, respectively.

FIG. 29a illustrates that orthogonal wireless resource units for multidimensional orthogonal resource hopping multiplexing in a broad sense according to an embodiment of the present invention are divided into a set of orthogonal wireless resource units for orthogonal resource hopping multiplexing in a narrow sense and a set of orthogonal wireless resource units for orthogonal resource division multiplexing. The channels multiplexed by the orthogonal resource hopping multiplexing in a narrow sense use orthogonal wireless resource units denoted by a circle, and those multiplexed by the orthogonal resource division multiplexing use orthogonal wireless resource units denoted by a square. The orthogonal wireless resource units are denoted by multidimensional coordinates composed of frequency, time, and orthogonal code. For example, let the frequency component, the -time component and the orthogonal code component be expressed by binary numbers "010", "0101" and "11011", respectively. Then the multidimensional coordinates are denoted by a binary vector (010, 0101, 11011) or a binary number "010010111011". The channels to the second stations MS#a and MS#b served by the multidimensional orthogonal resource hopping multiplexing in a narrow sense select orthogonal resource units according to the hopping patterns denoted by a solid line and a dotted line, respectively.

FIG. 29b illustrates that the channel with a fixedly allocated orthogonal wireless resource unit for multidimensional orthogonal resource hopping multiplexing in a narrow sense according to an embodiment of the present invention is relative to a channel with an orthogonal wireless resource unit allocated according to a hopping pattern. In the upper figure, the channel to the second station MS#$\alpha$ selects an orthogonal wireless resource unit circumscribed by a thin solid line to transmit data according to a time-varying hopping pattern, and the channel to the second station MS#$\beta$ fixedly uses an orthogonal wireless resource unit 2933 circumscribed by a bold solid line to transmit data according to a time-invariant hopping pattern. In the lower figure, it appears as if the channel to the second station MS#$\beta$ carries data according to the time-varying hopping pattern, when viewing the channel to the second station MS#$\beta$ from the second station MS# $\alpha$. Namely, the selection of an orthogonal wireless resource unit according to a time-varying hopping pattern is relative to the selection of an orthogonal wireless resource unit according to a time-invariant hopping pattern.

FIG. 29c is a conceptual diagram sequentially showing the steps of channel request, wireless resource allocation and channel termination in the orthogonal resource division multiplexing according to an example of the prior art and the multidimensional orthogonal resource hopping multiplexing according to an embodiment of the present invention. Reference numeral 2940 shows the steps of channel request, wireless resource allocation and channel termination based on an orthogonal resource division multiplexing using six orthogonal wireless resource units each denoted by a square. Once an orthogonal resource division multiplexing channel is requested (or received) and there are orthogonal wireless resource units available, a wireless resource manager allocates one of the available orthogonal wireless resource units. Without any orthogonal wireless resource unit available, the wireless resource manager does not accept the corresponding channel. If the used orthogonal wireless resource unit is returned at the termination of the channel, then the returned orthogonal wireless resource unit is available for allocation. Reference numeral 2950 shows the steps of channel request, wireless resource allocation and channel termination based on an orthogonal resource hopping multiplexing in a narrow sense using seven orthogonal wireless resource units each denoted by a circle. If the number of requested orthogonal resource hoping multiplexing channels in a narrow sense is equal to or less than the number of orthogonal wireless resource units available, then the channel is fixedly allocated with the orthogonal wireless resource unit as an orthogonal resource division multiplexing channel so as to substantially avoid a hopping pattern collision. In a moment that the number of requested orthogonal resource hopping multiplexing channels in a narrow the allocated channels select the orthogonal wireless resource unit according to the hopping pattern to transmit data. If the orthogonal wireless resource unit fixedly allocated to the channel is returned at the termination of the channel, it is then allocated to an orthogonal resource hopping multiplexing channel first requested subsequent to the terminated channel. This is a wireless resource operation method based on the concept of FIG. 29b.

FIG. 29d is a conceptual diagram sequentially showing the steps of channel request, wireless resource allocation, mode conversion, and channel termination in the multidimensional orthogonal resource hopping multiplexing in a narrow sense according to another embodiment of the present invention. Reference numerals 2960 and 2970 show the steps of channel request, wireless resource allocation, mode conversion, and channel termination based on an orthogonal resource hopping multiplexing in a narrow sense using seven orthogonal wireless resource units each denoted by a circle. The FCFC (First Come First Change) of the reference numeral 2960 is partly the same as the reference numeral 2950 in FIG. 29c. If the number of requested orthogonal resource hopping multiplexing channels in a narrow sense is equal to or less than the number of orthogonal wireless resource units available, then the channel is fixedly allocated with the orthogonal wireless resource unit as an orthogonal resource division multiplexing channel so as to substantially avoid a hopping pattern collision. In a moment that the number of requested orthogonal resource hoping multiplexing channels in a narrow sense exceeds the number orthogonal wireless resource units available, the allocated channels select the orthogonal wireless resource unit according to the hopping pattern to transmit data. Unlike the reference numeral 2950 in FIG. 29c, if the orthogonal wireless resource unit fixedly allocated to the channel is returned at the termination of the channel, it is then allocated to a most early served one of the orthogonal resource hopping multiplexing channels being served until the moment of return rather than the orthogonal resource hopping multiplexing channel first requested subsequent to the terminated channel. Then the orthogonal resource hopping multiplexing channel is subject to mode conversion to fixedly use the allocated orthogonal wireless resource unit for data transmission.

-- - U The LCFC (Last Come First Change) of the reference numeral 2970 is partly the same as the reference numeral 2950 in FIG. 29c. If the number of requested orthogonal resource hopping multiplexing channels in a narrow sense is equal to or less than the number of orthogonal wireless resource units available, then the channel is fixedly allocated with the orthogonal wireless resource unit as an orthogonal resource division multiplexing channel so as to substantially avoid a hopping pattern collision. In a moment that the number of requested orthogonal resource hopping multiplexing channels in a narrow sense exceeds the number of orthogonal wireless resource units available, the allocated channels select the orthogonal Unlike the reference numeral 2950 in FIG. 29c, il the orthogonal wireless resource unit fixedly allocated to the channel is returned at the termination of the channel, it is then allocated to a most lately served one of the orthogonal resource hopping multiplexing channels being served until the moment of return rather than the orthogonal resource hopping multiplexing channel first requested subsequent to the terminated channel. Then the orthogonal resource hopping multiplexing channel is subject to mode conversion to fixedly use the allocated orthogonal wireless resource unit for data transmission. The priority may be determined differently according to residual service time, residual transmit data amount, quality requirement, transmission power, and client rank.

Also in the present invention, if the number of requested orthogonal resource hoping multiplexing channels in a narrow sense is equal to or less than the number of orthogonal wireless resource units available, then the channel is fixedly allocated with the orthogonal wireless resource unit as an orthogonal resource division multiplexing channel, so as to substantially avoid a hopping pattern collision. In a moment that the number of requested orthogonal resource hopping multiplexing channels in a narrow sense exceeds the number of orthogonal wireless resource units available, the allocated channels select the orthogonal wireless resource unit according to the hopping pattern to transmit data.

FIG. 30a is a conceptual diagram of a division mode in the multidimensional orthogonal resource hopping multiplexing in a narrow mode is substantially similar to the conventional orthogonal resource division multiplexing so long as the number of allocated channels is less than that of orthogonal wireless resource units. Accordingly, there is no collision of multidimensional orthogonal resource hopping patterns and hence no puncturing of transmit data symbols. Let $N_{OR}$ be the number of orthogonal wireless resource units and $\bar{v}$ be the average channel activity. It can be seen that the collision probability $p_c$ of multidimensional orthogonal resource hopping patterns, the puncture probability $p_p$ of transmit data symbols, and the number of allocable channels M have nothing to do with the average channel activity $\bar{v}$ as follows.

$$p_c = 0$$

$$p_p = 0$$

$$M \leq N_{OR}$$

The division mode can be easily applied to the system having more than one-bit information, such as MPSK (M > 4) or MQAM (M > 4), which is inferior in power efficiency to BPSK or QPSK but excellent in band efficiency, as well as the system having one-bit information (two values) in which the transmit data symbol has a value of "+1" or "-1", such as BPSK or QPSK (for the respective-I- and Q-channels) excellent in power efficiency. In the system having a limited frequency band, channels less than the number of orthogonal wireless resource units $N_{OR}$ are allocated and the power efficiency deteriorates with an increase in the required transmit data rate of each channel. Nevertheless, the system employs a modulation method excellent in band efficiency and thereby transmits more data in a short time. Because of the restricted data rate allowable in the limited frequency band, the modulation with a high band efficiency is switched to the modulation with a high power efficiency in a moment that the number of allocated channels M exceeds the number of orthogonal wireless resource units $N_{OR}$, thereby increasing the processing capacity of the system.

FIG. 30b is a conceptual diagram of a hopping mode in the multidimensional orthogonal resource hopping multiplexing in a narrow sense according to an embodiment of the present invention. In the hopping mode, the channels are distinguished with independent orthogonal resource hopping patterns irrespective of whether or not the number of allocated channels is greater than that of orthogonal wireless resource units, so that a collision may occur even when the number of channels is less than that of orthogonal wireless resource units. Moreover, when the average activity of the channels is low, the number of allocated channels is greater than the number of wireless resource units $N_{OR}$ due to channel encoding. Nevertheless, a loss of the signal-to-interference ratio required to meet a wanted quality such as BER (Bit Error Rate) or FER (Frame Error Rate) is not so significant. Let $N_{OR}$ be the number of orthogonal wireless resource probability $p_c$ of multidimensional orthogonal resource hopping patterns, the puncture probability $p_p$ of transmit data symbols, and the number of allocable channels M have the following correlation, where s represents the number of modulation symbols in the I- or Q-channel):

$$p_c = 1 - \left\{ 1 - \frac{\bar{v}}{N_{OR}} \right\}^{M-1}$$

$$p_p = 1 - \left\{ 1 - \frac{s-1}{s} \cdot \frac{\bar{v}}{N_{OR}} \right\}^{M-1}$$

For BPSK or QPSK (for the respective I- or Q-channels) modulation, the puncture probability $p_p$ of transmit data symbols (where s = 2) is given by:

$$p_p = 1 - \left\{ 1 - \frac{\bar{v}}{2N_{OR}} \right\}^{M-1}$$

The number of channels M acceptable in the hopping mode for statistic multiplexing can be determined as follows according to a given maximum allowable collision probability $p_c^{max}$ of multidimensional orthogonal resource hopping patterns and a given maximum allowable puncture probability $p_p^{max}$ of transmit data symbols:

$$M \leq 1 + \frac{In(1 - p_c^{max})}{In(1 - \frac{\bar{v}}{N_{OR}})}$$

$$M \leq 1 + \frac{In(1 - p_c^{max})}{In(1 - \frac{s-1}{s} \cdot \frac{\bar{v}}{N_{OR}})}$$

For BPSK or QPSK (for the respective I- or Q-channels) modulation, the number M of acceptable channels (where s = 2) is given by:

$$M \le 1 + \frac{In(1 - p_c^{max})}{In(1 - \frac{\bar{v}}{2N_{OR}})}$$

As can be seen from the above equations, the hopping mode is applicable to the system having more than one-bit information (s > 2), such as MPSK (M > 4) or MQAM (M > 4) excellent in band efficiency, and also to BPSK or QPSK (for the respective I- and Q-channels) modulation excellent in power efficiency, in which case the puncture probability $p_p$ of transmit data symbols can be minimized.

FIG. 30c is a conceptual diagram of a hybrid mode in the multidimensional orthogonal resource hopping multiplexing in a narrow sense according to an embodiment of the present invention. The hybrid mode is a mixed mode of the division mode of FIG. 30a and the hopping mode of FIG. 30b. Namely, the system operates in the division mode of FIG. 30a to avoid a collision between orthogonal resource hopping patterns (puncturing of transmit data symbols does not occur because there is no collision) while the number of allocated channels M is less than the number of orthogonal wireless resource units $N_{OR}$. The system enters the hopping mode of FIG. 30b for distinguishing channels with channel-independent orthogonal hopping pattern in a moment that the number of allocated channels M exceeds the number of orthogonal wireless resource units $N_{OR}$. Let $N_{OR}$ be the number of orthogonal wireless resource units and $\bar{v}$ be the average channel activity of channels. The collision probability $p_c$ of multidimensional orthogonal resource hopping patterns, the puncture probability $p_p$ of transmit data symbols, and the number of allocable channels M have the correlation as follows (where s represents the number of modulation symbols, in I- or Q-channels):

(a) F or $M \le N_{OR}$,

$$p_c = 0$$

$$p_p = 0$$

(b) For $M > N_{OR}$,

$$p_c = \frac{N_{OR}}{M}\left\{1 - \left(1 - \frac{\bar{v}}{N_{OR}}\right)^{M-N_{OR}}\right\} + \frac{M - N_{OR}}{M}\left\{1 - \left(1 - \frac{\bar{v}}{N_{OR}}\right)^{M-1}\right\}$$

$$p_p = \frac{N_{OR}}{M}\left\{1 - \left(1 - \frac{s-1}{s} \cdot \frac{\bar{v}}{N_{OR}}\right)^{M-N_{OR}}\right\} + \frac{M - N_{OR}}{M}\left\{1 - \left(1 - \frac{s-1}{s} \cdot \frac{\bar{v}}{N_{OR}}\right)^{M-1}\right\}$$

For BPSK or QPSK (for the respective I- or Q-channels) modulation, the puncture probability $p_p$ of transmit data symbols (where s = 2) is given by:

$$p_p = \frac{N_{OR}}{M}\left\{1 - \left(1 - \frac{\bar{v}}{2N_{OR}}\right)^{M-N_{OR}}\right\} + \frac{M - N_{OR}}{M}\left\{1 - \left(1 - \frac{\bar{v}}{2N_{OR}}\right)^{M-1}\right\}$$

The number of channels acceptable by the hopping mode for statistic multiplexing can be calculated by substituting the maximum allowable collision probability $p_c^{max}$ of multidimensional orthogonal resource hopping patterns and the maximum allowable puncture probability $p_p^{max}$ of transmit data symbols into the above equation for numerical analysis.

It can be seen that the hybrid mode selectively has the advantages of the division mode and the hopping mode. The modulation method poor in power efficiency but excellent in band efficiency is used only in the division mode and the modulation method excellent in power efficiency is used in the hopping mode as the number of channels is increased. The hybrid mode is operated by the wireless orthogonal resource operating methods of FIGS. 29a to 29d to acquire a higher performance.

FIG. 30d is a conceptual diagram of a group mode for a single channel in the multidimensional orthogonal resource hopping multiplexing in a narrow sense according to an embodiment of the present invention. The group mode is the improved form of the hybrid mode of FIG. 30c. The group mode is the same as the division mode of FIG. 30a and the hybrid mode of FIG. 30c while the number of allocated channels M is less than the number of orthogonal wireless resource units $N_{OR}$. In the hybrid mode of FIG. 30c, the system enters the hopping mode of FIG. 30b for distinguishing channels with channel-independent orthogonal hopping pattern in a moment that the number of allocated channels M exceeds the number of orthogonal wireless resource the number of orthogonal wireless resource units $N_{OR}$, so that there is only a collision among channels of a different group without a collision of orthogonal resource hopping patterns among channels in each group. Accordingly, the orthogonal resource hopping patterns of channels in a same group are not mutually independent, but the hopping pattern of one group is independent to the hopping pattern of another group. Namely, the first group OG#0 includes 0-th to ($N_{OR}$-1)-th channels, and the second group OG#1 includes $N_{OR}$ -th to (2 $N_{OR}$ -1)-th channels. Let $N_{OR}$ be the number of orthogonal wireless resource units and $\bar{v}$ be the average channel activity of channels. The collision probability $p_c$ of multidimensional orthogonal resource hopping patterns, the puncture probability $p_p$ of transmit data symbols, and the number of allocable channels M have the correlation as follows (where s represents the number of modulation symbols in I- or Q-channels):

(a) For $M \leq N_{OR}$,

$$p_c = 0$$

$$p_p = 0$$

(b) For $M > N_{OR}$,

$$p_c = \left[\frac{M}{N_{OR}}\right]\frac{N_{OR}}{M}\left\{1-\left(1-\frac{\bar{v}}{N_{OR}}\right)^{M-N_{OR}}\right\} + \frac{M-\left[\frac{M}{N_{OR}}\right]N_{OR}}{M}\left\{1-\left(1-\frac{\bar{v}}{N_{OR}}\right)^{\left[\frac{M}{N_{OR}}\right]N_{OR}}\right\}$$

$$p_p = \left[\frac{M}{N_{OR}}\right]\frac{N_{OR}}{M}\left\{1-\left(1-\frac{s-1}{s}\cdot\frac{\bar{v}}{N_{OR}}\right)^{M-N_{OR}}\right\} + \frac{M-\left[\frac{M}{N_{OR}}\right]N_{OR}}{M}\left\{1-\left(1-\frac{s-1}{s}\cdot\frac{\bar{v}}{N_{OR}}\right)^{\left[\frac{M}{N_{OR}}\right]N_{OR}}\right\}$$

For BPSK or QPSK (for the respective I- or Q-channels) modulation, the puncture probability $p_p$ of transmit data symbols (where s = 2) is given by:

$$p_p = \left[\frac{M}{N_{OR}}\right]\frac{N_{OR}}{M}\left\{1-\left(1-\frac{\bar{v}}{2N_{OR}}\right)^{M-N_{OR}}\right\} + \frac{M-\left[\frac{M}{N_{OR}}\right]N_{OR}}{M}\left\{1-\left(1-\frac{\bar{v}}{2N_{OR}}\right)^{\left[\frac{M}{N_{OR}}\right]N_{OR}}\right\}$$

The number of channels acceptable by the hopping mode for statistic multiplexing can be calculated by substituting the maximum allowable collision probability $p_c^{max}$ of multidimensional orthogonal resource chopping patterns and the maximum allowable puncture probability $p_p^{max}$ of transmit data symbols into the above equation for numerical analysis.

The group mode is intended to reduce a collision of orthogonal resource hopping patterns caused in the hopping mode at a moment that the number of channels exceeds that of wireless orthogonal resource units in the hybrid mode of FIG. 30c, and the puncture probability of transmit data symbols.

FIG. 30e is a conceptual diagram of a group mode for multiple channels in the multidimensional orthogonal resource hopping multiplexing in a narrow sense according to an embodiment of the present invention. The group mode of FIG. 30e has the equivalent function of FIG. 30d in the case where one orthogonal channel from the first station is allocated to the second station. Contrarily, when a plurality of orthogonal channels from the first station are allocated to the second station, the multiple channels are not independent in activity to one another and a collision occurs even in the first group OG#0 including 0-th to $(N_{OR}-1)$-th channels. But the group mode of FIG. 30e disperses the consecutive collision probability between the second stations of multiple channels in a different group and uniformly distributes the collision of orthogonal resource hopping patterns over all the channels.

The methods and systems described above improve the weak points of the simple puncturing method previously suggested by the inventor of this invention when the hopping patterns of multidimensional orthogonal resources are collided between mutually independent channels and the data symbols to be transmitted are different from one another during the collision as is usual in the statistic orthogonal multiplexing system based on the multidimensional orthogonal resource hopping method in which a plurality of communication channels synchronized with one another via a single medium.

The methods and systems hereof also subdivide a bisectional processing method of transmission and puncturing during a hopping pattern collision of the multidimensional orthogonal resources so as to enhance the performance of a system using a multidimensional orthogonal resource hopping multiplexing, thereby reducing the puncture probability.

The methods and systems hereof also use a soft handoff to reduce the puncture probability of the second station located at a cell boundary that is relatively disadvantageous.

In addition, the methods and systems hereof divide the output bits of a systematic channel encoder into systematic bits and parity bits, and transmits the systematic bits by an orthogonal division multiplexing, which method has no risk of a loss caused by a collision, and the parity bits by an orthogonal resource hopping multiplexing, thereby lowering the required bit energy to satisfy quality requirement such as a required BER (Bit Error Rate).

The methods and systems hereof frame transmission in the order of starting from a least influenced channel when an instantaneous collision rate in a specific frame of the multidimensional hopping pattern exceeds a reference collision rate, thereby enhancing the performance of the entire system.

Furthermore, the methods and systems stop channel allocation in the order of starting from a least influenced channel when an instantaneous collision rate of the multidimensional hopping pattern successively exceeds a reference collision rate, thereby enhancing the performance of the entire system.

**Claims**

1. A digital communication method, which is to perform a statistic multiplexing by allocating communication channels from a first station to a plurality of second stations in synchronization based on a multidimensional orthogonal resource hopping method, the digital communication method comprising:

   a) comparing the required number of orthogonal resource hopping multiplexing channels with the number of orthogonal wireless resource units available;
   b) fixedly allocating the orthogonal wireless resource units as the orthogonal resource hopping multiplexing channels so as to prevent a collision of hopping patterns, when the required number of channels for orthogonal resource hopping multiplexing is less than the number of orthogonal wireless resource units available; and
   c) selecting the orthogonal wireless resource units for the allocated channels according to the hopping pattern and sending data, when the required number of orthogonal resource hopping multiplexing channels exceeds the number of orthogonal wireless resource units available.

2. The digital communication method as claimed in claim 1, further comprising:

   d) fixedly allocating the returned orthogonal wireless resource units to another channel, when the channel with fixedly allocated orthogonal wireless resource units terminates.

3. The digital communication method as claimed in claim 1, further comprising:

d) selecting one of the orthogonal resource hopping multiplexing channels operated in a hopping mode not completed until the returning moment, and fixedly allocating the returned orthogonal wireless resource units to the selected channel, when the channel with fixedly allocated orthogonal wireless resource units terminates.

4. The digital communication method as claimed in claim 3, wherein the selected orthogonal resource hopping multiplexing channel is a channel most early served among the orthogonal resource hopping multiplexing channels operated in the hopping mode not completed until the returning moment.

5. The digital communication method as claimed in claim 3, wherein the selected orthogonal resource hopping multiplexing channel is a channel most lately served among the orthogonal resource hopping multiplexing channels operated in the hopping mode not completed until the returning moment.

6. The digital communication method as claimed in claim 3, wherein the selected orthogonal resource hopping multiplexing channel is a channel having the longest residual service time among the orthogonal resource hopping multiplexing channels operated in the hopping mode not completed until the returning moment.

7. The digital communication method as claimed in claim 3, wherein the selected orthogonal resource hopping multiplexing channel is a channel having the most residual transmit data among the orthogonal resource hopping multiplexing channels operated in the hopping mode not completed until the returning moment.

8. The digital communication method as claimed in claim 3, wherein the selected orthogonal resource hopping multiplexing channel is a channel having the highest quality requirement among the orthogonal resource hopping multiplexing channels operated in the hopping mode not completed until the returning moment.

9. The digital communication method as claimed in claim 3, wherein the selected orthogonal resource hopping multiplexing channel is a channel transferred with the highest transmission power among the orthogonal resource hopping multiplexing channels operated in the hopping mode not completed until the returning moment.

10. A digital communication system, which is to perform a statistic multiplexing by allocating communication channels from a first station to a plurality of second stations in synchronization based on a multidimensional orthogonal resource hopping system, the digital communication system comprising:

a comparator for comparing the required number of orthogonal resource hopping multiplexing channels with the number of orthogonal wireless resource units available; and
a controller for fixedly allocating the orthogonal wireless resource units as the orthogonal resource hopping multiplexing channels so as to prevent a collision of hopping patterns, when the required number of channels for orthogonal resource hopping multiplexing is less than the number of orthogonal wireless resource units available,
the controller selecting the orthogonal wireless resource units for the allocated channels according to the hopping pattern and sending data, when the required number of orthogonal resource hopping multiplexing channels exceeds the number of orthogonal wireless resource units available.

11. The digital communication system as claimed in claim 10, wherein the controller fixedly allocates the returned orthogonal wireless resource units to another channel, when the channel with fixedly allocated orthogonal wireless resource units terminates.

12. The digital communication system as claimed in claim 10, wherein the controller selects one of the orthogonal resource hopping multiplexing channels operated in a hopping mode not completed until the returning moment, and fixedly allocates the returned orthogonal wireless resource units to the selected channel, when the channel with fixedly allocated orthogonal wireless resource units terminates.

13. The digital communication system as claimed in claim 12, wherein the selected orthogonal resource hopping multiplexing channel is a channel most early served among the orthogonal resource hopping multiplexing channels operated in the hopping mode not completed until the returning moment.

**14.** The digital communication system as claimed in claim 12, wherein the selected orthogonal resource hopping multiplexing channel is a channel most lately served among the orthogonal resource hopping multiplexing channels operated in the hopping mode not completed until the returning moment.

**15.** The digital communication system as claimed in claim 12, wherein the selected orthogonal resource hopping multiplexing channel is a channel having the longest residual service time among the orthogonal resource hopping multiplexing channels operated in the hopping mode not completed until the returning moment.

**16.** The digital communication system as claimed in claim 12, wherein the selected orthogonal resource hopping multiplexing channel is a channel having the most residual transmit data among the orthogonal resource hopping multiplexing channels operated in the hopping mode not completed until the returning moment.

**17.** The digital communication system as claimed in claim 12, wherein the selected orthogonal resource hopping multiplexing channel is a channel having the highest quality requirement among the orthogonal resource hopping multiplexing channels operated in the hopping mode not completed until the returning moment.

**18.** The digital communication system as claimed in claim 12, wherein the selected orthogonal resource hopping multiplexing channel is a channel transferred with the highest transmission power among the orthogonal resource hopping multiplexing channels operated in the hopping mode not completed until the returning moment.

**19.** The digital communication system as claimed in claim 11, wherein the system uses a modulation method relatively excellent in band efficiency while the required number of orthogonal resource hopping multiplexing channels is equal to or less than the number of orthogonal wireless resource units available,
the system using a modulation method for all channels relatively excellent in power efficiency while the required number of orthogonal resource hopping multiplexing channels exceeds the number of orthogonal wireless resource units available.

**20.** The digital communication system as claimed in claim 19, wherein the modulation method excellent in band efficiency includes MQAM (M-ary Quadrature Amplitude Modulation), MPSK (M-ary Quadrature Phase Shift Keying), QPSK (Quadrature Phase Shift Keying), and BPSK (Binary Phase Shift Keying).

**Patentansprüche**

**1.** Digitales Kommunikationsverfahren, welches dazu dient, einen statistischen Multiplex durch Zuteilen von Kommunikationskanälen von einer ersten Station zu einer Vielzahl von zweiten synchronisierten Stationen auf der Grundlage eines multidimensionalen orthogonalen Ressourcensprungverfahrens durchzuführen, wobei das digitale Kommunikationsverfahren umfasst:

a) Vergleichen der erforderlichen Anzahl von orthogonalen Ressourcensprung-Multiplexkanälen mit der Anzahl der verfügbaren orthogonalen drahtlosen Ressourceneinheiten;
b) festes Zuteilen der orthogonalen drahtlosen Ressourceneinheiten als die orthogonalen Ressourcensprung-Multiplexkanäle, um dadurch eine Kollision von Sprungmustern zu vermeiden, wenn die erforderliche Anzahl von Kanälen für orthogonalen Ressourcensprung-Multiplex kleiner als die Anzahl der verfügbaren orthogonalen drahtlosen Ressourceneinheiten ist; und
c) Auswählen der orthogonalen drahtlosen Ressourceneinheiten für die zugeteilten Kanäle gemäß dem Sprungmuster und Senden von Daten, wenn die erforderliche Anzahl von orthogonalen Ressourcensprung-Multiplexkanälen die Anzahl der verfügbaren orthogonalen drahtlosen Ressourceneinheiten übersteigt.

**2.** Digitales Kommunikationsverfahren nach Anspruch 1, ferner umfassend:

d) festes Zuteilen der zurückgegebenen orthogonalen drahtlosen Ressourceneinheiten zu einem anderen Kanal, wenn der Kanal mit fest zugeteilten orthogonalen drahtlosen Ressourceneinheiten endet.

**3.** Digitales Kommunikationsverfahren nach Anspruch 1, ferner umfassend:

d) Auswählen eines der in einem Sprungmodus betriebenen orthogonalen Ressourcensprung-Multiplexkanäle, die bis zum Rückgabemoment nicht abgeschlossen sind, und festes Zuteilen der zurückgegebenen orthogonalen drahtlosen Ressourceneinheiten zum ausgewählten Kanal, wenn der Kanal mit fest zugeteilten orthogonalen drahtlosen Ressourceneinheiten endet.

4. Digitales Kommunikationsverfahren nach Anspruch 3, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, am frühesten bedient wird.

5. Digitales Kommunikationsverfahren nach Anspruch 3, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, am spätesten bedient wird.

6. Digitales Kommunikationsverfahren nach Anspruch 3, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, die längste verbleibende Dienstzeit hat.

7. Digitales Kommunikationsverfahren nach Anspruch 3, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, die meisten verbleibenden Sendedaten hat.

8. Digitales Kommunikationsverfahren nach Anspruch 3, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, die höchste Qualitätsanforderung hat.

9. Digitales Kommunikationsverfahren nach Anspruch 3, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, mit der höchsten Sendeleistung übertragen wird.

10. Digitales Kommunikationssystem, welches dazu dient, einen statistischen Multiplex durch Zuteilen von Kommunikationskanälen von einer ersten Station zu einer Vielzahl von zweiten synchronisierten Stationen auf der Grundlage eines multidimensionalen orthogonalen Ressourcensprungsystems durchzuführen, wobei das digitale Kommunikationssystem umfasst:

einen Vergleicher zum Vergleichen der erforderlichen Anzahl von orthogonalen Ressourcensprung-Multiplexkanälen mit der Anzahl der verfügbaren orthogonalen drahtlosen Ressourceneinheiten; und
einen Controller zum festen Zuteilen der orthogonalen drahtlosen Ressourceneinheiten als die orthogonalen Ressourcensprung-Multiplexkanäle, um dadurch eine Kollision von Sprungmustern zu vermeiden, wenn die erforderliche Anzahl von Kanälen für orthogonalen Ressourcensprung-Multiplex kleiner als die Anzahl der verfügbaren orthogonalen drahtlosen Ressourceneinheiten ist,
wobei der Controller die orthogonalen drahtlosen Ressourceneinheiten für die zugeteilten Kanäle gemäß dem Sprungmuster zuteilt und Daten sendet, wenn die erforderliche Anzahl von orthogonalen Ressourcensprung-Multiplexkanälen die Anzahl der verfügbaren orthogonalen drahtlosen Ressourceneinheiten übersteigt.

11. Digitales Kommunikationssystem nach Anspruch 10, worin der Controller die zurückgegebenen orthogonalen drahtlosen Ressourceneinheiten einem anderen Kanal fest zuteilt, wenn der Kanal mit fest zugeteilten orthogonalen drahtlosen Ressourceneinheiten endet.

12. Digitales Kommunikationssystem nach Anspruch 10, worin der Controller einen der in einem Sprungmodus betriebenen orthogonalen Ressourcensprung-Multiplexkanäle auswählt, der bis zum Rückgabemoment nicht abgeschlossen ist, und die zurückgegebenen orthogonalen drahtlosen Ressourceneinheiten dem ausgewählten Kanal fest zuteilt, wenn der Kanal mit fest zugeteilten orthogonalen drahtlosen Ressourceneinheiten endet.

13. Digitales Kommunikationssystem nach Anspruch 12, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, am frühesten bedient wird.

14. Digitales Kommunikationssystem nach Anspruch 12, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, am spätesten bedient wird.

**15.** Digitales Kommunikationssystem nach Anspruch 12, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, die längste verbleibende Dienstzeit hat.

**16.** Digitales Kommunikationssystem nach Anspruch 12, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, die meisten verbleibenden Sendedaten hat.

**17.** Digitales Kommunikationssystem nach Anspruch 12, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, die höchste Qualitätsanforderung hat.

**18.** Digitales Kommunikationssystem nach Anspruch 12, worin der ausgewählte orthogonale Ressourcensprung-Multiplexkanal ein Kanal ist, der unter den im Sprungmodus betriebenen orthogonalen Ressourcensprung-Multiplexkanälen, die bis zum Rückgabemoment nicht abgeschlossen sind, mit der höchsten Sendeleistung übertragen wird.

**19.** Digitales Kommunikationssystem nach Anspruch 11, worin das System ein Modulationsverfahren verwendet, dessen Bandeffizienz relativ exzellent ist, wenn die erforderliche Anzahl von orthogonalen Ressourcensprung-Multiplexkanälen gleich der oder größer als die Anzahl der verfügbaren orthogonalen drahtlosen Ressourceneinheiten ist, wobei das System für alle Kanäle ein Modulationsverfahren verwendet, dessen Leistungseffizienz relativ exzellent ist, wenn die erforderliche Anzahl von orthogonalen Ressourcensprung-Multiplexkanälen die Anzahl der verfügbaren orthogonalen drahtlosen Ressourceneinheiten übersteigt.

**20.** Digitales Kommunikationssystem nach Anspruch 19, worin das Modulationsverfahren, dessen Bandeffizienz exzellent ist, MQAM (M-äre Quadraturamplitudenmodulation), MPSK (M-äre Quadraturphasenumtastung), QPSK (Quadraturphasenumtastung) und BPSK (binäre Phasenumtastung) einschließt.

**Revendications**

**1.** Procédé de communication numérique, destiné à mettre en oeuvre un multiplexage statistique en affectant des canaux de communication, d'une première station à une pluralité de secondes stations en synchronisation, sur la base d'un procédé de saut de ressources orthogonales multidimensionnel, le procédé de communication numérique comportant les étapes ci-dessous consistant à :

a) comparer le nombre requis de canaux de multiplexage de saut de ressources orthogonales au nombre d'unités de ressources sans fil orthogonales disponibles ;
b) affecter de manière permanente les unités de ressources sans fil orthogonales en tant que les canaux de multiplexage de saut de ressources orthogonales de manière à empêcher une collision de motifs de saut, lorsque le nombre requis de canaux de multiplexage de saut de ressources orthogonales est inférieur au nombre d'unités de ressources sans fil orthogonales disponibles ; et
c) sélectionner les unités de ressources sans fil orthogonales pour les canaux affectés selon le motif de saut et envoyer des données, lorsque le nombre requis de canaux de multiplexage de saut de ressources orthogonales est supérieur au nombre d'unités de ressources sans fil orthogonales disponibles.

**2.** Procédé de communication numérique selon la revendication 1, comportant en outre l'étape ci-dessous consistant à :

d) affecter de manière permanente les unités de ressources sans fil orthogonales renvoyées à un autre canal, lorsque le canal comportant des unités de ressources sans fil orthogonales affectées de manière permanente prend fin.

**3.** Procédé de communication numérique selon la revendication 1, comportant en outre l'étape ci-dessous consistant à :

d) sélectionner l'un des canaux de multiplexage de saut de ressources orthogonales exploités dans un mode de saut non achevé jusqu'à l'instant de renvoi, et affecter de manière permanente les unités de ressources sans fil orthogonales renvoyées au canal sélectionné, lorsque le canal comportant des unités de ressources sans fil orthogonales affectées de manière permanente prend fin.

**4.** Procédé de communication numérique selon la revendication 3, dans lequel le canal de multiplexage de saut de ressources orthogonales sélectionné correspond à un canal desservi le plus récemment parmi les canaux de multiplexage de saut de ressources orthogonales exploités dans le mode de saut non achevé jusqu'à l'instant de renvoi.

**5.** Procédé de communication numérique selon la revendication 3, dans lequel le canal de multiplexage de saut de ressources orthogonales sélectionné correspond à un canal desservi le plus tardivement parmi les canaux de multiplexage de saut de ressources orthogonales exploités dans le mode de saut non achevé jusqu'à l'instant de renvoi.

**6.** Procédé de communication numérique selon la revendication 3, dans lequel le canal de multiplexage de saut de ressources orthogonales sélectionné correspond à un canal présentant le temps de service résiduel le plus long parmi les canaux de multiplexage de saut de ressources orthogonales exploités dans le mode de saut non achevé jusqu'à l'instant de renvoi.

**7.** Procédé de communication numérique selon la revendication 3, dans lequel le canal de multiplexage de saut de ressources orthogonales sélectionné correspond à un canal présentant le plus de données de transmission résiduelles parmi les canaux de multiplexage de saut de ressources orthogonales exploités dans le mode de saut non achevé jusqu'à l'instant de renvoi.

**8.** Procédé de communication numérique selon la revendication 3, dans lequel le canal de multiplexage de saut de ressources orthogonales sélectionné correspond à un canal présentant l'exigence de qualité la plus élevée parmi les canaux de multiplexage de saut de ressources orthogonales exploités dans le mode de saut non achevé jusqu'à l'instant de renvoi.

**9.** Procédé de communication numérique selon la revendication 3, dans lequel le canal de multiplexage de saut de ressources orthogonales sélectionné correspond à un canal transféré avec la puissance de transmission la plus élevée parmi les canaux de multiplexage de saut de ressources orthogonales exploités dans le mode de saut non achevé jusqu'à l'instant de renvoi.

**10.** Système de communication numérique, destiné à mettre en oeuvre un multiplexage statistique en affectant des canaux de communication, d'une première station à une pluralité de secondes stations en synchronisation, sur la base d'un système de saut de ressources orthogonales multidimensionnel, le système de communication numérique comportant :

un comparateur destiné à comparer le nombre requis de canaux de multiplexage de saut de ressources orthogonales au nombre d'unités de ressources sans fil orthogonales disponibles ; et
un contrôleur destiné à affecter de manière permanente les unités de ressources sans fil orthogonales en tant que les canaux de multiplexage de saut de ressources orthogonales de manière à empêcher une collision de motifs de saut, lorsque le nombre requis de canaux de multiplexage de saut de ressources orthogonales est inférieur au nombre d'unités de ressources sans fil orthogonales disponibles ;
le contrôleur sélectionnant les unités de ressources sans fil orthogonales pour les canaux affectés selon le motif de saut et envoyant des données, lorsque le nombre requis de canaux de multiplexage de saut de ressources orthogonales est supérieur au nombre d'unités de ressources sans fil orthogonales disponibles.

**11.** Système de communication numérique selon la revendication 10, dans lequel le contrôleur affecte de manière permanente les unités de ressources sans fil orthogonales renvoyées à un autre canal, lorsque le canal comportant des unités de ressources sans fil orthogonales affectées de manière permanente prend fin.

**12.** Système de communication numérique selon la revendication 10, dans lequel le contrôleur sélectionne l'un des canaux de multiplexage de saut de ressources orthogonales exploités dans un mode de saut non achevé jusqu'à l'instant de renvoi, et affecte de manière permanente les unités de ressources sans fil orthogonales renvoyées au canal sélectionné, lorsque le canal comportant des unités de ressources sans fil orthogonales affectées de manière permanente prend fin.

**13.** Système de communication numérique selon la revendication 12, dans lequel le canal de multiplexage de saut de ressources orthogonales sélectionné correspond à un canal desservi le plus récemment parmi les canaux de multiplexage de saut de ressources orthogonales exploités dans le mode de saut non achevé jusqu'à l'instant de renvoi.

**14.** Système de communication numérique selon la revendication 12, dans lequel le canal de multiplexage de saut de ressources orthogonales sélectionné correspond à un canal desservi le plus tardivement parmi les canaux de multiplexage de saut de ressources orthogonales exploités dans le mode de saut non achevé jusqu'à l'instant de renvoi.

**15.** Système de communication numérique selon la revendication 12, dans lequel le canal de multiplexage de saut de ressources orthogonales sélectionné correspond à un canal présentant le temps de service résiduel le plus long parmi les canaux de multiplexage de saut de ressources orthogonales exploités dans le mode de saut non achevé jusqu'à l'instant de renvoi.

**16.** Système de communication numérique selon la revendication 12, dans lequel le canal de multiplexage de saut de ressources orthogonales sélectionné correspond à un canal présentant le plus de données de transmission résiduelles parmi les canaux de multiplexage de saut de ressources orthogonales exploités dans le mode de saut non achevé jusqu'à l'instant de renvoi.

**17.** Système de communication numérique selon la revendication 12, dans lequel le canal de multiplexage de saut de ressources orthogonales sélectionné correspond à un canal présentant l'exigence de qualité la plus élevée parmi les canaux de multiplexage de saut de ressources orthogonales exploités dans le mode de saut non achevé jusqu'à l'instant de renvoi.

**18.** Système de communication numérique selon la revendication 12, dans lequel le canal de multiplexage de saut de ressources orthogonales sélectionné correspond à un canal transféré avec la puissance de transmission la plus élevée parmi les canaux de multiplexage de saut de ressources orthogonales exploités dans le mode de saut non achevé jusqu'à l'instant de renvoi.

**19.** Système de communication numérique selon la revendication 11, dans lequel le système utilise un procédé de modulation relativement excellent en termes d'efficacité de bande lorsque le nombre requis de canaux de multiplexage de saut de ressources orthogonales est égal ou inférieur au nombre d'unités de ressources sans fil orthogonales disponibles,

le système utilisant un procédé de modulation pour tous les canaux relativement excellent en termes d'efficacité de puissance lorsque le nombre requis de canaux de multiplexage de saut de ressources orthogonales est supérieur au nombre d'unités de ressources sans fil orthogonales disponibles.

**20.** Système de communication numérique selon la revendication 19, dans lequel le procédé de modulation excellent en termes d'efficacité de bande inclut une modulation d'amplitude en quadrature M-valente (MQAM), une modulation par déplacement de phase en quadrature M-valente (MPSK), une modulation par déplacement de phase quadrivalente (QPSK), et une modulation par déplacement de phase bivalente (BPSK).

FIG.1

# FIG.2A

200

Pilot

PiCH

210
Sync
32
(80/3 ms)

SyCH

214
Convolutional
Encoder
K=9
R=1/2

1.2

216
Repeater
x2

2.4

218
Block
Interleaver
AxB=96

4.8

219
Repeater
x4

4.8

19.2

220
Paging
96
192

PgCH#1

224
Convolutional
Encoder
K=9
R=1/2

4.8
9.6

226
Repeater
x2
x1

9.6
19.2

228
Block
Interleaver
AxB=384

19.2

19.2

236

19.2

19.2

230
Long
Code
Mask #p

42

232
Long
Code
Generator

234
Decimator
64:1

1228.8

# FIG.2B

Power Control Bit for TCH#1 ——————— 800Hz ——————→

**260** Puncture & Insert

**240** Traffic
172
80
40
16
TCH#1

**241** CRC
+12
+8
+0
+0

**242** Tail Bits
+8

**244** Convolutional Encoder
K=9
R=1/2

**246** Repeater
x1
x2
x4
x8

**248** Block Interleaver
AxB=384

**256**

9.6
4.8
2.4
1.2

19.2
9.6
4.8
2.4

19.2

19.2

19.2

19.2

**250** Long Code Mask #p

42

**232** Long Code Generator

**234** Decimator 64:1

**258** Decimator 64:1

4

1228.8

19.2

EP 1 890 391 B1

FIG.3A

EP 1 890 391 B1

324
PN_I Short Code Generator

326
0 → +1
1 → −1

cos(2πf₁t)

310
0 → +1
1 → −1

312

314
G

316
Σ

318

320
LPF

322

324
π/2

344
Σ

330
0 → +1
1 → −1

332

334
G

336
Σ

338

340
LPF

342

Walsh Code #x Generator
362

364
0 → +1
1 → −1

344
PN_Q Short Code Generator

346
0 → +1
1 → −1

FIG.3B

FIG.3C

FIG.3D

FIG.3E

$\cos(2\pi f_c t)$

390 — DEMUX

310 — $0 \rightarrow +1$, $1 \rightarrow -1$
330 — $0 \rightarrow +1$, $1 \rightarrow -1$

312
332

314 — G
334 — G

316 — Σ
336 — Σ

318
269

324 — PN_I Short Code Generator
326 — $0 \rightarrow +1$, $1 \rightarrow -1$

344 — PN_Q Short Code Generator
346 — $0 \rightarrow +1$, $1 \rightarrow -1$

320 — LPF
340 — LPF

322
342

324 — π/2

344 — Σ

366 — QOC Mask
362 — Walsh Code #x Generator
368
364 — $0 \rightarrow +1$, $1 \rightarrow -1$

FIG.3F

# FIG.4A

Frame Length

Pilot 410

| R | R/2 472 | R | R/4 | R/4 | R 470 | R/2 | R/2 | R/4 474 | R | R | MS#1 420 |

| R/2 | R | R | R | R/4 | R/2 | R | R/4 | R | R | R | MS#2 430 |

| R | O | R | R | O | R | O | R | R | R | O | MS#3 440 |

| R | O | O | R | R | O | R | O | R | R | R | MS#4 450 |

EP 1 890 391 B1

# FIG.4B

EP 1 890 391 B1

# FIG.4C

EP 1 890 391 B1

# FIG.4D

FIG.4E

FIG.4F

FIG.4G

FIG.4H

Frame Length

470

MS#a
MS#b

$f_4$

$f_3$

$f_2$

$f_1$

MS#a

MS#b

$t$

EP 1 890 391 B1

60

# FIG.4I

EP 1 890 391 B1

# FIG.4J

Frame Length

470

MS#a

frequency

Code

Ts

time

# FIG.5

EP 1 890 391 B1

FIG.6

FIG.7

EP 1 890 391 B1

FIG.8

EP 1 890 391 B1

# FIG.9A

# FIG.9B

Frame Length
R=1/Ts

PiCH

CPCCH#1

CPCCH#2

MS#a

MS#b

MS#c

MS#d

▯ Transmit Power Control Command

□ Transmit Data Rate Information

EP 1 890 391 B1

FIG.10A

FIG.10B

FIG.10C

# FIG.10D

EP 1 890 391 B1

FIG.10E

FIG.10F

FIG.10G

FIG.10H

FIG.10I

# FIG.10J

EP 1 890 391 B1

# FIG.10K

EP 1 890 391 B1

# FIG.10L

EP 1 890 391 B1

FIG.11

Subcarrier Index          Position Index          Orthogonal Code Index

380/580

Terminal Specific Initial Value
or
Initial Value allocated by Base Station

EP 1 890 391 B1

FIG.12A

# FIG.12B

Frequency Sythesizer

388/588

$\cos(2\pi\,f_{[wxyz]}t)$

Oscillator

w    x    y    z

Subcarrier Index

380/580

Hopping Pattern Generator

# FIG.12C

*PP=Probable Position
1=ON
0=OFF

#PP=1  #PP=2  #PP=4  #PP=8  #PP=16

# FIG.12D

Ts

wxyz
0000
0001
0010
0011
0100
0101
0110
0111
1000
1001
1010
1011
1100
1101
1110
1111

Ts

392/393

Buffer

w | x | y | z

Position Index

380

Hopping Pattern Generator

Transmit
Data
Symbol

EP 1 890 391 B1

# FIG.12E

382/582

Fixed Initial Value

383/583

M U X

0

Zero Insertion

Orthogonal Code Index

380/580

Hopping Pattern Generator

EP 1 890 391 B1

# FIG.12F

FIG.12G

382/582

Chip
Rate
Clock

LSB MSB

Orthogonal Code Index

Hopping Pattern Generator

380/580

# FIG.12H

Ts

wxyz
0000
0001
0010
0011
0100
0101
0110
0111
1000
1001
1010
1011
1100
1101
1110
1111

592/593

Ts

Buffer

w  x  y  z

Position Index

580

Hopping Pattern Generator

Received
Data
Symbol

EP 1 890 391 B1

FIG.13A

EP 1 890 391 B1

FIG.13B

EP 1 890 391 B1

FIG.13C

FIG.13D

EP 1 890 391 B1

# FIG.13E

EP 1 890 391 B1

FIG.13F

FIG.14A

FIG.14B

FIG.14C

EP 1 890 391 B1

EP 1 890 391 B1

FIG.14D

Frame Length

R=1/Ts

R

R/2

R/4

R/8

R/16

R/3

R/5

2R/3

FIG.14E

# FIG.14F

Frame Length

972

Low Rate Frame ⟶ Sparse frame

MS#a
MS#b

$f$
$f_4$
$f_3$
$f_2$
$f_1$

MS#a

MS#b

$t$

Not-collided

Collided

EP 1 890 391 B1

FIG.14G

# FIG.14H

FIG.14I

FIG.14J

FIG.14K

FIG.14L

Frame Length

970

Basic Rate Frame = Dense Frame

| | 1021 | 1022 | 1023 | 1024 | 1025 | 1026 | 1027 | 1028 | |
|---|---|---|---|---|---|---|---|---|---|
| 1011 | OC#9 | OC#5 | OC#35 | OC#61 | OC#54 | OC#34 | OC#23 | OC#23 | MS#a↔HP#a |
| 1012 | OC#43 | OC#26 | OC#48 | OC#33 | OC#15 | OC#17 | OC#55 | OC#60 | MS#b↔HP#b |
| 1013 | OC#45 | OC#37 | OC#58 | OC#49 | OC#7 | OC#2 | OC#12 | OC#52 | MS#c↔HP#c |
| 1014 | OC#36 | OC#38 | OC#37 | OC#22 | OC#37 | OC#32 | OC#42 | OC#22 | MS#d↔HP#d |

$f$

$t$

$f_1$

MS#a

MS#b

MS#c

MS#d

OC

FIG.14M

Frame Length

Low Rate Frame → Random Sparse Frame

972

MS#a
MS#b

Low Rate Frame → Random Sparse Frame

974

MS#c
MS#d

$f$

$t$

$f_1$

MS#a

MS#b

MS#c

MS#d

OC

108

EP 1 890 391 B1

# FIG.14N

Frame Length

Low Rate Frame → Random Sparse Frame

972

MS#a
MS#b

Low Rate Frame → Random Sparse Frame

974

MS#c
MS#d

$f$

$t$

$f_1$

MS#a

MS#b

MS#c

MS#d

OC

| | Not–collided |
| | collided |

EP 1 890 391 B1

109

# FIG.140

Frame Length

Low Rate Frame → Random Sparse Frame

972

MS#a
MS#b

Low Rate Frame → Random Sparse Frame

974

MS#c
MS#d

$f$

$t$

$f_1$

MS#a

MS#b

MS#c

MS#d

$OC$

Not-collided

Not-punctured

Punctured

EP 1 890 391 B1

# FIG.14P

Frame Length

Low Rate Frame → Regular Sparse Frame

972

MS#a
MS#b

Low Rate Frame → Regular Sparse Frame

974

MS#c
MS#d

$f$

$t$

$f_1$

MS#a
MS#b
MS#c
MS#d

OC

EP 1 890 391 B1

# FIG.14Q

Frame Length

972 Low Rate Frame → Regular Sparse Frame

974 Low Rate Frame → Regular Sparse Frame

MS#a
MS#b

MS#c
MS#d

$f$

$f_1$

$t$

MS#a
MS#b
MS#c
MS#d

$OC$

Not-collided

collided

EP 1 890 391 B1

# FIG.14R

Frame Length

972 | Low Rate Frame → Regular Sparse Frame

MS#a
MS#b

974 | Low Rate Frame → Regular Sparse Frame

MS#c
MS#d

$f$

$f_1$

$t$

MS#a

MS#b

MS#c

MS#d

$OC$

Not-collided

Not-punctured

Punctured

EP 1 890 391 B1

FIG.14S

Frame Length

Low Rate Frame → Staggered Regular Sparse Frame

972

MS#a
MS#b

Low Rate Frame → Staggered Regular Sparse Frame

974

MS#c
MS#d

$f$

$t$

$f_1$

MS#a

MS#b

MS#c

MS#d

OC

EP 1 890 391 B1

FIG.14T

Frame Length

972  Low Rate Frame → Staggered Regular Sparse Frame

974  Low Rate Frame → Staggered Regular Sparse Frame

MS#a
MS#b

MS#c
MS#d

$f_1$

MS#a
MS#b
MS#c
MS#d

OC

Not-collided

collided

EP 1 890 391 B1

# FIG.14U

Frame Length

Low Rate Frame → Staggered Regular Sparse Frame

972

MS#a
MS#b

Low Rate Frame → Staggered Regular Sparse Frame

974

MS#c
MS#d

$f$

$t$

$f_1$

MS#a
MS#b
MS#c
MS#d

OC

Not-collided

Not-punctured

Punctured

EP 1 890 391 B1

# FIG.14V

Frame Length

Low Rate Frame → Random sparse Frame

972

MS#a
MS#b
MS#c
MS#d

MS#a
MS#b
MS#c
MS#d

# FIG.14W

Frame Length

Low Rate Frame → Random sparse Frame

972

MS#a
MS#b
MS#c
MS#d

$f$

$f_1$

$t$

MS#a
MS#b
MS#c
MS#d

OC

Not-collided

collided

EP 1 890 391 B1

FIG.14X

Frame Length

Low Rate Frame →Random sparse Frame

972

MS#a
MS#b
MS#c
MS#d

$f_1$

OC

MS#a
MS#b
MS#c
MS#d

Not-collided

Not-punctured

Punctured

EP 1 890 391 B1

# FIG.14Y

$N_F = 4, \ N_T = 1, \ N_{0C} = 4$

# FIG.14Z

Colliede but the same symbol

Collided and different symbol

frequency    Collision

Code

Ts

time

MS#a
MS#b
MS#c

−1
+1

+1
+1

FIG.14AA

frequency    Collision

Code

MS#a
MS#b
MS#c

Ts

time

Effective
Transmission
Signal
amplitude
for MS#a

For MPSK modulation

$A_a + A_c$

$A_a$

time

EP 1 890 391 B1

FIG.15

Frame Length

1072

1074

970

1076

1052 | OC#43 | OC#26 | | | OC#33 | OC#15 | OC#17 | OC#55 | OC#60 | MS#b

EP 1 890 391 B1

# FIG.16

FIG.17



# FIG.18A

$1810$ ( *Start* ) *For MPSK modulation*

$1820$

| For all orthogonal resource units |
| --- |

$S = S^- \cup S^0 \cup S^+$ $1830$

$1830$

$S = S^0$

$1840$

$S = S^0 \cup S^+$

$1850$

$S = S^0 \cup S^-$

$1832$

$A_I^+ = 0$
$A_I^- = 0$

$1844$

$A_I^+ = \sum_{j \in S^+} (+A_j)$
$A_I^- = 0$

$1854$

$A_I^+ = 0$
$A_I^- = \sum_{j \in S^-} (-A_j)$

$1860$

$A_I^+ = 0$
$A_I^- = 0$

$1890$ ( *End* )

FIG.18B

For BPSK modulation

$+A_{max}$

$+A_i$  $+A_o$

$+A_i +A_o$  $A_i +A_o$

1801

$+A_i$

$+A_o$

1802

127

EP 1 890 391 B1

## FIG.18C

Spread encoded symbols with the same orthogonal codeword at the n-th symbol time
(with transmission power control)

$+A_c+A_l > +A_{max}$

Allocated
Downlink
Channel ID

a  b  ⓒ  d  e  f  g  h  i  j  k  ①  m  n  o  p  q  r  s  t

## FIG.18D

Spread encoded symbols with the same orthogonal codeword at the n-th symbol time
(with transmission power control)

$+A_c + A_I > +A_{max}$

Allocated Downlink Channel ID

a   b   ⓒ   d   e   f   g   h   i   j   k   ①   m   n   o   p   q   r   s   t

EP 1 890 391 B1

FIG.19A

$1810$ Start  For MPSK modulation

1920

For all orthogonal resource units

$S = S^- \cup S^0 \cup S^+$  1830

1830

$S = S^0$

1840

$S = S^0 \cup S^+$

1850

$S = S^0 \cup S^-$

1842

$\sum_{j \in S^+}(+A_j) \leqq +A_{max}$

1852

$\sum_{j \in S^-}(-A_j) \geqq -A_{max}$

1832
$$A_I^+ = 0$$
$$A_I^- = 0$$

1844
$$A_I^+ = \sum_{j \in S^+}(+A_j)$$
$$A_I^- = 0$$

1846
$$A_I^+ = +A_{max}$$
$$A_I^- = 0$$

1854
$$A_I^+ = 0$$
$$A_I^- = \sum_{j \in S^-}(-A_j)$$

1856
$$A_I^+ = 0$$
$$A_I^- = -A_{max}$$

1960
$$A_I^+ = 0$$
$$A_I^- = 0$$

End  1890

130

FIG.19B

## FIG.19C

Spread encoded symbols with the same orthogonal codeword at the n-th symbol time
(with transmission power control)

$A_c + A_I > +A_{max}$

$+A_I$

$+A_I$

I

Q

$+A_{max}$

$+A_c$

$-A_{max}$

$+A_{max}$

$-A_{max}$

$-A_c$

a  b  ⓒ  d  e  f  g  h  i  j  k  ①  m  n  o  p  q  r  s  t

Allocated
Downlink
Channel ID

EP 1 890 391 B1

**FIG.19D**

Spread encoded symbols with the same orthogonal codeword at the n-th symbol time
(with transmission power control)

$A_c + A_l > +A_{max}$

$\downarrow$

$A_c + A_l = +A_{max}$

$+A_{max}$

$+A_{max}$

$I$

$0$

$-A_{max}$

a  b  ⓒ  d  e  f  g  h  i  j  k  ①  m  n  o  p  q  r  s  t

Allocated
Downlink
Channel ID

$+A_{max}$

$Q$

$-A_{max}$

EP 1 890 391 B1

# FIG.20A

$1810$ ( **Start** )　For MPSK modulation

For all orthogonal resource units　$2020$

$S = S^- \cup S^0 \cup S^+$　$1830$

$1830$　$S = S^0$

$1840$　$S = S^0 \cup S^+$

$1850$　$S = S^0 \cup S^-$

$1842$　$\sum_{j \in S^+}(A_j) \leq +A_{max}$

$1852$　$-\sum_{j \in S^-}(A_j) \geq -A_{max}$

$1832$
$$A_I^+ = 0$$
$$A_I^- = 0$$

$1844$
$$A_I^+ = \sum_{j \in S^+}(+A_j)$$
$$A_I^- = 0$$

$1846$
$$A_I^+ = +A_{max}$$
$$A_I^- = 0$$

$1854$
$$A_I^+ = 0$$
$$A_I^- = \sum_{j \in S^-}(-A_j)$$

$1856$
$$A_I^+ = 0$$
$$A_I^- = -A_{max}$$

$2060$

( **End** )　$1890$

$2060$

$2062$　$\max\left\{\min_{i \in S^+}\{A_i\}, \min_{i \in S^-}\{A_i\}\right\}$

$2070$　$\max\left\{\min_{i \in S^-}\{A_i\}, \min_{i \in S^+}\{A_i\}\right\} = \min_{i \in S^+}\{A_i\}$

$2071$　$S^* = \{\}$

$2072$　$S^* = \{\}$

$2073$　For all $j \in S^-$

$2075$　$\dfrac{A_j}{\min_{i \in S^-}\{A_i\}} \leq \theta$

$2077$　$S^* = S^* \cup \{j\}$

$2074$　For all $j \in S^+$

$2076$　$\dfrac{A_j}{\min_{i \in S^+}\{A_i\}} \leq \theta$

$2078$　$S^* = S^* \cup \{j\}$

$2080$

$2080$

$2081$　$S^* \neq \{\}$

$2082$　$S^* \neq \{\}$

$2083$　$\dfrac{\sum_{j \in S^*} A_j}{\min_{i \in S^-}\{A_i\}} \leq \theta$

$2084$　$\dfrac{\sum_{j \in S^*} A_j}{\min_{i \in S^+}\{A_i\}} \leq \theta$

$2085$
$$A_I^+ = 0$$
$$A_I^- = \sum_{j \in S^*}(-A_j)$$

$2087$
$$A_I^+ = 0$$
$$A_I^- = -\theta \cdot \min_{j \in S^+}\{A_i\}$$

$2089$
$$A_I^+ = 0$$
$$A_I^- = 0$$

$2088$
$$A_I^+ = +\theta \cdot \min_{j \in S^-}\{A_i\}$$
$$A_I^- = 0$$

$2086$
$$A_I^+ = \sum_{j \in S^*}(+A_j)$$
$$A_I^- = 0$$

# FIG.20B

For BPSK modulation

FIG.20C

Spread encoded symbols with the same orthogonal codeword at the n-th symbol time
(with transmission power control)

Allocated
Downlink
Channel ID

EP 1 890 391 B1

FIG.20D

Spread encoded symbols with the same orthogonal codeword at the n-th symbol time
(with transmission power control)

$+A_{max}$

$A_j$

$\theta A_j$

I

$-A_{max}$

$+A_j$

$-A_j$

$+A_j$

$+A_j$

$+A_j$

$A_j$

$\theta A_j$

$+A_{max}$

$A_s$

$\theta A_s$

Q

$-A_{max}$

$+A_c$

$+A_s$

$-A_s$

$-A_c$

$+A_j$

$+A_j$

$A_s$

$\theta A_s$

$\text{(j)}$ a  b  d  e  f  g  h  i  k  m  n  o  p  q  r  t $\text{(l)}\text{(s)}\text{(c)}$

$\text{(c)}\text{(s)}$ a  b  d  e  f  g  h  i  k  m  n  o  p  q  r  t $\text{(l)}\text{(j)}$

Allocated
Downlink
Channel ID

EP 1 890 391 B1

# FIG.20E

Spread encoded symbols with the same orthogonal codeword at the n-th symbol time
(with transmission power control)

Allocated
Downlink
Channel ID

# FIG.21A

1810 ( **Start** ) For MPSK modulation

*For all orthogonal resource units*    2120

1830   $S = S^- \cup S^0 \cup S^+$

1830   $S = S^0$ ?

1840   $S = S^0 \cup S^+$ ?

1850   $S = S^0 \cup S^-$ ?

1842   $\sum_{j \in S^+} (+A_j) \leq +A_{max}$ ?

1852   $\sum_{j \in S^-} (-A_j) \geq -A_{max}$ ?

1832
$$A_I^+ = 0$$
$$A_I^- = 0$$

1844
$$A_I^+ = \sum_{j \in S^+} (+A_j)$$
$$A_I^- = 0$$

1846
$$A_I^+ = +A_{max}$$
$$A_I^- = 0$$

1854
$$A_I^+ = 0$$
$$A_I^- = \sum_{j \in S^-} (-A_j)$$

1856
$$A_I^+ = 0$$
$$A_I^- = -A_{max}$$

2160

( **End** ) 1890

---

2160

2062   $\max\left\{ \min_{i \in S^+}\{A_i\}, \min_{i \in S^-}\{A_i\} \right\}$

2070   $\max\left\{ \min_{i \in S^-}\{A_i\}, \min_{i \in S^+}\{A_i\} \right\} = \min_{i \in S^+}\{A_i\}$

2071   $S' = \{\}$

2072   $S' = \{\}$

2073   *For all $j \in S^-$*

2074   *For all $j \in S^+$*

2075   $\dfrac{A_j}{\min_{i \in S^+}\{A_i\}} \leq \theta$ ?

2076   $\dfrac{A_j}{\min_{i \in S^-}\{A_i\}} \leq \theta$ ?

2077   $S' = S' \cup \{j\}$

2078   $S' = S' \cup \{j\}$

2081   $S' \neq \{\}$ ?

2082   $S' \neq \{\}$ ?

2187
$$A_I^+ = 0$$
$$A_I^- = -\max_{i \in S^-}(A_i)$$

2089
$$A_I^+ = 0$$
$$A_I^- = 0$$

2188
$$A_I^+ = +\max_{i \in S^+}(A_i)$$
$$A_I^- = 0$$

# FIG.21B

For BPSK modulation

# FIG.21C

Spread encoded symbols with the same orthogonal codeword at the n-th symbol time
(with transmission power control)

Allocated
Downlink
Channel ID

EP 1 890 391 B1

# FIG.21D

Spread encoded symbols with the same orthogonal codeword at the n-th symbol time
(with transmission power control)

Allocated Downlink Channel ID

FIG.21E   Spread encoded symbols with the same orthogonal codeword at the n-th symbol time
(with transmission power control)

$+A_{max}$

$A_j$ ———————————————————————————————————— $A_j$

$\theta A_j$ ———————————————————————————————————— $\theta A_j$

$+A_l$

0        0        0

I ————○—○—●—○—○—○—○—○—○—○—○—○—○—○—○—○—○—○—○—○→

$-A_{max}$

a   b ⓒ d   e   f   g   h   i ⓙ k ① m   n   o   p   q   r ⓢ t

Allocated
Downlink
Channel ID

$+A_{max}$

$A_s$ ———————————————————————————————————— $A_s$

0    0

$\theta A_s$ ———————————————————————————————————— $\theta A_s$

Q ————○—○—○—○—○—○—○—○—○—○—○—○—○—○—○—○—○—○—○—○→

0                       0

$-A_{max}$

EP 1 890 391 B1

## FIG.22A

FIG.22B

For BPSK modulation

## FIG.22C

Spread encoded symbols with the same orthogonal codeword at the n-th symbol time
(with transmission power control)

a  b  ⓒ  d  e  f  g  h  i  ⓙ  k  ⓛ  m  n  o  p  q  r  ⓢ  t

Allocated
Downlink
Channel ID

EP 1 890 391 B1

**FIG.22D**

Spread encoded symbols with the same orthogonal codeword at the n-th symbol time
(with transmission power control)

Allocated
Downlink
Channel ID

EP 1 890 391 B1

# FIG.22E

Spread encoded symbols with the same orthogonal codeword at the n-th symbol time
(with transmission power control)

Allocated
Downlink
Channel ID

# FIG.23A

# FIG.23B

For BPSK modulation

FIG.23C

Spread encoded symbols with the same orthogonal codeword at the n-th symbol time
(with transmission power control)

Allocated
Downlink
Channel ID

EP 1 890 391 B1

# FIG.23D

Spread encoded symbols with the same orthogonal codeword at the n-th symbol time
(with transmission power control)

Allocated
Downlink
Channel ID

EP 1 890 391 B1

# FIG.23E

Spread encoded symbols with the same orthogonal codeword at the n-th symbol time
(with transmission power control)

Allocated
Downlink
Channel ID

EP 1 890 391 B1

# FIG.24A

1810 ( **Start** )  For MPSK modulation

**For all orthogonal resource units**  2420

$S = S^- \cup S^0 \cup S^+$  1830

1830 $S = S^0$

1840 $S = S^0 \cup S^+$

1850 $S = S^0 \cup S^-$

1852 $\sum_{j \in S^-}(-A_j) \geq -A_{max}$

1842 $\sum_{j \in S^+}(+A_j) \leq +A_{max}$

1832
$A_I^+ = 0$
$A_I^- = 0$

1844
$A_I^+ = \sum_{j \in S^+}(+A_j)$
$A_I^- = 0$

1846
$A_I^+ = +A_{max}$
$A_I^- = 0$

1854
$A_I^+ = 0$
$A_I^- = \sum_{j \in S^-}(-A_j)$

1856
$A_I^+ = 0$
$A_I^- = -A_{max}$

2460

( **End** )  1890

2460

$\max\left\{ \min_{i \in S^+}\{A_i\}, \min_{i \in S^-}\{A_i\} \right\}$  2062

2070
$\max\left\{ \min_{i \in S^-}\{A_i\}, \min_{i \in S^+}\{A_i\} \right\} = \min_{i \in S^+}\{A_i\}$

2481
$\sum_{j \in S^-}(-A_j) \geq -\theta \cdot \min_{i \in S^+}\{A_i\}$

2482
$\sum_{j \in S^+}(+A_j) \leq +\theta \cdot \min_{i \in S^-}\{A_i\}$

2483
$A_I^+ = 0$
$A_I^- = \sum_{j \in S^-}(-A_j)$

2485
$A_I^+ = 0$
$A_I^- = -\theta \cdot \min_{i \in S^+}\{A_i\}$

2484
$A_I^+ = \sum_{j \in S^+}(+A_j)$
$A_I^- = 0$

2486
$A_I^+ = +\theta \cdot \min_{i \in S^-}\{A_i\}$
$A_I^- = 0$

# FIG.24B

For BPSK modulation

FIG.24C

Spread encoded symbols with the same orthogonal codeword at the n-th symbol time
(with transmission power control)

Allocated
Downlink
Channel ID

FIG.24D

Spread encoded symbols with the same orthogonal codeword at the n-th symbol time
(with transmission power control)

Allocated
Downlink
Channel ID

# FIG.24E

Spread encoded symbols with the same orthogonal codeword at the n-th symbol time
(with transmission power control)

Allocated
Downlink
Channel ID

EP 1 890 391 B1

# FIG.25A

$1810$ — Start — For MPSK modulation

**For all orthogonal resource units** — $2520$

$S = S^- \cup S^0 \cup S^+$ — $1830$

$S = S^0$ — $1830$

$S = S^0 \cup S^+$ — $1840$

$S = S^0 \cup S^-$ — $1850$

$\sum_{j \in S^+}(+A_j) \leq +A_{max}$ — $1842$

$\sum_{j \in S^-}(-A_j) \geq -A_{max}$ — $1852$

$1832$
$$A_I^+ = 0$$
$$A_I^- = 0$$

$1844$
$$A_I^+ = \sum_{j \in S^+}(+A_j)$$
$$A_I^- = 0$$

$1846$
$$A_I^+ = +A_{max}$$
$$A_I^- = 0$$

$1854$
$$A_I^+ = 0$$
$$A_I^- = \sum_{j \in S^-}(-A_j)$$

$1856$
$$A_I^+ = 0$$
$$A_I^- = -A_{max}$$

$2560$

End — $1890$

$2560$

$2062$
$$\max\left\{\min_{i \in S^+}\{A_i\}, \min_{i \in S^-}\{A_i\}\right\}$$

$2070$
$$\max\left\{\min_{i \in S^-}\{A_i\}, \min_{i \in S^+}\{A_i\}\right\} = \min_{i \in S^+}\{A_i\}$$

$2585$
$$A_I^+ = 0$$
$$A_I^- = -\theta \cdot \min_{j \in S^+}\{A_i\}$$

$2586$
$$A_I^+ = +\theta \cdot \min_{j \in S^-}\{A_i\}$$
$$A_I^- = 0$$

# FIG.25B

For BPSK modulation

FIG.25C

Spread encoded symbols with the same orthogonal codeword at the n-th symbol time
(with transmission power control)

FIG.25D

Spread encoded symbols with the same orthogonal codeword at the n-th symbol time
(with transmission power control)

$+A_{max}$

$+A_j$

$+A_l$

$A_j$

$A_l$

$+A_l$

$\theta A_j$

$+A_l$

$\theta A_j$

I

$-A_j$

$-A_{max}$

(j) a b d e f g h i k m n o p q r t (l) (s) (c)

(c) (s) a b d e f g h i k m n o p q r t (l) (j)

Allocated
Downlink
Channel ID

$+A_{max}$

$+A_c$

$+A_j$

$A_s$

$+A_s$

$A_s$

$+A_l$

$\theta A_s$

$+A_l$

$\theta A_s$

Q

$-A_s$

$-A_{max}$

$=A_c$

EP 1 890 391 B1

FIG.25E

Spread encoded symbols with the same orthogonal codeword at the n-th symbol time
(with transmission power control)

Allocated
Downlink
Channel ID

FIG.26

# FIG.27A

Input bits k bits

2710

Systematic Channel Encoder

Systematic bus

k bits

(n−k) bits

Parity bits

n bits Output bits

Frame Length

2730

... ORDM : Orthogonal Resource Division Multiplexing ... Time

OR 2740

... ORHM : Orthogonal Resource Hopping Multiplexing ... Time

EP 1 890 391 B1

# FIG.27B

EP 1 890 391 B1

FIG.27C

2710                          Systematic bus

Input bits  k bits { → → → →  | Systematic Channel Encoder | → → → } k bits  } n bits Output bits

(n-k) bits

Parity bits

Frame Length

2751

· · ·

ORDM : Orthogonal Resource Division Multiplexing

AND 2752

· · ·

ORHM : Orthogonal Resource Hopping Multiplexing

· · ·

· · ·

Time

# FIG.27D

EP 1 890 391 B1

FIG.27E

Input bits

Internal Interleaver

2716 Rate Matcher

Rate Matcher

Output bits

2712

2718

Frame Length

2734

ORDM : Orthogonal Resource Division Multiplexing

AND

2744

ORHM : Orthogonal Resource Hopping Multiplexing

Time

EP 1 890 391 B1

FIG.28A

EP 1 890 391 B1

## FIG.28B

Intentional frame erasure at transmitter for reducing the puncturing probability

Frame Length

410 ........................................................................... Pilot

| R | R2 | R | R/4 | R/4 | R | R/2 | R/2 | R/4 | O | R |

424 ........... 2826 ........... MS#1

| R/2 | R | R | R | R/4 | R/2 | R | R/4 | R | R | R |

434 ........... 2834 ........... MS#2

| R | O | R | R | O | R | O | R | R | R | O |

444 ........... 2844 ........... MS#3

| R | O | O | R | R | O | R | O | R | R | R |

450 ........... 2850 ........... MS#4

| $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ | $P_c \leqq \theta_c$ $(P_p < \theta_p)$ |

FIG.29A

FIG.29B

2930 | OR#0

2931 | OR#1

2932 | OR#2 | OR#2

2933 | OR#3 | OR#3 | OR#3 | OR#3 | OR#3 | OR#3 | OR#3 | OR#3 | OR#3 | OR#3 | OR#3

2934 | OR#4

2935 | OR#5 | OR#5

2936 | OR#6

2937 | OR#7

Orthogonal resources for ORHM

Symbol for MS#α

Symbol for MS#β

Colided Symbol

Equivalant

OR#3

OR#3

OR#3

OR#3

OR#0 | OR#7 | OR#2 | OR#3 | OR#1 | OR#4 | OR#6 | OR#5 | OR#3 | OR#2 | OR#5

OR#3

OR#3

OR#3

OR#3

FIG.29C

Orthogonal Resources

ORDM channel

ORHM channel(ORDM mode)

ORHM channel (Non-ORDM mode)

Channel blocking

arrival    depature

Service time

Service time

Without change of hopping pattern

EP 1 890 391 B1

FIG.29D

# FIG.30A

OR : Orthogonal Resource
OG : Orthogonal Group

$T_{frame}$

Service time : Ts

OR's

$0 \leqq x \leqq N_{OR} - 1$

AWGN

MSx

Ts

DM : Division Mode
HM : Hopping Mode

EP 1 890 391 B1

# FIG.30B

OR : Orthogonal Resource
OG : Orthogonal Group

EP 1 890 391 B1

# FIG.30C

OR : Orthogonal Resource
OG : Orthogonal Group

DM : Division Mode
HM : Hopping Mode

# FIG.30D

OR : Orthogonal Resource
OG : Orthogonal Group

Service time : Ts

DM : Division Mpde
HM : Hopping Mode

$0 \leq x \leq N_{OR} - 1$

$N_{OR} \leq y \leq 2N_{OR} - 1$

$2N_{OR} \leq z \leq 3N_{OR} - 1$

$gN_{OR} \leq w \leq M - 1$

FIG.30E

OR : Orthogonal Resource
OG : Orthogonal Group

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0111897 A